# EUROPEAN PATENT APPLICATION

(11) **EP 4 796 272 A1**
(43) Date of publication of application: **26.08.2026**
(21) Application number: 23954274.9
(22) Date of filing: 28.09.2023
(51) Int. Cl.: B25J 13/08

(54) **CONTROL DEVICE, CONTROL SYSTEM, ROBOT SYSTEM, CONTROL METHOD, AND COMPUTER PROGRAM**

(71) Applicant: NIKON CORPORATION, Tokyo 140-8601 (JP)
(72) Inventor: WAKIMOTO, Kenta, Tokyo 140-8601 (JP)
(74) Representative: Hoffmann Eitle
(86) International application number: PCT/JP2023/035380
(87) International publication number: WO 2025/069298

(57) **Abstract**

A control apparatus generates a first control signal for controlling the robot so that the holding apparatus approaches a first object, which is one of a first object group, to hold the first object, based on an imaged result by the imaging system imaging the first object group contained in a container from a first imaging height; and generates a second control signal for controlling the robot so that the holding apparatus approaches a second object, which is one of a second object group, to hold the second target object, based on an imaged result by the imaging system imaging the second object group contained in the container from a second imaging height lower than the first imaging height, after the holding apparatus has approached the first object based on the first control signal and the first object held by the holding apparatus has been released outside the container.

## Description

### Technical Field

The present invention relates to a technical field of a control apparatus, a control system, a robot system, a control method, and a computer program that are configured to generate a control signal for controlling a robot, for example.

### Background Art

A Patent literature 1 discloses one example of a control apparatus that controls a robot, on which a process apparatus that is configured to perform a process on an object is mounted, based on an imaged result of the object by an imaging system. For the control apparatus, it is required that the imaging system properly images the object.

### Citation List

### Patent Literature

Patent Literature 1: US2013/0230235A1

### Summary of Invention

A first aspect provides a control apparatus that generates a control signal for controlling a robot on which a holding apparatus that is configured to hold a target object and an imaging system that images the target object are mounted and which moves the holding apparatus and the imaging system, wherein the control apparatus includes: a computing apparatus that generates the control signal; and a communication apparatus that outputs the control signal generated by the computing apparatus, the computing apparatus: generates, as the control signal, a first control signal for controlling the robot so that the holding apparatus approaches a first target object, which is one target object of a first target object group, to hold the first target object, based on an imaged result by the imaging system imaging the first target object group, which includes at least a part of a plurality of target objects contained in a container, from a first imaging height; and generates, as the control signal, a second control signal for controlling the robot so that the holding apparatus approaches a second target object, which is one target object of a second target object group, to hold the second target object, based on an imaged result by the imaging system imaging the second target object group, which includes at least a part of the first target object group contained in the container, from a second imaging height that is lower than the first imaging height, after the holding apparatus has approached the first target object based on the first control signal and the first target object held by the holding apparatus has been transported to an outside of the container and released from the holding apparatus outside the container.

A second aspect provides a control system including: the control apparatus provided by the first aspect; and the imaging system.

A third aspect provides a robot system including: the control apparatus provided by the first aspect; the imaging system; and the robot.

A fourth aspect provides a control method that generates a control signal for controlling a robot on which a holding apparatus that is configured to hold a target object and an imaging system that images the target object are mounted and which moves the holding apparatus and the imaging system, wherein the control method includes: generating, as the control signal, a first control signal for controlling the robot so that the holding apparatus approaches a first target object, which is one target object of a first target object group, to hold the first target object, based on an imaged result by the imaging system imaging the first target object group, which includes at least a part of a plurality of target objects contained in a container, from a first imaging height; and generating, as the control signal, a second control signal for controlling the robot so that the holding apparatus approaches a second target object, which is one target object of a second target object group, to hold the second target object, based on an imaged result by the imaging system imaging the second target object group, which includes at least a part of the first target object group contained in the container, from a second imaging height that is lower than the first imaging height, after the holding apparatus has approached the first target object based on the first control signal and the first target object held by the holding apparatus has been transported to an outside of the container and released from the holding apparatus outside the container.

A fifth aspect provides a computer program that allows a computer to execute the control method provided by the fourth aspect.

A sixth aspect provides a control apparatus that generates a control signal for controlling a robot on which a process apparatus that is configured perform a process on a target object and an imaging system that images the target object are mounted and which moves the process apparatus and the imaging system, wherein the control apparatus includes: a computing apparatus that generates the control signal; and a communication apparatus that outputs the control signal generated by the computing apparatus, the computing apparatus: generates, as the control signal, a first control signal for controlling the robot so that the imaging system moves to an imaging height for imaging the target object, based on an imaged result of a first target object group, which includes at least a part of a plurality of target objects contained in a container, by the imaging system; and generates, as the control signal, a second control signal for controlling the robot so that the process apparatus approaches a first target object, which is one target object of a second target object group, to perform a process on the first target object, based on an imaged result by the imaging system imaging the second target object group, which includes at least a partial target object of the first target object group contained in the container, at the imaging height.

A seventh aspect provides a control system including: the control apparatus provided by the sixth aspect; and the imaging system.

An eighth aspect provides a robot system including: the control apparatus provided by the sixth aspect; the imaging system; and the robot.

A ninth aspect provides a control method that generates a control signal for controlling a robot on which a process apparatus that is configured perform a process on a target object and an imaging system that images the target object are mounted and which moves the process apparatus and the imaging system, wherein the control method includes: generating, as the control signal, a first control signal for controlling the robot so that the imaging system moves to an imaging height for imaging the target object, based on an imaged result of a first target object group, which includes at least a part of a plurality of target objects contained in a container, by the imaging system; and generating, as the control signal, a second control signal for controlling the robot so that the process apparatus approaches a first target object, which is one target object of a second target object group, to perform a process on the first target object, based on an imaged result by the imaging system imaging the second target object group, which includes at least a partial target object of the first target object group contained in the container, at the imaging height.

A tenth aspect provides a computer program that allows a computer to execute the control method provided by the ninth aspect.

An eleventh aspect provides a control apparatus that generates a control signal for controlling a robot on which a holding apparatus that is configured to hold a target object and an imaging system that images the target object are mounted and which moves the holding apparatus and the imaging system, wherein the control apparatus includes: a computing apparatus that generates the control signal; and a communication apparatus that outputs the control signal generated by the computing apparatus, a first target object, which is one target object of a plurality of target objects contained in a container, is held by the holding apparatus, the robot is controlled so that the holding apparatus holding the first target object moves from the container to a position at which the first target object is released outside the container, and the computing apparatus generates, as the control signal, a first control signal for controlling the robot from a position after releasing the first target object from the holding apparatus, based on an imaged result by the imaging system imaging a first target object group, which includes at least a part of a plurality of target objects contained in the container, on a movement route of the imaging system due to a movement of the holding apparatus from the container to the position at which the first target object is released outside the container.

A twelfth aspect provides a control system including: the control apparatus provided by the eleventh aspect; and the imaging system.

A thirteenth aspect provides a robot system including: the control apparatus provided by the eleventh aspect; the imaging system; and the robot.

A fourteenth aspect provides a control method that generates a control signal for controlling a robot on which a holding apparatus that is configured to hold a target object and an imaging system that images the target object are mounted and which moves the holding apparatus and the imaging system, wherein a first target object, which is one target object of a plurality of target objects contained in a container, is held by the holding apparatus, the robot is controlled so that the holding apparatus holding the first target object moves from the container to a position at which the first target object is released outside the container, and the control method includes generating, as the control signal, a first control signal for controlling the robot from a position after releasing the first target object from the holding apparatus, based on an imaged result by the imaging system imaging a first target object group, which includes at least a part of a plurality of target objects contained in the container, on a movement route of the imaging system due to a movement of the holding apparatus from the container to the position at which the first target object is released outside the container.

A fifteenth aspect provides a computer program that allows a computer to execute the control method provided by the thirteenth aspect.

A sixteenth aspect provides a control apparatus that generates a control signal for controlling a robot on which a holding apparatus that is configured to hold a target object and an imaging system that images the target object are mounted and which moves the holding apparatus and the imaging system, wherein the control apparatus includes: a computing apparatus that generates the control signal; and a communication apparatus that outputs the control signal generated by the computing apparatus, the computing apparatus generates, as the control signal, a first control signal for controlling the robot after the holding apparatus releases a first target object, based on an imaged result by the imaging system imaging an inside of the container in a period until the first target object, which is one target object of a plurality of target objects contained in the container, is held by the holding apparatus and then the first target object held by the holding apparatus is transported to an outside of the container and released from the holding apparatus outside the container.

A seventeenth aspect provides a control system including: the control apparatus provided by the sixteenth aspect; and the imaging system.

An eighteenth aspect provides a robot system including: the control apparatus provided by the sixteenth aspect; the imaging system; and the robot.

A nineteenth aspect provides a control method that generates a control signal for controlling a robot on which a holding apparatus that is configured to hold a target object and an imaging system that images the target object are mounted and which moves the holding apparatus and the imaging system, wherein the control method includes generating, as the control signal, a first control signal for controlling the robot after the holding apparatus releases a first target object, based on an imaged result by the imaging system imaging an inside of the container in a period until the first target object, which is one target object of a plurality of target objects contained in the container, is held by the holding apparatus and then the first target object held by the holding apparatus is transported to an outside of the container and released from the holding apparatus outside the container.

A twentieth aspect provides a computer program that allows a computer to execute the control method provided by the nineteenth aspect.

A twenty-first aspect provides a control apparatus that generates a control signal for controlling a robot on which a process apparatus that is configured perform a process on a target object and an imaging system that images the target object are mounted and which moves the process apparatus and the imaging system, wherein the control apparatus includes: a computing apparatus that generates the control signal; and a communication apparatus that outputs the control signal generated by the computing apparatus, the computing apparatus: generates, as the control signal, a first control signal for controlling the robot so that the imaging system moves to an imaging height for imaging the target object, based on at least one of a height of a first target object group, which includes at least a part of a plurality of target objects, contained in a container and a quantity of the first target object group contained in the container; and generates, as the control signal, a second control signal for controlling the robot so that the process apparatus approaches one target object of a second target object group to perform the process on the one target object, based on an imaged result by the imaging system imaging the second target object group, which includes at least a partial target object of the first target object group contained in the container, at the imaging height.

A twenty-second aspect provides a control system including: the control apparatus provided by the twenty-first aspect; and the imaging system.

A twenty-third aspect provides a robot system including: the control apparatus provided by the twenty-first aspect; the imaging system; and the robot.

A twenty-fourth aspect provides a control method that generates a control signal for controlling a robot on which a holding apparatus that is configured hold a target object and an imaging system that images the target object are mounted and which moves the holding apparatus and the imaging system, wherein the control method includes: generating, as the control signal, a first control signal for controlling the robot so that the imaging system moves to an imaging height for imaging the target object, based on at least one of a height of a first target object group, which includes at least a part of a plurality of target objects, contained in a container and a quantity of the first target object group contained in the container; and generating, as the control signal, a second control signal for controlling the robot so that the process apparatus approaches one target object of a second target object group to perform the process on the one target object, based on an imaged result by the imaging system imaging the second target object group, which includes at least a partial target object of the first target object group contained in the container, at the imaging height.

A twenty-fifth aspect provides a computer program that allows a computer to execute the control method provided by the twenty-fourth aspect.

An operation and another advantage of the present invention will be apparent from an example embodiment described below.

### Brief Description of Drawings

[FIG. 1] FIG. 1 is a block diagram that illustrates a configuration of a robot system in a present example embodiment.
[FIG. 2] FIG. 2 is a side view that illustrates an exterior appearance of a robot in the present example embodiment.
[FIG. 3] FIG. 3 is a block diagram that illustrates a configuration of a control apparatus in the present example embodiment.
[FIG. 4] FIG. 4 is a flowchart that illustrates a flow of a robot control processing.
[FIG. 5] Each of FIG. 5(a) to FIG. 5(d) is a side view that illustrates a positional relationship between the robot and a workpiece at a certain time in a period during which a holding process for holding the workpiece placed on a placing apparatus that moves on a support surface is performed.
[FIG. 6] Each of FIG. 6(a) to FIG. 6(d) is a side view that illustrates a positional relationship between the robot and the workpiece at a certain time in a period during which a releasing process for placing the workpiece on the placing apparatus that moves on the support surface is performed.

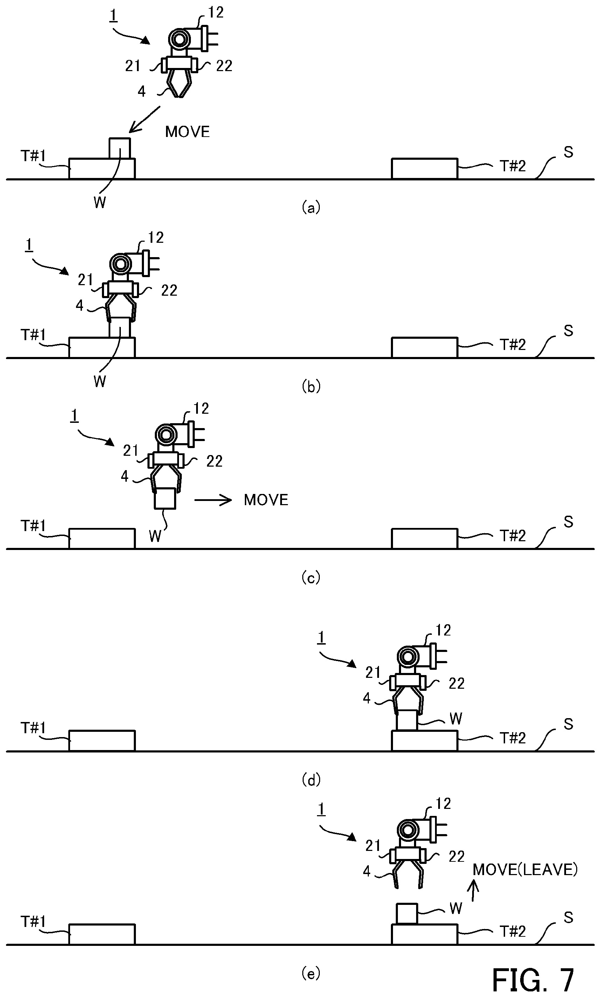

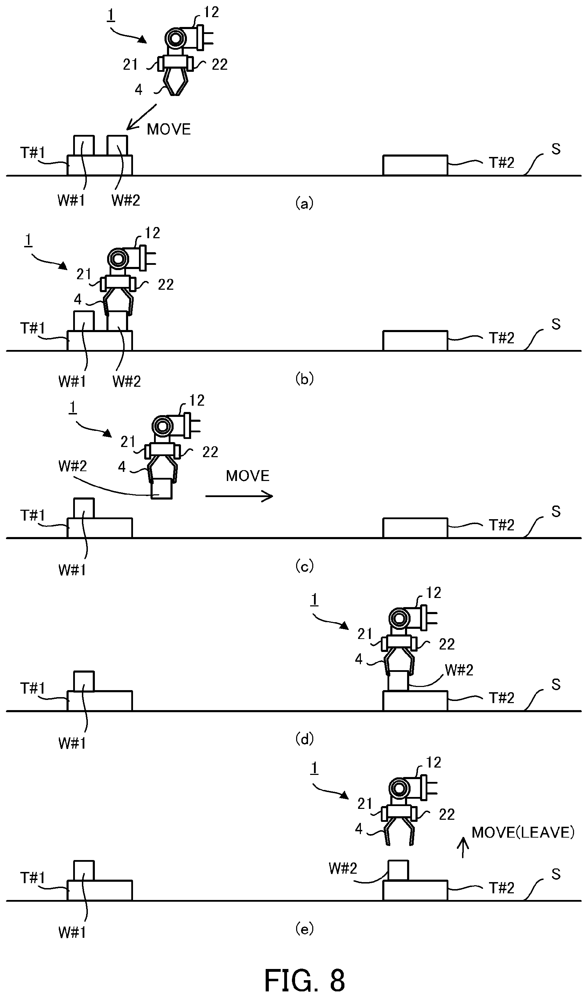

[FIG. 7] Each of FIG. 7(a) to FIG. 7(b) is a side view that illustrates a positional relationship between the robot and the workpiece at a certain time in a period during which the holding process for holding the workpiece placed on the placing apparatus that is stationary on the support surface is performed, and each of FIG. 8(c) to FIG. 8(e) is a side view that illustrates a positional relationship between the robot and the workpiece at a certain time in a period during which the releasing process for placing the workpiece on the placing apparatus that is stationary on the support surface is performed.
[FIG. 8] Each of FIG. 8(a) to FIG. 8(e) is a side view that illustrates a positional relationship between the robot and the workpiece at a certain time in a period during which the holding process for holding a plurality of workpieces, which are placed on the placing apparatus, one by one in sequence and the releasing process for placing the plurality of workpieces on the placing apparatus one by one in sequence are performed.
[FIG. 9] Each of FIG. 9(a) to FIG. 9(e) is a side view that illustrates a positional relationship between the robot and the workpiece at a certain time in a period during which the holding process for holding a plurality of workpieces, which are placed on the placing apparatus, one by one in sequence and the releasing process for placing the plurality of workpieces on the placing apparatus one by one in sequence are performed.
[FIG. 10] FIG. 10 is a cross-sectional view that illustrates the plurality of target objects contained in a container and an imaging system.
[FIG. 11] FIG. 11 is a cross-sectional view that illustrates a first example of an imaging allowable range that is set based on an field of view of the imaging system.
[FIG. 12] FIG. 12 is a cross-sectional view that illustrates a second example of the imaging allowable range that is set based on the field of view of the imaging system.
[FIG. 13] FIG. 13(a) illustrates a relationship between a field of view and a partial field of view of a left camera and an image generated by the left camera, and FIG. 13(b) illustrates a relationship between a field of view and a partial field of view of a right camera and an image generated by the right camera.
[FIG. 14] FIG. 14(a) illustrates an imaging apparatus, which images the target object that is included in the imaging allowable range determined based on a search area, and an image generated by the imaging apparatus, and FIG. 14(b) illustrates the imaging apparatus, which images the target object that is not included in the imaging allowable range determined based on the search area, and the image generated by the imaging apparatus.
[FIG. 15] FIG. 15 is a cross-sectional view that illustrates a height of a target object group that includes the plurality of target objects contained in the container.
[FIG. 16] Each of FIG. 16(a) and FIG. 16(b) is a cross-sectional view that illustrates one example of a method for calculating the height of the target object group.
[FIG. 17] FIG. 17 is a cross-sectional view that illustrates the plurality of target objects contained in the container and the imaging system.
[FIG. 18] Each of FIG. 18(a) and FIG. 18(b) is a cross-sectional view that illustrates the plurality of target objects contained in the container and the imaging system.
[FIG. 19] FIG. 19 is a cross-sectional view that illustrates the plurality of target objects contained in the container and the imaging system.
[FIG. 20] Each of FIG. 20(a) and FIG. 20(b) is a cross-sectional view that illustrates the plurality of target objects contained in the container and the imaging system.
[FIG. 21] Each of FIG. 21(a) and FIG. 21(b) is a cross-sectional view that illustrates the plurality of target objects contained in the container and the imaging system.
[FIG. 22] Each of FIG. 22(a) and FIG. 22(b) is a cross-sectional view that illustrates the plurality of target objects contained in the container and the imaging system.
[FIG. 23] FIG. 23 is a cross-sectional view that illustrates the plurality of target objects contained in the container and the imaging system.
[FIG. 24] FIG. 24 is a flowchart that illustrates a flow of the robot control processing in a first modified example.
[FIG. 25] Each of FIG. 25(a) to FIG. 25(c) is a cross-sectional view that illustrates the imaging system 2 that images the target object contained in the container after the end effector 4 holds the target object.
[FIG. 26] Each of FIG. 26(a) and FIG. 26(b) is a cross-sectional view that illustrates the plurality of target objects contained in the container and the imaging system.
[FIG. 27] Each of FIG. 27(a) and FIG. 27(b) is a cross-sectional view that illustrates the plurality of target objects contained in the container and the imaging system.
[FIG. 28] Each of FIG. 28(a) and FIG. 28(b) is a cross-sectional view that illustrates the plurality of target objects contained in the container and the imaging system.
[FIG. 29] FIG. 29 is a cross-sectional view that illustrates the plurality of target objects contained in the container and the imaging system.
[FIG. 30] FIG. 30 is a cross-sectional view that illustrates the imaging system that images the target object.
[FIG. 31] FIG. 31 is a cross-sectional view that illustrates a weight sensor that measures a weight of the target object.
[FIG. 32] FIG. 32 is a cross-sectional view that illustrates a container on which an object detection sensor for detecting the target object is positioned.
[FIG. 33] FIG. 33 is a cross-sectional view that illustrates the container on which a marker is positioned.
[FIG. 34] Each of FIG. 34(a) and FIG. 34(b) is a cross-sectional view that conceptionally illustrates a processing for adjusting an imaging horizontal position of the imaging system.
[FIG. 35] Each of FIG. 35(a) and FIG. 35(b) is a cross-sectional view that conceptionally illustrates a processing for adjusting an imaging pose of the imaging system.
[FIG. 36] FIG. 36 is a cross-sectional view that illustrates the imaging system that is mounted on a part that is different from the robot.
[FIG. 37] Each of FIG. 37(a) and FIG. 37(b) is a cross-sectional view that illustrates the plurality of target objects contained in the container and the imaging system.
[FIG. 38] FIG. 38 is a block diagram that illustrates the imaging system including a focus adjustment optical system.
[FIG. 39] FIG. 39 is a block diagram that illustrates a configuration of the robot system including a measurement system.

### Description of Example embodiments

Next, with reference to drawings, an example embodiment of a control apparatus, a control system, a robot system, a control method, and a computer program will be described. In the below described description, the example embodiment of the control apparatus, the control system, the robot system, the control method, and the computer program will be described by using a robot system SYS.

### (1) Configuration of Robot System SYS

Firstly, a configuration of the robot system SYS will be described.

### (1-1) Entire Configuration of Robot System SYS

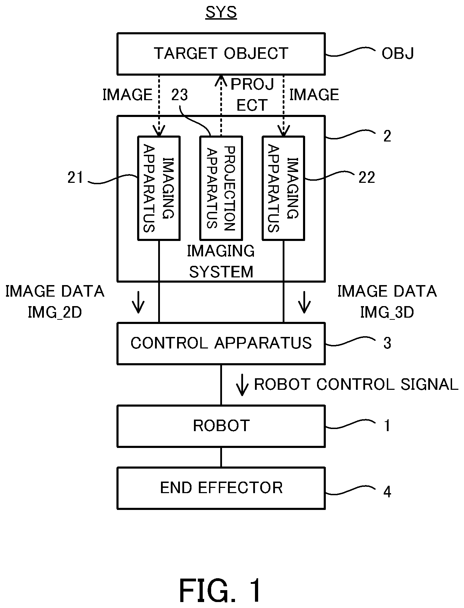

Firstly, with reference to FIG.1, an entire configuration of the robot system SYS will be described. FIG. 1 is a block diagram that illustrates the entire configuration of the robot system SYS.

As illustrated in FIG. 1, the robot system SYS includes: a robot 1; an imaging system 2, a control apparatus 3, and an end effector 4. Note that the imaging system 2 may be referred to as an imaging unit.

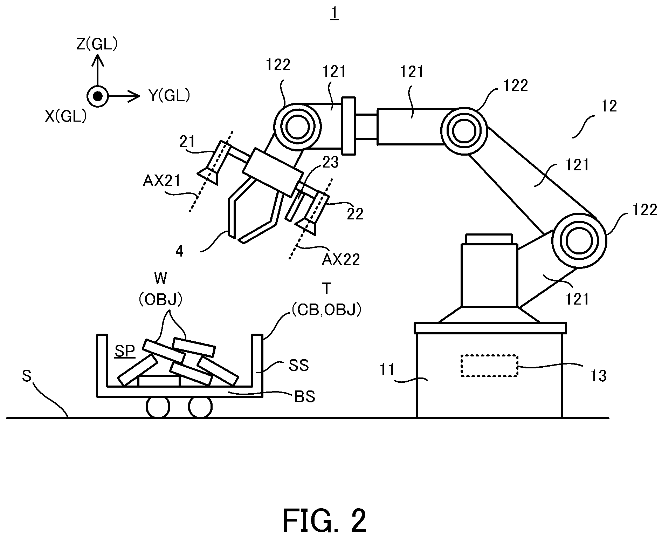

The robot 1 is an apparatus that is configured to perform a predetermined process on a target object OBJ. One example of the robot 1 is illustrated in FIG. 2. FIG. 2 is a side view that illustrates an exterior appearance of the robot 1. As illustrated in FIG. 2, the robot 1 includes: a base 11; a robot arm 12, and a robot control apparatus 13, for example.

The base 11 is a member that is a foundation of the robot 1. The base 11 is placed on a support surface S such as a floor surface. The base 11 may be fixed to the support surface S. Alternatively, the base 11 may be movable relative to the support surface S. As one example, the base 11 may be configured to be self-propelled on the support surface S. In this case, the base 11 may be mounted on an Automatic Guided Vehicle (AGV). In a case where the base 11 is mounted on the Automatic Guided Vehicle, the Automatic Guided Vehicle may be regarded as a part of the robot 1. Alternatively, the Automatic Guided Vehicle (AGV) may be used as the base 11. Note that FIG. 2 illustrates an example in which the base 11 is fixed to the support surface S.

The robot arm 12 is attached to the base 11. The robot arm 12 is an apparatus in which a plurality of links 121 are connected through a joint 122. An actuator is built in the joint 122. The link 121 may be rotatable around an axis defined by the joint 122 by the actuator built in the joint 122. Note that at least one link 121 may be extendable and retractable along a direction along which the link 121 extends. Note that an apparatus including the base 11 and an apparatus in which the plurality of links 121 are connected through the joint 122 may be referred to as the robot arm 12.

The end effector 4 is attached to the robot arm 12. Namely, the end effector 4 is attached to the robot 1. In an example illustrated in FIG. 2, the end effector 4 is attached to an end of the robot arm 12. The end effector 4 is movable by a movement of the robot arm 12. Namely, the robot arm 12 moves the end effector 4. Namely, the robot 1 moves the end effector 4.

The end effector 4 is an apparatus that performs a predetermined process (in other words, a predetermined operation) on the target object OBJ. The end effector 4 that performs the predetermined process on the target object OBJ may be referred to as a process apparatus.

For example, the end effector 4 may perform a holding process for holding the target object OBJ as one example of the predetermined process. In this case, the end effector 4 may be considered to perform the holding process on the target object OBJ that should be held by the end effector 4. The end effector 4 that is configured to perform the holding process may be referred to as a holding apparatus.

For example, holding the target object OBJ may include gripping the target object OBJ. For example, holding the target object OBJ may include gripping the target object OBJ by using a hand gripper that is one example of the end effector 4 and that will be described below. Holding the target object OBJ may include sucking the target object OBJ. For example, holding the target object OBJ may include sucking (vacuum sucking) the target object OBJ by using a vacuum gripper that is one example of the end effector 4 and that will be described below. For example, holding the target object OBJ may include sucking the target object OBJ by using a magnetic suction gripper that is one example of the end effector 4 and that will be described below.

For example, the end effector 4 may perform a releasing process (in other words, a releasing operation) for releasing (in other words, letting off) the held target object OBJ as one example of the predetermined process. In this case, the end effector 4 may be considered to perform the releasing process on the target object OBJ held by the end effector 4. The end effector 4 that is configured to perform the releasing process may be referred to as a releasing apparatus.

The hand gripper is one example of the end effector 4 that is configured to perform the holding process and the releasing process. The hand gripper is an end effector 4 that is configured to hold the target object OBJ by physically clamping the target object OBJ using a plurality of (for example, two, three, or four) finger members or claw members. The vacuum gripper that is configured to hold the target object OBJ by vacuum-sucking the target object OBJ is another example of the end effector 4 that is configured to perform the holding process and the releasing process. The vacuum gripper is an end effector 4 that is configured to hold the target object OBJ by vacuum sucking the target object OBJ. The magnetic suction gripper is another example of the end effector 4 that is configured to perform the holding process and the releasing process. FIG. 2 illustrates an example in which the end effector 4 is the hand gripper. However, the end effector 4 that is configured to perform the holding process and the releasing process may be other existing end effector.

The robot 1 may perform a placing process (in other words, a placing operation) for placing the target object OBJ at a desired position by using the end effector 4 that is configured to perform the holding process and the releasing process. For example, the robot 1 may perform the placing process for holding a first target object OBJ by using the end effector 4, and then placing the first target object OBJ held by the end effector 4 at a desired position of a second target object OBJ that is different from the first target object OBJ. In this case, the end effector 4 may be considered to perform the releasing process on the second target object OBJ on which the end effector 4 should place the first target object OBJ. Similarly, the end effector 4 may be considered to perform the releasing process on the first target object OBJ that should be released by the end effector 4.

The robot 1 may perform, as one example of the placing process (in other words, the placing operation), an embedding process (in other words, an embedding operation) for embedding the first target object OBJ into the second target object OBJ that is different from the first target object OBJ by using the end effector 4 that is configured to perform the holding process and the releasing process. For example, the robot 1 may perform the embedding process for holding the first target object OBJ by using the end effector 4, and then embedding the first target object OBJ held by the end effector 4 into the second target object OBJ that is different from the first target object OBJ. In this case, the end effector 4 may be considered to perform the releasing process on the second target object OBJ into which the end effector 4 should embed the first target object OBJ. Similarly, the end effector 4 may be considered to perform the releasing process on the first target object OBJ that should be released by the end effector 4. Note that the embedding process may be referred to as a processing process.

As one example, the embedding process may include a process for embedding (namely, inserting) the first target object OBJ into a hole formed in the second target object OBJ. For example, the robot 1 may perform the embedding process for holding the first target object OBJ by using the end effector 4, and then embedding (namely, inserting) the first target object OBJ held by the end effector 4 into the hole formed in the second target object OBJ. In this case, the end effector 4 may be considered to perform the releasing process on the second target object OBJ in which the hole, into which the end effector 4 should embed (namely, should insert) the first target object OBJ, is formed. Similarly, the end effector 4 may be considered to perform the releasing process on the first target object OBJ that should be released by the end effector 4.

The robot 1 may perform, as one example of the placing process (in other words, the placing operation), an attachment process (in other words, an attachment operation) for attaching the first target object to the second target object that is different from the first target object by using the end effector 4 that is configured to perform the holding process and the releasing process. For example, the robot 1 may perform the attachment process for holding the first target object OBJ by using the end effector 4, and then attaching the first target object OBJ held by the end effector 4 to the second target object OBJ that is different from the first target object OBJ. In this case, the end effector 4 may be considered to perform the releasing process on the second target object OBJ to which the end effector 4 should attach the first target object OBJ. Similarly, the end effector 4 may be considered to perform the releasing process on the first target object OBJ that should be released by the end effector 4. Note that the attachment process may be referred to as a processing process.

The robot 1 may perform, as one example of the placing process (in other words, the placing operation), an adhesive process (in other words, an adhesive operation) for adhering the first target object to the second target object that is different from the first target object by using the end effector 4 that is configured to perform the holding process and the releasing process. For example, the robot 1 may perform the adhesive process for holding the first target object OBJ by using the end effector 4, and then adhering the first target object OBJ held by the end effector 4 to the second target object OBJ that is different from the first target object OBJ. In this case, the end effector 4 may be considered to perform the releasing process on the second target object OBJ to which the end effector 4 should adhere the first target object OBJ. Similarly, the end effector 4 may be considered to perform the releasing process on the first target object OBJ that should be released by the end effector 4. Note that the adhesive process may be referred to as a processing process.

The robot 1 may perform, as one example of the placing process (in other words, the placing operation), a welding process (in other words, a welding operation) for welding the first target object to the second target object that is different from the first target object by using the end effector 4 that is configured to perform the holding process and the releasing process. For example, the robot 1 may perform the welding process for holding the first target object OBJ by using the end effector 4, and then welding the first target object OBJ held by the end effector 4 to the second target object OBJ that is different from the first target object OBJ. In this case, the end effector 4 may be considered to perform the releasing process on the second target object OBJ to which the end effector 4 should weld the first target object OBJ. Similarly, the end effector 4 may be considered to perform the releasing process on the first target object OBJ that should be released by the end effector 4. Note that the welding process may be referred to as a processing process.

The robot 1 may perform, as one example of the placing process (in other words, the placing operation), a screw tightening process (in other words, a screw tightening operation) for tightening the first target object, which serves as a screw, into a screw hole formed in the second target object that is different from the first target object by using the end effector 4 that is configured to perform the holding process and the releasing process. For example, the robot 1 may perform the screw tightening process for holding the first target object OBJ by using the end effector 4, and then tightening the first target object OBJ held by the end effector 4 into the second target object OBJ that is different from the first target object OBJ. In this case, the end effector 4 may be considered to perform the releasing process on the second target object OBJ into which the end effector 4 should tighten the first target object OBJ. Similarly, the end effector 4 may be considered to perform the releasing process on the first target object OBJ that should be released by the end effector 4. Note that the screw tightening process may be referred to as a processing process.

The robot 1 may perform, as one example of the placing process (in other words, the placing operation), a process for a disposal (in other words, a disposal operation) by using the end effector 4 that is configured to perform the holding process and the releasing process. For example, the robot 1 may perform the disposal process for holding the target object OBJ by using the end effector 4, and then releasing (namely, placing) the target object OBJ held by the end effector 4 on a disposal position on which the target object OBJ is disposed. In this case, the end effector 4 may be considered to perform the releasing process on the target object OBJ that should be disposed by the end effector 4.

For example, the end effector 4 may perform the predetermined process on each of a plurality of target objects OBJ. Namely, the end effector 4 may sequentially perform the predetermined process on the plurality of target objects OBJ. In this case, the robot 1 may move the end effector 4 to a first position at which the end effector 4 can perform the predetermined process on a first target object OBJ, and the end effector 4 may perform the predetermined process on the first target object OBJ after the end effector 4 moves to the first position. Then, the robot 1 may move end effector 4 to a second position at which the end effector 4 can perform the predetermined process on a second target object OBJ that is different from the first target object OBJ, and the end effector 4 may perform the predetermined process on the second target object OBJ after the end effector 4 moves to the second position.

For example, the end effector 4 may perform the predetermined process on each of a plurality of parts of the single target object OBJ. Namely, the end effector 4 may sequentially perform the predetermined process on the plurality of parts of the single target object OBJ. In this case, the robot 1 may move the end effector 4 to a third position at which the end effector 4 can perform the predetermined process on a first part of the target object OBJ, and the end effector 4 may perform the predetermined process on the first part of the target object OBJ after the end effector 4 moves to the third position. Then, the robot 1 may move end effector 4 to a fourth position at which the end effector 4 can perform the predetermined process on a second part of the target object OBJ, and the end effector 4 may perform the predetermined process on the second part of the target object OBJ after the end effector 4 moves to the fourth position.

The robot 1 may repeat the embedding process for embedding the first target object OBJ into each hole on the second target object OBJ in which a plurality of holes are formed, as one example of an operation for performing the predetermined process on each of the plurality of parts of the single target object OBJ. Note that a part of the target object OBJ on which the end effector 4 performs the predetermined process may be referred to as a target part or a target member. For example, each part (each member) of the second target object OBJ in which each hole is formed may be referred to as the target part or the target member. Note that each component may be referred to as the target part or the target member in a case where the target object OBJ includes a plurality of components. Each member may be regarded as the target part or the target member in a case where the target object OBJ includes a plurality of members.

The target object OBJ on which the end effector 4 performs the predetermined process may include a workpiece W, as illustrated in FIG. 2. The workpiece W may include a component or a member that is used to manufacture a desired product, for example. The workpiece W may include a component or a member that is processed to manufacture the desired product, for example. The workpiece W may include a component or a member that is transported to manufacture the desired product, for example. The workpiece W may include a component or a member that is moved by a transportation for manufacturing the desired product, for example. The workpiece W may include a component or a member that is moved to manufacture the desired product, for example.

The target object OBJ on which the end effector 4 performs the predetermined processing may include a placing apparatus T on which the workpiece W is placed, as illustrated in FIG. 2. A container (a container box) CB is one example of the placing apparatus T. The container CB may be a placing apparatus T which includes a bottom wall BS and a side wall SS protruding upward from the bottom wall BS and in which the workpiece W is placed on the bottom wall SB in a containing space surrounded by the bottom wall BS and the side wall SS. The container CB may be a placing apparatus T which includes the bottom wall BS and the side wall SS protruding upward from the bottom wall BS and which can contain the workpiece W in the containing space SP surrounded by the bottom wall BS and the side wall SS. However, the container CB may not include the side wall SS. The container CB that does not include the side wall SS may be referred to as a pallet. Note that the placing apparatus T may be the pallet. Moreover, the placing apparatus T is not limited to the container CB or the pallet, and may be an existing object on which the workpiece W is allowed to be placed. Note that the placing apparatus T may be referred to as a placing member. The placing apparatus T may be positioned on the support surface S. The placing apparatus T may be fixed to the support surface S. Alternatively, at least a part of the placing apparatus T may be movable relative to the support surface S.

An example in which the placing apparatus T is supported by a transport apparatus that is configured to move (in other words, that is configured to transport) the placing apparatus T is a first example in which at least a part of the placing apparatus T is movable relative to the support surface S. A transport apparatus that is configured to move by itself on the support surface S is a first example of the transport apparatus. In this case, the placing apparatus T may be placed on the transport apparatus that is configured to move by itself or may be held by the transport apparatus that is configured to move by itself. Note that the transport apparatus that is configured to move by itself may be referred to as an AGV (Automatic Guided Vehicle). A belt conveyer is a second example of the transport apparatus. In this case, the placing apparatus T may be placed on a transport belt that is a part of the belt conveyor and that is movable relative to the support surface S. A flying apparatus that is configured to fly over the support surface S is a third example of the transport apparatus. In this case, the placing apparatus T may be placed on the transport apparatus that is configured to fly or may be held by the transport apparatus that is configured to fly. Note that the transport apparatus that is configured to fly may be referred to as an unmanned aerial vehicle or a drone. Another robot arm which is different from the robot arm 12 and to which an end effector configured to hold the placing apparatus T is attached is a fourth example of the transport apparatus. In this case, the placing apparatus T may be held by the end effector attached to another robot arm.

An example in which the placing apparatus T itself is movable relative to the support surface S is a second example in which at least a part of the placing apparatus T is movable relative to the support surface S. The placing apparatus T that is configured to move by itself on the support surface S is a first example of the movable placing apparatus T. Note that the placing apparatus T that is configured to move by itself may be referred to as an AGV (Automatic Guided Vehicle). A belt conveyer is a second example of the movable placing apparatus T. In this case, a transport belt which is a part of the belt conveyor and on which the workpiece W is placed may move relative to the support surface. The placing apparatus that is configured to fly over the support surface S is a third example of the movable placing apparatus T. In this case, the placing apparatus T may be movable relative to the support surface S by flying over the support surface S. Note that the placing apparatus T that is configured to fly may be referred to as an unmanned aerial vehicle or a drone. Another robot arm which is different from the robot arm 12 and to which an end effector configured to hold the workpiece W is attached is a fourth example of the movable placing apparatus T. In this case, the end effector attached to another robot arm may move relative to the support surface S.

When the transport apparatus moves the placing apparatus T, the workpiece W placed on the placing apparatus T also moves relative to the support surface S. Therefore, the transport apparatus that is configured to move the placing apparatus T may be considered to be equivalent to a transport apparatus that is configured to transport the workpiece W. Similarly, when the placing apparatus T moves, the workpiece W placed on the placing apparatus T also moves relative to the support surface S. Therefore, the movable placing apparatus T may be considered to be equivalent to a movement apparatus that is configured to move the workpiece W (in other words, a transport apparatus that is configured to transport the workpiece W). Note that FIG. 2 illustrates an example in which the placing apparatus T is configured to move by itself on the support surface S.

Note that the a placing apparatus T, on which the workpiece W is placed, may be placed on a second placing apparatus T that is movable relative to the support surface S in a case where at least a part of the placing apparatus T is movable relative to the support surface S. In this case, an apparatus that includes the first placing apparatus T and the second placing apparatus T may be referred to as the placing apparatus T.

However, the target object OBJ may not include the placing apparatus T. Moreover, the workpiece W may not be placed on the placing apparatus T, and the placing apparatus T may not be used. For example, the workpiece W may be placed on the support surface S.

In a case where the target object OBJ includes the workpiece W and the placing apparatus T, the above-described holding process may include a process for holding the workpiece W on the stationary or moving placing apparatus T. The above-described holding process may include a process for holding the workpiece W placed on the support surface S. The above-described releasing process may include a process for releasing the workpiece W held by the end effector 4 in order to place the workpiece W held by the end effector 4 at a desired position on the stationary or moving placing apparatus T. The above-described releasing process may include a process for releasing the workpiece W held by the end effector 4 in order to place the workpiece W held by the end effector 4 at a desired position on the support surface S. The above-described releasing process may include a process for releasing a first workpiece W held by the end effector 4 in order to embed the first workpiece W held by the end effector 4 into a second workpiece W placed on the stationary or moving placing apparatus T. The above-described releasing process may include a process for releasing the first workpiece W held by the end effector 4 in order to embed the first workpiece W held by the end effector 4 into the second workpiece W placed on the support surface S. The above-described releasing process may include a process for releasing a first workpiece W held by the end effector 4 in order to embed (namely, insert) the first workpiece W held by the end effector 4 into a hole formed in a second workpiece W placed on the stationary or moving placing apparatus T. The above-described releasing process may include a process for releasing a first workpiece W held by the end effector 4 in order to embed (namely, insert) the first workpiece W held by the end effector 4 into a hole formed in a second workpiece W placed on the support surface S.

The robot control apparatus 13 controls an operation of the robot 1.

Specifically, the robot control apparatus 13 may control an operation of the robot arm 12. For example, the robot control apparatus 13 may control the operation of the robot arm 12 so that the desired link 121 rotates around an axis defined by the desired joint 122. For example, the robot control apparatus 13 may control the operation of the robot arm 12 so that the end effector 4 attached to the robot arm 12 is positioned at a desired position. For example, the robot control apparatus 13 may control the operation of the robot arm 12 so that the end effector 4 attached to the robot arm 12 moves to a desired position.

The robot control apparatus 13 may control an operation of the end effector 4 attached to the robot 1, in addition to or instead of controlling the operation of the robot 1. For example, the robot control apparatus 13 may control the operation of the end effector 4 so that the end effector 4 holds the target object OBJ at a desired timing. Namely, the robot control apparatus 13 may control the operation of the end effector 4 so that the end effector 4 performs the holding process at the desired timing. For example, the robot control apparatus 13 may control the operation of the end effector 4 so that the end effector 4 releases the held target object OBJ at a desired timing. Namely, the robot control apparatus 13 may control the operation of the end effector 4 so that the end effector 4 performs the releasing process at the desired timing. In a case where the end effector 4 is the hand gripper, the robot control apparatus 13 may control a timing at which the hand gripper opens and closes. In a case where the end effector 4 is the vacuum gripper, the robot control apparatus 13 may control a timing at which a vacuum apparatus of the vacuum gripper is turned on and turned off. In a case where the end effector 4 is the magnetic suction gripper, the robot control apparatus 13 may control a timing at which a magnetic suction apparatus of the magnetic suction gripper is turned on and turned off.

Note that FIG. 2 illustrates an example in which the robot 1 is the robot arm 12 (namely, a vertically articulated robot). However, the robot 1 may be a robot that is different from the vertically articulated of robot. For example, the robot 1 may be a SCARA robot (namely, a horizontally articulated robot). For example, the robot 1 may be a parallel link robot. For example, the robot 1 may be a dual-armed robot including two robot arms 12. For example, the robot 1 may be a Cartesian robot. For example, the robot 1 may be a cylindrical robot. The robot 1 may be referred to as a movable apparatus. The movable apparatus may include at least one of an automated guided vehicle and an unmanned aerial vehicle in addition to the robot 1. For example, the robot 1 may be mounted on at least one of the automatic guided vehicle and the unmanned aerial vehicle.

Again in FIG. 1, the imaging system 2 images the target object OBJ. In order to image the target object OBJ, the imaging system 2 includes an imaging apparatus 21, an imaging apparatus 22, and a projection apparatus 23. Note that the imaging system 2 may be referred to as an imaging unit.

The imaging apparatus 21 is a camera that is configured to images the target object OBJ. In the present example embodiment, the imaging apparatus 21 is a monocular camera. The imaging apparatus 21 generates image data IMG_2D by imaging the target object OBJ. Namely, the imaging apparatus 21 generates image data IMG_2D that is an imaged result of the target object OBJ. The image data IMG_2D generated by the imaging apparatus 21 is output from the imaging apparatus 21 to the control apparatus 3. As a result, the control apparatus 3 acquires the image data IMG_2D acquired by the imaging apparatus 21 imaging the target object OBJ. In the present example embodiment, the imaging apparatus 21 is a monocular camera. Specifically, the imaging apparatus 21 is configured to image the target object OBJ by using the monocular camera (in other words, an imaging element). Specifically, since the imaging apparatus 21 is the monocular camera, the imaging apparatus 21 generates, as the image data IMG_2D, single image data generated by the monocular camera. In this case, the image data IMG_2D that corresponds to the single image data (namely, that indicates a single image) may be referred to as monocular image data. Note that the imaging apparatus 21 is not limited to the monocular camera. The imaging apparatus 21 may be a stereo camera that is configured to image the target object OBJ by using two monocular cameras, or may include three or more monocular cameras. Note that the imaging apparatus 21 may be at least one of a light field camera, a plenoptic camera, and a multispectral camera.

The imaging apparatus 22 is a camera that is configured to images the target object OBJ, as with the imaging apparatus 21. In the present example embodiment, the imaging apparatus 22 is a stereo camera. Specifically, the imaging apparatus 22 is configured to image the target object OBJ by using two monocular cameras (in other words, tow imaging elements). The imaging apparatus 22 generates image data IMG_3D by imaging the target object OBJ. Namely, the imaging apparatus 22 generates the image data IMG_3D that is an imaged result of the target object OBJ. Specifically, since the imaging apparatus 22 is the stereo camera, the imaging apparatus 22 generates the image data IMG_3D that includes two image data generated by the two monocular cameras, respectively. In this case, the image data IMG_3D that includes two image data (namely, that indites two images) may be referred to as stereo image data. The image data IMG_3D generated by the imaging apparatus 22 is output from the imaging apparatus 22 to the control apparatus 3. As a result, the control apparatus 3 acquires the image data IMG_3D acquired by the imaging apparatus 22 imaging the target object OBJ. Note that the imaging apparatus 22 is not limited to the monocular camera. The imaging apparatus 22 may be a monocular camera, or may include three or more monocular cameras. Note that the imaging apparatus 22 may be at least one of a light field camera, a plenoptic camera, and a multispectral camera.

The projection apparatus 23 is an apparatus that is configured to irradiate the target object OBJ with projection light. Especially, the projection apparatus 23 is an apparatus that is configured to project a desired projection pattern on the target object OBJ by irradiating the target object OBJ with the projection light. Note that the projection pattern may be referred to as an intensity distribution of the light projected on the target object OBJ. When the intensity distribution of the projected light changes, the projection pattern also changes. The desired projection pattern may include a random pattern, for example. The random pattern may be a projection pattern having different patterns in unit irradiation areas, respectively. The random pattern may include a random dot pattern. The desired projection pattern may include a one-dimensional or two-dimensional grid pattern. The desired projection pattern may include a line-shaped pattern, for example. The desired projection pattern may include a stripe-shaped pattern, for example. The desired projection pattern may include another projection pattern. The imaging apparatus 22 images the target object OBJ on which the projection pattern is projected. In this case, the target object OBJ on which the projection pattern is projected is captured in the image indicated by the image data IMG_3D. On the other hand, the imaging apparatus 21 may not image the target object OBJ on which the projection pattern is projected. The imaging apparatus 21 may image the target object OBJ on which the projection pattern is not projected. In this case, the target object OBJ on which the projection pattern is projected may not be captured in the image indicated by the image data IMG_2D. The target object OBJ on which the projection pattern is not projected may be captured in the image indicated by the image data IMG_2D. Note that the projection light for projecting the desired projection pattern on the target object OBJ may be referred to as pattern light or may be referred to as structure light. In this case, the projection light may include the pattern light or may include the structure light. Moreover, the projection light may be light with a uniform projection pattern (namely, a uniform intensity distribution).

Note that the projection apparatus 23 may be considered to illuminate the target object OBJ with the projection light by irradiating the target object OBJ with the projection light. In this case, the projection apparatus 23 may be configured to serve as an illumination apparatus that illuminates the target object OBJ. In a case where the projection apparatus 23 serves as the illumination apparatus, the projection light may be referred to as illumination light. The projection light (the illumination light) used as the illumination apparatus may be light whose intensity distribution is uniform. In a case where the projection apparatus 23 serves as the illumination apparatus, the projection light may not be the light capable of projecting the desired projection pattern on the target object OBJ. In a case where the projection apparatus 23 serves as the illumination apparatus, the projection light may be any light capable of illuminating the target object OBJ.

The imaging apparatus 21 may image the entire target object OBJ. Alternatively, the imaging apparatus 21 may image a part of the target object OBJ. Namely, the imaging apparatus 21 may image a part of the target object OBJ and may not image another part of the target object OBJ. Similarly, the imaging apparatus 22 may image the entire target object OBJ. Alternatively, the imaging apparatus 22 may image a part of the target object OBJ. Namely, that imaging apparatus 22 may image a part of the target object OBJ and may not image another part of the target object OBJ.

The imaging apparatus 21 may image a single target object OBJ. Namely, the single target object OBJ may be captured in the image indicated by the image data IMG_2D. Alternatively, the imaging apparatus 21 may image a plurality of target objects OBJ. Namely, the plurality of target objects OBJ may be captured in the image illustrated by image data IMG_2D. In this case, the control apparatus 3 may determine (in other words, select) one target object OBJ of the plurality of target objects OBJ captured by the imaging apparatus 21 as the target object OBJ on which the end effector 4 actually performs the predetermined process, as described in detail later. Note that the one target object OBJ of the plurality of target objects OBJ captured by the imaging apparatus 21 on which the end effector 4 actually performs the predetermined process may be referred to as a process performed object.

The imaging apparatus 22 may image a single target object OBJ. Namely, the single target object OBJ may be captured in the image indicated by the image data IMG_3D. Alternatively, the imaging apparatus 22 may image a plurality of target objects OBJ. Namely, the plurality of target objects OBJ may be captured in the image illustrated by image data IMG_3D. In this case, the control apparatus 3 may determine (in other words, select) one target object OBJ of the plurality of target objects OBJ captured by the imaging apparatus 22 as the target object OBJ on which the end effector 4 actually performs the predetermined process, as described in detail later. Note that the one target object OBJ of the plurality of target objects OBJ captured by the imaging apparatus 22 on which the end effector 4 actually performs the predetermined process may be referred to as a process performed object.

In a case where each of the imaging apparatuses 21 and 22 images the plurality of target objects OBJ, the plurality of target objects OBJ imaged by the imaging apparatus 21 may be the same as the plurality of target objects OBJ imaged by the imaging apparatus 22. Namely, the plurality of target objects OBJ captured in the image indicated by the image data IMG_2D may be the same as the plurality of target objects OBJ captured in the image indicated by image data IMG_3D. Alternatively, at least one of the plurality of target objects OBJ captured by the imaging apparatus 21 may be different from at least one of the plurality of target objects OBJ captured by the imaging apparatus 22. Namely, at least one of the plurality of target objects OBJ captured in the image indicated by the image data IMG_2D may be the same as at least one of the plurality of target objects OBJ captured in the image indicated by the image data IMG_3D.

The plurality of target objects OBJ imaged by at least one of the imaging apparatuses 21 and 22 may be positioned so that at least two of the plurality of target objects OBJ overlap at least partially. As one example, in a case where the target object OBJ is the workpiece W corresponding to the component used to manufacture the desired product, the plurality of workpieces W (namely, the plurality of components) may be positioned so that at least two of the plurality of workpieces W overlap at least partially. In this case, the robot 1 may perform a bin picking for picking the workpiece W one by one from the plurality of workpieces W positioned in a disordered manner.

The imaging system 2 is attached to the robot arm 12, as with the end effector 4. Namely, the imaging apparatuses 21 and 22 and the projection apparatus 23 are attached to the robot arm 12. For example, as illustrated in FIG. 2, the imaging apparatuses 21 and 22 and the projection apparatus 23 may be attached to an end of the robot arm 12, as with the end effector 4. In this case, the imaging apparatuses 21 and 22 and the projection apparatus 23 are movable by the movement of the robot arm 12. Namely, the robot arm 12 moves the imaging apparatuses 21 and 22 and the projection apparatus 23.

However, the imaging system 2 may not be attached to the robot arm 12 as described in detail later in a sixth modified example. The imaging system 2 may be attached to any position that allows the imaging system 2 to irradiate the target object OBJ with the projection light and to image the target object OBJ. In this case, the imaging system 2 may be attached to a structural object such as a pillar so as to irradiate the target object OBJ with the projection light and to image the target object OBJ. Note that at least one of the imaging apparatus 21, the imaging apparatus 22, and the projection apparatus 23 may be attached to the robot arm 12, and at least other one of the imaging apparatus 21, the imaging apparatus 22, and the projection apparatus 23 may be attached to a position (for example, the structural object such as the pillar) that is different from the robot arm 12. In a case where at least one of the imaging apparatus 21 and the imaging apparatus 22 is attached to the position that is different form the robot arm 12, at least one of the imaging apparatus 21 and the imaging apparatus 22 may be attached to the structural object, such as the pillar, that is positioned so that the target object OBJ can be imaged. Moreover, in a case where the projection apparatus 23 is attached to the position that is different from the robot arm 12, the projection apparatus 23 may be attached to the structural object, such as the pillar, that is positioned so that the target object OBJ can be irradiated with the projection light.

The imaging apparatus 21 may image the target object OBJ in a period during which the target object OBJ and the imaging apparatus 21 are being relatively displaced. Note that a state in which the imaging apparatus 21 and the target object OBJ are relatively displaced may mean a state in which a relative positional relationship between the imaging apparatus 21 and the target object OBJ is changing. The state in which the imaging apparatus 21 and the target object OBJ are relatively displaced may mean a state in which the imaging apparatus 21 and the target object OBJ are relatively moving. For example, the state in which the imaging apparatus 21 and the target object OBJ are relatively displaced may include a state in which the target object OBJ is moving with respect to the imaging apparatus 21. For example, the state in which the imaging apparatus 21 and the target object OBJ are relatively displaced may include a state in which the imaging apparatus 21 is moving with respect to the target object OBJ. In this case, the imaging apparatus 21 may not stop in order to image the target object OBJ, and therefore, the robot system SYS can efficiently perform the predetermined process on the target object OBJ by using the end effector 4.

Alternatively, the imaging apparatus 21 may image the target object OBJ in a period during which the imaging apparatus 21 and the target object OBJ are not being relatively displaced. Note that a state in which the imaging apparatus 21 and the target object OBJ are not being relatively displaced may mean a state in which the relative positional relationship between the imaging apparatus 21 and the target object OBJ is not changed. The state in which the imaging apparatus 21 and the target object OBJ are not being relatively displaced may mean a state in which the imaging apparatus 21 and the target object OBJ are not relatively moving. The state in which the imaging apparatus 21 and the target object OBJ are not being relatively displaced may mean a state in which the imaging apparatus 21 and the target object OBJ stop. The state in which the imaging apparatus 21 and the target object OBJ are not being relatively displaced may mean a state in which the imaging apparatus 21 and the target object OBJ are moving toward the same movement direction at the same movement speed.

The imaging apparatus 22 may image the target object OBJ in a period during which the target object OBJ and the imaging apparatus 22 are being relatively displaced. Note that a state in which the imaging apparatus 22 and the target object OBJ are relatively displaced may mean a state in which a relative positional relationship between the imaging apparatus 22 and the target object OBJ is changing. The state in which the imaging apparatus 22 and the target object OBJ are relatively displaced may mean a state in which the imaging apparatus 22 and the target object OBJ are relatively moving. For example, the state in which the imaging apparatus 22 and the target object OBJ are relatively displaced may include a state in which the target object OBJ is moving with respect to the imaging apparatus 22. For example, the state in which the imaging apparatus 22 and the target object OBJ are relatively displaced may include a state in which the imaging apparatus 22 is moving with respect to the target object OBJ. In this case, the imaging apparatus 22 may not stop in order to image the target object OBJ, and therefore, the robot system SYS can efficiently perform the predetermined process on the target object OBJ by using the end effector 4.

Alternatively, the imaging apparatus 22 may image the target object OBJ in a period during which the imaging apparatus 22 and the target object OBJ are not being relatively displaced. Note that a state in which the imaging apparatus 22 and the target object OBJ are not being relatively displaced may mean a state in which the relative positional relationship between the imaging apparatus 22 and the target object OBJ is not changed. The state in which the imaging apparatus 22 and the target object OBJ are not being relatively displaced may mean a state in which the imaging apparatus 22 and the target object OBJ are not relatively moving. The state in which the imaging apparatus 22 and the target object OBJ are not being relatively displaced may mean a state in which the imaging apparatus 22 and the target object OBJ stop. The state in which the imaging apparatus 22 and the target object OBJ are not being relatively displaced may mean a state in which the imaging apparatus 22 and the target object OBJ are moving toward the same movement direction at the same movement speed.

The imaging apparatuses 21 and 22 may image the target object OBJ in synchronization with each other. For example, the imaging apparatuses 21 and 22 may image the target object OBJ simultaneously. Namely, the imaging apparatuses 21 and 22 may image the target object OBJ so that a 2D imaging time at which the imaging apparatus 21 images the target object OBJ and a 3D imaging time at which the imaging apparatus 22 images the target object OBJ are the same time. The imaging apparatuses 21 and 22 may image the target object OBJ so that the 2D imaging time at which the imaging apparatus 21 images the target object OBJ to generate the image data IMG_2D and the 3D imaging time at which the imaging apparatus 22 images the target object OBJ to generate the image data IMG_3D are the same time.

The imaging apparatuses 21 and 22 may image the target object OBJ under the control of the control apparatus 3. In this case, a time (in other words, a timing) at which each of the imaging apparatuses 21 and 22 images the target object OBJ may be controlled by the control apparatus 3. For example, the control apparatus 3 may control the imaging apparatuses 21 and 22 so that the imaging apparatuses 21 and 22 image the target object OBJ in synchronization with each other. For example, the control apparatus 3 may control the imaging apparatuses 21 and 22 so that the imaging apparatuses 21 and 22 image the target object OBJ simultaneously. Namely, the control apparatus 3 may control the imaging apparatuses 21 and 22 so that the 2D imaging time are the same as the 3D imaging time are the same time.

Here, a state in which "the 2D imaging time and the 3D imaging time are the same time" may include a state in which "the 2D imaging time and the 3D imaging time are exactly the same time literally". The state in which "the 2D imaging time and the 3D imaging time are the same time" may include a state in which "the 2D imaging time and the 3D imaging time are not exactly the same time, but the 2D imaging time and the 3D imaging time are allowed to be considered to be substantially the same time because a difference in time between the 2D imaging time and the 3D imaging time is smaller than a first allowable upper limit value". Here, the first allowable upper limit value may be an allowable upper limit value based on a control error of the robot arm 12. For example, there is a possibility that the difference in time between the 2D imaging time and the 3D imaging time causes an error in a calculated result of at least one of a position and a pose of the target object OBJ described below (namely, decreases an accuracy of at least one of the calculated position and pose of the target object OBJ). In this case, there is a possibility that the error in the calculated result of at least one of the position and the pose of the target object OBJ causes the control error of the robot arm 12. There is a possibility that the control error of the robot arm 12 results in a movement error of the end effector 4, and the end effector 4 cannot properly perform the predetermined process on the target object OBJ. The first allowable value may be set to a proper value for avoiding a state in which the end effector 4 cannot properly perform the predetermined process on the target object OBJ due to the control error of the robot arm 12. Note that the first allowable upper limit value may be considered to be equivalent to an allowable upper limit value of the movement error of the end effector 4 by the robot arm 12. Moreover, for example, even in a case where a synchronization error in the imaging processing of the imaging apparatuses 21 and 22 causes the difference in time between the 2D imaging time and the 3D imaging time, the 2D imaging time and the 3D imaging time may be considered to be substantially the same time. Note that the synchronization error in the imaging processing of the imaging apparatuses 21 and 22 may be a synchronization control error in the imaging processing of the imaging apparatuses 21 and 22 by the control apparatus 3.

However, the imaging apparatuses 21 and 22 may not image the target object OBJ simultaneously. Namely, the imaging apparatuses 21 and 22 may image the target object OBJ so that the 2D imaging time at which the imaging apparatus 21 images the target object OBJ and the 3D imaging time at which the imaging apparatus 22 images the target object OBJ are different times. Note that a state in which "the 2D imaging time and the 3D imaging time are the different times" may include a state in which "the 2D imaging time and the 3D imaging time are not allowed to be considered to be substantially the same time because the difference in time between the 2D imaging time and the 3D imaging time is larger than the first allowable upper limit value".

In the present example embodiment, in a case where the imaging apparatuses 21 and 22 image the target object OBJ in a period during which the target object OBJ and each of the imaging apparatuses 21 and 22 are being relatively displaced, the imaging apparatuses 21 and 22 may image the target object OBJ so that the 2D imaging time and the 3D imaging time are the same time. Namely, in a case where the imaging apparatuses 21 and 22 image the target object OBJ in the period during which the target object OBJ and each of the imaging apparatuses 21 and 22 are being relatively displaced, the control apparatus 3 may control the imaging apparatuses 21 and 22 so that the 2D imaging time and the 3D imaging time are the same time.

On the other hand, in a case where the imaging apparatuses 21 and 22 image the target object OBJ in a period during which the target object OBJ and each of the imaging apparatuses 21 and 22 are not being relatively displaced, the imaging apparatuses 21 and 22 may not image the target object OBJ so that the 2D imaging time and the 3D imaging time are the same time. Namely, the control apparatus 3 may not control the imaging apparatuses 21 and 22 so that the 2D imaging time and the 3D imaging time are the same time. For example, the imaging apparatuses 21 and 22 may image the target object OBJ so that the 2D imaging time and the 3D imaging time are the different times. Namely, the control apparatus 3 may control the imaging apparatuses 21 and 22 so that the 2D imaging time and the 3D imaging time are the different times. However, in a case where the imaging apparatuses 21 and 22 image the target object OBJ in the period during which the target object OBJ and each of the imaging apparatuses 21 and 22 are not being relatively displaced, the imaging apparatuses 21 and 22 may image the target object OBJ so that the 2D imaging time and the 3D imaging time are the same time. Namely, the control apparatus 3 may control the imaging apparatuses 21 and 22 so that the 2D imaging time and the 3D imaging time are the same time.

The control apparatus 3 performs a robot control processing. The robot control processing includes a processing for generating a robot control signal for controlling the robot 1. Specifically, the control apparatus 3 generates the robot control signal based on at least one of the image data IMG_2D and IMG_3D output from the imaging system 2. In the present example embodiment, the control apparatus 3 calculates at least one of a position and a pose of the target object OBJ in a global coordinate system of the robot system SYS based on at least one of the image data IMG_2D and IMG_3D, and generates the robot control signal based on at least one of the calculated position and pose of the target object OBJ.

The global coordinate system is a coordinate system that is a basis for the robot system SYS. For example, the global coordinate system may be a coordinate system that is a basis for the robot 1. Note that it can be said that the global coordinate system is a coordinate system that is used to control the robot 1. A world coordinate system that is defined relative to the support surface S on which the robot 1 is positioned may be used as the global coordinate system. Namely, the world coordinate system that is fixed relative to the support surface S may be used as the global coordinate system.

However, the control apparatus 3 may calculate at least one of the position and the pose of the target object OBJ in a coordinate system that is different from the global coordinate system based on at least one of the image data IMG_2D and IMG_3D.

As a first example, the control apparatus 3 may calculate at least one of the position and the pose of the target object OBJ in a robot coordinate system based on at least one of the image data IMG_2D and IMG_3D. The robot coordinate system may be a coordinate system that is defined relative to the robot 1. Namely, the robot coordinate system may be a coordinate system that is fixed relative to the robot 1 (for example, that is fixed relative to the base 11 of the robot 1). Note that the robot coordinate system may be referred to as the global coordinate system because it is defined relative to the robot 1. Note that it can be said that the robot coordinate system is a coordinate system that is used to control the robot 1.

As a second example, the control apparatus 3 may calculate at least one of the position and the pose of the target object OBJ in a 2D imaging coordinate system based on at least one of the image data IMG_2D and IMG_3D. The 2D imaging coordinate system may be a coordinate system that is defined relative to the imaging apparatus 21. Namely, the 2D imaging coordinate system may be a coordinate system that is fixed relative to the imaging apparatus 21. A coordinate system that is defined based on an optical axis AX21 (see FIG. 2) of an optical system (especially, a terminal optical element such as an objective lens) of the imaging apparatus 21 is one example of the 2D imaging coordinate system. A coordinate system in which one of three axes defining the 2D imaging coordinate system is an axis that is along the optical axis AX21 (see FIG. 2) of the optical system (especially, the terminal optical element such as the objective lens) of the imaging apparatus 21 is another example of the 2D imaging coordinate system.

As a third example, the control apparatus 3 may calculate at least one of the position and the pose of the target object OBJ in a 3D imaging coordinate system based on at least one of the image data IMG_2D and IMG_3D. The 3D imaging coordinate system may be a coordinate system that is defined relative to the imaging apparatus 22. Namely, the 3D imaging coordinate system may be a coordinate system that is fixed relative to the imaging apparatus 22. A coordinate system that is defined based on an optical axis AX22 (see FIG. 2) of an optical system (especially, a terminal optical element such as an objective lens) of the imaging apparatus 22 is one example of the 3D imaging coordinate system. A coordinate system in which one of three axes defining the 3D imaging coordinate system is an axis that is along the optical axis AX22 (see FIG. 2) of the optical system (especially, the terminal optical element such as the objective lens) of the imaging apparatus 22 is another example of the 3D imaging coordinate system.

The control apparatus 3 may perform an end effector control processing, in addition to performing the robot control processing. The end effector control processing may include a processing for generating an end effector control signal for controlling the end effector 4. Specifically, the control apparatus 3 may generate the end effector control signal based on at least one of the calculated position and pose of the target object OBJ.

Note that the end effector control processing may be included or may not be included in the robot control processing. Namely, the end effector control signal generated by the control apparatus 3 may be included in the robot control signal or may not be included in the robot control signal. In the below-described description, an example in which the end effector control processing is included in the robot control processing (namely, the end effector control signal is included in the robot control signal) will be described. Therefore, in the below-described description, the robot control processing may mean a processing for generating at least one of the robot control signal and the end effector control signal. Moreover, in the below-described description, the robot control signal may mean at least one of the signal for controlling the robot 1 and the signal for controlling the end effector 4. Note that the robot control signal may be simply referred to as a control signal.

In this manner, the control apparatus 3 and the imaging system 2 are used to control the robot 1. Therefore, a system including the control apparatus 3 and the imaging system 2 may be referred to as a robot control system or a control system.

The robot control signal generated by the control apparatus 3 is output to the robot control apparatus 13 of the robot 1. The robot control apparatus 13 controls the operation of the robot 1 based on the robot control signal generated by the control apparatus 3. Therefore, the robot control signal may include a signal for controlling the operation of the robot 1.

In a case where the robot control signal includes the signal for controlling the robot arm 12 as described above, the robot control apparatus 13 may control the robot arm 12 based on the robot control signal. For example, the robot control apparatus 13 may control the operation of the robot arm 12 by controlling an operation of the actuator built into the joint 122 based on the robot control signal.

For example, the robot arm 12 moves the end effector 4 as described above. In this case, the robot control signal may include a signal for controlling the robot arm 12 so that the end effector 4 is positioned at a desired position. The robot control signal may include a signal for controlling the robot arm 12 so that the end effector 4 moves to the desired position. The robot control signal may include a signal for controlling the robot arm 12 so that a positional relationship between the end effector 4 and the target object OBJ is a desired positional relationship. In this case, the robot control apparatus 13 may control the robot arm 12 based on the robot control signal so that the end effector 4 is positioned at the desired position. The robot control apparatus 13 may control the robot arm 12 based on the robot control signal so that the end effector 4 moves to the desired position. The robot control apparatus 13 may control the robot arm 12 based on the robot control signal so that the positional relationship between the end effector 4 and the target object OBJ is the desired positional relationship.

As one example, in a case where the end effector 4 performs the holding process for holding the target object OBJ, the robot control signal may include a signal for controlling the robot arm 12 so that the end effector 4 moves toward (namely, approaches) a hold position at which the end effector 4 can hold the target object OBJ. Namely, the robot control signal may include a signal for controlling the robot arm 12 so that the end effector 4 is positioned at the hold position. In this case, the robot control apparatus 13 may control the robot arm 12 based on the robot control signal so that the end effector 4 moves toward (namely, approaches) the hold position. Namely, the robot control signal may control the robot arm 12 so that the end effector 4 is positioned at the hold position.

As another example, in a case where the end effector 4 performs the releasing process for releasing the held target object OBJ, the robot control signal may include a signal for controlling the robot arm 12 so that the end effector 4 moves toward (namely, approaches) a release position at which the end effector 4 should release the held target object OBJ. Namely, the robot control signal may include a signal for controlling the robot arm 12 so that the end effector 4 is positioned at the release position. In this case, the robot control apparatus 13 may control the robot arm 12 based on the robot control signal so that the end effector 4 moves toward (namely, approaches) the release position. Namely, the robot control signal may control the robot arm 12 so that the end effector 4 is positioned at the release position.

In a case where the robot control signal includes the signal for controlling the end effector 4 as described above, the robot control apparatus 13 may control the end effector 4 based on the robot control signal. For example, the robot control apparatus 13 may control the operation of the end effector 4 by controlling an operation of the actuator that moves the hand gripper constituting the end effector 4 based on the robot control signal. For example, the robot control apparatus 13 may control the operation of the end effector 4 by controlling an operation of the vacuum apparatus of the vacuum gripper constituting the end effector 4 based on the robot control signal.

As one example, in a case where the end effector 4 performs the holding process for holding the target object OBJ, the robot control signal may include a signal for controlling the end effector 4 so that the end effector 4 positioned at the above-described hold position holds the target object OBJ. In this case, the robot control apparatus 13 may control the end effector 4 based on the robot control signal so that the end effector 4 positioned at the hold position holds the target object OBJ.

As another example, in a case where the end effector 4 performs the releasing process for releasing the held target object OBJ, the robot control signal may include a signal for controlling the end effector 4 so that the end effector 4 positioned at the above-described release position releases the held target object OBJ. In this case, the robot control apparatus 13 may control the end effector 4 based on the robot control signal so that the end effector 4 positioned at the above-described release position releases the held target object OBJ.

The robot control signal may include a signal that is usable as it is by the robot control apparatus 13 to control the operation of the robot 1. The robot control signal may include a signal that is usable as it is as a robot driving signal that is used by the robot control apparatus 13 to control the operation of the robot 1. In this case, the robot control apparatus 13 may use the robot control signal as it is to control the operation of the robot 1. Specifically, for example, the control apparatus 3 may generate a driving signal of the actuator built in the joint 122 of the robot arm 12 as the robot control signal, and the robot control apparatus 13 may use the robot control signal generated by the control apparatus 3 as it is to control the actuator built in the joint 122 of the robot arm 12. The robot control signal may include a signal that is usable as it is by the robot control apparatus 13 to control the operation of the end effector 4.

The robot control signal may include a signal that is usable as it is by the robot control apparatus 13 to control the operation of the end effector 4. The robot control signal may include a signal that is usable as it is as an end effector driving signal that is used by the robot control apparatus 13 to control the operation of the end effector 4. In this case, for example, the control apparatus 3 may generate a driving signal (the end effector driving signal) of the actuator that moves the hand gripper constituting the end effector 4 as the robot control signal, and the robot control apparatus 13 may use the robot control signal generated by the control apparatus 3 as it is to control the actuator of the end effector 4. For example, the control apparatus 3 may generate a driving signal (the end effector driving signal) of the vacuum apparatus of the vacuum gripper constituting the end effector 4 as the robot control signal, and the robot control apparatus 13 may use the robot control signal generated by the control apparatus 3 as it is to control the vacuum apparatus of the end effector 4.

Note that the robot 1 may not include the robot control apparatus 13 in a case where the robot control signal includes the signal that is usable as it is by the robot control apparatus 13 to control the operation of at least one of the robot 1 and the end effector 4 as described above.

Alternatively, the robot control signal may include a signal that is usable by the robot control apparatus 13 to generate the robot driving signal for controlling the operation of the robot 1. In this case, the robot control apparatus 13 may generate the robot driving signal for controlling the operation of the robot 1 based on the robot control signal, and control the operation of the robot 1 based on the generated robot driving signal. For example, the robot control apparatus 13 may generate the driving signal of the actuator built in the joint 122 of the robot arm 12 based on the robot control signal, and control the actuator built in the joint 122 of the robot arm 12 based on the generated signal.

The robot control signal may include a signal that is usable by the robot control apparatus 13 to generate the end effector driving signal for controlling the operation of the end effector 4. In this case, the robot control apparatus 13 may generate the end effector driving signal for controlling the operation of the end effector 4 based on the end effector control signal, and control the operation of the end effector based on the generated end effector driving signal. For example, in a case where the end effector 4 is the hand gripper, the robot control apparatus 13 may generate the end effector driving signal for driving the actuator of the hand gripper based on the robot control signal, and control the actuator of the hand gripper based on the generated end effector driving signal. For example, in a case where the end effector 4 is the magnetic suction gripper, the robot control apparatus 13 may generate the end effector driving signal for driving the magnetic suction apparatus of the magnetic suction gripper based on the robot control signal, and control the magnetic suction apparatus of the magnetic suction gripper based on the generated end effector driving signal.

Note that the signal that is usable by the robot control apparatus 13 to generate the robot driving signal may include a signal indicating at least one of the position and the pose of the target object OBJ in the global coordinate system. In this case, for example, the robot control apparatus 13 may generate the robot driving signal for driving the actuator built in the joint 122 of the robot arm 12 based on the robot control signal so that the end effector 4 approaches the target object OBJ at least one of the position and the pose in the global coordinate system of which is calculated by the robot control signal (namely, the positional relationship between the robot 1 (the end effector 4) and the target object OBJ is the desired positional relationship), and control the operation of the robot arm 12 based on the generated robot driving signal.

The signal that is usable by the robot control apparatus 13 to generate the robot driving signal may include a signal indicating the desired positional relationship between the robot 1 and the target object OBJ in the global coordinate system. In this case, for example, the robot control apparatus 13 may generate the robot driving signal for driving the actuator built in the joint 122 of the robot arm 12 based on the robot control signal so that the positional relationship between the robot 1 (the end effector 4) and the target object OBJ is the desired positional relationship indicated by the robot control signal, and control the operation of the robot arm 12 based on the generated robot driving signal.

The signal that is usable by the robot control apparatus 13 to generate the robot driving signal may include a signal indicating the desired position of the end effector 4 in the global coordinate system. In this case, for example, the robot control apparatus 13 may generate the robot driving signal for driving the actuator built in the joint 122 of the robot arm 12 based on the robot control signal so that the end effector 4 is positioned at the desired position indicated by the robot control signal (namely, the positional relationship between the robot 1 (the end effector 4) and the target object OBJ is the desired positional relationship), and control the operation of the robot arm 12 based on the generated robot driving signal. A process position at which the end effector 4 should perform the process on the target object OBJ is one example of the desired position. The hold position at which the end effector 4 should hold the target object OBJ is one specific example of the desired position. In this case, the robot control apparatus 13 may generate the robot driving signal for driving the actuator built in the joint 122 of the robot arm 12 based on the robot control signal so that the end effector 4 moves to the hold position indicated by the robot control signal, and control the operation of the robot arm 12 based on the generated robot driving signal. The release position at which the end effector 4 should release the target object OBJ is one specific example of the desired position. In this case, the robot control apparatus 13 may generate the robot driving signal for driving the actuator built in the joint 122 of the robot arm 12 based on the robot control signal so that the end effector 4 moves to the release position indicated by the robot control signal, and control the operation of the robot arm 12 based on the generated robot driving signal.

Note that the signal that is usable by the robot control apparatus 13 to generate the robot driving signal may include a signal indicating a desired position of an end part (for example, a tool center point) of the robot arm 12 in the global coordinate system, or may include a signal indicating a desired position of the imaging system 2 in the global coordinate system. Note that the signal that is usable by the robot control apparatus 13 to generate the robot driving signal may be a signal indicating a movement distance and a movement direction from a current position of the end effector 4 to the desired position of the end effector 4.

Note that the coordinate system used as a basis in the robot control signal may be a coordinate system (for example, the robot coordinate system, the 2D imaging coordinate system, or the 3D imaging coordinate system) other than the global coordinate system.

### (1-2) Configuration of Control Apparatus 3

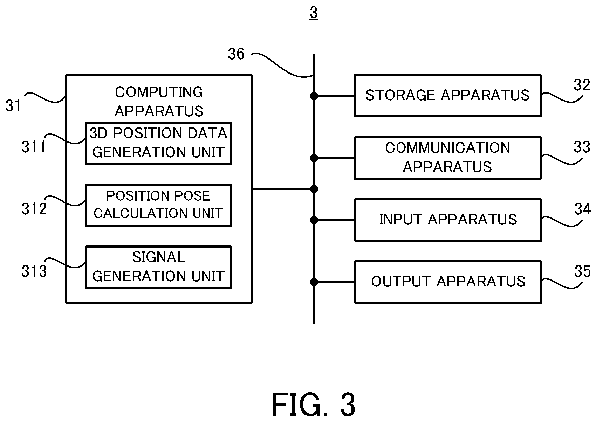

Next, with reference to FIG. 3, a configuration of the control apparatus 3 will be described. FIG. 3 is a block diagram that illustrates the configuration of the control apparatus 3.

As illustrated in FIG. 3, the control apparatus 3 includes a computing apparatus 31, a storage apparatus 32, and a communication apparatus 33. Furthermore, the control apparatus 3 may include an input apparatus 34 and an output apparatus 35. However, the control apparatus 3 may not include at least one of the input apparatus 34 and the output apparatus 35. The computing apparatus 31, the storage apparatus 32, the communication apparatus 33, the input apparatus 34, and the output apparatus 35 may be connected through a data bus 36.

The computing apparatus 31 may include at least one of a CPU (Central Processing Unit), a GPU (Graphic Processing Unit), and a FPGA (Field Programmable Gate Array), for example. The computing apparatus 31 reads a computer program. For example, the computing apparatus 31 may read the computer program recorded in the storage apparatus 32. For example, the computing apparatus 31 may read the computer program recorded in a non-transitory computer-readable recording medium by using a non-illustrated recording medium reading apparatus of the control apparatus 3. The computing apparatus 31 may acquire (namely, download or read) the computer program from a non-illustrated apparatus external to the control apparatus 3 through the communication apparatus 33 (alternatively, other communication apparatus). The computing apparatus 31 executes the read computer program. As a result, a logical functional block for performing a processing that should be performed by the control apparatus 3 (for example, the above-described robot control processing) is implemented in the computing apparatus 31. Namely, the computing apparatus 31 is configured to serve as a controller for implementing the logical functional block for performing the processing that should be performed by the control apparatus 3.

An arithmetic model that is buildable by machine learning may be implemented in the computing apparatus 31 by the computing apparatus 31 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The computing apparatus 31 may perform the robot control processing by using the arithmetic model. Namely, an operation for performing the robot control processing may include an operation for performing the robot control processing by using the arithmetic model. Note that the arithmetic model that has been built by off-line machine learning using training data may be implemented in the computing apparatus 31. Moreover, the arithmetic model implemented in the computing apparatus 31 may be updated by online machine learning on the computing apparatus 31. Alternatively, the computing apparatus 31 may perform the robot control processing by using the arithmetic model implemented in an apparatus external to the computing apparatus 31 (namely, an apparatus external to the control apparatus 3), in addition to or instead of the arithmetic model implemented in the computing apparatus 31.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the computing apparatus 31. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the computing apparatus 31 by means of the computing apparatus 31 (namely, a computer) executing the computer program, may be realized by a hardware such as a predetermined gate array (a FPGA, an ASIC) of the computing apparatus 31, or may be realized in a form in which the logical process block and a partial hardware module that realizes a partial element of the hardware are combined.

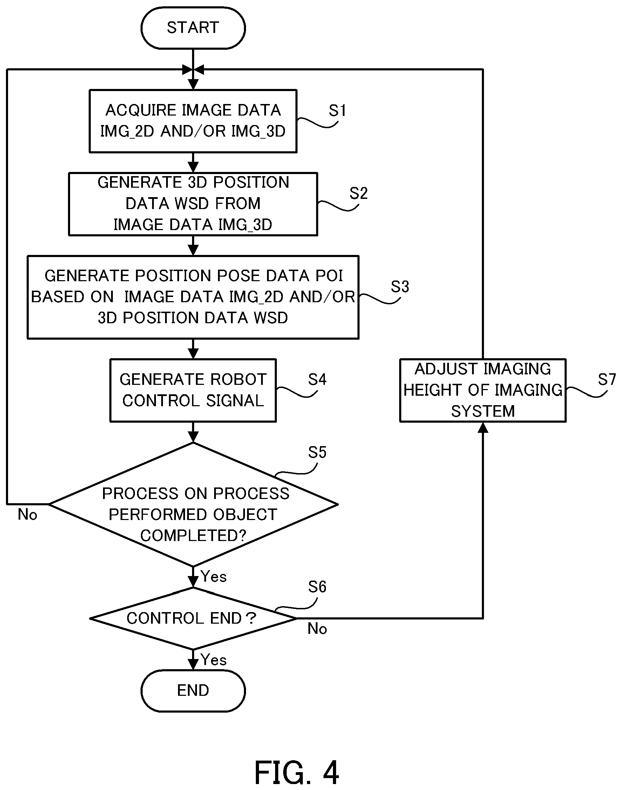

FIG. 3 illustrates one example of the logical functional block implemented in the computing apparatus 31 to perform the robot control processing. As illustrated in FIG. 3, a three-dimensional position data generation unit 311, a position pose calculation unit 312, and a signal generation unit 313 are implemented in the computing apparatus 31. Note that a processing performed by each of the three-dimensional position data generation unit 311, the position pose calculation unit 312, and the signal generation unit 313 will be described in detail later with reference to FIG. 4 and so on, and a description thereof is omitted here. Note that the computing apparatus 31 may be a computing unit.

The storage apparatus 32 is configured to store desired data. For example, the storage apparatus 32 may temporarily store the computer program that is executed by the computing apparatus 31. The storage apparatus 32 may temporarily store data temporarily used by the computing apparatus 31 in a case where the computing apparatus 31 executes the computer program. The storage apparatus 32 may store data stored for a long term by the control apparatus 3. The storage apparatus 32 may include at least one of a RAM, a ROM, a hard disk apparatus, a magneto-optical disc, a SSD and a disk array apparatus. Namely, the storage apparatus 32 may include a non-transitory recording medium.

The communication apparatus 33 is configured to communicate with each of the robot 1 and the imaging system 2 through a no-illustrated communication network. Alternatively, the communication apparatus 33 may be configured to communicate with other apparatus that is different from the robot 1 and the imaging system 2, in addition to or instead of at least one of the robot 1 and the imaging system 2, through a non-illustrated communication network. In the present example embodiment, the communication apparatus 33 may receive (namely, acquire) at least one of the image data IMG_2D and IMG_3D from the imaging system 2. Furthermore, the communication apparatus 33 may transmit (namely, output) the robot control signal to the robot 1. Note that the communication apparatus 33 that output the robot control signal to the robot 1 may be referred to as an output unit.

The input apparatus 34 is an apparatus that is configured to receive an input of information from an outside of the control apparatus 3 to the control apparatus 3. For example, the input apparatus 34 may include an operating apparatus (for example, at least one of a keyboard, a mouse, and a touch panel) that is operable by a user of the control apparatus 3. For example, the input apparatus 34 may include a recording medium reading apparatus that is configured to read information recorded as data on a recording medium that is attachable to the control apparatus 3.

Note that information is allowed to be input to the control apparatus 3 as data from the apparatus external to the control apparatus 3 through the communication apparatus 33. In this case, the communication apparatus 33 may serve as an input apparatus that receives an input of information to the control apparatus 3 from outside of the control apparatus 3.

The output apparatus 35 is an apparatus that outputs information to the outside of the control apparatus 3. For example, the output apparatus 35 may output the information as an image. Namely, the output apparatus 35 may include a display apparatus (a so-called display) that is configured to display an image. For example, the output apparatus 35 may output the information as audio. Namely, the output apparatus 35 may include an audio apparatus (so-called a speaker) that is configured output the audio. For example, the output apparatus 35 may output the information on a paper. Namely, the output apparatus 35 may include a printing apparatus (so-called a printer) that is configured to print desired information on the paper. For example, the output apparatus 35 may output the information as data on a recording medium that is attachable to the control apparatus 3.

Incidentally, the control apparatus 3 is allowed to output the information as the data to the apparatus external to the control apparatus 3 through the communication apparatus 33. In this case, the communication apparatus 33 may serve as an output apparatus that outputs the information to the apparatus external to the control apparatus 3.

### (2) Robot Control Processing

Next, the robot control processing performed by the control apparatus 3 will be described.

### (2-1) Flow of Robot Control Processing

Firstly, with reference to FIG. 4, a flow of the robot control processing will be described. FIG. 4 is a flowchart that illustrates the flow of the robot control processing.

As illustrated in FIG. 4, the control apparatus 3 acquires the image data IMG_3D from the imaging apparatus 22 by using the communication apparatus 33 (a step S1). Specifically, the imaging apparatus 22 images the target object OBJ at a predetermined 3D imaging rate. For example, the imaging apparatus 22 may image the target object OBJ at the 3D imaging rate, at which the target object OBJ is imaged tens of times to hundreds of times (as one example, 500 times) per second. Note that imaging the target object OBJ may be considered to be equivalent to imaging an interior of the container CB (namely, the containing space SP described above) in a case where the target object OBJ is contained in the container CB. As a result, the imaging apparatus 22 generates the image data IMG_3D in a cycle based on the predetermined 3D imaging rate. For example, the imaging apparatus 22 may generate tens to hundreds of (as one example, 500) image data IMG_3D per second. The control apparatus 3 acquires the image data IMG_3D each time the imaging apparatus 22 generates the image data IMG_3D. Namely, the control apparatus 3 may acquire tens to hundreds of (as one example, 500) image data IMG_3D per second.

However, the imaging apparatus 22 may not periodically image the target object OBJ at the desired 3D imaging rate. For example, the imaging apparatus 22 may image the target object OBJ when the imaging apparatus 22 receives a control signal for controlling the imaging apparatus 22 to image the target object OBJ from the control apparatus 3.

The imaging apparatus 22 may image another object that is different from the target object OBJ, in addition to the target object OBJ on which the robot 1 performs the predetermined process. Note that another object that is different from the target object OBJ is referred to as a non-target object in the below-described description, because since another objects is not a target on which the robot 1 performs the predetermined process. At least one of at least a part of the end effector 4, at least a part of the robot arm 12, and a surrounding object that is positioned around the robot 1 is one example of the non-target object. At least one of the placing apparatus T and the container CB is one example of the surrounding object. For example, in a case where both the target object OBJ and the non-target object are included in an imaging range (a field of view) of the imaging apparatus 22, the imaging apparatus 22 may image both the target object OBJ and the non-target object. As a result, the imaging apparatus 22 may generate the image data IMG_3D indicating an image in which both the target object OBJ and the non-target object are captured. However, the imaging apparatus 22 may image the target object OBJ and may not image the non-target object. Namely, the imaging apparatus 22 may generate the image data IMG_3D indicating an image in which the target object OBJ is captured and the non-target object is not captured. In both cases, the imaging apparatus 22 generates the image data IMG_3D indicating an image in which at least the target object OBJ is captured. Namely, the imaging apparatus 22 generates the image data IMG_3D that includes at least image data of the target object OBJ.

As described above, the imaging apparatus 22 may image the plurality of target objects OBJ on which the end effector 4 sequentially performs the predetermined process. In this case, the end effector 4 may perform the predetermined process on a first target object OBJ of the plurality of target objects OBJ in a first period, and then perform the predetermined process on a second target object OBJ, which is different from the first target object OBJ, of the plurality of target objects OBJ in a second period following the first period. In this case, other target object OBJ, which is different from the first target object OBJ on which the end effector 4 performs the predetermined process, of the plurality of target objects OBJ may be regarded as the target object OBJ that is not the process performed object, on which the robot 1 performs the predetermined process in the first period, (alternatively, the non-target object) in the first period. Similarly, other target object OBJ, which is different from the second target object OBJ on which the end effector 4 performs the predetermined process, of the plurality of target objects OBJ may be regarded as the target object OBJ that is not the process performed object, on which the robot 1 performs the predetermined process in the second period, (alternatively, the non-target object) in the second period. Note that each of the first target object OBJ and the second target object OBJ may be different target objects OBJ of the plurality of target objects OBJ imaged by the imaging apparatus 22.

The control apparatus 3 acquires the image data IMG_2D from the imaging apparatus 21 by using the communication apparatus 33 in addition to or instead of acquiring the image data IMG_3D from the imaging apparatus 22 (the step S1). Specifically, the imaging apparatus 21 images the target object OBJ at a predetermined 2D imaging rate. The 2D imaging rate may be the same as the 3D imaging rate. However, the 2D imaging rate may be different from the 3D imaging rate. For example, the imaging apparatus 21 may image the target object OBJ at the 2D imaging rate, at which the target object OBJ is imaged tens of times to hundreds of times (as one example, 500 times) per second. As a result, the imaging apparatus 21 generates the image data IMG_2D in a cycle based on the predetermined 2D imaging rate. For example, the imaging apparatus 21 may generate tens to hundreds of (as one example, 500) image data IMG_2D per second. The control apparatus 3 acquires the image data IMG_2D each time the imaging apparatus 21 generates the image data IMG_2D. Namely, the control apparatus 3 may acquire tens to hundreds of (as one example, 500) image data IMG_2D per second.

However, the imaging apparatus 21 may not periodically image the target object OBJ at the desired 2D imaging rate. For example, the imaging apparatus 21 may image the target object OBJ when the imaging apparatus 21 receives a control signal for controlling the imaging apparatus 21 to image the target object OBJ from the control apparatus 3.

Note that the image data IMG_2D may be referred to as two-dimensional position data that indicates a two-dimensional position of the target object OBJ captured in the image data IMG_2D. The image data IMG_2D (the two-dimensional position data) may be data that indicates a two-dimensional position of at least a part of a surface of the target object OBJ. Especially, the image data IMG_2D (the two-dimensional position data) is data that indicates a two-dimensional position of each of a plurality of points on the target object OBJ. For example, the image data IMG_2D (the two-dimensional position data) may be data that indicates a two-dimensional position of each of the plurality of points on the surface of the target object OBJ. For example, the image data IMG_2D (the two-dimensional position data) may be data that indicates the two-dimensional position of each of the plurality of points that correspond to a plurality of parts of the surface of the target object OBJ, respectively.

The imaging apparatus 21 may image the non-target object that is different from the target object OBJ, in addition to the target object OBJ on which the robot 1 performs the predetermined process. For example, in a case where both the target object OBJ and the non-target object are included in an imaging range (a field of view) of the imaging apparatus 21, the imaging apparatus 21 may image both the target object OBJ and the non-target object. As a result, the imaging apparatus 21 may generate the image data IMG_2D indicating an image in which both the target object OBJ and the non-target object are captured. However, the imaging apparatus 21 may image the target object OBJ and may not image the non-target object. Namely, the imaging apparatus 21 may generate the image data IMG_2D indicating an image in which the target object OBJ is captured and the non-target object is not captured. In both cases, the imaging apparatus 21 generates the image data IMG_2D indicating an image in which at least the target object OBJ is captured. Namely, the imaging apparatus 21 generates the image data IMG_2D that includes at least image data of the target object OBJ.

As described above, the imaging apparatus 21 may image the plurality of target objects OBJ on which the end effector 4 sequentially performs the predetermined process. In this case, the end effector 4 may perform the predetermined process on a third target object OBJ of the plurality of target objects OBJ in a third period, and then perform the predetermined process on a fourth target object OBJ, which is different from the third target object OBJ, of the plurality of target objects OBJ in a fourth period following the third period. In this case, other target object OBJ, which is different from the third target object OBJ on which the end effector 4 performs the predetermined process, of the plurality of target objects OBJ may be regarded as the target object OBJ that is not the process performed object, on which the robot 1 performs the predetermined process in the third period, (alternatively, the non-target object) in the third period. Similarly, other target object OBJ, which is different from the fourth target object OBJ on which the end effector 4 performs the predetermined process, of the plurality of target objects OBJ may be regarded as the target object OBJ that is not the process performed object, on which the robot 1 performs the predetermined process in the fourth period, (alternatively, the non-target object) in the fourth period. Note that each of the third target object OBJ and the fourth target object OBJ may be different target objects OBJ of the plurality of target objects OBJ captured by the imaging apparatus 21.

In a case where the control apparatus 3 acquires the image data IMG_3D, the three-dimensional position data generation unit 311 generates three-dimensional position data WSD based on the acquired image data IMG_3D each time the control apparatus 3 acquires the image data IMG_3D (a step S2). Furthermore, the three-dimensional position data generation unit 311 outputs the generated three-dimensional position data WSD to the position pose calculation unit 312 However, in a case where the control apparatus 3 does not acquire the image data IMG_3D (for example, the control apparatus 3 acquires the image data IMG_2D), the three-dimensional position data generation unit 311 may not generate the three-dimensional position data WSD. Namely, the control apparatus 3 may not perform an operation at the step S2.

Note that the control apparatus 3 may generate the three-dimensional position data WSD based on each of a part of the plurality of image data IMG_3D generated by the imaging apparatus 22. The control apparatus 3 may generate the three-dimensional position data WSD without using other part of the plurality of image data IMG_3D generated by the imaging apparatus 22.

The three-dimensional position data WSD is data that indicates a three-dimensional position of the target object OBJ captured in the image data IMG_3D. For example, the three-dimensional position data WSD may be data that indicates a three-dimensional position of at least a part of a surface of the target object OBJ. Especially, the three-dimensional position data WSD is data that indicates a three-dimensional position of each of a plurality of points of the target object OBJ. For example, the three-dimensional position data WSD may be data that indicates a three-dimensional position of each of the plurality of points on the surface of the target object OBJ. For example, the three-dimensional position data WSD may be data that indicates a three-dimensional position of each of the plurality of points, which correspond to a plurality of parts of the surface of the target object OBJ, respectively. Note that the three-dimensional position of the target object OBJ may mean at least one of the three-dimensional position of at least a part of the surface of the target object OBJ, the three-dimensional position of each of the plurality of points of the target object OBJ, the three-dimensional position of each of the plurality of points of the surface of the target object OBJ, and the three-dimensional position of each of the plurality of points, which correspond to the plurality of parts of the surface of the target object OBJ, respectively, in the below-described description in a case where there is no specific notation.

Specifically, as described above, the target object OBJ on which the projection pattern is projected is captured in the image indicated by the image data IMG_3D. In this case, the projection pattern in the image indicated by the image data IMG_3D reflects a three-dimensional shape of at least a part of the surface of the target object OBJ on which the projection pattern is projected. A shape of the projection pattern captured in the image indicated by the image data IMG_3D reflects the three-dimensional shape of at least a part of the surface of the target object OBJ on which the projection pattern is projected. Therefore, the three-dimensional position data generation unit 311 may calculate the three-dimensional shape of at least a part of the surface of the target object OBJ based on the projection pattern captured in the image indicated by the image data IMG_3D. The three-dimensional shape of at least a part of the surface of target object OBJ substantially indicates the three-dimensional position of each of the plurality of points of the target object OBJ. This is because each of the plurality of points of the target object OBJ is included in the surface of the target object OBJ. Therefore, a processing for calculating the three-dimensional shape of at least a part of the surface of the target object OBJ may be considered to be substantially equivalent to a processing for calculating the three-dimensional position of each of the plurality of points of the target object OBJ. Therefore, the three-dimensional position data generation unit 311 can generate the three-dimensional position data WSD based on the image data IMG_3D.

Incidentally, considering that each of the plurality of points of the target object OBJ is included in the surface of the target object OBJ, the three-dimensional position data WSD indicating the three-dimensional position of each of the plurality of points of the target object OBJ may be considered to be substantially equivalent to three-dimensional shape data indicating the three-dimensional shape of at least a part of the target object OBJ (especially, the three-dimensional shape of at least a part of the surface of the target object OBJ).

In order to generate the three-dimensional position data WSD, the three-dimensional position data generation unit 311 may calculate parallax by performing a matching for each part (for example, each pixel) between the images indicated by the two image data included in the image data IMG_3D, respectively. Specifically, in this matching, the three-dimensional position data generation unit 311 may calculate the parallax by performing the matching for each part of the projection pattern included in the images indicated by the two image data, respectively (namely, each part between the projection patterns included in the images, respectively). The three-dimensional position data generation unit 311 may calculate the three-dimensional position of each of the plurality of points of the target object OBJ by using a well-known method based on a principle of triangulation using the calculated parallax. As a result, the three-dimensional position data WSD indicating the three-dimensional position of each of the plurality of points of the target object OBJ is generated. In this case, a calculation accuracy of the parallax is higher in a case where the matching for each part between images in which the projection pattern is included (namely, for each part between the projection patterns) is performed, compared to a case where the matching for each part between images in which the projection pattern is not included is performed. Therefore, an accuracy of the generated three-dimensional position data WSD (namely, a calculation accuracy of the three-dimensional position of each of the plurality of points of the target object OBJ) is higher.

The three-dimensional position data WSD may be any data as long as it can indicate the three-dimensional position of each of the plurality of points of the target object OBJ. Namely, the three-dimensional position data WSD may be any data that directly or indirectly indicates the three-dimensional position of each of the plurality of points of the target object OBJ. For example, the three-dimensional position data WSD may include coordinate information indicating the three-dimensional position of each of the plurality of points of the target object OBJ. For example, the three-dimensional position data WSD may include information indicating the three-dimensional shape of at least a part of the target object OBJ.

Depth image data is one example of the three-dimensional position data WSD. The depth image data is image data in which depth information is associated with each pixel of a depth image indicated by the depth image data in addition to or instead of brightness information. The depth information is information that indicates a distance between each part of the target object OBJ captured in each pixel and the imaging apparatus 22 (namely, a depth). The distance between each part of the target object OBJ captured in each pixel and the imaging apparatus 22 (namely, the depth) can be calculated from the parallax described above. Note that the depth image data may be image data in which the brightness information of each pixel indicates the depth of each part of the target object OBJ (namely, the distance between each part of the target object OBJ and the imaging apparatus 22). The three-dimensional position data generation unit 311 may calculate the distance between the imaging apparatus 22 and each part of the target object OBJ captured in the image indicated by the image data IMG_3D based on the projection pattern captured in the image indicated by the image data IMG_3D, and associates, as the depth information, the calculated distance to each pixel of the image indicated by the image data IMG_3D to generate the depth image.

Point cloud data is another example of the three-dimensional position data WSD. The point cloud data is data indicating a set of points, each of which corresponds to each part of the target object OBJ captured in the image indicated by the image data IMG_3D, in a three-dimensional space. The three-dimensional position data generation unit 311 may generate the point cloud data based on the depth image data and a camera parameter of the imaging apparatus 22. Note that an example in which the point cloud data is used as the three-dimensional position data WSD will be described in the below-described description.

As described above, in a case where not only the target object OBJ on which the robot 1 performs the predetermined process but also other object that is different from the target object OBJ is included in the imaging range (the field of view) of the imaging apparatus 22, the image data IMG_3D indicates the image in which both the target object OBJ and the other object are captured. In this case, the three-dimensional position data WSD may be data indicating not only the three-dimensional position of the target object OBJ captured in the image data IMG_3D but also a three-dimensional position of the other object captured in the image data IMG_3D. Namely, the three-dimensional position data WSD may include data indicating a three-dimensional position of each of a plurality of points of the other object imaged by the imaging apparatus 22. Even in this case, the three-dimensional position data WSD may be considered to be the data indicating the three-dimensional position of each of the plurality of points of the target object OBJ as long as the three-dimensional position data WSD includes the data indicating the three-dimensional position of the target object OBJ. This is because the fact remains that the three-dimensional position data WSD includes the data indicating the three-dimensional position of the target object OBJ even in a case where the three-dimensional position data WSD includes the data indicating the three-dimensional position of the other object.

Then, the position pose calculation unit 312 calculates at least one of the position and the pose of the target object OBJ based on at least one of the image data IMG_2D acquired at the step S1 and the three-dimensional position data WSD generated at the step S2 (a step S3). As a result, the position pose calculation unit 312 generates position pose data POI indicating at least one of the position and the pose of the target object OBJ (the step S3). The position pose data POI may include position data indicating the position of the target object OBJ. The position pose data POI may include pose data indicating the pose of the target object OBJ, in addition to or instead of the position data indicating the position of the target object OBJ. Namely, the position pose data POI may include at least one of the position data and the pose data.

Note that the image data IMG_2D that is usable to generate the position pose data POI corresponds to an imaged result by the imaging apparatus 21. Similarly, the three-dimensional position data WSD that is usable to generate the position pose data POI corresponds to an imaged result by the imaging apparatus 22. Therefore, the position pose calculation unit 312 may be considered to calculate the position pose data POI based on at least one of the imaged result by the imaging apparatus 21 and the imaged result by the imaging apparatus 22. Namely, the position pose calculation unit 312 may be considered to calculate the position pose data POI based on the imaged result by the imaging system 2. Moreover, even in the below-described description, the processing (the operation) based on the image data IMG_2D may be considered to be equivalent to the processing (the operation) based on the imaged result by the imaging apparatus 21 (namely, the imaged result by the imaging system 2). The processing (the operation) based on the image data IMG_3D may be considered to be equivalent to the processing (the operation) based on the imaged result by the imaging apparatus 22 (namely, the imaged result by the imaging system 2). The processing (the operation) based on the three-dimensional position data WSD generated from the image data IMG_3D may be considered to be equivalent to the processing (the operation) based on the imaged result by the imaging apparatus 22 (namely, the imaged result by the imaging system 2).

At the step S3, the position pose calculation unit 312 calculates at least one of the position and the pose of the target object OBJ in the global coordinate system. Namely, the position pose calculation unit 312 generates the position pose data POI indicating at least one of the position and the pose of the target object OBJ in the global coordinate system. For example, the robot control apparatus 13 may control the robot arm 12 so that the end effector 4 is positioned at a desired position in the global coordinate system. The global coordinate system is a coordinate system that is defined by an X-axis(GL), a Y-axis(GL) and a Z-axis(GL) that are orthogonal to one another. The X-axis(GL) may be an axis along a horizontal plane. The Y-axis(GL) may be an axis along the horizontal plane. The Z-axis(GL) may be an axis orthogonal to the horizontal plane. The Z-axis(GL) may be an axis extending along a gravity direction. Note that an X-axis, a Y-axis, and a Z-axis illustrated in FIG. 2 may be the X-axis(GL), the Y-axis(GL), and the Z-axis(GL), respectively. Note that an origin of the global coordinate system may not be an origin of the X-axis(GL), the Y-axis(GL), and the Z-axis(GL) illustrated in FIG. 2. For example, the origin of the global coordinate system may be set to any position of the base 11 in FIG. 2. For example, the origin of the global coordinate system may be set to any position of the support surface S. For example, the origin of the global coordinate system may be set to any position of a contact surface of the base 11 relative to the support surface S (for example, a center or a center of gravity of the contact surface).

The position pose calculation unit 312 may calculate, as the position of the target object OBJ in the global coordinate system, at least one of a position Tx(GL) of the target object OBJ in a X-axis direction(GL) parallel to the X-axis(GL), a position Ty(GL) of the target object OBJ in a Y-axis direction(GL) parallel to the Y-axis(GL), a position Tz(GL) of the target object OBJ in a Z-axis direction(GL) parallel to the Z-axis(GL). The position pose calculation unit 312 may calculate, as the pose of the target object OBJ in the global coordinate system, a rotational amount Rx(GL) of the target object OBJ around the X-axis(GL), a rotational amount Ry(GL) of the target object OBJ around the Y-axis(GL), and a rotational amount Rz(GL) of the target object OBJ around the Z-axis(GL). This is because the rotational amount Rx(GL) of the target object OBJ around the X-axis(GL), the rotational amount Ry(GL) of the target object OBJ around the Y-axis(GL), and the rotational amount Rz(GL) of the target object OBJ around the Z-axis(GL) are equivalent to a parameter representing the pose of the target object OBJ around the X-axis(GL), a parameter representing the pose of the target object OBJ around the Y-axis(GL), and a parameter representing the pose of the target object OBJ around the Z-axis(GL), respectively. Therefore, in the below-described description, the rotational amount Rx(GL) of the target object OBJ around the X-axis(GL), the rotational amount Ry(GL) of the target object OBJ around the Y-axis(GL), and the rotational amount Rz(GL) of the target object OBJ around the Z-axis(GL) are referred to as the pose RX(GL) of the target object OBJ around the X-axis(GL), the pose RY(GL) of the target object OBJ around the Y-axis(GL), and the pose Rz(GL) of the target object OBJ around the Z-axis(GL), respectively.

Note that the pose Rx(GL) of the target object OBJ around the X-axis(GL), the pose Ry(GL) of the target object OBJ around the Y-axis(GL), and the pose Rz(GL) of the target object OBJ around the Z-axis(GL) may be considered to represent a position of the target object OBJ in a rotational direction around the X-axis(GL), a position of the target object OBJ in a rotational direction around the Y-axis(GL), and a position of the target object OBJ in a rotational direction around the Z-axis(GL), respectively. Namely, each of the pose Rx(GL) of the target object OBJ around the X-axis(GL), the pose Ry(GL) of the target object OBJ around the Y-axis(GL), and the pose Rz(GL) of the target object OBJ around the Z-axis(GL) may be regarded as a parameter representing the position of the target object OBJ.

Thus, the position pose calculation unit 312 may calculates at least one of the position Tx(GL), the position Ty(GL), the position Tz(GL), the pose Rx(GL), the pose Ry(GL), and the pose Rz(GL), as at least one of the position and the pose of the target object OBJ in the global coordinate system, at the step S3 in FIG. 4.

At the step S3 in FIG. 4, the position pose calculation unit 312 may calculate at least one of the position and the pose of the target object OBJ by performing a matching processing using at least one of the image data IMG_2D and the three-dimensional position data WSD. In the below-described description, an example in which the position pose calculation unit 312 calculate at least one of the position and the pose of the target object OBJ by performing the matching processing using the three-dimensional position data WSD will be described, for convenience of description. Note that the matching processing using the three-dimensional position data WSD is referred to as a 3D matching processing in the below-described description.

Specifically, the position pose calculation unit 312 may perform the 3D matching processing using the three-dimensional position data WSD and three-dimensional model data WMD indicating a three-dimensional model that is a reference for the target object OBJ. In this case, the 3D matching processing may be regarded as a matching processing using the point cloud indicated by the three-dimensional position data WSD and a three-dimensional model indicated by the three-dimensional model data. Note that the 3D matching processing itself may be the same as an existing matching processing. For example, the position pose calculation unit 312 may perform the 3D matching processing by using a known method including at least one of a RANSAC (Random Sample Consensus), a SIFT (Scale-Invariant Feature Transform), a ICP (Iterative Closest Point), and a DSO (Direct Sparse Odometry) may be used, for example

The three-dimensional model based on the three-dimensional position data WSD may include a point cloud model that is a three-dimensional model indicating a three-dimensional shape of the target object OBJ by using a point cloud indicated by the three-dimensional position data WSD. The three-dimensional model based on the three-dimensional position data WSD may include a polygon model or a mesh model that is generated by connecting the plurality of points, which are included in the point cloud indicated by the three-dimensional position data WSD, with surfaces (especially, polygonal surfaces in which each point is a vertex thereof). The three-dimensional model based on the three-dimensional position data WSD may include a solid model that is generated by connecting the plurality of points, which are included in the point cloud indicated by the three-dimensional position data WSD, with smooth surfaces.

The three-dimensional model data WMD is data indicating a template model TM3 that is a three-dimensional model of the target object OBJ. Namely, the three-dimensional model data WMD is data indicating the template model TM3 having a standard three-dimensional shape of the target object OBJ. The template model may be a CAD model of the target object OBJ. The template model may be a three-dimensional model having a shape that is the same as the three-dimensional shape of the target object OBJ acquired by measuring the three-dimensional shape of the actual target object OBJ in advance. The template model may be a polygon model, a mesh model, or a solid model. The three-dimensional model data WMD may be point cloud data indicating the template model TM3 of the target object OBJ. The three-dimensional model data WMD may be polygon model data, mesh model data, or solid model data generated from the point cloud data. Note that the actual target object OBJ that is measured in advance to generate the three-dimensional model data WMD may be a standard or good target object OBJ.

In this case, the position pose calculation unit 312 may perform, on the three-dimensional position data WSD, the 3D matching processing (in other words, a template matching processing) that using the template model TM3 indicated by the three-dimensional model data WMD as a template. Specifically, the position pose calculation unit 312 may translate, scale and / or rotate the template model TM3 in the 3D imaging coordinate system so that a feature part (for example, at least one of a feature point and an edge) of the template model TM3 indicated by the three-dimensional model data WMD is closer to (typically, matches) a feature part of the target object OBJ whose three-dimensional position is indicated by the three-dimensional position data WSD (for example, a point cloud corresponding to the target object OBJ indicated by the three-dimensional position data WSD, or a three-dimensional model (for example, a point cloud model) reflecting the actual three-dimensional position of the target object OBJ). Namely, the position pose calculation unit 312 may change a positional relationship between a coordinate system of the three-dimensional model data WMD (for example, a coordinate system of the CAD model) and the 3D imaging coordinate system so that the feature part of the target object OBJ whose three-dimensional position is indicated by the three-dimensional position data WSD (for example, the point cloud corresponding to the target object OBJ indicated by the three-dimensional position data WSD, or the three-dimensional model (for example, the point cloud model) reflecting the actual three-dimensional position of the target object OBJ) is closer to (typically, matches) the feature part of the template model TM3 indicated by the three-dimensional model data WMD. As a result, the position pose calculation unit 312 can determine the positional relationship between the coordinate system of the three-dimensional model data WMD and the 3D imaging coordinate system. Then, the position pose calculation unit 312 may calculate at least one of the position and the pose of the target object OBJ in the 3D imaging coordinate system from at least one of the position and the pose of the target object OBJ in the coordinate system of the three-dimensional model data WMD based on the positional relationship between the coordinate system of the three-dimensional model data WMD and the 3D imaging coordinate system.

Then, the position pose calculation unit 312 transform at least one of the position and the pose of the target object OBJ in the 3D imaging coordinate system to at least one of the position and the pose of the target object OBJ in the robot coordinate system based on a transformation matrix for transforming a three-dimensional coordinate in one of the robot coordinate system and the 3D imaging coordinate system to a three-dimensional coordinate in the other one of the robot coordinate system and the 3D imaging coordinate system. In a case where the robot coordinate system is used as the global coordinate system, at least one of the position and the pose of the target object OBJ in the robot coordinate system corresponds to at least one of the position and the pose of the target object OBJ in the global coordinate system. However, in a case where the coordinate system that is different from the robot coordinate system is used as the global coordinate system, the position pose calculation unit 312 may calculate at least one of the position and the pose of the target object OBJ in the global coordinate system from at least one of the position and the pose of the target object OBJ in the robot coordinate system based on a transformation matrix for transforming a three-dimensional coordinate in one of the robot coordinate system and the global coordinate system to a three-dimensional coordinate in the other one of the robot coordinate system and the global coordinate system.

In making the feature part of the three-dimensional model indicated by the three-dimensional model data WMD be closer to the feature part of the target object OBJ whose three-dimensional position is indicated by the three-dimensional position data WSD, the position pose calculation unit 312 may calculates a matching similarity that is a degree of similarity between the three-dimensional model of the target object OBJ indicated by the three-dimensional model data WMD and the target object OBJ whose three-dimensional position is indicated by the three-dimensional position data WSD (for example, the point cloud of the target object OBJ). Note that the matching similarity, which is the similarity between the three-dimensional model of the target object OBJ indicated by the three-dimensional model data WMD and the target object OBJ whose three-dimensional position is indicated by the three-dimensional position data WSD (for example, the point cloud of the target object OBJ), may be simply referred to as the matching similarity of the target object OBJ. The position pose calculation unit 312 may translate, scale, and / or rotate the three-dimensional model indicated by the three-dimensional model data WMD to maximize the matching similarity. Note that the matching similarity may be considered to be equivalent to a correlation degree that indicates a correlation between the three-dimensional model indicated by the three-dimensional model data WMD and the target object OBJ whose three-dimensional position is indicated by the three-dimensional position data WSD. Note that it can be said that the correlation degree is an index value that indicates the correlation between the three-dimensional model indicated by the three-dimensional model data WMD and the target object OBJ whose three-dimensional position is indicated by the three-dimensional position data WSD. Note that the matching similarity may be referred to as a matching score.

In a case where the target object OBJ whose calculated matching similarity is higher than a predetermined matching determination threshold value is detected by the 3D matching processing, the position pose calculation unit 312 may select this target object OBJ as one target object OBJ on which the end effector 4 should perform the predetermined process (namely, the process performed object). On the other hand, in a case where the target object OBJ whose calculated matching similarity is lower than the predetermined matching determination threshold value is detected by the 3D matching processing, the position pose calculation unit 312 may not select this target object OBJ as one target object OBJ on which the end effector 4 should perform the predetermined process (namely, the process performed object).

Depending on the three-dimensional position data WSD, there is a possibility that the three-dimensional position data WSD indicates the position of each of the plurality of target objects OBJ. For example, in a case where the plurality of workpieces W are placed on the placing apparatus T in the disordered or ordered manner, there is a possibility that the imaging apparatus 22 images the plurality of workpieces W and generates the image data IMG_3D in which the plurality of workpieces W are captured as the plurality of target objects OBJ. For example, in a case where the plurality of workpieces W are contained in the container (the container box) CB, which is one example of the placing apparatus T, in the disordered or ordered manner, there is a possibility that the imaging apparatus 22 images the plurality of workpieces W and generates the image data IMG_3D in which the plurality of workpieces W are captured as the plurality of target objects OBJ. As a result, there is a possibility that the position pose calculation unit 312 generates the three-dimensional position data WSD that indicates the position of each of the plurality of target objects OBJ. In this case, the position pose calculation unit 312 may perform the above-described 3D matching processing on each of the plurality of target objects OBJ. For example, the position pose calculation unit 312 may sequentially perform the 3D matching processing on the plurality of target objects OBJ. Alternatively, the position pose calculation unit 312 may perform a plurality of 3D matching processing, which are for the plurality of target objects OBJ, respectively, simultaneously in parallel. Then, the position pose calculation unit 312 may select one target object OBJ, whose matching similarity is higher than the matching determination threshold value and whose matching similarity is maximum, from among the plurality of target objects OBJ as the process performed object on which the end effector 4 should perform the predetermined process. Alternatively, the position pose calculation unit 312 may select one target object OBJ, whose matching similarity is higher than the matching determination threshold value and whose matching similarity is the N-th (wherein, N is a constant value representing an integer that is equal to or larger than 2) highest, from among the plurality of target objects OBJ as the process performed object on which the end effector 4 should perform the predetermined process. Alternatively, the position pose calculation unit 312 may select one target object OBJ, which corresponds to the matching similarity higher than the matching determination threshold value, from among the plurality of target objects OBJ as the process performed object. Alternatively, the position pose calculation unit 312 may select one target object OBJ, which corresponds to the matching similarity higher than the matching determination threshold value and which is the closest to the end effector 4, from among the plurality of target objects OBJ as the process performed object. Alternatively, for example, in a case where the plurality of target objects OBJ are contained in the container CB (the placing apparatus T) (for example, in a case where the plurality of objects are randomly stacked), the position pose calculation unit 312 may select one target object OBJ, which corresponds to the matching similarity higher than the matching determination threshold value and whose Z coordinate along the Z-axis is the greatest (which is positioned at the highest position), from among the plurality of target objects OBJ as the process performed object. Note that the Z-coordinate of each of the plurality of target objects OBJ may be the Z-position along the Z-axis of the global coordinate system of the that is calculated by the above-described 3D matching processing. Alternatively, the position pose calculation unit 312 may select one target object OBJ, which corresponds to the matching similarity higher than the matching determination threshold value and on which the end effector 4 can perform the predetermined process, from among the plurality of target objects OBJ as the process performed object.

However, in a case where the end effector 4 can simultaneously perform the predetermined process on two or more target objects OBJ, the position pose calculation unit 312 may select each of at least two of the plurality of target objects OBJ as the process performed objects. Namely, the position pose calculation unit 312 may select at least two process performed objects on which the end effector 4 should perform the predetermined process simultaneously. Note that an example in which the position pose calculation unit 312 selects one target object OBJ of the plurality of target objects OBJ as the process performed object will be described in the below-described description for convenience of description.

Note that the position pose calculation unit 312 may calculate the matching similarities of the plurality of target objects OBJ, then select one target object OBJ on which the end effector 4 should perform the predetermined process based on the matching similarities of the plurality of target objects OBJ, and then calculate at least one of the position and the pose of the selected one target object OBJ. In this case, the position pose calculation unit 312 may not calculate the position and the pose of other target object OBJ that is not selected as one target object OBJ on which the end effector 4 should perform the predetermined process. Alternatively, since at least one of the position and the pose of the target object OBJ is calculated as a result of the 3D matching processing as described above, the position pose calculation unit 312 may be considered to calculate the above-described matching similarity together with at least one of the position and the pose of the target object OBJ. In this case, the position pose calculation unit 312 may calculate the matching similarities of the plurality of target objects OBJ together with at least one of the position and the pose of each of the plurality of target objects OBJ, and then select one target object OBJ on which the end effector 4 should perform the predetermined process based on the matching similarities of the plurality of target objects OBJ. Alternatively, the position pose calculation unit 312 may calculate at least one of the positions and poses of the plurality of target objects OBJ, then calculate the matching similarities of the plurality of target objects OBJ, and then select one target object OBJ on which the end effector 4 should perform the predetermined process based on the calculated matching similarities.

However, at the step S3 in FIG. 4, the position pose calculation unit 312 may calculate at least one of the position and the pose of the target object OBJ by performing a matching processing using the image data IMG_2D, in addition to or instead of performing the 3D matching processing using the three-dimensional position data WSD. Note that the matching processing using the image data IMG_2D is referred to as a 2D matching processing in the below-described description.

Specifically, the position pose calculation unit 312 may perform the 2D matching processing using the image data IMG_2D (the two-dimensional position data) and two-dimensional model data indicating a two-dimensional model that is a reference for the target object OBJ. Specifically, the position pose calculation unit 312 may perform, as the 2D matching processing, an object detection processing for detecting the target object OBJ indicated by a template image in the image indicated by the image data IMG_2D by using the two-dimensional model indicated by the two-dimensional model data as the template image. In other words, the position pose calculation unit 312 may perform, as the matching processing, the object detection processing for detecting the target object OBJ in the image indicated by the image data IMG_2D by detecting a similar image part that is similar to the template image in the image indicated by the image data IMG_2D. Note that the 2D matching processing (in this case, the object detection processing) itself may be the same as an existing matching processing. For example, the position pose calculation unit 312 may perform the 2D matching processing by using a known method such as a SIFT (Scale-Invariant Feature Transform) or a SURF (Speed-Upped Robust Feature).

The two-dimensional model data may be data based on the three-dimensional model data of the target object OBJ. Here, the two-dimensional model data may be generated from CAD (Computer Aided Design) model data of the target object OBJ, or may be generated from model data (data indicating a polygon model or a mesh model) of the target object OBJ generated based on a pre-measurement result using a known three-dimensional shape measurement apparatus or the imaging apparatus 22. For example, the two-dimensional model data may be two-dimensional image data representing at least a part of a two-dimensional model of the target object OBJ that is generated by virtually projecting at least a part of the three-dimensional model indicated by the three-dimensional model data of the target object OBJ on a virtual plane. For example, the two-dimensional model data may be two-dimensional image data representing at least a part of an edge of the two-dimensional model of the target object OBJ that is generated by virtually projecting at least a part of the three-dimensional model indicated by the three-dimensional model data of the target object OBJ on the virtual plane. Note that the two-dimensional model data may not be the data based on the three-dimensional model data of the target object OBJ. For example, the two-dimensional model data may be image data IMG_2D generated by the imaging apparatus 21 imaging the target object OBJ in advance. For example, the two-dimensional model data may be a feature part on the image indicated by the image data IMG_2D generated by the imaging apparatus 21 imaging the target object OBJ in advance. For example, the feature part on the image indicated by the image data IMG_2D may be at least one of a feature point and an edge of the target object OBJ captured in the image indicated by the image data IMG_2D. Note that the two-dimensional model may be regarded as a model of at least a part of the edge of the target object OBJ (an edge model) in a case where the feature part indicated by the image data IMG_2D includes the edge of the target object OBJ. The feature part on the image indicated by the image data IMG_2D may be at least one of at least one of a plurality of feature points of the target object OBJ captured in the image indicated by the image data IMG_2D and at least partial edge of the edges of the target object OBJ. Note that the feature part on the image indicated by the image data IMG_2D may be detected by a known image processing.

The position pose calculation unit 312 may translate, scale and / or rotate the two-dimensional model of the target object OBJ included in the template image so that a feature part (for example, at least one of a feature point and an edge) of the two-dimensional model of the target object included in the template image is closer to (typically, matches) a feature part of the target object OBJ captured in the image indicated by the image data IMG_2D. As a result, the position pose calculation unit 312 can determine a positional relationship between the coordinate system of the two-dimensional model data and the 2D imaging coordinate system. Then, the position pose calculation unit 312 may calculate at least one of the position and the pose of the target object OBJ in the 2D imaging coordinate system from at least one of the position and the pose of the target object OBJ in the coordinate system of the two-dimensional model data based on the positional relationship between the coordinate system of the two-dimensional model data WMD and the 2D imaging coordinate system.

Then, the position pose calculation unit 312 transform at least one of the position and the pose of the target object OBJ in the 2D imaging coordinate system to at least one of the position and the pose of the target object OBJ in the robot coordinate system based on a transformation matrix for transforming a three-dimensional coordinate in one of the robot coordinate system and the 2D imaging coordinate system to a three-dimensional coordinate in the other one of the robot coordinate system and the 2D imaging coordinate system. In a case where the robot coordinate system is used as the global coordinate system, at least one of the position and the pose of the target object OBJ in the robot coordinate system corresponds to at least one of the position and the pose of the target object OBJ in the global coordinate system. However, in a case where the coordinate system that is different from the robot coordinate system is used as the global coordinate system, the position pose calculation unit 312 may calculate at least one of the position and the pose of the target object OBJ in the global coordinate system from at least one of the position and the pose of the target object OBJ in the robot coordinate system based on a transformation matrix for transforming a three-dimensional coordinate in one of the robot coordinate system and the global coordinate system to a three-dimensional coordinate in the other one of the robot coordinate system and the global coordinate system.

In a case where the 2D matching processing is performed, the position pose calculation unit 312 may calculate a matching similarity, as in a case where the 3D matching processing is performed. The matching similarity calculated in the 2D matching processing is a similarity between the template image (namely, the two-dimensional model of the target object OBJ) and the image indicated by the image data IMG_2D (especially, an image part with which the target object OBJ in the template image is aligned). Note that the matching similarity, which is the similarity between the template image (namely, the two-dimensional model of the target object OBJ) and the image indicated by the image data IMG_2D (especially, the image part with which the target object OBJ in the template image is aligned), may be simply referred to as the matching similarity of the target object OBJ in the below-described description. Note that a usage of the matching similarity calculated in the 2D matching processing may be the same as a usage of the matching similarity calculated in the 3D matching processing, and therefore, a detailed description thereof is omitted.

In a case where the 2D matching processing is performed, the position pose calculation unit 312 may perform the 2D matching processing sequentially or in parallel on the plurality of target objects OBJ captured in the image indicated by the image data IMG_2D, as in a case where the 3D matching processing is performed. Then, the position pose calculation unit 312 may select at least one of the plurality of target objects OBJ as the process performed object, as in a case where the 3D matching processing is performed. In this case, the position pose calculation unit 312 may select at least one of the plurality of target objects OBJ as the process performed object based on the matching similarity. Note that the robot control processing illustrated in FIG. 4 may not include the step S2 in FIG. 4 in a case where the position pose calculation unit 312 calculates at least one of the position and the pose of the target object OBJ by performing the matching processing using the image data IMG_2D instead of performing the 3D matching processing using the three-dimensional position data WSD at the step S3 in FIG. 4.

Alternatively, at the step S3 in FIG. 4, the position pose calculation unit 312 may calculate at least one of the position and the pose of the target object OBJ by performing the matching processing using both the three-dimensional position data WSD and the image data IMG_2D, in addition to or instead of performing at least one of the 3D matching processing using the three-dimensional position data WSD and the 2D matching processing using the image data IMG_2D.

For example, the position pose calculation unit 312 may calculate at least one of the position and the pose of the target object OBJ in the global coordinate system from a part of the position and the pose of the target object OBJ in the 2D imaging coordinate system calculated based on the image data IMG_2D and a part of the position and the pose of the target object OBJ in the 3D imaging coordinate system calculated based on the image data IMG_3D. For example, the position pose calculation unit 312 may set at least one of an initial position and an initial pose of the three-dimensional model (the template model TM3) used for the 3D matching processing based on at least one of the position and the pose of the target object OBJ in the 2D imaging coordinate system calculated based on the image data IMG_2D, and then calculate at least one of the position and the pose of the target object OBJ in the 3D imaging coordinate system by performing the 3D matching processing using the three-dimensional model positioned at the set initial position and / or positioned with the set initial the pose, and then calculate at least one of the position and the pose of the target object OBJ in the global coordinate system from at least one of the position and the pose of the target object OBJ in the 3D imaging coordinate system.

In a case where at least one of the position and the pose of the target object OBJ is calculated by using both the image data IMG_2D and the three-dimensional position data WSD, the position pose calculation unit 312 may select one target object OBJ, which satisfies a condition that a sum or a product of the matching similarity calculated by the 2D matching processing (it is referred to as a 2D matching similarity in the below-described description) and the matching similarity calculated by the 3D matching processing (it is referred to as a 3D matching similarity in the below-described description) is maximum, as one target object OBJ on which the end effector 4 should perform the predetermined process. The position pose calculation unit 312 may select one target object OBJ, which satisfies a condition that the 2D matching similarity is higher than the matching determination threshold value and the 2D matching similarity is maximum, as one target object OBJ on which the end effector 4 should perform the predetermined process. The position pose calculation unit 312 may select one target object OBJ, which satisfies a condition that the 3D matching similarity is higher than the matching determination threshold value and the 3D matching similarity is maximum, as one target object OBJ on which the end effector 4 should perform the predetermined process. The position pose calculation unit 312 may select one target object OBJ, which satisfies a condition that both the 2D matching similarity and the 3D matching similarity are higher than the matching determination threshold, as one target object OBJ on which the end effector 4 should perform the predetermined process. The position pose calculation unit 312 may select one target object OBJ, which satisfies a condition that both the 2D matching similarity and the 3D matching similarity are higher than the matching determination threshold and which is the closest to the end effector 4, as one target object OBJ on which the end effector 4 should perform the predetermined process. The position pose calculation unit 312 may select one target object OBJ, which satisfies a condition that both the 2D matching similarity and the 3D matching similarity are higher than the matching determination threshold and whose Z coordinate along the Z-axis is the greatest (which is positioned at the highest position), as one target object OBJ on which the end effector 4 should perform the predetermined process.

Note that the control apparatus 3 may not acquire the image data IMG_2D at the step S1 in a case where the position pose calculation unit 312 performs the matching processing using the three-dimensional position data WSD and does not perform the matching processing using the image data IMG_2D. The imaging apparatus 21 may not image the target object OBJ in a case where the control apparatus 3 does not acquire the image data IMG_2D. The imaging system 2 may not include the imaging apparatus 21 in a case where the control apparatus 3 does not acquire the image data IMG_2D.

The control apparatus 3 may not acquire the image data IMG_3D at the step S1 in a case where the position pose calculation unit 312 performs the matching processing using the image data IMG_2D and does not perform the matching processing using the three-dimensional position data WSD. The imaging apparatus 22 may not image the target object OBJ in a case where the control apparatus 3 does not acquire the image data IMG_3D. The imaging system 2 may not include the imaging apparatus 22 in a case where the control apparatus 3 does not acquire the image data IMG_3D. The control apparatus 3 may not include the three-dimensional position data generation unit 311 in a case where the control apparatus 3 does not acquire the image data IMG_3D.

Note that an example in which the position pose calculation unit 312 performs the 3D matching processing at the step S3 in FIG. 4 will be described in the below-described description.

Then, the signal generation unit 313 generates the robot control signal by using the position pose data POI generated at the step S3 (namely, a calculated result of at least one of the position and the pose of the process performed object) (a step S4). For example, the signal generation unit 313 may generate the robot control signal so that the end effector 4 performs the predetermined process on the target object OBJ (especially, the process performed object). For example, the signal generation unit 313 may generate the robot control signals so that the end effector 4 approaches the target object OBJ (especially, the process performed object) to perform the predetermined process on the target object OBJ (especially, the process performed object). For example, the signal generation unit 313 may generate the robot control signal so that the positional relationship between the end effector 4 and the target object OBJ (especially, the process performed object) is the desired positional relationship. For example, the signal generation unit 313 may generate the robot control signal for controlling the operation of the robot arm 12 so that the positional relationship between the end effector 4 and the target object OBJ (especially, the process performed object) is the desired positional relationship. For example, the signal generation unit 313 may generate the robot control signal so that the end effector 4 performs the predetermined process on the target object OBJ (especially, the process performed object) at a timing at which the positional relationship between the end effector 4 and the target object OBJ (especially, the process performed object) is the desired positional relationship. For example, the signal generation unit 313 may generate the robot control signal for controlling the operation of the end effector 4 to perform the predetermined process on the target object OBJ (especially, the process performed object) at the timing at which the positional relationship between the end effector 4 and the target object OBJ (especially, the process performed object) is the desired positional relationship. Note that the robot control signal for controlling the operation of the end effector 4 may be referred to as the end effector control signal as already described above.

Note that the signal generation unit 313 may generate the robot control signal to perform a feedback control of the robot 1 by using the position pose data POI generated at the step S3. For example, the signal generation unit 313 may generate the robot control signal to perform the feedback control including a P (proportional) control by using the position pose data POI. For example, the signal generation unit 313 may generate the robot control signal to perform the feedback control including a PI (Proportional - Integral) control by using the position pose data POI. For example, the signal generation unit 313 may generate the robot control signal to perform the feedback control including a PID (Proportional - Integral - Differential) control by using the position pose data POI.

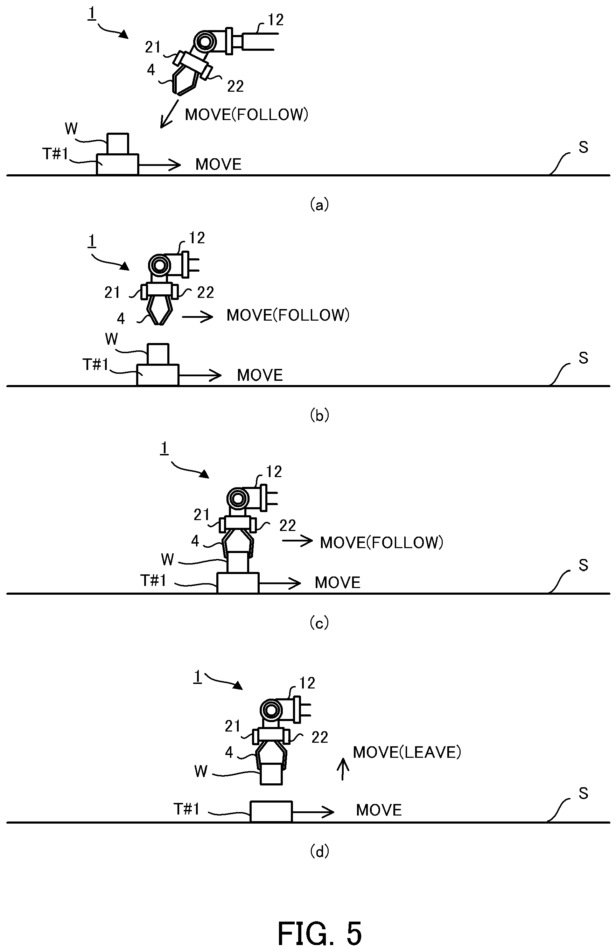

As one example, each of FIG. 5(a) to FIG. 5(d) is a side view that illustrates the positional relationship between the robot 1 and the workpiece W at a certain timing in a period during which the holding process for holding the workpiece W (namely, one example of the target object OBJ) placed on the placing apparatus T#1 such as the Automatic Guided Vehicle (AGV) moving on the support surface S is performed. In this case, the control apparatus 3 may generate the position pose data POI indicating at least one of the position and the pose of the workpiece W that is a target for the holding process (namely, one example of the target object OBJ for the holding process), and generate the robot control signal by using the generated position pose data POI. For example, as illustrated in FIG. 5(a), the signal generation unit 313 may generate the robot control signal for controlling the operation of the robot arm 12 so that the end effector 4 moves toward a space directly above the moving workpiece W. As one example, the signal generation unit 313 may generate the robot control signal for controlling the operation of the robot arm 12 so that the end effector 4 is positioned (in other words, approaches) the sequentially updated movement target position at a desired pose while sequentially updating the movement target position of the end effector 4 in accordance with the moving workpiece W based on at least one of the position and the pose of the workpiece W sequentially calculated by the position pose calculation unit 312. As illustrated in FIG. 5(b), the signal generation unit 313 may generate the robot control signal for controlling the operation of the robot arm 12 so that the end effector 4, which is positioned directly above the moving workpiece W, remains directly above the workpiece W and approaches the workpiece W until it can hold the workpiece W. As illustrated in FIG. 5(c), the signal generation unit 313 may generate the robot control signal for controlling the operations of the robot arm 12 and the end effector 4 so that the end effector 4, which is positioned at a position at which it can hold the moving workpiece W, holds the workpiece W while following the moving workpiece W. As illustrated in FIG. 5(d), the signal generation unit 313 may generate the robot control signal for controlling the operations of the robot arm 12 and end effector 4 so that the end effector 4, which has held the workpiece W, moves away from the moving placing apparatus T#1 while holding the workpiece W.

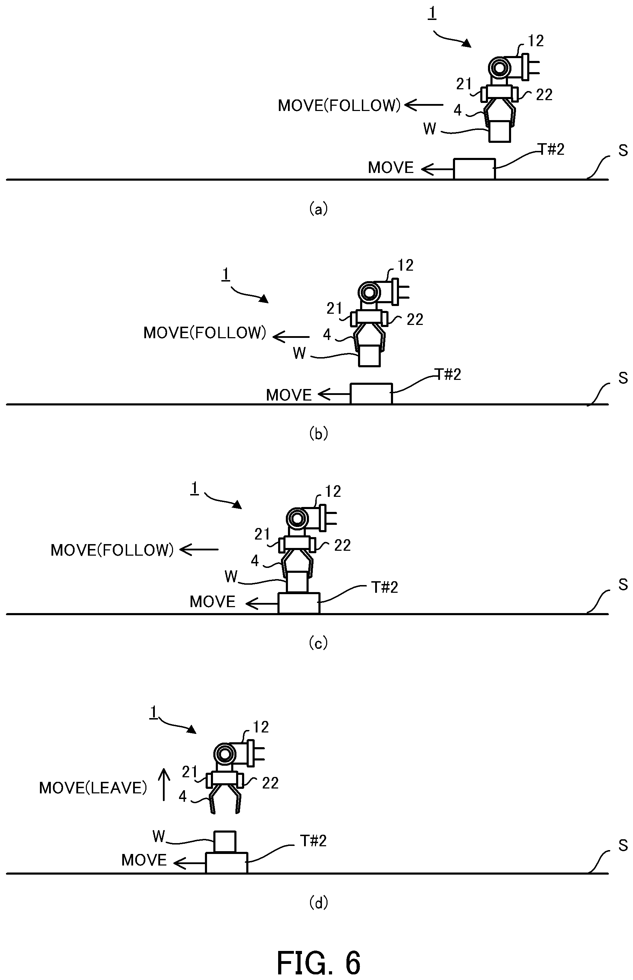

In a case where the robot 1 holds the workpiece W placed on the placing apparatus T#1 by using the end effector 4, the robot 1 may perform the releasing process for releasing the held workpiece W so that the held workpiece W is placed on a placing apparatus T#2 (namely, one example of the target object OBJ for the releasing process) that is different from the placing apparatus T#1. Namely, the robot 1 may perform the placing process for placing the workpiece W on the placing apparatus T#2 by continuously performing the holding process and the releasing process. In this case, the control apparatus 3 may generate the position pose data POI indicating at least one of the position and the pose of the placing apparatus T#2 that is a target for the releasing process, and generate the robot control signal by using the generated position pose data POI. For example, each of FIG. 6(a) to FIG. 6(d) is a side view that illustrates the positional relationship between the robot 1 and the workpiece W at a certain timing in a period during which the releasing process for placing the workpiece W on the placing apparatus T#2 moving on the support surface S is performed. In this case, as illustrated in FIG. 6(a), the signal generation unit 313 may generate the robot control signal for controlling the operation of the robot arm 12 so that the end effector 4 holding the workpiece W moves toward a space directly above the moving placing apparatus T#2 while holding the workpiece W. As one example, the signal generation unit 313 may generate the robot control signal for controlling the operation of the robot arm 12 so that the end effector 4 is positioned (in other words, approaches) the sequentially updated movement target position at a desired pose while sequentially updating the movement target position of the end effector 4 in accordance with the moving placing apparatus T#2 based on at least one of the position and the pose of the placing apparatus T#2 sequentially calculated by the position pose calculation unit 312. As illustrated in FIG. 6(b), the signal generation unit 313 may generate the robot control signal for controlling the operation of the robot arm 12 so that the end effector 4, which is positioned directly above the moving placing apparatus T#2 and is holding the workpiece W, approaches the placing apparatus T#2 until the workpiece W can be placed on the placing apparatus T#2 while positioning directly above the placing apparatus T and holding the workpiece W. As illustrated in FIG. 6(c), the signal generation unit 313 may generate the robot control signal for controlling the operations of the robot arm 12 and the end effector 4 so that the end effector 4, which is positioned at a position at which it can place the workpiece W on the placing apparatus T#2, places the workpiece W on the placing apparatus T#2 (namely, releases the held workpiece W) while following the moving placing apparatus T#2. As illustrated in FIG. 6(d), the signal generation unit 313 may generate the robot control signal for controlling the operation of the robot arm 12 so that the end effector 4, which has finished placing the workpiece W on the placing apparatus T#2, moves away from the placing apparatus T#2.

In a case where the releasing process is performed (especially, in a case where the releasing process is performed to perform the placing process), the control apparatus 3 may further generate the position pose data POI indicating at least one of the position and the pose of workpiece W (namely, one example of the target object OBJ for the releasing process), which is a second target for the releasing process, in addition to the position pose data POI indicating at least one of the position and the pose of the placing apparatus T#2 (namely, one example of the target object OBJ for the releasing process), which is the first target for the releasing process. Namely, the control apparatus 3 may generate the position pose data POI indicating at least one of the position and the pose of workpiece W held by the end effector 4 after the end effector 4 holds the workpiece W, in addition to generating the position pose data POI indicating at least one of the position and the pose of the workpiece W that is not yet held by the end effector 4 before the end effector 4 holds the workpiece W.

In a case where the releasing process is performed, the control apparatus 3 may generate the robot control signal by using the position pose data POI indicating at least one of the position and the pose of the workpiece W held by the end effector 4, in addition to the position pose data POI related to the placing apparatus T#2, before the end effector 4 releases the held workpiece W by the releasing process. Namely, the control apparatus 3 may generate the robot control signal by using the position pose data POI indicating at least one of the position and the pose of the workpiece W held by the end effector 4 in at least a part of a period during which the end effector 4 is holding the workpiece W.

For example, the signal generation unit 313 may generate the robot control signal for controlling the robot arm 12 so as to move the workpiece W held by the end effector 4 to a desired position (for example, a position at which the workpiece W should be released). In this case, the robot 1 can place the workpiece W held by the end effector 4 at the desired position of the placing apparatus T (can perform the placing process) more properly, compared to a case where the position pose data POI related to the workpiece W is not used. This is because the position of the workpiece W held by the end effector 4 is information known to the control apparatus 3. In a case where the position of the workpiece W is not the known information, there is a possibility that a technical problem that the workpiece W collides with the placing apparatus T occurs. Alternatively, in a case where the position of the workpiece W is not the known information, there is a possibility that a technical problem that the workpiece W is placed at an unintended position of the placing apparatus T (alternatively, another object) by the placing process described above occurs. Alternatively, in a case where the position of the workpiece W is not the known information, there is a possibility that a technical problem that the workpiece W is embedded into an unintended position of another object by the embedding process described above occurs. Alternatively, in a case where the position of the workpiece W is not the known information, there is a possibility that a technical problem that the workpiece W is attached to an unintended position of another object by the attachment process described above occurs. Alternatively, in a case where the position of the workpiece W is not the known information, there is a possibility that a technical problem that the workpiece W is adhered to an unintended position of another object by the adhesive process described above occurs. Alternatively, in a case where the position of the workpiece W is not the known information, there is a possibility that a technical problem that the workpiece W is welded to an unintended position of another object by the welding process described above occurs. However, in the present example embodiment, it is less likely or unlikely that these technical problems occur, because the position of the workpiece W is the known information.

Moreover, for example, the signal generation unit 313 may generate the robot control signal for controlling the end effector 4 so as to change the pose of the workpiece W held by the end effector 4 to a desired pose. In this case, the robot 1 can place the workpiece W in the desired pose on the placing apparatus T (can perform the placing process), compared to a case where the position pose data POI related to the workpiece W is not used. This is because the pose of the workpiece W held by the end effector 4 is information known to the control apparatus 3. In a case where the pose of the workpiece W is not the desired pose, there is a possibility that a technical problem that the workpiece W collides with the placing apparatus T occurs. Alternatively, in a case where the pose of the workpiece W is not the desired pose, there is a possibility that a technical problem that the workpiece W is placed at an unintended pose on the placing apparatus T (alternatively, another object) by the placing process described above occurs. Alternatively, in a case where the pose of the workpiece W is not the desired pose, there is a possibility that a technical problem that the workpiece W is embedded at an unintended pose into another object by the embedding process described above occurs. Alternatively, in a case where the pose of the workpiece W is not the desired pose, there is a possibility that a technical problem that the workpiece W is attached at an unintended pose to another object by the attachment process described above occurs. Alternatively, in a case where the pose of the workpiece W is not the desired pose, there is a possibility that a technical problem that the workpiece W is adhered at an unintended pose to another object by the adhesive process described above occurs. Alternatively, in a case where the pose of the workpiece W is not the desired pose, there is a possibility that a technical problem that the workpiece W is welded at an unintended pose to another object by the welding process described above occurs. However, in the present example embodiment, it is less likely or unlikely that these technical problems occur, because the robot 1 is controllable so that the pose of the workpiece W is the desired pose.

Note that the control apparatus 3 may generate the robot control signal by using the position pose data POI indicating at least one of the position and the pose of the workpiece W held by the end effector 4 not only in a case where the releasing process is performed but also in any case where the end effector 4 is holding the workpiece W.

At least one of the placing apparatus T#1 illustrated in FIG. 5(a) to FIG. 5(d) and the placing apparatus T#2 illustrated in FIG. 6(a) to FIG. 6(d) may not move on the support surface S. For example, each of FIG. 7(a) to FIG. 7(b)is a side view that illustrates the positional relationship between the robot 1 and the workpiece W at a certain timing in a period during which the holding process for holding the workpiece W placed on the placing apparatus T#1 that is stationary on the support surface S is performed. In this case, as illustrated in FIG. 7(a), the signal generation unit 313 may generate the robot control signal for controlling the operation of the robot arm 12 so that the end effector 4 approaches the workpiece W until it can hold the stationary workpiece W. As one example, the signal generation unit 313 may generate the robot control signal for controlling the operation of the robot arm 12 so that the end effector 4 is positioned (in other words, approaches) at a position, at which end effector 4 can hold the workpiece W whose position and / or the pose is calculated, in a desired pose based on at least one of the position and the pose of the workpiece W calculated by the position pose calculation unit 312. As illustrated in FIG. 7(b), the signal generation unit 313 may generate the robot control signal for controlling the operations of the robot arm 12 and the end effector 4 so that the end effector 4, which is positioned at a position at which it can hold the stationary workpiece W, holds the workpiece W. Furthermore, each of FIG. 7(c) to FIG. 7(e) is a side view that illustrates the positional relationship between the robot 1 and the workpiece W at a certain timing in a period during which the releasing process for placing the workpiece W on the placing apparatus T#2 that is stationary on the support surface S is performed. In this case, as illustrated in FIG. 7(c), the signal generation unit 313 may generate the robot control signal for controlling the operation of the robot arm 12 so that the end effector 4 holding the workpiece W approaches the placing apparatus T#2 until the workpiece W can be placed on the stationary placing apparatus T#2 while holding the workpiece W. As illustrated in FIG. 7(d), the signal generation unit 313 may generate the robot control signal for controlling the operations of the robot arm 12 and the end effector 4 so that the end effector 4, which is positioned at a position at which it can place the workpiece W on the placing apparatus T#2, places the workpiece W on the stationary placing apparatus T#2 (namely, releases the held workpiece W). As illustrated in FIG. 7(e), the signal generation unit 313 may generate the robot control signal for controlling the operation of the robot arm 12 so that the end effector 4, which has finished placing the workpiece W on the placing apparatus T#2, moves away from the placing apparatus T#2.

A plurality of workpieces W may be placed on the placing apparatus T#1. For example, the plurality of workpieces W may be placed on the placing apparatus T#1 so that the plurality of workpieces W are arranged on the placing apparatus T#1 in accordance with a certain manner. For example, the plurality of workpieces W may be placed on the placing apparatus T#1 so that the plurality of workpieces W are randomly stacked on the placing apparatus T#1. In this case, the robot 1 may perform the holding process for selectively holding one desired workpiece W of the plurality of workpieces W placed on the placing apparatus T#1. Especially, the robot 1 may perform the holding process for holding the plurality of workpieces W placed on the placing apparatus T#1 one by one in sequence.

Furthermore, the robot 1 may perform the releasing process for placing the plurality of workpieces W on the placing apparatus T#2. Namely, the robot 1 may perform the placing process for placing the plurality of workpieces W, which are placed on the placing apparatus T#1, on the placing apparatus T#2 (alternatively, on another placing apparatuses) one by one in sequence, by performing the holding process and the releasing process. In this case, the robot 1 may perform the releasing process for placing the plurality of workpieces W on the placing apparatus T#2 one by one in sequence so that the plurality of workpieces W are arranged on the placing apparatus T#2 in accordance with a certain manner. The robot 1 may perform the releasing process for placing the plurality of workpieces W on the placing apparatus T#2 one by one in sequence so that the plurality of workpieces W are randomly stacked on the placing apparatus T#2.

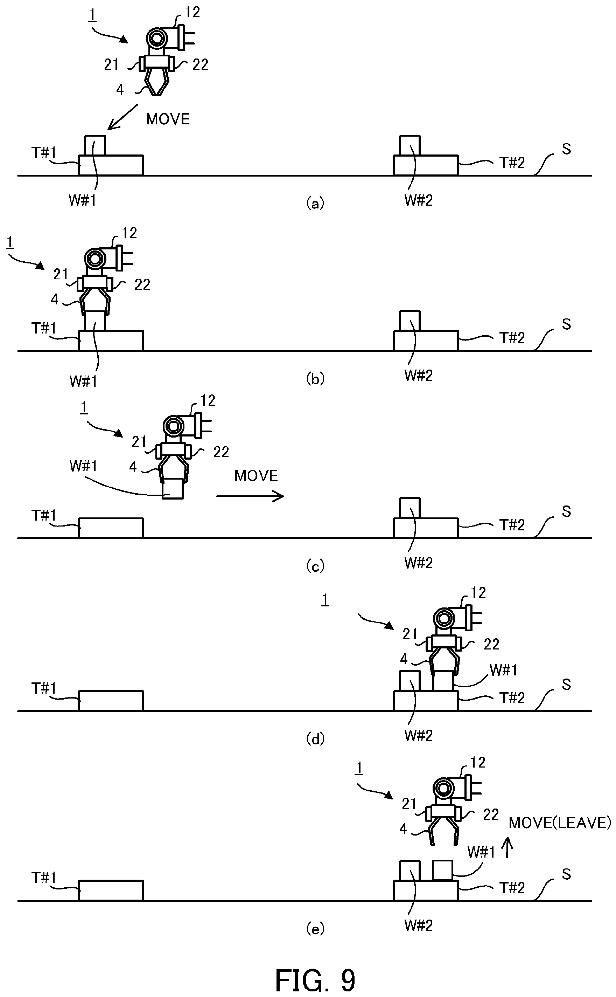

As an example, each of FIG. 8(a) to FIG. 8(e) and FIG. 9(a) to FIG. 9(e) is a side view that illustrates the positional relationship between the robot 1 and the workpiece W at a certain timing in a period during which the holding process for holding two workpieces W#1 and W#2 placed on the placing apparatus T#1 one by one in sequence and the releasing process for placing the two workpieces W#1 and W#2 on the placing apparatus T#2 one by one in sequence is performed. In this case, as illustrated in FIG. 8(a), the signal generation unit 313 may generate the robot control signal for controlling the operation of the robot arm 12 so that the end effector 4 approaches one of the workpieces W#1 and W#2 (the workpiece W#2 in an example illustrated in FIG. 8(a)) until it can hold the workpiece W#2. As one example, the signal generation unit 313 may generate the robot control signal for controlling the operation of the robot arm 12 so that the end effector 4 is positioned (in other words, approaches) at a position, at which end effector 4 can hold the workpiece W#2 whose position and / or the pose is calculated, in a desired pose based on at least one of the position and the pose of the workpiece W#2 calculated by the position pose calculation unit 312. Then, as illustrated in FIG. 8(b), the signal generation unit 313 may generate the robot control signal for controlling the operations of the robot arm 12 and the end effector 4 so that the end effector 4, which is positioned at a position at which it can hold the workpiece W#2, holds the workpiece W#2. Then, as illustrated in FIG. 8(c), the signal generation unit 313 may generate the robot control signal for controlling the operation of the robot arm 12 so that the end effector 4 holding the workpiece W#2 approaches the placing apparatus T#2 until the workpiece W#2 can be placed on the placing apparatus T#2 while holding the workpiece W#2. As one example, the signal generation unit 313 may generate the robot control signal for controlling the operation of the robot arm 12 so that the end effector 4 is positioned (in other words, approaches) at a position, at which end effector 4 can place the workpiece W#2 on the placing apparatus T#2 whose position and / or the pose is calculated, in a desired pose based on at least one of the position and the pose of the placing apparatus T#2 calculated by the position pose calculation unit 312. Then, as illustrated in FIG. 8(d), the signal generation unit 313 may generate the robot control signal for controlling the operations of the robot arm 12 and the end effector 4 so that the end effector 4, which is positioned at a position at which it can place the workpiece W#2 on the placing apparatus T#2, places the workpiece W#2 on the placing apparatus T#2 (namely, releases the held workpiece W#2). Then, as illustrated in FIG. 8(e), the signal generation unit 313 may generate the robot control signal for controlling the operation of the robot arm 12 so that the end effector 4, which has finished placing the workpiece W#2 on the placing apparatus T#2, moves away from the placing apparatus T#2. Then, as illustrated in FIG. 9(a), the signal generation unit 313 may generate the robot control signal for controlling the operation of the robot arm 12 so that the end effector 4 approaches the other one of the workpieces W#1 and W#2 (the workpiece W#1 in an example illustrated in FIG. 9(a)) until it can hold the workpiece W#1. As one example, the signal generation unit 313 may generate the robot control signal for controlling the operation of the robot arm 12 so that the end effector 4 is positioned (in other words, approaches) at a position, at which end effector 4 can hold the workpiece W#1 whose position and / or the pose is calculated, in a desired pose based on at least one of the position and the pose of the workpiece W#1 calculated by the position pose calculation unit 312. Then, as illustrated in FIG. 9(b), the signal generation unit 313 may generate the robot control signal for controlling the operations of the robot arm 12 and the end effector 4 so that the end effector 4, which is positioned at a position at which it can hold the workpiece W#1, holds the workpiece W#1. Then, as illustrated in FIG. 9(c), the signal generation unit 313 may generate the robot control signal for controlling the operation of the robot arm 12 so that the end effector 4 holding the workpiece W#1 approaches the placing apparatus T#2 until the workpiece W#1 can be placed on the placing apparatus T#2 while holding the workpiece W#1. As one example, the signal generation unit 313 may generate the robot control signal for controlling the operation of the robot arm 12 so that the end effector 4 is positioned (in other words, approaches) at a position, at which end effector 4 can place the workpiece W#1 on the placing apparatus T#2 whose position and / or the pose is calculated, in a desired pose based on at least one of the position and the pose of the placing apparatus T#2 calculated by the position pose calculation unit 312. Then, as illustrated in FIG. 9(d), the signal generation unit 313 may generate the robot control signal for controlling the operations of the robot arm 12 and the end effector 4 so that the end effector 4, which is positioned at a position at which it can place the workpiece W#1 on the placing apparatus T#2, places the workpiece W#1 on the placing apparatus T#2 (namely, releases the held workpiece W#1). Then, as illustrated in FIG. 9(e), the signal generation unit 313 may generate the robot control signal for controlling the operation of the robot arm 12 so that the end effector 4, which has finished placing the workpiece W#1 on the placing apparatus T#2, moves away from the placing apparatus T#2.

The robot 1 may perform the holding process for holding the plurality of workpieces W placed on the placing apparatus T#1, which moves on the support surface S, one by one in sequence. Alternatively, the robot 1 may perform the holding process for holding the plurality of workpieces W placed on the placing apparatus T#1, which is stationary on the support surface S, one by one in sequence. The robot 1 may perform the releasing process for placing the plurality of workpieces W on the placing apparatus T#2, which moves on the support surface S, one by one in sequence. The robot 1 may perform the releasing process for placing the plurality of workpieces W on the placing apparatus T#2, which is stationary on the support surface S, one by one in sequence.

Again in FIG. 4, the signal generation unit 313 outputs the robot control signal generated at the step S4 to the robot 1 (especially, the robot control apparatus 13) by using the communication apparatus 33. As a result, the robot control apparatus 13 controls at least one of the operation of the robot 1 (for example, the operation of the robot arm 12) and the operation of the end effector 4 based on the robot control signal.

Then, the control apparatus 3 repeats a series of processing from the step S1 to the step S4 until it is determined that the robot 1 has completed the predetermined process on one target object OBJ that is selected as the process performed object at the step S3 (a step S5). For example, in a case where the end effector 4 performs the holding process as illustrated in FIG. 5(a) to FIG. 5(d), the control apparatus 3 repeats a series of processing from the step S1 to the step S4 until it is determined that the end effector 4 has held one target object OBJ that is selected as the process performed object at the step S3 (the step S5). For example, in a case where the end effector 4 performs the releasing process as illustrated in FIG. 6(a) to FIG. 6(d), the control apparatus 3 repeats a series of processing from the step S1 to the step S4 until it is determined that the end effector 4 has released one target object OBJ held by the end effector 4 at the step S3 (the step S5).

In a case where it is determined that the robot 1 has not yet completed the predetermined process on one target object OBJ (the step S5: No), the control apparatus 3 continues to acquire at least one of the image data IMG_2D and IMG_3D from the imaging apparatuses 21 and 22 even in a period during which the operation of at least one of the robot arm 12 and the end effector 4 is controlled based on the robot control signal. For example, in a case where the end effector 4 performs the holding process as illustrated in FIG. 5(a) to FIG. 5(d), the control apparatus 3 may repeat a series of processing from the step S1 to the step S4 until the end effector 4 holds the workpiece W (furthermore, until the end effector 4 holding the workpiece W moves away from the placing apparatus T#1, if necessary). For example, in a case where the end effector 4 performs the releasing process as illustrated in FIG. 6(a) to FIG. 6(d), the control apparatus 3 may repeat a series of processing from the step S1 to the step S4 until the end effector 4 places the workpiece W on the placing apparatus T#2 (furthermore, until the end effector 4, which has finished placing the workpiece W on the placing apparatus T#2, moves away from the placing apparatus T#2, if necessary).

In this case, since the operation of at least one of the robot arm 12 and the end effector 4 is controlled based on the robot control signal as described above, each of the imaging apparatuses 21 and 22 may image the target object OBJ during a relative movement between the target object OBJ and the imaging apparatuses 21 and 22. For example, each of the imaging apparatuses 21 and 22 may image the target object OBJ in a period during which the target object OBJ is stationary while the imaging apparatuses 21 and 22 are moving. For example, each of the imaging apparatuses 21 and 22 may image the target object OBJ in a period during which the target object OBJ is moving while the imaging apparatuses 21 and 22 are stationary. For example, each of the imaging apparatuses 21 and 22 may image the target object OBJ in a period during which the target object OBJ is moving while the imaging apparatuses 21 and 22 are moving. Namely, the control apparatus 3 may continue to perform the robot control processing illustrated in FIG. 4 (may repeat the robot control processing illustrated in FIG. 4) during the relative movement between the target object OBJ and the imaging apparatuses 21 and 22 (namely, in a period during which at least one of the imaging apparatuses 21 and 22 and the target object OBJ is moving). As a result, the control apparatus 3 can newly calculate (namely, update) the position pose data POI indicating at least one of the position and the pose of the target object OBJ based on the newly acquired image data IMG_2D and IMG_3D even in the period during which the operation of the robot 1 is controlled based on the robot control signal.

In this case, especially in a case where at least one of the position and the pose of the target object OBJ changes due to the movement of the target object OBJ, the control apparatus 3 may re-calculate at least one of the position and the pose of the target object OBJ. Namely, the control apparatus 3 may re-generate the position pose data POI reflecting the change of at least one the position and the pose of the target object OBJ caused by the movement of the target object OBJ. Therefore, it is unlikely that at least one of the position and the pose indicated by the position pose data POI deviates significantly from at least one of the actual position and the actual pose of the target object OBJ. Therefore, the control apparatus 3 can properly control the operation of the robot arm 12 so that the end effector 4 can approach the target object OBJ (especially, the moving target object OBJ) properly.

However, each of the imaging apparatuses 21 and 22 may image the target object OBJ in a period during which the target object OBJ is stationary and the imaging apparatuses 21 and 22 are stationary. The control apparatus 3 may perform the robot control processing illustrated in FIG. 4 in a period during which the imaging apparatuses 21 and 22 and the target object OBJ are stationary. Note that the control apparatus 3 may repeat the robot control processing illustrated in FIG. 4 in a period during which the imaging apparatuses 21 and 22 and the target object OBJ are stationary.

Alternatively, in a case where the target object OBJ is stationary, it is unlikely that at least one of the position and the pose of the target object OBJ calculated at the step S3 changes over time. Therefore, there is low necessity to re-calculate at least one of the position and the pose of the target object OBJ by newly performing a series of processing from the step S1 to the step S3. Therefore, in a case where the target object OBJ is stationary, the control apparatus 3 may not repeat a series of processing from the step S1 to the step S3 even in a case where it is determined that the robot 1 has not yet completed the predetermined process on one target object OBJ. In this case, the control apparatus 3 may continue to control the robot 1 based on the robot control signal, which has been already generated at the step S4. Namely, the control apparatus 3 may continue to control the robot 1 based on the robot control signal, which has been already generated at the step S4, without newly generating the robot control signal at the step S4. In other words, the control apparatus 3 may continue to use the robot control signal, which has been generated at the step S4, to control the robot 1 without newly generating the robot control signal at the step S4.

Note that the position pose calculation unit 312 may not calculate at least one of the position and the position of the target object OBJ in the global coordinate system at the step S3, as described above. In this case, the position pose calculation unit 312 may calculate at least one of the position and the pose of the target object OBJ in a coordinate system that is different from the global coordinate system (for example, in the robot coordinate system, in the 2D imaging coordinate system, or in the 3D imaging coordinate system) at the step S3 in FIG. 4. Namely, the position pose calculation unit 312 may generate the position pose data POI indicating at least one of the position and the pose of the target object OBJ in a coordinate system that is different from the global coordinate system (for example, in the robot coordinate system, in the 2D imaging coordinate system, or in the 3D imaging coordinate system). In this case, the signal generation unit 313 may generate the robot control signal at the step S4 by using the position pose data POI indicating at least one of the position and the pose of the target object OBJ in the coordinate system different from the global coordinate system calculated at the step S3.

Then, in a case where it is determined that the robot 1 has completed the predetermined process on one target object OBJ (the step S5: Yes), the control apparatus 3 determines whether or not the robot control processing illustrated in FIG. 4 should be ended (a step S6). For example, in a case where the robot 1 should perform the predetermined process on another target object OBJ, the control apparatus 3 may determine that the robot control processing illustrated in FIG. 4 may not be ended. For example, in a case where the target object OBJ on which the robot 1 should perform the predetermined process remains, the control apparatus 3 may determine that the robot control processing illustrated in FIG. 4 may not be ended. For example, in a case where the robot 1 may not perform the predetermined process on another target object OBJ, the control apparatus 3 may determine that the robot control processing illustrated in FIG. 4 should be ended. For example, in a case where there are no target object OBJ on which the robot 1 should perform the predetermined process, the control apparatus 3 may determine that the robot control processing illustrated in FIG. 4 should be ended.

In a case where it is determined that the robot control processing illustrated in FIG. 4 should be ended as a result of the determination at the step S6 (the step S6: Yes), the control apparatus 3 ends the robot control processing illustrated in FIG. 4.

On the other hand, in a case where it is determined that the robot control processing illustrated in FIG. 4 may not be ended as a result of the determination at the step S6 (the step S6: No), the control apparatus 3 performs a series of processing from the step S1 to the step S5 again. Namely, the control apparatus 3 performs a series of processing from the step S1 to the step S5 again so that the robot 1 newly performs the predetermined process on another target object OBJ that is different from the target object OBJ on which the robot 1 has already performed the predetermined process.

However, in the present example embodiment, the control apparatus 3 (especially, the signal generation unit 313) adjusts a height of the imaging system 2 before performing a series of the step S1 to the step S5 so that the robot 1 performs the predetermined process on another target object OBJ after completing the predetermined process on one target object OBJ (a step S7). Specifically, the control apparatus 3 may adjust the height at which the imaging system 2 images the target object OBJ (the step S7). Note that the height of the imaging system 2 (namely, the height at which the imaging system 2 images the target object OBJ) is referred to as an "imaging height CH" in the below-described description. Note that it can be said that the imaging height CH is a height at which the imaging system 2 performs a processing for imaging the target object OBJ (an imaging processing). Therefore, the imaging height CH may be referred to as an imaging processing height.

The "height" in the present example embodiment means a position along the Z-axis direction of the global coordinate system. In this case, the height may be a coordinate value on the Z-axis of the global coordinate system. However, the height may mean a position of the imaging system 2 along the Z-axis direction of a coordinate system that is different from the global coordinate system. In this case, the height may be a coordinate value on the Z-axis of the coordinate system that is different from the global coordinate system. At least one of the robot coordinate system, the 2D imaging coordinate system, and the 3D imaging coordinate system described above is one example of the coordinate system that is different from the global coordinate system. Alternatively, the height may mean a position along a direction of the optical axis of the imaging system 2. Note that at least one of the optical axis AX21 of the imaging apparatus 21 and the optical axis AX22 of the imaging apparatus 22 may be used as the optical axis of the imaging system 2. Note that the direction of the optical axis of the imaging system 2 may be considered to be equivalent to an imaging direction of the imaging system 2.

Moreover, the "height" in the present example embodiment may mean a height from a reference point. The origin of the global coordinate system may be used as one example of the reference point. The origin of the coordinate system that is different from the global coordinate system may be used as another example of the reference point. A reference part of a reference object may be used as another example of the reference point. The target object OBJ may be used or another object that is different from the target object OBJ for example, the placing apparatus T or the container CB) may be used as the reference object.

Note that the imaging height CH may mean the height of the imaging system 2 from the target object OBJ. In this case, the imaging height CH may be considered to be equivalent to a distance between the imaging system 2 and the target object OBJ. Specifically, the imaging height CH may be considered to be equivalent to the distance between the imaging system 2, which images the target object OBJ, and the target object OBJ. Therefore, the imaging height CH may be referred to as an imaging distance. As described above, the imaging height CH may be considered to be equivalent to the distance between the imaging system 2 and the target object OBJ. In this case, the imaging height CH may be considered to be equivalent to the distance between the imaging system 2 and the target object OBJ in the Z-axis direction of the global coordinate system. For example, the imaging height CH may be considered to be equivalent to the distance between the imaging system 2 and the target object OBJ in a Z-axis direction that is different from the global coordinate system. For example, the imaging height CH may be considered to be equivalent to the distance between the imaging system 2 and the target object OBJ in the direction of the optical axis of the imaging system 2.

Moreover, the "height of the imaging system 2" in the present example embodiment may mean the height of at least one of the imaging apparatuses 21 and 22. Therefore, the "imaging height CH of the imaging system 2" in the present example embodiment may mean the height at which at least one of the imaging apparatuses 21 and 22 images the target object OBJ. For example, in a case where the image data IMG_2D is used to calculate the position pose data POI at the step S3, the "height of the imaging system 2" may mean the height of the imaging apparatus 21. Namely, the "imaging height CH of the imaging system 2" may mean the height at which the imaging apparatus 21 images the target object OBJ. In this case, the "imaging height CH of the imaging system 2" may mean a height of a point representing the imaging apparatus 21. For example, in a case where the image data IMG_3D (specifically, the three-dimensional position data WSD generated from the image data IMG_3D) is used to calculate the position pose data POI at the step S3, the "height of the imaging system 2" may mean the height of the imaging apparatus 22. Namely, the "imaging height CH of the imaging system 2" may mean the height at which the imaging apparatus 22 images the target object OBJ. In this case, the "imaging height CH of the imaging system 2" may mean a height of a point representing the imaging apparatus 22. For example, in a case where both the image data IMG_2D and the image data IMG_3D (specifically, the three-dimensional position data WSD generated from the image data IMG_3D) are used to calculate the position pose data POI at the step S3, the "height of the imaging system 2" may mean the heights of both the imaging apparatuses 21 and 22. Namely, the "imaging height CH of the imaging system 2" may mean the height at which both the imaging apparatuses 21 and 22 image the target object OBJ. In this case, the "imaging height CH of the imaging system 2" may mean a height of a point representing both the imaging apparatuses 21 and 22.

After the imaging height CH of the imaging system 2 is adjusted, the control apparatus 3 performs a series of processing from the step S1 to the step S5 again. Specifically, after the imaging height CH of the imaging system 2 is adjusted at the step S7, the imaging system 2 re-images the target object OBJ to re-generate at least one of the image data IMG_2D and IMG_3D (the step S1). Then, the control apparatus 3 may re-acquire at least one of the image data IMG_2D and IMG_3D newly generated by the imaging system 2 (the step S1). Then, the control apparatus 3 may re-generate the three-dimensional position data WSD based on the image data IMG_3D newly acquired at the step S1 (the step S2). Then, the control apparatus 3 may re-generate the position pose data POI based on at least one of the image data IMG_2D reacquired at the step S1 and the three-dimensional position data WSD re-generated at the step S2 (the step S3). Namely, the control apparatus 3 may re-generate the position pose data POI indicating at least one of the position and the pose of another target object OBJ (namely, the next process performed object) on which the end effector 4 should next perform the predetermined process (the step S3). Then, the control apparatus 3 may re-generate the robot control signal based on the position pose data POI re-generated at the step S3 (the step S4). For example, the control apparatus 3 may generate the robot control signal so that the end effector 4 approach the next process performed object to perform the predetermined process on the next process performed object. Then, the control apparatus 3 repeats a series of processing from the step S1 to the step S4 until it is determined that the robot 1 has completed the predetermined process on the next process performed object (the step S5).

Then, the control apparatus 3 alternately repeats the processing for controlling the robot 1 to perform the predetermined process on the process performed object (the step S1 to the step S5) and the processing for adjusting the imaging height CH of the imaging system 2 (the step S7) until it is determined that the robot control processing illustrated in FIG. 4 should be ended (until the step S6: Yes). Namely, the control apparatus 3 adjusts the imaging height CH of the imaging system 2 each time the robot 1 completes the predetermined process on the process performed object. However, as described in detail later, the control apparatus 3 may not adjust the imaging height CH of the imaging system 2 each time the robot 1 completes the predetermined process on a single process performed object. The control apparatus 3 may adjust the imaging height CH of the imaging system 2 each time the robot 1 completes the predetermined process on two or more process performed objects.

### (2-2) Processing for Adjusting Imaging Height CH of Imaging System 2

Next, a processing for adjusting the imaging height CH of the imaging system 2 at the step S7 in FIG. 4 will be further described in detail.

In order to adjust the imaging height CH of the imaging system 2, the control apparatus 3 may determine a target value of the imaging height CH of the imaging system 2. Note that the target value of the imaging height CH of the imaging system 2 is referred to as a "target imaging height CH_target" in the below-described description.

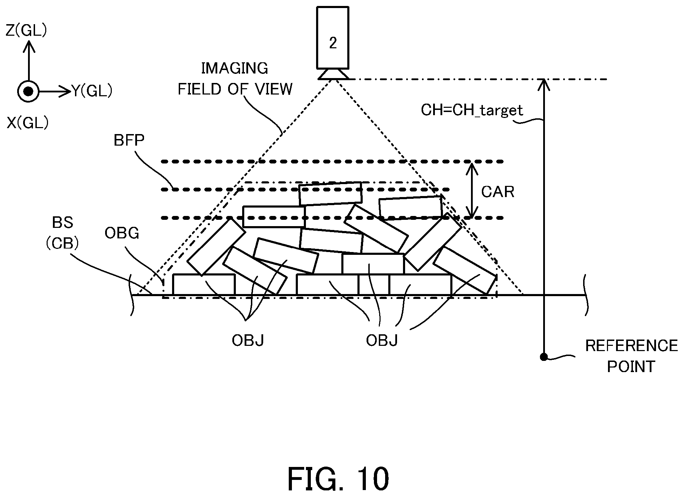

As illustrated in FIG. 10 that is a cross-sectional view illustrating the plurality of target objects OBJ and the imaging system 2, the control apparatus 3 may determine the target imaging height CH_target so as to satisfy a condition that at least one target object OBJ is included in an imaging allowable range CAR of the imaging system 2 positioned at the target imaging height CH_target. Specifically, the control apparatus 3 may determine the target imaging height CH_target so as to satisfy a condition that at least one target object OBJ, which is contained in the container CB, is included in the imaging allowable range CAR of the imaging system 2 positioned at the target imaging height CH_target. Note that the imaging system 2 positioned at the target imaging height CH_target may mean the imaging system 2 whose imaging height CH is the same as the target imaging height CH_target. Especially, the control apparatus 3 may determine the target imaging height CH_target so as to satisfy a condition that at least one target object OBJ, on which the robot 1 (the end effector 4) should perform the predetermined process next, is included in the imaging allowable range CAR of the imaging system 2 positioned at the target imaging height CH_target.

Here, in a case where the plurality of target objects OBJ are positioned so that at least two of the plurality of target objects OBJ overlap at least partially (for example, the plurality of target objects OBJ are randomly positioned) as illustrated in FIG. 10, it is likely that the robot 1 usually performs the predetermined process on the plurality of target objects OBJ in order from top to bottom. For example, there is a possibility that the robot 1 performs the predetermined process on the target object OBJ positioned above other target object OBJ. For example, there is a possibility that the robot 1 performs the predetermined process on the target object OBJ positioned at the uppermost position. For example, there is a possibility that the robot 1 performs the predetermined process on the target object OBJ whose upper part is not covered by other target object OBJ. For example, it is likely that the robot 1 performs the predetermined process on the target object OBJ whose size of the upper area covered by other target object OBJ is relatively less. Therefore, the control apparatus 3 may determine the target imaging height CH_target so as to satisfy the condition that at least one target object OBJ, which is positioned above other objects OBJ, is included in the imaging allowable range CAR of the imaging system 2 positioned at the target imaging height CH_target. The control apparatus 3 may determine the target imaging height CH_target so as to satisfy the condition that at least one target object OBJ, which is positioned at the uppermost position, is included in the imaging allowable range CAR of the imaging system 2 positioned at the target imaging height CH_target. The control apparatus 3 may determine the target imaging height CH_target so as to satisfy the condition that at least one target object OBJ, whose upper part is not covered by other target object OBJ, is included in the imaging allowable range CAR of the imaging system 2 positioned at the target imaging height CH_target. The control apparatus 3 may determine the target imaging height CH_target so as to satisfy the condition that at least one target object OBJ, whose size of the upper area covered by other target object OBJ is relatively less, is included in the imaging allowable range CAR of the imaging system 2 positioned at the target imaging height CH_target.

The imaging allowable range CAR may be a range that is determined based on a depth of field of the imaging system 2. For example, the imaging allowable range CAR may be a range that is the same as the depth of field of the imaging system 2. For example, the imaging allowable range CAR may be a range that overlaps with the depth of field of the imaging system 2 at least partially. Namely, the imaging allowable range CAR may be a range that includes a part or whole of the depth of field of the imaging system 2. In this case, the imaging allowable range CAR may be a range that is narrower than the depth of field of the imaging system 2, or may be a range that is wider than the depth of field of the imaging system 2. Note that the depth of field of the imaging system 2 may mean the depth of field of at least one of the imaging apparatus 21 and 22.

Note that the depth of field of the imaging system 2 may be a range that extends from a best focus position BFP of an objective optical system (for example, an objective lens) of the imaging system 2 toward both sides (on an object side of the imaging system 2) along the optical axis of the imaging system 2, for example. Therefore, the imaging allowable range CAR may be a range that is determined based on the best focus position BFP of the objective optical system of the imaging system 2. For example, the imaging allowable range CAR may be a range that extends from the best focus position BFP of the objective optical system of the imaging system 2 toward both sides (on the object side of the imaging system 2) along the optical axis of the imaging system 2. Note that the objective optical system of the imaging system 2 may mean an objective optical system of at least one of the imaging apparatuses 21 and 22. Furthermore, the best focus position BFP may be referred to as a just-in-focus position. Note that the imaging allowable range CAR may be the best focus position BFP. Namely, the imaging allowable range CAR may match the best focus position BFP. In this case, the imaging allowable range CAR may be referred to as an imaging allowable position.

The imaging allowable range CAR may be a range that is determined based on a depth of focus of the imaging system 2. For example, the imaging allowable range CAR may be a range that is the same as the depth of focus of the imaging system 2. For example, the imaging allowable range CAR may be a range that overlaps with the depth of focus of the imaging system 2 at least partially. Namely, the imaging allowable range CAR may be a range that includes a part or whole of the depth of focus of the imaging system 2. In this case, the imaging allowable range CAR may be a range that is narrower than the depth of focus of the imaging system 2, or may be a range that is wider than the depth of field of the imaging system 2. Note that the depth of focus of the imaging system 2 may mean the depth of focus of at least one of the imaging apparatus 21 and 22. The depth of focus of the imaging system 2 may mean the depth of focus on an image plane side of the projection apparatus 23 that projects the projection pattern.

The imaging allowable range CAR may be a range satisfying an accuracy condition that "an accuracy of the position pose data POI (namely, a calculation accuracy of at least one of the position and the pose of the target object OBJ, which is based on at least one of the image data IMG_2D and IMG_3D that is generated by the imaging system 2 imaging the target object OBJ included in the imaging allowable range CAR, is equal to or higher than a predetermined accuracy threshold value". Specifically, as described above, the control apparatus 3 (especially, the position pose calculation unit 312) performs a position pose computing, which includes the matching processing, to generate the position pose data POI of the target object OBJ whose matching similarity is higher than the matching determination threshold value. Even in this case, it is expected that the accuracy of the position pose data POI (namely, the calculation accuracy of at least one of the position and the pose) of the target object OBJ is higher as the matching similarity of the target object OBJ is higher. Therefore, the imaging allowable range CAR may be a range satisfying an accuracy condition that "the matching similarity of the target object OBJ whose position pose data POI is generated based on at least one of the image data IMG_2D and IMG_3D, which is generated by the imaging system 2 imaging the target object OBJ included in the imaging allowable range CAR, is higher than both the matching determination threshold value and the predetermined accuracy threshold value that is different from the matching determination threshold value". Note that the imaging allowable range CAR may be determined based on at least one of the depth of field, the best focus position BFP, and the depth of focus of the imaging system 2 so as to satisfy the accuracy condition even in a case where the imaging allowable range CAR is determined based on at least one of the depth of field, the best focus position BFP, and the depth of focus of the imaging system 2 as described above.

The imaging allowable range CAR may be a range that is determined based on the field of view (the imaging range, which may be referred to as an angle of view or a field angle) of the imaging system 2. Note that the field of view of the imaging system 2 may mean at least one of the field of view (the imaging range) of the imaging apparatus 21 and the field of view (the imaging range) of the imaging apparatus 22. Especially, in a case where the imaging system 2 includes the imaging apparatus 22 and the position pose data POI is generated based on the three-dimensional position data WSD generated from the image data IMG_3D generated by the imaging apparatus 22 in the robot control processing in FIG. 4, the imaging allowable range CAR may be a range that is determined based on the field of view (the imaging range) of the imaging apparatus 22. In the below-described description, two examples of the imaging allowable range CAR that is determined based on the field of view of the imaging apparatus 22, which is the stereo camera (namely, which includes two monocular cameras), will be described for convenience of description.

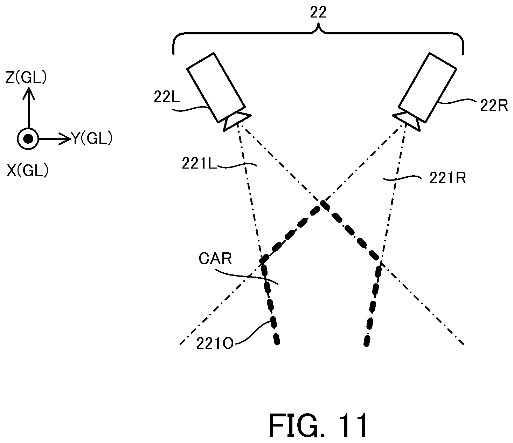

FIG. 11 is a cross-sectional view that illustrates a first example of the imaging allowable range CAR determined based on the field of view of the imaging apparatus 22. The imaging allowable range CAR may be a range that is determined based on the fields of view of the two monocular cameras of the imaging apparatus 22. Note that the two monocular cameras of the imaging apparatus 22 are referred to as a left camera 22L and a right camera 22R, respectively, in the below-described description. Specifically, the imaging allowable range CAR may be a range that is determined based on the FOV (field of view) overlap area 221O in which the field of view 221L of the left camera 22L and the field of view 221R of the right camera 22R overlap. For example, the imaging allowable range CAR may be a range that is the same as the FOV overlap area 221O. For example, the imaging allowable range CAR may be a range that includes a part of the FOV overlap area 221O. For example, the imaging allowable range CAR may be a range that includes whole of the FOV overlap area 221O. For example, the imaging allowable range CAR may be a range that is included in the FOV overlap area 221O.

In a case where the imaging apparatus 22 images the target object OBJ that is included in the imaging allowable range CAR illustrated in FIG. 11, both the left camera 22L and the right camera 22R can image the target object OBJ. As a result, the control apparatus 3 can properly calculate the parallax based on the image data IMG_3D that indicates the image generated by the left camera 22L and the image generated by the right camera 22R. Therefore, the control apparatus 3 can properly generate the three-dimensional position data WSD based on the calculated result of the parallax.

A size of the imaging allowable range CAR may be larger as the field of view of the imaging apparatus 22 (namely, at least one of the field of view 221L of the left camera 22L and the field of view 221R of the right camera 22R) is larger. Therefore, the field of view of the imaging apparatus 22 may be expanded in order to set the imaging allowable range CAR having a desired size. However, if the field of view of the imaging apparatus 22 is expanded while fixing the number of pixels of the imaging element of the imaging apparatus 22, a resolution of the imaging apparatus 22 decreases. As a result, there is a possibility that the accuracy of the position pose data POI deteriorates. Therefore, in a case where the field of view of the imaging apparatus 22 is expanded, the number of pixels of the imaging element of the imaging apparatus 22 may be increased. In other words, the field of view of the imaging apparatus 22 and the number of pixels of the imaging apparatus 22 of the imaging apparatus 22 may be adjusted together so that the resolution of the imaging apparatus 22 satisfies a desired condition. Note that a size of the pixels of the imaging element of the imaging apparatus 22 may be reduced in addition to or instead of increasing the number of pixels of the imaging element of the imaging apparatus 22 in a case where the field of view of the imaging apparatus 22 is expanded. In other words, the field of view of the imaging apparatus 22 and the size of pixels of the imaging apparatus 22 of the imaging apparatus 22 may be adjusted together so that the resolution of the imaging apparatus 22 satisfies the desired condition.

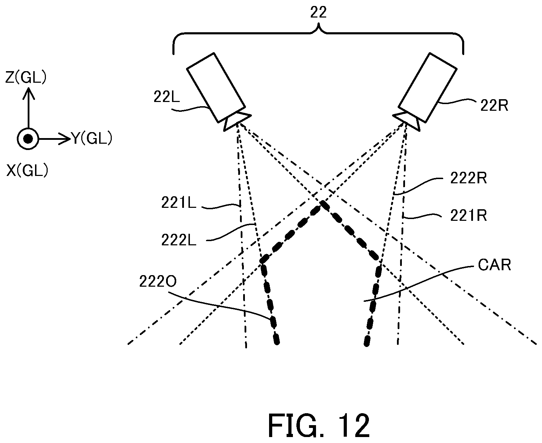

FIG. 12 is a cross-sectional view that illustrates a second example of the imaging allowable range CAR that is determined based on the field of view of the imaging apparatus 22. In the second example, the imaging allowable range CAR may be a range that is determined based on a partial field of view that is a part of the field of view of the imaging apparatus 22. Specifically, the imaging allowable range CAR may be a range that is determined based on a FOV (field of view) overlap area 222O in which a partial field of view 222L, which is a part of the field of view 221L of the left camera 22L, and a partial field of view 222R, which is a part of the field of view 221R of the right camera 22R, overlap. For example, the imaging allowable range CAR may be a range that is the same as the FOV overlap area 222O. For example, the imaging allowable range CAR may be a range that includes a part of the FOV overlap area 222O. For example, the imaging allowable range CAR may be a range that includes whole of the FOV overlap area 222O. For example, the imaging allowable range CAR may be a range that is included in the FOV overlap area 222O.

In a case where the imaging apparatus 22 images the target object OBJ that is included in the imaging allowable range CAR illustrated in FIG. 12, both the left camera 22L and the right camera 22R can image the target object OBJ, as in a case where the imaging apparatus 22 images the target object OBJ that is included in the imaging allowable range CAR illustrated in FIG. 11. As a result, the control apparatus 3 can properly calculate the parallax based on the image data IMG_3D that indicates the image generated by the left camera 22L and the image generated by the right camera 22R. Therefore, the control apparatus 3 can properly generate the three-dimensional position data WSD based on the calculated result of the parallax.

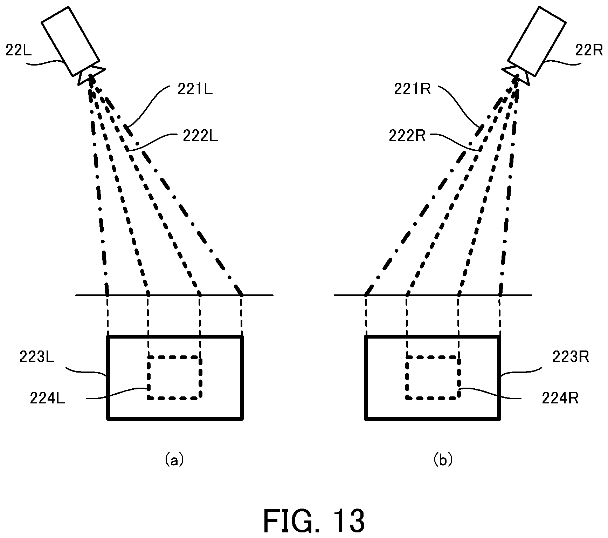

The partial fields of view 222L and 222R illustrated in FIG. 12 may be fields of view that correspond to search areas 224L and 224R, respectively, which are used for a stereo matching performed to calculate the parallax based on the image data IMG_3D. In this case, the imaging allowable range CAR may be regarded as a range that is determined based on the search areas 224L and 224R. Next, the search areas 224L and 224R used for the stereo matching will be described with reference to FIG. 13(a) and FIG. 13(b). Specifically, FIG. 13(a) illustrates a relationship between the field of view 221L and the partial field of view 222L of the left camera 22L and an image 223L generated by the left camera 22L. As illustrated in FIG. 13(a), the left camera 22L generates the image 223L in which an object included in the field of view 221L is captured. Furthermore, as illustrated in FIG. 13(a), the image 223L includes the search area 224L in which an object included in the partial field of view 222L, which is a part of the field of view 221L, is captured. On the other hands, FIG. 13(b) illustrates a relationship between the field of view 221R and the partial field of view 222R of the right camera 22R and an image 223R generated by the right camera 22R. As illustrated in FIG. 13(b), the right camera 22R generates the image 223R in which an object included in the field of view 221R is captured. Furthermore, as illustrated in FIG. 13(b), the image 223R includes the search area 224R in which an object included in the partial field of view 222R, which is a part of the field of view 221R, is captured. In order to calculate the parallax based on the image data IMG_3D indicating the images 223L and 223R, the control apparatus 3 performs the stereo matching for searching the same part BP of the target object OBJ in each of the search areas 224L and 224R, and calculate, as the parallax, a difference between a position of the part BP detected in the search area 224L and a position of the same part BP detected in the search area 224R. The control apparatus 3 may calculate a plurality of parallaxes by calculating the difference of each of a plurality of different parts BP between the search area 224L and the search area 224R. Namely, the control apparatus 3 may calculate the plurality of parallaxes of each of a plurality of parts of the target object OBJ (alternatively, any object). Any part of the target object OBJ may be used as the part BP. A feature part of the target object OBJ may be used as the part BP. The projection pattern projected on the target object OBJ by the projection apparatus 23 may be used as the part BP. Thus, the partial fields of view 222L and 222R may be the ranges that correspond to the search areas 224L and 224R, respectively.

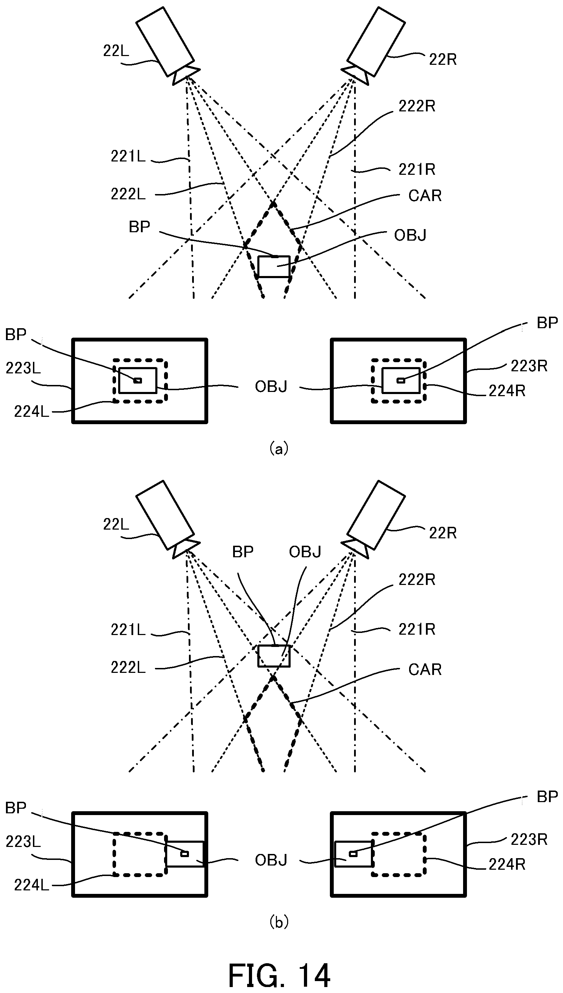

In a case where the imaging apparatus 22 images the target object OBJ included in the imaging allowable range CAR in a situation where the partial fields of view 222L and 222R may be the ranges that correspond to the search areas 224L and 224R, respectively, the target object OBJ (especially, the part BP of the target object OBJ) is included in both partial fields of view 222L and 222R as illustrated in an upper part of FIG. 14(a) Therefore, as illustrated in a lower part of FIG. 14(a), the same part BP of the target object OBJ is captured in both the search area 224L of the image 223L and the search area 224R of the image 223R. Therefore, the control apparatus 3 can properly calculate the parallax based on the image data IMG_3D indicating the images 223L and 223R. Therefore, the control apparatus 3 can properly generate the three-dimensional position data WSD based on the calculated result of the parallax.

On the other hand, in a case where the imaging apparatus 22 images the target object OBJ that is not included in the imaging allowable range CAR in a situation where the partial fields of view 222L and 222R may be the ranges that correspond to the search areas 224L and 224R, respectively, there is a possibility that the target object OBJ (especially, the part BP of the target object OBJ) is not included in at least one of the partial fields of view 222L and 222R as illustrated in an upper part of FIG. 14(b). Note that FIG. 14(b) illustrates an example in which the target object OBJ (especially, the part BP of the target object OBJ) is not included in both the partial fields of view 222L and 222R. As a result, as illustrated in a lower part of FIG. 14(b), there is a possibility that the same part BP of the target object OBJ is not captured in at least one of the search area 224L of the image 223L and the search area 224R of the image 223R. In this case, there is a possibility that the control apparatus 3 cannot calculate the parallax based on the image data IMG_3D indicating the images 223L and 223R. Therefore, there is a possibility that the control apparatus 3 cannot generate the three-dimensional position data WSD based on the calculated result of the parallax.

Here, in a situation illustrated in FIG. 14(b), there is a possibility that the same part BP of the target object OBJ is captured in both the search area 224L of the image 223L and the search area 224R of the image 223R by expanding at least one of the search areas 224R and 224R. However, expanding at least one of the search areas 224R and 224R leads to an increase of a time required to search the part BP in the search areas 224R and 224R. Namely, it leads to an increase of a time required to generate the three-dimensional position data WSD.

However, in the present example embodiment, since the imaging height CH of the imaging system 2 is adjusted so that the target object OBJ is included in the imaging allowable range CAR that is determined based on the search areas 224L and 224R, the control apparatus 3 may not expand at least one of the search areas 224R and 224R to realize a state in which the same part BP of the target object OBJ is captured in both the search area 224L of the image 223L and the search area 224R of the image 223R. Therefore, the increase of the time required to generate the three-dimensional position data WSD is suppressed. Namely, since the imaging height CH of the imaging system 2 is adjusted so that the target object OBJ is included in the imaging allowable range CAR that is determined based on the search areas 224R and 224R, the time required to generate the three-dimensional position data WSD is reducible. In other words, namely, the time required to generate the three-dimensional position data WSD is shorter, compared to a case where the imaging system 2 images the target object OBJ as illustrated in FIG. 14(b).

The imaging allowable range CAR may be automatically set by the control apparatus 3. For example, the control apparatus 3 may acquire information related to a specification of the imaging system 2 and set the imaging allowable range CAR based on the acquired information. For example, the control apparatus 3 may acquire information related to the depth of field of the imaging system 2 as the information related to the specification of the imaging system 2, and set the imaging allowable range CAR based on the acquired information related to the depth of field. For example, the control apparatus 3 may acquire information related to the best focus position BFP of the objective optical system of the imaging system 2 as the information related to the specification of the imaging system 2, and set the imaging allowable range CAR based on the acquired information related to the best focus position BFP. For example, the control apparatus 3 may acquire information related to the depth of focus of the imaging system 2 as the information related to the specification of the imaging system 2, and set the imaging allowable range CAR based on the acquired information related to the depth of focus. For example, the control apparatus 3 may acquire information related to the field of view of the imaging system 2 (for example, the field of view 221L of the left camera 22L and the field of view 221R of the right camera 22R) as the information related to the specification of the imaging system 2, and set the imaging allowable range CAR based on the acquired information related to the field of view. For example, the control apparatus 3 may acquire information related to the partial field of view of the imaging system 2 (for example, the partial field of view 222L of the left camera 22L and the partial field of view 222R of the right camera 22R) as the information related to the specification of the imaging system 2, and set the imaging allowable range CAR based on the acquired information related to the partial field of view. For example, the control apparatus 3 may acquire information related to the search areas 224L and 224R, which are used for the stereo matching, as the information related to the specification of the imaging system 2, and set the imaging allowable range CAR based on the acquired information related to the search areas 224L and 224R.

The imaging allowable range CAR may be set based on information input by the user. For example, the user may input the information related to the specification of the imaging system 2 to the control apparatus 3, and the imaging allowable range CAR may be set based on the input information. For example, the user may input the information related to the depth of field of the imaging system 2 as the information related to the specification of the imaging system 2, and the imaging allowable range CAR may be set based on the input information related to the depth of field. For example, the user may input the information related to the best focus position BFP of the objective optical system of the imaging system 2 as the information related to the specification of the imaging system 2, and the imaging allowable range CAR may be set based on the input information related to the best focus position BFP. For example, the user may input the information related to the depth of focus of the imaging system 2 as the information related to the specification of the imaging system 2, and the imaging allowable range CAR may be set based on the input information related to the depth of focus. For example, the user may input the information related to the field of view of the imaging system 2 (for example, the field of view 221L of the left camera 22L and the field of view 221R of the right camera 22R) as the information related to the specification of the imaging system 2, and the imaging allowable range CAR may be set based on the input information related to the field of view. For example, the user may input the information related to the partial field of view of the imaging system 2 (for example, the partial field of view 222L of the left camera 22L and the partial field of view 222R of the right camera 22R) as the information related to the specification of the imaging system 2, and the imaging allowable range CAR may be set based on the input information related to the partial field of view. For example, the user may input the information related to the search areas 224L and 224R, which are used for the stereo matching, as the information related to the specification of the imaging system 2, and the imaging allowable range CAR may be set based on the input information related to the search areas 224L and 224R. Alternatively, for example, the user may input information for directly or indirectly specifying the imaging allowable range CAR to the control apparatus 3, and the imaging allowable range CAR may be set based on the input information.

In order to determine the target imaging height CH_target, the control apparatus 3 may use at least one of the image data IMG_2D and IMG_3D generated by the imaging system 2 imaging at least one target object OBJ contained in the container CB. Namely, the control apparatus 3 may adjust the imaging height CH of the imaging system 2 based on at least one of the image data IMG_2D and IMG_3D. Specifically, the control apparatus 3 may determine the target imaging height CH_target based on at least one of the image data IMG_2D and IMG_3D acquired last at the step S1 in FIG. 4. However, as described in detail later in a first modified example, the control apparatus 3 may acquire at least one of the image data IMG_2D and IMG_3D, which is different from at least one of the image data IMG_2D and IMG_3D acquired at the step S1 in FIG. 4, and determine the target imaging height CH_target based on at least one of the acquired image data IMG_2D and IMG_3D.

Note that the control apparatus 3 may determine the target imaging height CH_target at any timing after at least one of the image data IMG_2D and IMG_3D is acquired at the step S1 in FIG. 4 in a case where the control apparatus 3 determines the target imaging height CH_target based on at least one of the image data IMG_2D and IMG_3D acquired last at the step S1 in FIG. 4. For example, the control apparatus 3 may determine the target imaging height CH_target in advance after acquiring at least one of the image data IMG_2D and IMG_3D at the step S1 in FIG. 4 and before starting the processing for adjusting the imaging height CH at the step S7 in FIG. 4. Note that the control apparatus 3 may determine the target imaging height CH_target at any timing after the three-dimensional position data WSD is generated at the step S2 in FIG. 4 in a case where the three-dimensional position data WSD generated at the step S2 in FIG. 4 is used to determine the target imaging height CH_target (specifically, to calculate a height OH of a target object group OBG) as described later. For example, the control apparatus 3 may determine the target imaging height CH_target in advance after generating the three-dimensional position data WSD at the step S2 in FIG. 4 and before starting the processing for adjusting the imaging height CH at the step S7 in FIG. 4. Alternatively, the control apparatus 3 may determine the target imaging height CH_target after starting the processing for adjusting the imaging height CH at the step S7 in FIG. 4.

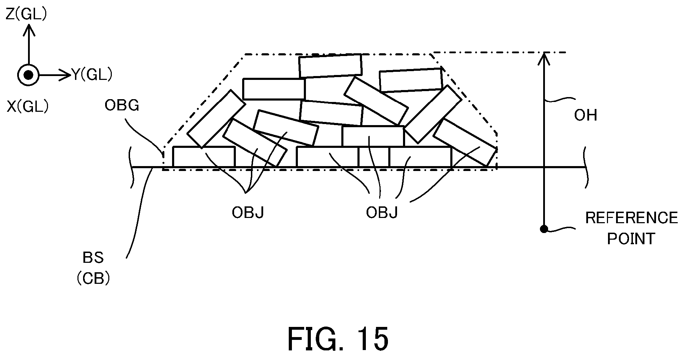

In order to determine the target imaging height CH_target based on at least one of the image data IMG_2D and IMG_3D, the control apparatus 3 first calculates the height OH of the target object OBJ contained in the container CB based on at least one of the image data IMG_2D and IMG_3D. Here, as described above, the imaging height CH of the imaging system 2 is adjusted in a case where the robot 1 sequentially performs the predetermined process on the plurality of target objects OBJ contained in the container CB as illustrated in FIG. 15. Therefore, the control apparatus 3 may calculate the height OH of the plurality of target objects OBJ contained in the container CB based on at least one of the image data IMG_2D and IMG_3D.

The height OH of the plurality of target objects OBJ contained in the container CB may mean the height OH of the target object group OBG that includes all of the plurality of target objects OBJ contained in the container CB. Alternatively, the height OH of the plurality of target objects OBJ contained in the container CB may mean the height OH of the target object group OBG that includes a part of the plurality of target objects OBJ contained in the container CB. Namely, the height OH of the plurality of target objects OBJ contained in the container CB may mean the height OH of the target object group OBG that includes at least a part of the plurality of target objects OBJ contained in the container CB.

Note that the target object group OBG is a term that is used to regard the plurality of target objects OBJ as a single group. The plurality of target objects OBJ included in the target object group OBG may include at least two target objects OBJ concentratively distributed in a single local area. The plurality of target objects OBJ included in the target object group OBG may include at least two target objects OBJ that are distant from each other by a predetermined distance or more. Namely, the plurality of target objects OBJ included in the target object group OBG may include at least two target objects OBJ distributed in at least two areas, which are distant from each other by the predetermined distance or more, respectively.

Considering that at least one of the image data IMG_2D and IMG_3D is used to calculate the height OH of the target object group OBG as described above, the height OH of the target object group OBG corresponds to the height OH of the plurality of target objects OBJ captured in the image indicated by at least one of the image data IMG_2D and IMG_3D. Namely, the height OH of the target object group OBG corresponds to the height OH of the target object group OBG that includes at least a part, which is included in the imaging field of view of the imaging system 2, of the plurality of target objects OBJ contained in the container CB.

The height OH of the target object group OBG may mean the height OH of the target object group OBG from a reference point, as with the imaging height CH of the imaging system 2 described above. Note that the height OH of the target object group OBG may be a coordinate value of the target object group OBG on the Z-axis of the global coordinate system. The height OH of the target object group OBG may be a coordinate value of the target object group OBG on the Z-axis of a coordinate system (for example, a robot coordinate system) different from the global coordinate system.

Note that the reference point for the height OH of the target object group OBG may be the same as the reference point for the imaging height CH of the imaging system 2. However, the reference point for the height OH of the target object group OBG may be different from the reference point for the imaging height CH of the imaging system 2. For example, the height of the target object group OBG may mean a height from a first reference point (for example, a point on a bottom surface of the bottom wall BS of the container CB), and the height of the target object group OBG may mean a height from a second reference point (for example, a point on the target object OBJ) that is different from the first reference point.

A height of the highest part of the target object group OBG may be used as the height OH of the target object group OBG. For example, a height of one target object OBJ, which is positioned at the highest position, of the plurality of target objects OBJ included in the target object group OBG may be used as the height OH of the target object group OBG. For example, a height of the highest part of one target object OBJ, which is positioned at the highest position, of the plurality of target objects OBJ included in the target object group OBG may be used as the height OH of the target object group OBG. For example, a height of any part of one target object OBJ, which is positioned at the highest position, of the plurality of target objects OBJ included in the target object group OBG may be used as the height OH of the target object group OBG.

A height of the highest part of a part of the target object group OBG may be used as the height OH of the target object group OBG. For example, a height of at least one target object OBJ, which is selected based on a desired selection condition, of the plurality of target object OBJ included in the target object group OBG may be used as the height OH of the target object group OBG. For example, a height of the highest part of at least one target object OBJ, which is selected based on the desired selection condition, of the plurality of target objects OBJ included in the target object group OBG may be used as the height OH of the target object group OBG. For example, a height of any part of at least one target object OBJ, which is selected based on the desired selection condition, of the plurality of target objects OBJ included in the target object group OBG may be used as the height OH of the target object group OBG.

An average height of the target object group OBG may be used as the height OH of the target object group OBG. The average height of the target object group OBG may mean an average value of the heights of a plurality of parts of the target object group OBG. The average height of the target object group OBG may mean an average value of the heights of the plurality of target object OBJ included in the target object group OBG. In a case where the plurality of target objects OBJ are stacked (namely, randomly stacked), the average height of the target object group OBG may mean an average height of some target object OBJ on which other target object OBJ is not stacked (namely, some target object OBJ positioned at the uppermost position) of the plurality of target objects OBJ included in the target object group OBG. In a case where the plurality of target objects OBJ are stacked (namely, randomly stacked), the average height of the target object group OBG may mean an average height of some target object OBJ whose upper part is exposed at least partially (namely, some target object OBJ positioned at the uppermost position) of the plurality of target objects OBJ included in the target object group OBG.

An average height of a part of the target object group OBG may be used as the height OH of the target object group OBG. The average height of a part of the target object group OBG may mean an average height of at least one target object OBJ, which is selected based on a desired selection condition, of the plurality of target objects OBJ included in the target object group OBG.

The control apparatus 3 calculates the height OH of the target object group OBG by using at least one of the image data IMG_2D and IMG_3D as described above. For example, the control apparatus 3 may calculate the height OH of the target object group OBG by analyzing the image indicated by at least one of the image data IMG_2D and IMG_3D. Alternatively, the control apparatus 3 may calculate at least one of the position and the pose of the target object OBJ included in the target object group OBG by performing the 2D matching processing using the image data IMG_2D, and calculate the height OH of the target object group OBG based on the calculated result of at least one of the position and the pose of the target object OBJ. Alternatively, the control apparatus 3 may position a three-dimensional model of the target object OBJ in a virtual simulation space, which simulates a three-dimensional space in which the target object group OBG is positioned, based on the calculated result of at least one of the position and the pose of the target object OBJ by the 2D matching processing, and calculate the height of this three-dimensional model as the height OH of the target object group OBG. Alternatively, the control apparatus 3 may calculate the height OH of the target object group OBG by using the three-dimensional position data WSD generated from the image data IMG_3D, in addition to or instead of analyzing the image indicated by at least one of the image data IMG_2D and IMG_3D. As one example, the control apparatus 3 may calculate at least one of the position and the pose of the target object OBJ included in the target object group OBG by performing the 3D matching processing using the three-dimensional position data WSD, and calculate the height OH of the target object group OBG based on the calculated result of at least one of the position and the pose of the target object OBJ. As another example, the control apparatus 3 may position the three-dimensional model of the target object OBJ in the virtual simulation space, which simulates the three-dimensional space in which the target object group OBG is positioned, based on the calculated result of at least one of the position and the pose of the target object OBJ by the 3D matching processing, and calculate the height of this three-dimensional model as the height OH of the target object group OBG. Note that the control apparatus 3 may use the three-dimensional position data WSD, which is generated at the step S2 in FIG. 4, to calculate the height OH of the target object group OBG in a case where the three-dimensional position data WSD is used to calculate the height OH of the target object group OBG. The control apparatus 3 may generate new three-dimensional position data WSD separately from the three-dimensional position data WSD generated at the step S2 in FIG. 4, and calculate the height OH of the target object group OBG based on the newly generated three-dimensional position data WSD.

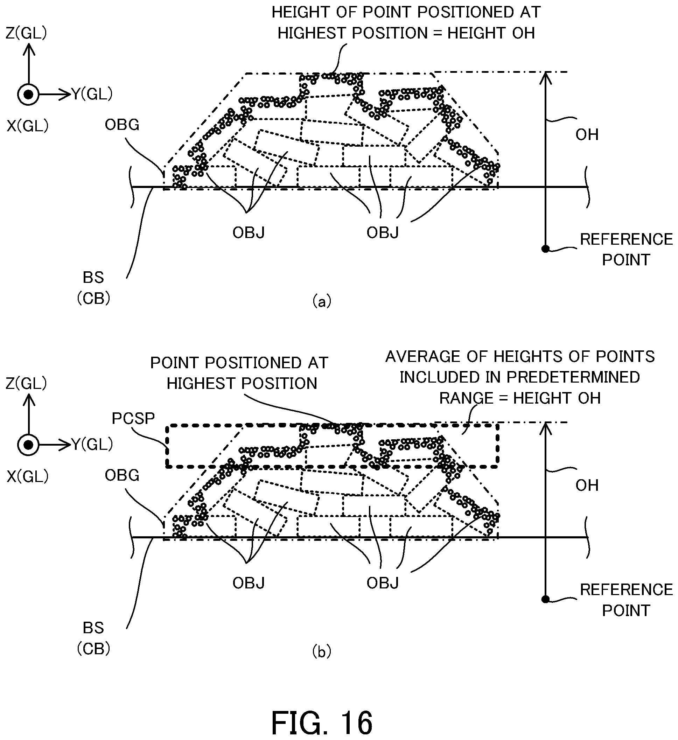

In a case where the height OH of the target object group OBG is calculated by using the three-dimensional position data WSD, the control apparatus 3 may calculate, as the height OH of the target object group OBG, a height of the point cloud indicated by the three-dimensional position data WSD (especially, a height of the point cloud corresponding to the target object group OBG). Specifically, the control apparatus 3 may calculate, as the height OH of the target object group OBG, a height of at least a part of the points included in the point cloud indicated by the three-dimensional position data WSD. For example, as illustrated in FIG. 16(a) that is a cross-sectional view illustrating the point cloud indicated by the three-dimensional position data WSD, the control apparatus 3 may calculate, as the height of the target object group OBG, a height of the point, which is positioned at the highest position, of the plurality of points included in the point cloud indicated by the three-dimensional position data WSD. In this case, the control apparatus 3 can calculate, as the height OH of the target object group OBG, the height of the highest part of the target object group OBG. Alternatively, for example, the control apparatus 3 may calculate, as the height of the target object group OBG, a height of the point, which is positioned at the N-th (wherein N is a constant value representing an integer that is equal to or larger than 2) highest position, of the plurality of points included in the point cloud indicated by the three-dimensional position data WSD. In this case, the control apparatus 3 can calculate, as the height OH of the target object group OBG, the height of one target object OBJ, which is positioned at the N-th highest position, of the plurality of target objects OBJ included in the target object group OBG. Alternatively, for example, the control apparatus 3 may calculate, as the height OH of the target object group OBG, an average value of the height of at least a part of the points included in the point cloud indicated by the three-dimensional position data WSD. In this case, the control apparatus 3 can calculate, as the height OH of the target object group OBG, the average value of the height of at least a part of the target object group OBG. As one example, the control apparatus 3 may calculate, as the height OH of the target object group OBG, an average value of the heights of all points included in the point cloud indicated by the three-dimensional position data WSD. As another example, as illustrated in FIG. 16(b) that is a cross-sectional view illustrating the point cloud indicated by the three-dimensional position data WSD, the control apparatus 3 may calculate, as the height OH of the target object group OBG, an average value of the height of a partial point cloud, which is included in a predetermined point cloud space PCSP, of the plurality of points included in the point cloud indicated by the three-dimensional position data WSD. A space including the point, which is positioned at the highest (alternatively, N-th highest) position, of the plurality of points included in the point cloud indicated by the three-dimensional position data WSD is one example of the predetermined point cloud space PCSP, as illustrated in FIG. 16(b). For example, the predetermined point cloud space PCSP may be a three-dimensional space that includes a space between a virtual plane (for example, a horizontal plane), which includes the point (highest point) positioned at the highest (alternatively, N-th highest) position of the plurality of points included in the point cloud indicated by the three-dimensional position data WSD, and a virtual plane (for example, a horizontal plane), which is positioned at a position that is lower than this point (highest point) by a predetermined height along the Z-axis direction.

In a case where the height OH of the target object group OBG is calculated by using the image data IMG_2D, the control apparatus 3 may calculate, as the height OH of the target object group OBG, the height of the target object OBJ captured in the image indicated by the image data IMG_2D by performing a segmentation using the image data IMG_2D. Alternatively, the control apparatus 3 may calculate the position and the pose of the target object OBJ by performing the 2D matching processing using the image data IMG_2D to calculate the calculated position of the target object OBJ (especially, the position along the Z-axis direction, namely, the height) as the height OH of the target object group OBG. Alternatively, the control apparatus 3 may calculate the height (namely, the position along the Z-axis direction) of the target object group OBG by using the position and the pose of the target object OBJ calculated by performing the 2D matching processing and the template model TM3 of the target object OBJ.

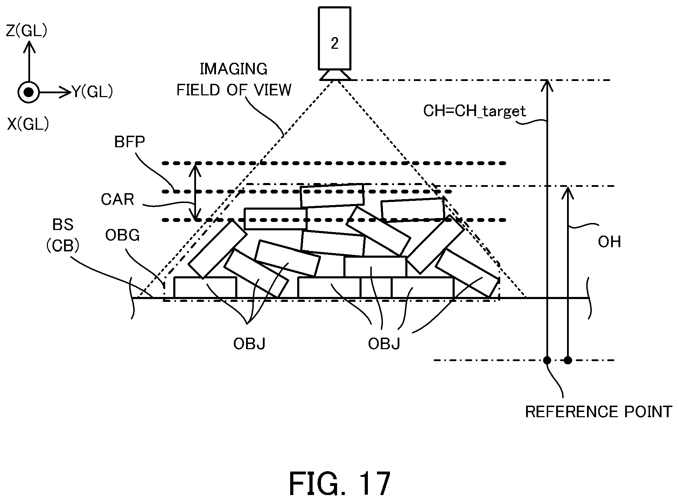

After calculating the height OH of the target object group OBG, the control apparatus 3 may determine the target imaging height CH_target based on the calculated height OH of the target object group OBG. Specifically, the control apparatus 3 may determine the target imaging height CH_target based on the calculated height OH of the target object group OBG and the imaging allowable range CAR of the imaging system 2. For example, the control apparatus 3 may determine the target imaging height CH_target so that the calculated height OH is included in the imaging allowable range CAR of the imaging system 2 positioned at the target imaging height CH_target, as illustrated in FIG. 17 that is a cross-sectional view illustrating a relationship between the height OH of the target object group OBG and the imaging allowable range CAR of the imaging system 2. Namely, as illustrated in FIG. 17, the control apparatus 3 may determine the target imaging height CH_target so that a part of the target object group OBG positioned at the calculated height OH is included in the imaging allowable range CAR of the imaging system 2 positioned at the target imaging height CH_target. As illustrated in FIG. 17, the control apparatus 3 may determine the target imaging height CH_target so that at least a part of the target object OBJ, which is included in the target object group OBG and positioned at the calculated height OH, is included in the imaging allowable range CAR of the imaging system 2 positioned at the target imaging height CH_target. As a result, as illustrated in FIG. 17, the target imaging height CH_target is determined to satisfy the condition that at least one target object OBJ is included in the imaging allowable range CAR of the imaging system 2 positioned at the target imaging height CH_target. Note that the control apparatus 3 may determine the target imaging height CH_target so that at least a part of the target object OBJ positioned at the calculated height OH is positioned at the best focus position BFP of the imaging system 2 positioned at the target imaging height CH_target.

After the target imaging height CH_target is determined, the control apparatus 3 (especially, the signal generation unit 313) generates the robot control signal for controlling the robot 1 so that the imaging system 2 is positioned at the determined target imaging height CH_target. Namely, the control apparatus 3 (especially, the signal generation unit 313) generates the robot control signal for controlling the robot 1 so that the imaging height CH of the imaging system 2 matches the determined target imaging height CH_target. In other words, the control apparatus 3 (especially, the signal generation unit 313) generates the robot control signal for controlling the robot 1 so that the imaging system 2 moves to the determined target imaging height CH_target. As a result, the robot 1 moves the imaging system 2 based on the robot control signal, and thereby the adjustment of the imaging height CH of the imaging system 2 is completed. Namely, the imaging system 2 moves based on the robot control signal, thereby the adjustment of the imaging height CH of the imaging system 2 is completed.

The control apparatus 3 performs the above-described processing for adjusting the imaging height CH of the imaging system 2 each time the robot 1 completes the predetermined process on the process performed object. Here, in a case where the predetermined process performed by the robot 1 includes both the process for holding one of the plurality of target objects OBJ contained in the container CB and the releasing process for releasing the held target object OBJ to a release position outside the container CB after holding the target object OBJ, the number of target objects OBJ contained in the container CB decreases each time the robot 1 completes the predetermined process on the process performed object. Therefore, it is likely that the height OH of the target object group OBG, which is calculated at the step S7 in FIG. 4, decreases over time. As a result, it is likely that the target imaging height CH_target, which is calculated based on the height OH of the target object group OBG at the step S7 in FIG. 4, also decreases over time.

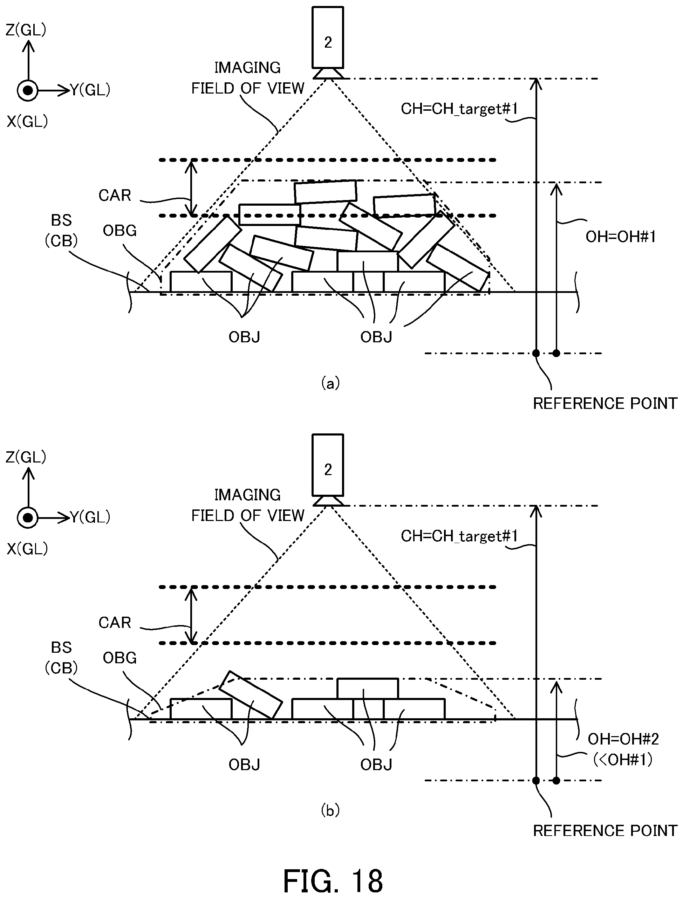

For example, FIG. 18(a) illustrates an example in which the height OH of the target object group OBG contained in the container CB at a first time is a first height OH#1. In this case, the control apparatus 3 may adjust the imaging height CH of the imaging system 2 so that the imaging height CH of the imaging system 2 is a first target imaging height CH_target#1 determined based on the first height OH#1 at the step S7 in FIG. 4. The first target imaging height CH_target#1 satisfies the condition that the first height OH#1 is included in the imaging allowable range CAR of the imaging system 2 positioned at the first target imaging height CH_target#1 as illustrated in FIG. 18(a).

Then, the robot 1 holds at least one target object OBJ contained in the container CB and the releases the held target object OBJ at the release position outside the container CB between the first time and a second time that is later than the first time. Namely, the robot 1 transports at least one target object OBJ, which has been contained in the container CB, toward an outside of the container CB. As a result, as illustrated in FIG. 18(b) that illustrates the target object group OBG contained in the container CB at the second time, the number of target objects OBJ included in the target object group OBG contained in the container CB at the second time is smaller than the number of target objects OBJ contained in the target object group OBG contained in the container CB at the first time. Therefore, it is likely that the height OH of the target object group OBG contained in the container CB at the second time is a second height OH#2 that is lower than the first height OH#2, which is the height of the target object OBJ included in the target object group OBG contained in the container CB at the first time.

Here, in a case where the imaging height CH of the imaging system 2 is not adjusted at the second time as illustrated in FIG. 18(b), the imaging height CH of the imaging system 2 is still the first target imaging height CH_target#1. As a result, as illustrated in FIG. 18(b), there is a possibility that the target object group OBG contained in the container CB is not included in the imaging allowable range CAR of the imaging system 2 positioned at the first target imaging height CH_target#1 at the second time. This is because, the target object OBJ, which has been included in the imaging allowable range CAR of the imaging system 2 positioned at the first target imaging height CH_target#1, is transported toward the outside of the container CB by the robot 1 between the first time and the second time. As a result, there is a possibility that the accuracy of the position pose data POI, which is generated based on at least one of the image data IMG_2D and IMG_3D generated by the imaging system 2 imaging the target object group OBG in a situation where the target object group OBG contained in the container CB is not included in the imaging allowable range CAR of the imaging system 2, deteriorates. Namely, there is a possibility that the calculation accuracy of at least one of the position and the pose of the target object OBJ included in the target object group OBG deteriorates. A technical reason for this will be described below.

First, a technical reason for the deterioration of the accuracy of the position pose data POI generated based on the image data IMG_3D will be described. As described above, the control apparatus 3 first acquires the image data IMG_3D, which indicates the image 223L imaged by the left camera 22L and the image 223R imaged by the right camera 22R in order to generate the position pose data POI based on image data IMG_3D, as illustrated in FIG. 13(a) and FIG. 13(b) described above. Then, the control apparatus 3 searches the same part BP of the target object OBJ in each of the search area 224L of the image 223L and the search area 224R of the image 223R, and calculates, as the parallax, the difference of the position of the part BP detected in the search area 224L and the position of the same part BP detected in the search area 224R. Here, in a case where the target object OBJ imaged by the imaging system 2 is not included in the imaging allowable range CAR, there is a possibility that the target object OBJ is not clearly captured in each of the images 223L and 223R, compared to a case where the target object OBJ imaged by the imaging system 2 is included in the imaging allowable range CAR. For example, there is a possibility that the target object OBJ blurs in each of the images 223L and 223R. Therefore, in a case where the target object OBJ imaged by the imaging system 2 is not included in the imaging allowable range CAR, an accuracy of the stereo matching is lower, compared to a case where the target object OBJ imaged by the imaging system 2 is included in the imaging allowable range CAR. An calculation accuracy of the parallax based on the part BP detected by the stereo matching is lower as the accuracy of the stereo matching is lower. Therefore, there is a possibility that the three-dimensional position data WSD generated based on the parallax, whose accuracy is low, does not accurately indicate the three-dimensional position of the target object OBJ. Therefore, there is a possibility that the position pose data POI generated based on the three-dimensional position data WSD, whose accuracy is low, does not accurately indicate at least one of the position and the pose of the target object OBJ.

Next, a technical reason for the deterioration of the accuracy of the position pose data POI generated based on the image data IMG_2D will be described. Even in this case, in a case where the target object OBJ imaged by the imaging system 2 is not included in the imaging allowable range CAR, there is a possibility that the target object OBJ is not clearly captured in the image indicated by the image data IMG_2D, compared to a case where the target object OBJ imaged by the imaging system 2 is included in the imaging allowable range CAR. For example, there is a possibility that the target object OBJ blurs in the image indicated by the image data IMG_2D. Therefore, in a case where the target object OBJ imaged by the imaging system 2 is not included in the imaging allowable range CAR, an accuracy of the 2D matching processing for searching the image part, which is the same as the template image, in the image indicated by the image data IMG_2D, is lower, compared to a case where the target object OBJ imaged by the imaging system 2 is included in the imaging allowable range CAR. Therefore, the position pose data POI generated as a result of the 2D matching processing, whose accuracy is low, does not accurately indicate at least one of the position and the pose of the target object OBJ.

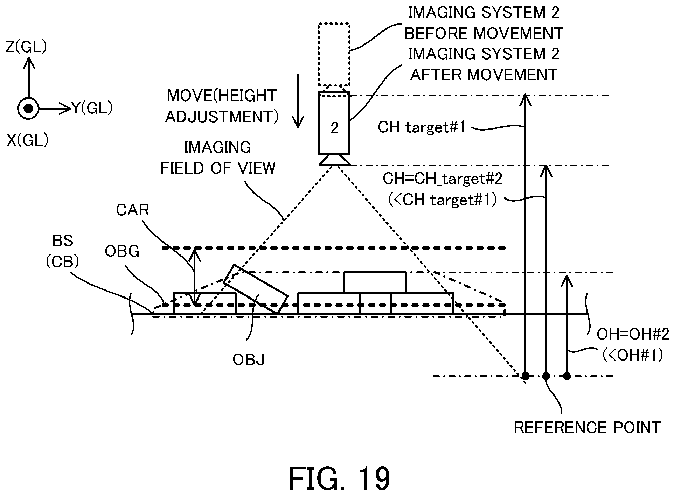

However, in the present example embodiment, the imaging height CH of the imaging system 2 is adjusted in accordance with a change of the height OH of the target object group OBG as illustrated in FIG. 19. Specifically, the control apparatus 3 adjusts the imaging height CH of the imaging system 2 at the step S7 in FIG. 4 so that the imaging height CH of the imaging system 2 changes from the first target imaging height CH_target#1, which is determined based on the first height OH#1, to a second target imaging height CH_target#2, which is determined based on the second height OH#2. The second target imaging height CH_target#2 satisfies the condition that the second height OH#2 is included in the imaging allowable range CAR of the imaging system 2 positioned at the second target imaging height CH_target#2 as illustrated in FIG. 19. As a result, as illustrated in FIG. 19, at least a part of the target object group OBG contained in the container CB is included in the imaging allowable range CAR of the imaging system 2 positioned at the second target imaging height CH_target#2 at the second time. Namely, the target object OBJ, which has not been included in the imaging allowable range CAR of the imaging system 2 positioned at the first target imaging height CH_target#1, is included in the imaging allowable range CAR of the imaging system 2 positioned at the second target imaging height CH_target#2. As a result, the control apparatus 3 can generate the position pose data POI that accurately indicates at least one of the position and the pose of the target object OBJ included in the target object group OBG based on at least one of the image data IMG_2D and IMG_3D that is generated by the imaging system 2 imaging the target object group OBG in a situation where the target object group OBG contained in the container CB is included in the imaging allowable range CAR of the imaging system 2.

For example, in a case where the position pose data POI is generated based on the image data IMG_3D, the target object OBJ imaged by the imaging system 2 is captured in each of the images 223L and 223R more clearly because the target object OBJ imaged by the imaging system 2 is included in the imaging allowable range CAR, compared to a case where the target object OBJ imaged by the imaging system 2 is not included in the imaging allowable range CAR. Therefore, in a case where the target object OBJ imaged by the imaging system 2 is included in the imaging allowable range CAR, the accuracy of the stereo matching is higher, compared to a case where the target object OBJ imaged by the imaging system 2 is not included in the imaging allowable range CAR. The calculation accuracy of the parallax based on the part BP detected by the stereo matching is higher as the accuracy of the stereo matching is higher. Therefore, the control apparatus 3 can generate the three-dimensional position data WSD, which indicates the three-dimensional position of the target object OBJ with higher accuracy, based on the parallax whose accuracy is high. Therefore, the control apparatus 3 can generate the position pose data POI, which indicates at least one of the position and the pose of the target object OBJ with higher accuracy, based on the three-dimensional position data WSD whose accuracy is high.

For example, in a case where the position pose data POI is generated based on the image data IMG_2D, the target object OBJ imaged by the imaging system 2 is captured in the image indicated by the image data IMG_2D more clearly because the target object OBJ imaged by the imaging system 2 is included in the imaging allowable range CAR, compared to a case where the target object OBJ imaged by the imaging system 2 is not included in the imaging allowable range CAR. Therefore, in a case where the target object OBJ imaged by the imaging system 2 is included in the imaging allowable range CAR, the accuracy of the 2D matching processing is higher, compared to a case where the target object OBJ imaged by the imaging system 2 is not included in the imaging allowable range CAR. As a result, the control apparatus 3 can generate the position pose data POI that indicates at least one of the position and the pose of the target object OBJ with higher accuracy and that is generated as a result of the 2D matching processing whose accuracy is high.

Thus, in the present example embodiment, the control apparatus 3 can generate the position pose data POI that indicates at least one of the position and the pose of the target object OBJ with higher accuracy even in a case where the height OH of the target object group OBG changes, because the imaging height CH of the imaging system 2 is adjusted in accordance with the change of the height OH of the target object group OBG. For example, even in a case where the height OH of the target object group OBG changes due to the robot 1 sequentially transporting the plurality of target objects OBJ contained in the container CB to the outside of the container CB, the control apparatus 3 can generate position pose data POI that indicates at least one of the position and the pose of the target object OBJ with higher accuracy.

In a case where the position pose data POI that indicates at least one of the position and the pose of the target object OBJ with higher accuracy is generated in this manner, the control apparatus 3 can control the robot 1 so that the end effector 4 properly performs the predetermined process on at least one target object OBJ included in the target object group OBG. For example, in a case where the height OH of the target object group OBG changes due to the robot 1 sequentially transporting the plurality of target objects OBJ contained in the container CB to the outside of the container CB, the control apparatus 3 can control the robot 1 so that the end effector 4 properly performs the predetermined process on at least one target object OBJ included in the target object group OBG. As one example, the control apparatus 3 can control the robot 1 so that the actual positional relationship between the target object OBJ and the end effector 4 is properly closer to an ideal positional relationship for the end effector 4 performing the predetermined process on the target object OBJ, because at least one of the position and the pose of the target object OBJ is calculated with higher accuracy. As one example, the control apparatus 3 can control the robot 1 to decrease a difference between the actual position of the end effector 4 relative to the target object OBJ and the ideal position of the end effector 4 relative to the target object OBJ in a case where the predetermined process is performed on the target object OBJ, because at least one of the position and the pose of the target object OBJ is calculated with higher accuracy.

Note that the control apparatus 3 adjusts the imaging height CH of the imaging system 2 each time the robot 1 completes the predetermined process on a single target object OBJ that is selected as the process performed object in the robot control processing illustrated in FIG. 4. However, there is a possibility that the height OH of the target object group OBG contained in the container CB does not change significantly in a case a single target object OBJ is transported from the container CB (namely, the robot 1 holds the single target object OBJ and releases the held target object OBJ at the release position outside the container CB). In this case, a necessity to adjust the imaging height CH of the imaging system 2 in accordance with the change of the height OH of the target object group OBG is not so high. Therefore, the control apparatus 3 may not necessarily adjust the imaging height CH of the imaging system 2 each time the robot 1 completes the predetermined process on the single process performed object. Specifically, the control apparatus 3 may adjust the imaging height CH of the imaging system 2 each time the robot 1 completes the predetermined process on two or more process performed objects. Even in this case where this is done, the above-described technical effect is achievable.

Note that the user may use the input apparatus 34 to input an interval at which the imaging height CH of the imaging system 2 is adjusted (the step S7). The input interval may be the number of target objects on which the process is completed after the adjustment of the imaging height CH of the imaging system 2 is completed, or an elapsed time after the adjustment of the imaging height CH of the imaging system 2 is completed, for example. The user may use the input apparatus 34 to input a timing for adjusting the imaging height CH of the imaging system 2 (the step S7).

Moreover, in the robot control processing illustrated in FIG. 4, the imaging height CH of the imaging system 2 is not adjusted before the imaging system 2 images the target object group OBG, which includes at least a part of the plurality of target objects OBJ contained in the container CB, for the first time after the robot control processing is started. Especially, the imaging height CH of the imaging system 2 is not adjusted in accordance with the height OH of the target object group OBG. In this case, the control apparatus 3 may adjust the imaging height CH of the imaging system 2 so that the imaging height CH of the imaging system 2 is an initial imaging height. The initial imaging height may be set automatically by the control apparatus 3 or set by the user. Alternatively, the imaging system 2 may images the target object group OBG to generate at least one of the image data IMG_2D and IMG_3D used for an initial adjustment of the imaging height CH of the imaging system 2, separately from at least one of the image data IMG_2D and IMG_3D acquired by the control apparatus 3 at the step S1 in FIG. 4, and the control apparatus 3 may perform the initial adjustment of the imaging height CH of the imaging system 2 based on at least one of the image data IMG_2D and IMG_3D used for the initial adjustment. Note that a processing for performing the initial adjustment of the imaging height CH of the imaging system 2 itself may be the same as the processing for adjusting the imaging height CH of the imaging system 2 at the step S7 in FIG. 4.

### (2-3) Specific Example of Robot Control Processing

Next, a specific example of the robot control processing will be described. In a below-described description, a specific example of the robot control processing, which is performed in a case where the robot 1 repeats a process for holding one of the plurality of target objects OBJ contained in the container CB and releasing the held target object OBJ at the release position outside the container CB in a situation where the plurality of target objects OBJ are contained in the container CB, will be described.

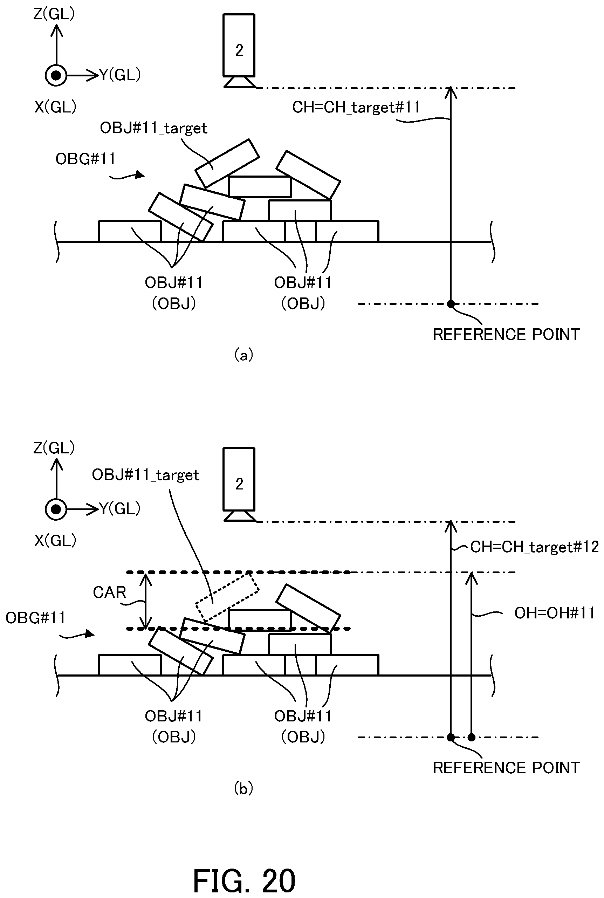

After the robot control processing illustrated in FIG. 4 is started, the imaging system 2 images a first target object group OBG#11 that includes at least a part of the plurality of target objects OBJ contained in the container CB (the step S1 in FIG. 4) as illustrated in FIG. 20(a). In this case, as illustrated in FIG. 20(a), the imaging height CH of the imaging system 2 may be set to a first target imaging height CH_target#11 that is the initial imaging height. Namely, the imaging system 2 positioned at the first target imaging height CH_target#11 may image the first target object group OBG#11. As a result, the control apparatus 3 acquires the image data IMG_3D (it is referred to as image data IMG_3D#11), which indicates an image in which the first target object group OBG#11 is captured, from the imaging system 2 (the step S1 in FIG. 4). Note that the target object OBJ included in the first target object group OBG#11 is referred to as a first target object OBJ#11 for convenience of description in the below-described description. Then, the position pose calculation unit 312 generates the position pose data POI (it is referred to as position pose data POI#11) of one first target object OBJ#11, which is selected as the process performed object from the plurality of first target objects OBJ#11, based on the image data IMG_3D#11 (specifically, based on the three-dimensional position data WSD generated from the image data IMG_3D#11) (the step S2 to the step S3 in FIG. 4). Note that one first target object OBJ#11 that is selected as the process performed object is referred to as a first target object OBJ#11_target in the below-described description.

It is likely that the position pose calculation unit 312 selects the first target object OBJ#11, which is included in the imaging allowable range CAR of the imaging system 2 positioned at the first target imaging height CH_target#11, as the first target object OBJ#11_target that is the process performed object. This is because it is likely that the matching similarity of the target object OBJ that is included in the imaging allowable range CAR is higher than the matching similarity of the target object OBJ that is not included in the imaging allowable range CAR. In this case, the position pose calculation unit 312 can generate the position pose data POI that indicates at least one of the position and the pose of the first target object OBJ#11, which is included in the imaging allowable range CAR of the imaging system 2 positioned at the first target imaging height CH_target#11, with higher accuracy. This is because it is more likely that the accuracy of the position pose data POI of the target object OBJ is higher as the matching similarity of the target object OBJ is higher. However, the position pose calculation unit 312 may select the first target object OBJ#11, which is not included in the imaging allowable range CAR of the imaging system 2 positioned at the first target imaging height CH_target#11, as the first target object OBJ#11_target that is the process performed object.

Then, the signal generation unit 313 generates the robot control signal for controlling the robot 1 so that the end effector 4 approaches the first target object OBJ#11_target, based on the position pose data POI#11 of the first target object OBJ#11_target (the step S4 in FIG. 4). After the end effector 4 approaches the first target object OBJ#11_target based on the robot control signal generated at the step S4, the robot 1 performs the predetermined process on the first target object OBJ#11_target at the step S5. Namely, the robot 1 may perform the process for holding the first target object OBJ#11_target contained in the container CB, transporting the held first target object OBJ#11_target from the container CB, and releasing it at the release position outside container CB, as the predetermined process.

Then, after the robot 1 has performed the predetermined process on the first target object OBJ#11_target (the step S5: Yes in FIG. 4), the control apparatus 3 adjusts the imaging height CH of the imaging system 2 (the step S7 in FIG. 4). Note that the control apparatus 3 may adjust the imaging height CH of the imaging system 2 after the robot 1 has performed the predetermined process on a single first target object OBJ#11 as described above. Alternatively, the control apparatus 3 may adjust the imaging height CH of the imaging system 2 after the robot 1 has performed the predetermined process on each of a plurality of first target objects OBJ#11 as described above. In the below-described description, an example in which the control apparatus 3 adjusts the imaging height CH of the imaging system 2 after the robot 1 has performed the predetermined process on a single first target object OBJ#11 will be described for convenience of description.

In order to adjust the imaging height CH of the imaging system 2, the control apparatus 3 calculates the height OH of the first target object group OBG#11 by using the image data IMG_3D#11 (specifically, the three-dimensional position data WSD generated from the image data IMG_3D#11), which has been already acquired at the step S1 in FIG. 4 to generates the robot control signal for controlling the robot 1 so that the end effector 4 approaches the first target object OBJ#11_target. As a result, as illustrated in FIG. 20(b), the control apparatus 3 calculates a first height OH#11 as the height OH of the first target object group OBG#11.

Note that, the first target object OBJ#11_target, which has not yet been transported from the container CB by the robot 1, is positioned at the highest position in the first target object group OBG#11 at a timing at which the first target object group OBG#11 is imaged in the example illustrated in FIG. 20(a). Therefore, the control apparatus 3 calculates the height of the first target object OBJ#11_target as the height OH of the first target object group OBG#11. However, as illustrated in FIG. 20(b), the first target object OBJ#11_target has already been transported from the container CB at a timing at which the imaging height CH of the imaging system 2 is actually adjusted based on the height OH of the first target object group OBG#11. Therefore, in a case where the robot control processing illustrated in FIG. 4 is performed, there is a possibility that the height OH of the first target object group OBG#11 calculated at the step S7 in FIG. 4 is different from the height OH of the target object group OBG that is actually contained in the container CB at the timing at which the imaging height CH of the imaging system 2 is actually adjusted based on the height OH of the first target object group OBG#11. However, even in this case, it is unlikely that the difference of the height OH of the first target object group OBG#11 calculated at the step S7 in FIG. 4 is large enough to adversely affect the adjustment of the imaging height CH of the imaging system 2. However, even in a case where the robot control processing illustrated in FIG. 4 is performed, there is a possibility that the height OH of the first target object group OBG#11 calculated at the step S7 in FIG. 4 is the same as the height OH of the target object group OBG that is actually contained in the container CB at the timing at which the imaging height CH of the imaging system 2 is actually adjusted based on the height OH of the first target object group OBG#11.

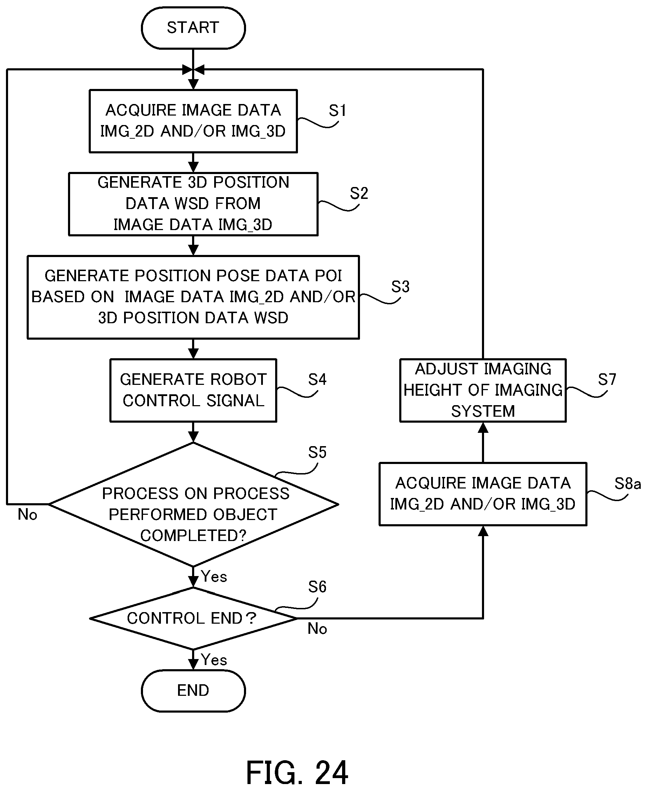

Note that the control apparatus 3 may perform a removal processing for removing information related to the target object OBJ that has already been transported from the container CB in a case where at least one of the image data IMG_2D and IMG_3D, which is used to calculate the height OH of the target object group OBG, includes the information related to the target object OBJ that has already been transported from the container CB at the timing at which the imaging height CH of the imaging system 2 is actually adjusted based on the height OH of the target object group OBG. For example, in a case where the height OH of the target object group OBG is calculated based on the three-dimensional position data WSD (for example, the point cloud data) generated from the image data IMG_3D, the control apparatus 3 may perform the removal processing for removing, from the three-dimensional position data WSD (for example, the point cloud data), the three-dimensional position data corresponding to the target object OBJ that has already been transported from the container CB (for example, the point cloud data corresponding to the target object OBJ that has already been transported from container CB) at the timing at which the imaging height CH of the imaging system 2 is actually adjusted based on the height OH of target object group OBG. In this case, the three-dimensional position data WSD on which the removal processing has been performed is substantially the same as the three-dimensional position data WSD that is generated from the image data IMG_3D acquired at a step S8a in FIG. 24 to adjust the imaging height CH of the imaging system 2 in the first modified example described later. Then, the control apparatus 3 may calculate the height OH of the target object group OBG based on the three-dimensional position data WSD (for example, the point cloud data) on which the removal processing has been performed. In this case, an error of the calculated result of the height OH of the target object group OBG is smaller, compared to a case where the removal processing is not performed. Note that the control apparatus 3 may perform the removal processing for removing the information related to the target objects OBJ that has already been transported from the container CB not only in a case illustrated in FIG. 20(a) to FIG. 20(b) but also in any case where the height OH of the target object group OBG is calculated.

Then, the control apparatus 3 determines the target imaging height CH_target of the imaging system 2 based on the calculated first height OH#11 and the imaging allowable range CAR of the imaging system 2. Specifically, as illustrated in FIG. 20(b), the control apparatus 3 may determine, as a second target imaging height CH_target#12, the target imaging height CH_target satisfying a condition that "the calculated first height OH#11 is included in the imaging allowable range CAR of the imaging system 2 positioned at the target imaging height CH_target" is satisfied. Then, the control apparatus 3 generates the robot control signal for controlling the robot 1 so that the imaging height CH of the imaging system 2 becomes the second target imaging height CH_target#12 determined based on the first height OH#11. As a result, the imaging system 2 is positioned at the second target imaging height CH_target#12.

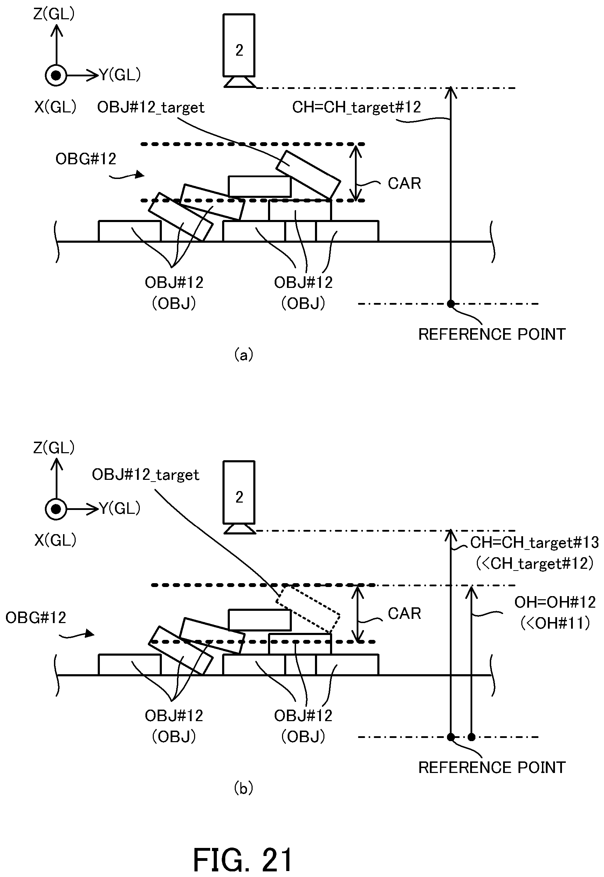

Then, as illustrated in FIG. 21(a), the imaging system 2 positioned at the second target imaging height CH_target#12 images a second target object group OBG#12 that includes at least a part of the plurality of target objects OBJ contained in the container CB (the step S1 in FIG. 4). As a result, the control apparatus 3 acquires the image data IMG_3D (it is referred to as image data IMG_3D#12), which indicates an image in which the second target object group OBG#12 is captured, from the imaging system 2 (the step S1 in FIG. 4). Note that the target object OBJ included in the second target object group OBG#12 is referred to as a second target object OBJ#12 for convenience of description in the below-described description.

The second target object group OBG#12, which is imaged by the imaging system 2 positioned at the second target imaging height CH_target#12, may be different from the first target object group OBG#11, which is imaged by the imaging system 2 to determine the second target imaging height CH_target#12. Specifically, at least one of the plurality of first target objects OBJ#11 included in the first target object group OBG#11 may not be included in the second target object group OBG#12. As one example, at least one of the plurality of first target objects OBJ#11 included in the first target object group OBG#11 should already have been transported from the container CB by the robot 1 at a timing at which the imaging system 2 positioned at the second target imaging height CH_target#12 images the second target object group OBG#12. In this case, at least one first target object OBJ#11, which has been transported from the container CB, of the plurality of first target objects OBJ#11 included in the first target object group OBG#11, may not be included in the second target object group OBG#12. As another example, there is a possibility that a size of the field of view of the imaging system 2 relative to target object group OBG contained in the container CB changes due to the adjustment of the imaging height CH of the imaging system 2. In this case, the second target object group OBG#12 may be different from the first target object group OBG#11.

However, at least one first target object OBJ#11, which has not yet been transported from the container CB, of the plurality of first target objects OBJ#11 included in the first target object group OBG#11 may be included in the second target object group OBG#12. Namely, the first target object group OBG#11 and the second target object group OBG#12 may partially overlap. In this case, since the second target imaging height CH_target#12 of the imaging system 2 imaging the second target object group OBG#12 is determined based on the first height OH#11 of the first target object group OBG#11, at least a part of the second target object group OBG#12 that partially overlaps with the first target object group OBG#11 is included in the imaging allowable range CAR of the imaging system 2 positioned at the second target imaging height CH_target#12 as illustrated in FIG. 21(a). Namely, at least one of the plurality of second target objects OBJ#12 included in the second target object group OBG#12 is included in the imaging allowable range CAR of the imaging system 2 positioned at the second target imaging height CH_target#12. Therefore, the imaging system 2 can properly image at least one of the plurality of second target objects OBJ#12 included in second target object group OBG#12. However, all of the plurality of second target objects OBJ#12 included in the second target object group OBG#12 may be different from the plurality of first target objects OBJ#11 included in the first target object group OBG#11.

Note that the number of target objects OBJ contained in the container CB at the timing at which the imaging system 2 images the second target object group OBG#12 from the second target imaging height CH_target#12 may be smaller than the number of target objects OBJ contained in the container CB at the timing at which the imaging system 2 images the first target object group OBG#11 from the first target imaging height CH_target#11, because at least one first target object OBJ#11 has been transported from the container CB at the timing at which the imaging system 2 images the second target object group OBG#12 from the second target imaging height CH_target#12. The number of second target objects OBJ#12 included in the second target object group OBG#12 that is imaged by the imaging system 2 from the second target imaging height CH_target#12 may be smaller than the number of first target objects OBJ#11 included in the first target object group OBG#11 that is imaged by the imaging system 2 from the first target imaging height CH_target#11. A weight of the container CB in which the plurality of target objects OBJ are contained at the timing at which the imaging system 2 images the second target object group OBG#12 from the second target imaging height CH_target#12 may be lighter than a weight of the container CB in which the plurality of target objects OBJ are contained at the timing at which the imaging system 2 images the first target object group OBG#11 from the first target imaging height CH_target#11. Note that the "weight of the container CB in which the plurality of target objects OBJ are contained" here may be a weight that includes both a weight of the container CB itself and the weight of the plurality of target objects OBJ contained in the container CB.

Then, the position pose calculation unit 312 generates the position pose data POI (it is referred to as position pose data POI#12) of one second target object OBJ#12, which is selected as the process performed object from the plurality of second target objects OBJ#12, based on the image data IMG_3D#12 (specifically, based on the three-dimensional position data WSD generated from the image data IMG_3D#12) (the step S2 to the step S3 in FIG. 4). Note that one second target object OBJ#12 that is selected as the process performed object is referred to as a second target object OBJ#12_target in the below-described description.

It is likely that the position pose calculation unit 312 selects the second target object OBJ#12, which is included in the imaging allowable range CAR of the imaging system 2 positioned at the second target imaging height CH_target#12, as the second target object OBJ#12_target that is the process performed object. This is because it is likely that the matching similarity of the target object OBJ that is included in the imaging allowable range CAR is higher than the matching similarity of the target object OBJ that is not included in the imaging allowable range CAR. In this case, the position pose calculation unit 312 can generate the position pose data POI that indicates at least one of the position and the pose of the second target object OBJ#12, which is included in the imaging allowable range CAR of the imaging system 2 positioned at the second target imaging height CH_target#12, with higher accuracy. This is because it is more likely that the accuracy of the position pose data POI of the target object OBJ is higher as the matching similarity of the target object OBJ is higher. Conversely, the second target imaging height CH_target#12 may be the imaging height CH satisfying a condition that "the second target object OBJ#12 that is selected as the process performed object is included in the imaging allowable range CAR of the imaging system 2 positioned at the second target imaging height CH_target#12". Namely, the control apparatus 3 may determine the second target imaging height CH_target#12 to satisfy the condition that "the second target object OBJ#12 that is selected as the process performed object is included in the imaging allowable range CAR of the imaging system 2 positioned at the second target imaging height CH_target#12". However, the position pose calculation unit 312 may select the second target object OBJ#12, which is not included in the imaging allowable range CAR of the imaging system 2 positioned at the second target imaging height CH_target#12, as the second target object OBJ#12_target that is the process performed object.

On the other hand, the second target object OBJ#12_target that is selected as the process performed object may not be included in the imaging allowable range CAR of the imaging system 2 before the imaging height CH is adjusted. Namely, the second target object OBJ#12_target that is selected as the process performed object may not be included in the imaging allowable range CAR of the imaging system 2 positioned at the first target imaging height CH_target#11. This is because the imaging height CH of the imaging system 2 is adjusted in accordance with the height OH of the target object group OBG contained in the container CB, and therefore, one target object OBJ is included in the imaging allowable range CAR of the imaging system 2 at a second time that is after a first time even in a case where the one target object OBJ has not been included in the imaging allowable range CAR of the imaging system 2 at the first time, and as a result, the one target object OBJ is selectable as the process performed object as described with reference to FIG. 18(a) to FIG. 18(b) and FIG. 19. Namely, one target object OBJ is included in the imaging allowable range CAR of the imaging system 2 positioned at the second target imaging height CH_target#12 as time passes even in a case where the one target object OBJ has not been included in the imaging allowable range CAR of the imaging system 2 positioned at the first target imaging height CH_target#11, and as a result, the one target object OBJ is selectable as the process performed object.

Note that the second target object OBJ#12_target that is selected as the process performed object may be the first target object OBJ#11 that has not been included in the imaging allowable range CAR of the imaging system 2 positioned at the first target imaging height CH_target#11. Alternatively, the second target object OBJ#12_target that is selected as the process performed object may be the first target object OBJ#11 that has been included in the imaging allowable range CAR of the imaging system 2 positioned at the first target imaging height CH_target#11 but that has not been selected as the process performed object.

Then, the signal generation unit 313 generates the robot control signal for controlling the robot 1 so that the end effector 4 approaches the second target object OBJ#12_target, based on the position pose data POI#12 of the second target object OBJ#12_target (the step S4 in FIG. 4). After the end effector 4 approaches the second target object OBJ#12_target based on the robot control signal generated at the step S4, the robot 1 performs the predetermined process on the second target object OBJ#12_target at the step S5. Namely, the robot 1 holds the second target object OBJ#12_target contained in the container CB, transports the held second target object OBJ#12_target from the container CB, and releases it at the release position outside container CB.

Then, after the robot 1 has performed the predetermined process on the second target object OBJ#12_target (the step S5: Yes in FIG. 4), the control apparatus 3 adjusts the imaging height CH of the imaging system 2 (the step S7 in FIG. 4). Note that the control apparatus 3 may adjust the imaging height CH of the imaging system 2 after the robot 1 has performed the predetermined process on a single second target object OBJ#12 as described above. Alternatively, the control apparatus 3 may adjust the imaging height CH of the imaging system 2 after the robot 1 has performed the predetermined process on each of a plurality of second target objects OBJ#12 as described above. In the below-described description, an example in which the control apparatus 3 adjusts the imaging height CH of the imaging system 2 after the robot 1 has performed the predetermined process on a single second target object OBJ#12 will be described for convenience of description.

In order to adjust the imaging height CH of the imaging system 2, the control apparatus 3 calculates the height OH of the second target object group OBG#12 by using the image data IMG_3D#12 (specifically, the three-dimensional position data WSD generated from the image data IMG_3D#12), which has been already acquired at the step S1 in FIG. 4 to generates the robot control signal for controlling the robot 1 so that the end effector 4 approaches the second target object OBJ#12_target. As a result, as illustrated in FIG. 21(b), the control apparatus 3 calculates a second height OH#12 as the height OH of the second target object group OBG#12.

Here, as described above, at least one of the plurality of first target objects OBJ#11 included in the first target object group OBG#11 has been transported to the outside of the container CB by the robot 1 at a timing at which the second target object group OBG#12 is imaged. Therefore, at least one of the plurality of first target objects OBJ#11 included in the first target object group OBG#11 is not included in the second target object group OBG#12. Namely, the number of second target objects OBJ#12 included in the second target object group OBG#12 is smaller than the number of first target objects OBJ#11 included in the first target object group OBG#11. As a result, the second height OH#12 of the second target object group OBG#12 is usually lower than the first height OH#11 of the first target object group OBG#11. However, the second height OH#12 of the second target object group OBG#12 may be the same as the first height OH#11 of the first target object group OBG#11 in some cases.

Note that the second target object OBJ#12_target, which has not yet been transported from the container CB by the robot 1, is positioned at the highest position in the second target object group OBG#12 at the timing at which the second target object group OBG#12 is imaged in the example illustrated in FIG. 21(a). Therefore, the control apparatus 3 calculates the height of the second target object OBJ#12_target as the height OH of the second target object group OBG#12. However, as illustrated in FIG. 21(b), the second target object OBJ#12_target has already been transported from the container CB at a timing at which the imaging height CH of the imaging system 2 is actually adjusted based on the height OH of the second target object group OBG#12. Therefore, in a case where the robot control processing illustrated in FIG. 4 is performed, there is a possibility that the height OH of the second target object group OBG#12 calculated at the step S7 in FIG. 4 is different from the height OH of the target object group OBG that is actually contained in the container CB at the timing at which the imaging height CH of the imaging system 2 is actually adjusted based on the height OH of the second target object group OBG#12. However, even in this case, it is unlikely that the difference of the height OH of the second target object group OBG#12 calculated at the step S7 in FIG. 4 is large enough to adversely affect the adjustment of the imaging height CH of the imaging system 2. However, even in a case where the robot control processing illustrated in FIG. 4 is performed, there is a possibility that the height OH of the second target object group OBG#12 calculated at the step S7 in FIG. 4 is the same as the height OH of the target object group OBG that is actually contained in the container CB at the timing at which the imaging height CH of the imaging system 2 is actually adjusted based on the height OH of the second target object group OBG#12.

Then, the control apparatus 3 determines the target imaging height CH_target of the imaging system 2 based on the calculated second height OH#12 and the imaging allowable range CAR of the imaging system 2. Specifically, as illustrated in FIG. 21(b), the control apparatus 3 may determine, as a third target imaging height CH_target#13, the target imaging height CH_target satisfying a condition that "the calculated second height OH#12 is included in the imaging allowable range CAR of the imaging system 2 positioned at the target imaging height CH_target" is satisfied. Then, the control apparatus 3 generates the robot control signal for controlling the robot 1 so that the imaging height CH of the imaging system 2 becomes the third target imaging height CH_target#13 determined based on the second height OH#12. As a result, the imaging system 2 is positioned at the third target imaging height CH_target#13.

Here, the second height OH#12 of the second target object group OBG#12 is usually lower than the first height OH#11 of the first target object group OBG#11 as described above. In this case, the third target imaging height CH_target#13 that is determined based on the second height OH#12 may also be lower than the second target imaging height CH_target#12 that is determined based on the first height OH#11.

However, there is a possibility that the second height OH#12 of the second target object group OBG#12 is usually higher than the first height OH#11 of the first target object group OBG#11 in some cases. For example, in a case where one first target object OBJ#11, on which other first target object OBJ#11 is overlapped, is held by the end effector 4 in a situation where the plurality of first target objects OBJ#11 included in the first target object group OBG#11 are positioned to partially overlap (for example, randomly positioned), there is a possibility that a pile of the first target object group OBG#11 from which the first target object OBJ#11 has been removed (namely, the second target object group OBG#12) collapses. As a result, there is a possibility that the pose of at least one second target object OBJ#12 included in the second target object group OBG#12 changes. As a result, there is a possibility that the height OH of the second target object OBJ#12 (namely, the height of the second target object group OBG#12) increases in a case where the pose of the second target object OBJ#12 changes so that a longitudinal direction thereof changes from a direction along a horizontal direction to a direction along a vertical direction. In this case, as described in the first modified example detailed later with reference to FIG. 24, after the end effector 4 holds the first target object OBJ#11 (the step S5: Yes in FIG. 4), the imaging system 2 may image the second target object group OBG#12 (the step S8a in FIG. 24), and the control apparatus 3 may calculate the second height OH#12 of the second target object group OBG#12 based on the imaged result of the second target object group OBG#12 (the step S7 in FIG. 4). Note that the same may apply not only in a case where the second height OH#12 of the second target object group OBG#12 is calculated, but also in a case where the height OH of any target object group OBG is calculated.

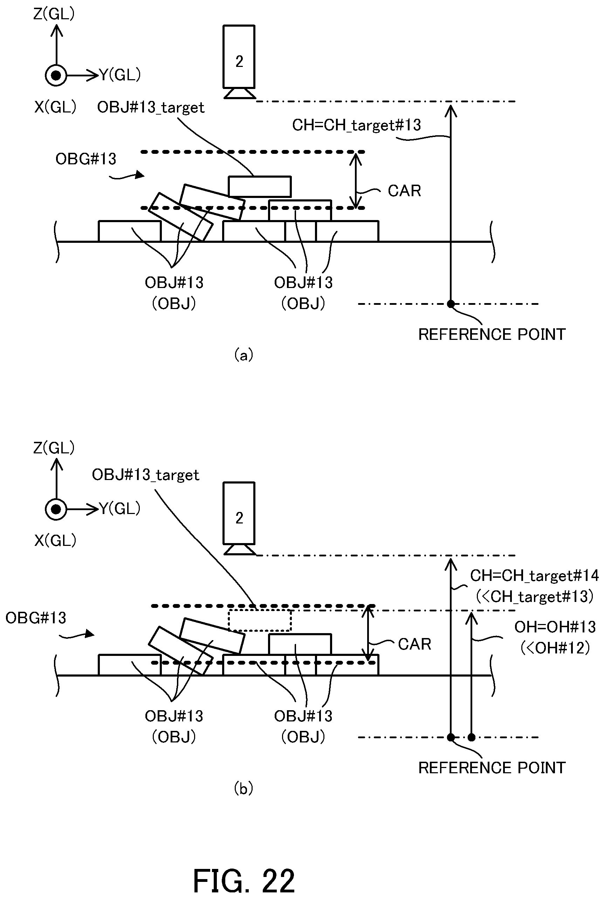

Then, as illustrated in FIG. 22(a), the imaging system 2 positioned at the third target imaging height CH_target#13 images a third target object group OBG#13 that includes at least a part of the plurality of target objects OBJ contained in the container CB (the step S1 in FIG. 4). As a result, the control apparatus 3 acquires the image data IMG_3D (it is referred to as image data IMG_3D#13), which indicates an image in which the third target object group OBG#13 is captured, from the imaging system 2 (the step S1 in FIG. 4). Note that the target object OBJ included in the third target object group OBG#13 is referred to as a third target object OBJ#13 for convenience of description in the below-described description.

The third target object group OBG#13, which is imaged by the imaging system 2 positioned at the third target imaging height CH_target#13, may be different from the second target object group OBG#12, which is imaged by the imaging system 2 to determine the third target imaging height CH_target#13. Specifically, at least one of the plurality of second target objects OBJ#12 included in the second target object group OBG#12 may not be included in the third target object group OBG#13. As one example, at least one of the plurality of second target objects OBJ#12 included in the second target object group OBG#12 should already have been transported from the container CB by the robot 1 at a timing at which the imaging system 2 positioned at the third target imaging height CH_target#13 images the third target object group OBG#13. In this case, at least one second target object OBJ#12, which has been transported from the container CB, of the plurality of second target objects OBJ#12 included in the second target object group OBG#12, may not be included in the third target object group OBG#13. As another example, there is a possibility that a size of the field of view of the imaging system 2 relative to target object group OBG contained in the container CB changes due to the adjustment of the imaging height CH of the imaging system 2. In this case, the third target object group OBG#13 may be different from the second target object group OBG#12.

However, at least one second target object OBJ#12, which has not yet been transported from the container CB, of the plurality of second target objects OBJ#12 included in the second target object group OBG#12 may be included in the third target object group OBG#13. Namely, the second target object group OBG#12 and the third target object group OBG#13 may partially overlap. In this case, since the third target imaging height CH_target#13 of the imaging system 2 imaging the third target object group OBG#13 is determined based on the second height OH#12 of the second target object group OBG#12, at least a part of the third target object group OBG#13 that partially overlaps with the second target object group OBG#12 is included in the imaging allowable range CAR of the imaging system 2 positioned at the third target imaging height CH_target#13 as illustrated in FIG. 22(a). Namely, at least one of the plurality of third target objects OBJ#13 included in the third target object group OBG#13 is included in the imaging allowable range CAR of the imaging system 2 positioned at the third target imaging height CH_target#13. Therefore, the imaging system 2 can properly image at least one of the plurality of third target objects OBJ#13 included in third target object group OBG#13. However, all of the plurality of third target objects OBJ#13 included in the third target object group OBG#13 may be different from the plurality of second target objects OBJ#12 included in the second target object group OBG#12.

Note that the number of target objects OBJ contained in the container CB at the timing at which the imaging system 2 images the third target object group OBG#13 from the third target imaging height CH_target#13 may be smaller than the number of target objects OBJ contained in the container CB at the timing at which the imaging system 2 images the second target object group OBG#12 from the second target imaging height CH_target#12, because at least one second target object OBJ#12 has been transported from the container CB at the timing at which the imaging system 2 images the third target object group OBG#13 from the third target imaging height CH_target#13. The number of third target objects OBJ#13 included in the third target object group OBG#13 that is imaged by the imaging system 2 from the third target imaging height CH_target#13 may be smaller than the number of second target objects OBJ#12 included in the second target object group OBG#12 that is imaged by the imaging system 2 from the second target imaging height CH_target#12. A weight of the container CB in which the plurality of target objects OBJ are contained at the timing at which the imaging system 2 images the third target object group OBG#13 from the third target imaging height CH_target#13 may be lighter than a weight of the container CB in which the plurality of target objects OBJ are contained at the timing at which the imaging system 2 images the second target object group OBG#12 from the second target imaging height CH_target#12. Note that the "weight of the container CB in which the plurality of target objects OBJ are contained" here may be a weight that includes both a weight of the container CB itself and the weight of the plurality of target objects OBJ contained in the container CB.

Then, the position pose calculation unit 312 generates the position pose data POI (it is referred to as position pose data POI#13) of one third target object OBJ#13, which is selected as the process performed object from the plurality of third target objects OBJ#13, based on the image data IMG_3D#13 (specifically, based on the three-dimensional position data WSD generated from the image data IMG_3D#13) (the step S2 to the step S3 in FIG. 4). Note that one third target object OBJ#13 that is selected as the process performed object is referred to as a third target object OBJ#13_target in the below-described description.

It is likely that the position pose calculation unit 312 selects the third target object OBJ#13, which is included in the imaging allowable range CAR of the imaging system 2 positioned at the third target imaging height CH_target#13, as the third target object OBJ#13_target that is the process performed object. This is because it is likely that the matching similarity of the target object OBJ that is included in the imaging allowable range CAR is higher than the matching similarity of the target object OBJ that is not included in the imaging allowable range CAR. In this case, the position pose calculation unit 312 can generate the position pose data POI that indicates at least one of the position and the pose of the third target object OBJ#13, which is included in the imaging allowable range CAR of the imaging system 2 positioned at the third target imaging height CH_target#13, with higher accuracy. This is because it is more likely that the accuracy of the position pose data POI of the target object OBJ is higher as the matching similarity of the target object OBJ is higher. Conversely, the third target imaging height CH_target#13 may be the imaging height CH satisfying a condition that "the third target object OBJ#13 that is selected as the process performed object is included in the imaging allowable range CAR of the imaging system 2 positioned at the third target imaging height CH_target#13". Namely, the control apparatus 3 may determine the third target imaging height CH_target#13 to satisfy the condition that "the third target object OBJ#13 that is selected as the process performed object is included in the imaging allowable range CAR of the imaging system 2 positioned at the third target imaging height CH_target#13". However, the position pose calculation unit 312 may select the third target object OBJ#13, which is not included in the imaging allowable range CAR of the imaging system 2 positioned at the third target imaging height CH_target#13, as the third target object OBJ#13_target that is the process performed object.

On the other hand, the third target object OBJ#13_target that is selected as the process performed object may not be included in the imaging allowable range CAR of the imaging system 2 positioned at the second target imaging height CH_target#12. Namely, the third target object OBJ#13_target that is selected as the process performed object may not be included in the imaging allowable range CAR of the imaging system 2 before the imaging height CH is adjusted. This is because the imaging height CH of the imaging system 2 is adjusted in accordance with the height OH of the target object group OBG contained in the container CB, and therefore, one target object OBJ is included in the imaging allowable range CAR of the imaging system 2 at a second time that is after a first time even in a case where the one target object OBJ has not been included in the imaging allowable range CAR of the imaging system 2 at the first time, and as a result, the one target object OBJ is selectable as the process performed object as described with reference to FIG. 18(a) to FIG. 18(b) and FIG. 19. Namely, one target object OBJ is included in the imaging allowable range CAR of the imaging system 2 positioned at the third target imaging height CH_target#13 as time passes even in a case where the one target object OBJ has not been included in the imaging allowable range CAR of the imaging system 2 positioned at the second target imaging height CH_target#12, and as a result, the one target object OBJ is selectable as the process performed object.

Note that the third target object OBJ#13_target that is selected as the process performed object may be the second target object OBJ#12 that has not been included in the imaging allowable range CAR of the imaging system 2 positioned at the second target imaging height CH_target#12. Alternatively, the third target object OBJ#13_target that is selected as the process performed object may be the second target object OBJ#12 that has been included in the imaging allowable range CAR of the imaging system 2 positioned at the second target imaging height CH_target#12 but that has not been selected as the process performed object.

Then, the signal generation unit 313 generates the robot control signal for controlling the robot 1 so that the end effector 4 approaches the third target object OBJ#13_target, based on the position pose data POI#13 of the third target object OBJ#13_target (the step S4 in FIG. 4). After the end effector 4 approaches the third target object OBJ#13_target based on the robot control signal generated at the step S4, the robot 1 performs the predetermined process on the third target object OBJ#13_target at the step S5. Namely, the robot 1 holds the third target object OBJ#13_target contained in the container CB, transports the held third target object OBJ#13_target from the container CB, and releases it at the release position outside container CB, as the predetermined process.

Then, after the robot 1 has performed the predetermined process on the third target object OBJ#13_target (the step S5: Yes in FIG. 4), the control apparatus 3 adjusts the imaging height CH of the imaging system 2 (the step S7 in FIG. 4). Note that the control apparatus 3 may adjust the imaging height CH of the imaging system 2 after the robot 1 has performed the predetermined process on a single third target object OBJ#13 as described above. Alternatively, the control apparatus 3 may adjust the imaging height CH of the imaging system 2 after the robot 1 has performed the predetermined process on each of a plurality of third target objects OBJ#13 as described above. In the below-described description, an example in which the control apparatus 3 adjusts the imaging height CH of the imaging system 2 after the robot 1 has performed the predetermined process on a single third target object OBJ#13 will be described for convenience of description.

In order to adjust the imaging height CH of the imaging system 2, the control apparatus 3 calculates the height OH of the third target object group OBG#13 by using the image data IMG_3D#13 (specifically, the three-dimensional position data WSD generated from the image data IMG_3D#13), which has been already acquired at the step S1 in FIG. 4 to generates the robot control signal for controlling the robot 1 so that the end effector 4 approaches the third target object OBJ#13_target. As a result, as illustrated in FIG. 21(b), the control apparatus 3 calculates a third height OH#13 as the height OH of the third target object group OBG#13.

Here, as described above, at least one of the plurality of second target objects OBJ#12 included in the second target object group OBG#12 has been transported to the outside of the container CB by the robot 1 at a timing at which the third target object group OBG#13 is imaged. Therefore, at least one of the plurality of second target objects OBJ#12 included in the second target object group OBG#12 is not included in the third target object group OBG#13. Namely, the number of third target objects OBJ#13 included in the third target object group OBG#13 is smaller than the number of second target objects OBJ#12 included in the second target object group OBG#12. As a result, the third height OH#13 of the third target object group OBG#13 is usually lower than the second height OH#12 of the second target object group OBG#12. However, the third height OH#13 of the third target object group OBG#13 may be the same as the second height OH#12 of the second target object group OBG#12 in some cases.

Note that the third target object OBJ#13_target, which has not yet been transported from the container CB by the robot 1, is positioned at the highest position in the third target object group OBG#13 at the timing at which the third target object group OBG#13 is imaged in the example illustrated in FIG. 22(a). Therefore, the control apparatus 3 calculates the height of the third target object OBJ#13_target as the height OH of the third target object group OBG#13. However, as illustrated in FIG. 22(b), the third target object OBJ#13_target has already been transported from the container CB at a timing at which the imaging height CH of the imaging system 2 is actually adjusted based on the height OH of the third target object group OBG#13. Therefore, in a case where the robot control processing illustrated in FIG. 4 is performed, there is a possibility that the height OH of the third target object group OBG#13 calculated at the step S7 in FIG. 4 is different from the height OH of the target object group OBG that is actually contained in the container CB at the timing at which the imaging height CH of the imaging system 2 is actually adjusted based on the height OH of the third target object group OBG#13. However, even in this case, it is unlikely that the difference of the height OH of the third target object group OBG#13 calculated at the step S7 in FIG. 4 is large enough to adversely affect the adjustment of the imaging height CH of the imaging system 2. However, even in a case where the robot control processing illustrated in FIG. 4 is performed, there is a possibility that the height OH of the third target object group OBG#13 calculated at the step S7 in FIG. 4 is the same as the height OH of the target object group OBG that is actually contained in the container CB at the timing at which the imaging height CH of the imaging system 2 is actually adjusted based on the height OH of the third target object group OBG#13.

Then, the control apparatus 3 determines the target imaging height CH_target of the imaging system 2 based on the calculated third height OH#13 and the imaging allowable range CAR of the imaging system 2. Specifically, as illustrated in FIG. 22(b), the control apparatus 3 may determine, as a fourth target imaging height CH_target#14, the target imaging height CH_target satisfying a condition that "the calculated third height OH#13 is included in the imaging allowable range CAR of the imaging system 2 positioned at the target imaging height CH_target" is satisfied. Then, the control apparatus 3 generates the robot control signal for controlling the robot 1 so that the imaging height CH of the imaging system 2 becomes the fourth target imaging height CH_target#14 determined based on the third height OH#13. As a result, the imaging system 2 is positioned at the fourth target imaging height CH_target#14.

Here, the third height OH#13 of the third target object group OBG#13 is usually lower than the second height OH#12 of the second target object group OBG#12 as described above. In this case, the fourth target imaging height CH_target#14 that is determined based on the third height OH#13 may also be lower than the third target imaging height CH_target#13 that is determined based on the second height OH#12.

Then, as illustrated in FIG. 22(a), the imaging system 2 positioned at the fourth target imaging height CH_target#14 images a fourth target object group OBG#14 that includes at least a part of the plurality of target objects OBJ contained in the container CB (the step S1 in FIG. 4). As a result, the control apparatus 3 acquires the image data IMG_3D (it is referred to as image data IMG_3D#14), which indicates an image in which the fourth target object group OBG#14 is captured, from the imaging system 2 (the step S1 in FIG. 4). Note that the target object OBJ included in the fourth target object group OBG#14 is referred to as a fourth target object OBJ#14 for convenience of description in the below-described description.

The fourth target object group OBG#14, which is imaged by the imaging system 2 positioned at the fourth target imaging height CH_target#14, may be different from the third target object group OBG#13, which is imaged by the imaging system 2 to determine the fourth target imaging height CH_target#14. Specifically, at least one of the plurality of third target objects OBJ#13 included in the third target object group OBG#13 may not be included in the fourth target object group OBG#14. As one example, at least one of the plurality of third target objects OBJ#13 included in the third target object group OBG#13 should already have been transported from the container CB by the robot 1 at a timing at which the imaging system 2 positioned at the fourth target imaging height CH_target#14 images the fourth target object group OBG#14. In this case, at least one third target object OBJ#13, which has been transported from the container CB, of the plurality of third target objects OBJ#13 included in the third target object group OBG#13, may not be included in the fourth target object group OBG#14. As another example, there is a possibility that a size of the field of view of the imaging system 2 relative to target object group OBG contained in the container CB changes due to the adjustment of the imaging height CH of the imaging system 2. In this case, the fourth target object group OBG#14 may be different from the third target object group OBG#13.

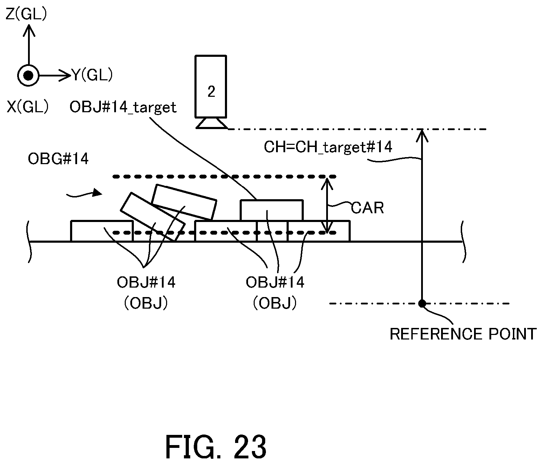

However, at least one third target object OBJ#13, which has not yet been transported from the container CB, of the plurality of third target objects OBJ#13 included in the third target object group OBG#13 may be included in the fourth target object group OBG#14. Namely, the third target object group OBG#13 and the fourth target object group OBG#14 may partially overlap. In this case, since the fourth target imaging height CH_target#14 of the imaging system 2 imaging the fourth target object group OBG#14 is determined based on the third height OH#13 of the third target object group OBG#13, at least a part of the fourth target object group OBG#14 that partially overlaps with the third target object group OBG#13 is included in the imaging allowable range CAR of the imaging system 2 positioned at the fourth target imaging height CH_target#14 as illustrated in FIG. 23. Namely, at least one of the plurality of fourth target objects OBJ#14 included in the fourth target object group OBG#14 is included in the imaging allowable range CAR of the imaging system 2 positioned at the fourth target imaging height CH_target#14. Therefore, the imaging system 2 can properly image at least one of the plurality of fourth target objects OBJ#14 included in fourth target object group OBG#14. However, all of the plurality of fourth target objects OBJ#14 included in the fourth target object group OBG#14 may be different from the plurality of third target objects OBJ#13 included in the third target object group OBG#13.

Note that the number of target objects OBJ contained in the container CB at the timing at which the imaging system 2 images the fourth target object group OBG#14 from the fourth target imaging height CH_target#14 may be smaller than the number of target objects OBJ contained in the container CB at the timing at which the imaging system 2 images the third target object group OBG#13 from the third target imaging height CH_target#13, because at least one third target object OBJ#13 has been transported from the container CB at the timing at which the imaging system 2 images the fourth target object group OBG#14 from the fourth target imaging height CH_target#14. The number of fourth target objects OBJ#14 included in the fourth target object group OBG#14 that is imaged by the imaging system 2 from the fourth target imaging height CH_target#14 may be smaller than the number of third target objects OBJ#13 included in the third target object group OBG#13 that is imaged by the imaging system 2 from the third target imaging height CH_target#13. A weight of the container CB in which the plurality of target objects OBJ are contained at the timing at which the imaging system 2 images the fourth target object group OBG#14 from the fourth target imaging height CH_target#14 may be lighter than a weight of the container CB in which the plurality of target objects OBJ are contained at the timing at which the imaging system 2 images the third target object group OBG#13 from the third target imaging height CH_target#13. Note that the "weight of the container CB in which the plurality of target objects OBJ are contained" here may be a weight that includes both a weight of the container CB itself and the weight of the plurality of target objects OBJ contained in the container CB.

Then, the position pose calculation unit 312 generates the position pose data POI (it is referred to as position pose data POI#14) of one fourth target object OBJ#14, which is selected as the process performed object from the plurality of fourth target objects OBJ#14, based on the image data IMG_3D#14 (specifically, based on the three-dimensional position data WSD generated from the image data IMG_3D#14) (the step S2 to the step S3 in FIG. 4). Note that one fourth target object OBJ#14 that is selected as the process performed object is referred to as a fourth target object OBJ#14_target in the below-described description.

It is likely that the position pose calculation unit 312 selects the fourth target object OBJ#14, which is included in the imaging allowable range CAR of the imaging system 2 positioned at the fourth target imaging height CH_target#14, as the fourth target object OBJ#14_target that is the process performed object. This is because it is likely that the matching similarity of the target object OBJ that is included in the imaging allowable range CAR is higher than the matching similarity of the target object OBJ that is not included in the imaging allowable range CAR. In this case, the position pose calculation unit 312 can generate the position pose data POI that indicates at least one of the position and the pose of the fourth target object OBJ#14, which is included in the imaging allowable range CAR of the imaging system 2 positioned at the fourth target imaging height CH_target#14, with higher accuracy. This is because it is more likely that the accuracy of the position pose data POI of the target object OBJ is higher as the matching similarity of the target object OBJ is higher. Conversely, the fourth target imaging height CH_target#14 may be the imaging height CH satisfying a condition that "the fourth target object OBJ#14 that is selected as the process performed object is included in the imaging allowable range CAR of the imaging system 2 positioned at the fourth target imaging height CH_target#14". Namely, the control apparatus 3 may determine the fourth target imaging height CH_target#14 to satisfy the condition that "the fourth target object OBJ#14 that is selected as the process performed object is included in the imaging allowable range CAR of the imaging system 2 positioned at the fourth target imaging height CH_target#14". However, the position pose calculation unit 312 may select the fourth target object OBJ#14, which is not included in the imaging allowable range CAR of the imaging system 2 positioned at the fourth target imaging height CH_target#14, as the fourth target object OBJ#14_target that is the process performed object.

On the other hand, the fourth target object OBJ#14_target that is selected as the process performed object may not be included in the imaging allowable range CAR of the imaging system 2 positioned at the third target imaging height CH_target#13. Namely, the fourth target object OBJ#14_target that is selected as the process performed object may not be included in the imaging allowable range CAR of the imaging system 2 before the imaging height CH is adjusted. This is because the imaging height CH of the imaging system 2 is adjusted in accordance with the height OH of the target object group OBG contained in the container CB, and therefore, one target object OBJ is included in the imaging allowable range CAR of the imaging system 2 at a second time that is after a first time even in a case where the one target object OBJ has not been included in the imaging allowable range CAR of the imaging system 2 at the first time, and as a result, the one target object OBJ is selectable as the process performed object as described with reference to FIG. 18(a) to FIG. 18(b) and FIG. 19. Namely, one target object OBJ is included in the imaging allowable range CAR of the imaging system 2 positioned at the fourth target imaging height CH_target#14 as time passes even in a case where the one target object OBJ has not been included in the imaging allowable range CAR of the imaging system 2 positioned at the third target imaging height CH_target#13, and as a result, the one target object OBJ is selectable as the process performed object.

Note that the fourth target object OBJ#14_target that is selected as the process performed object may be the third target object OBJ#13 that has not been included in the imaging allowable range CAR of the imaging system 2 positioned at the third target imaging height CH_target#13. Alternatively, the fourth target object OBJ#14_target that is selected as the process performed object may be the third target object OBJ#13 that has been included in the imaging allowable range CAR of the imaging system 2 positioned at the third target imaging height CH_target#13 but that has not been selected as the process performed object.

Then, the signal generation unit 313 generates the robot control signal for controlling the robot 1 so that the end effector 4 approaches the fourth target object OBJ#14_target, based on the position pose data POI#14 of the fourth target object OBJ#14_target (the step S4 in FIG. 4). After the end effector 4 approaches the fourth target object OBJ#14_target based on the robot control signal generated at the step S4, the robot 1 performs the predetermined process on the fourth target object OBJ#14_target at the step S5. Namely, the robot 1 holds the fourth target object OBJ#14_target contained in the container CB, transports the held fourth target object OBJ#14_target from the container CB, and releases it at the release position outside container CB, as the predetermined process.

Then, the same processing is repeated until it is determined at the step S6 in FIG. 4 that the robot control processing should be ended.

### (3) Modified Example

Next, a modified example of the robot system SYS will be described. Note that each modified example described below may be combined with other modified example. Moreover, a detailed description of the component that has been already described is omitted by assigning the same reference number to it in the below-described description. Furthermore, a detailed description of the processing that has been already described is omitted by assigning the same step number to it in the below-described description. Namely, in the below-described description, the components different from the component that has been already described and the processing different from the processing that has been already described will be described mainly. Therefore, in a case where there is no notation, the robot system SYS may include the component that has been already described, and the robot system SYS may perform the processing that has been already described, even in the modified examples described below.

### (3-1) First Modified Example

In the above-described description, the control apparatus 3 uses at least one of the image data IMG_2D and IMG_3D, which has been already acquired at the step S1 in FIG. 4 to generate the robot control signal for controlling the robot 1 so that the end effector 4 approaches the target object OBJ, in order to adjust the imaging height CH of the imaging system 2. Specifically, the control apparatus 3 uses at least one of the image data IMG_2D and IMG_3D, which has been already acquired at the step S1 in FIG. 4 to generate the robot control signal for controlling the robot 1 so that the end effector 4 approaches the target object OBJ, in order to determine the target imaging height CH_target of the imaging system 2.

On the other hand, in the first modified example, the control apparatus 3 may use at least one of the image data IMG_2D and IMG_3D, which is different from at least one of the image data IMG_2D and IMG_3D that has been already acquired at the step S1 in FIG. 4, in order to adjust the imaging height CH of the imaging system 2.

### (3-1-1) Flow of Robot Control Processing in First Modified Example

Next, with reference to FIG. 24, the robot control processing in the first modified example will be described. FIG. 24 is a flowchart that illustrates a flow of the robot control processing in the first modified example.

As illustrated in FIG. 24, even in the first modified example, the control apparatus 3 performs the processing from the step S1 to the step S6. Especially in the first modified example, in a case where it is determined as a result of the determination at the step S6 that the robot control processing illustrated in FIG. 24 may not be ended (the step S6: No), the control apparatus 3 acquires at least one of the image data IMG_2D and IMG_3D that is used to adjust the imaging height CH of the imaging system 2 from the imaging system 2 before adjusting the imaging height CH of the imaging system 2 (the step S8a).

The imaging system 2 may image a target object group OBG, which includes at least a part of the plurality of target objects OBJ contained in the container CB, to generate at least one of the image data IMG_2D and IMG_3D, which is acquired by the control apparatus 3 at the step S8a, at a timing at which the control apparatus 3 acquires at least one of the image data IMG_2D and IMG_3D at the step S8a. Namely, the imaging system 2 may image the target object group OBG contained in the container CB after it is determined at the step S6 that the robot control processing may not be ended.

The imaging system 2 may image the target object group OBG contained in the container CB in advance to generate at least one of the image data IMG_2D and IMG_3D, which is acquired by the control apparatus 3 at the step S8a, before the control apparatus 3 determines at the step S6 that the robot control processing may not be ended. For example, the imaging system 2 may image the target object group OBG contained in container CB before the control apparatus 3 determines whether or not the robot control processing should be ended at the step S6. For example, the imaging system 2 may image the target object group OBG contained in the container CB after the control apparatus 3 determines that the robot 1 has completed the predetermined process on one target object OBJ, which is selected as the process performed object relative to the process performed object at the step S5. For example, the imaging system 2 may image the target object group OBG contained in the container CB before the control apparatus 3 determines that the robot 1 has completed the predetermined process on one target object OBJ, which is selected as the process performed object relative to the process performed object at the step S5. For example, the imaging system 2 may image the target object group OBG contained in the container CB in at least a part of a period during which the robot 1 is performing the predetermined process on one target object OBJ that is selected as the process performed object. For example, the imaging system 2 may image the target object group OBG contained in the container CB in at least a part of a period during which the robot 1 is moving (for example, the end effector 4 is moving) so that the robot 1 performs the predetermined process on one target object OBJ that is selected as the process performed object.

In a case where the imaging system 2 images the target object group OBG contained in the container CB in at least part of the period during which the robot 1 is moving (for example, the end effector 4 is moving), the robot 1 (the end effector 4) may temporarily stop at a timing at which the imaging system 2 images the target object group OBG. Alternatively, the robot 1 (the end effector 4) may continue moving without temporarily stopping at the timing at which the imaging system 2 images the target object group OBG.

Here, one example of the timing at which the imaging system 2 images the target object group OBG contained in the container CB in a case where the robot 1 holds one target object OBJ that is selected as the process performed object, transports the one target object OBJ to an outside of the container CB, and then releases the transported target object OBJ at a position outside the container CB to a release position outside the container CB will be described. Note that, one target object OBJ that is selected as the process performed object is referred to as a target object OBJ_target, other target object OBJ that is contained in the container CB and that is not selected as the process performed object is referred to as a target object OBJ_cb, and the target object group OBG that is contained in the container CB (namely, the target object group OBG that includes at least a part of the plurality of target objects OBJ_cb) is referred to as a target object group OBG_cb in the below-described description.

In this case, the imaging system 2 may image the target object group OBG_cb after the end effector 4 (the robot 1) holds the target object OBJ_target. Especially, the imaging system 2 may image the target object group OBG_cb that includes at least one target object OBJ_cb, which is included in the field of view of the imaging system 2, of the plurality of target objects OBJ_cb contained in the container CB. On the other hand, imaging system 2 may not image at least one target object OBJ_cb, which is not included in the field of view of the imaging system 2, of the plurality of target objects OBJ_cb contained in the container CB.

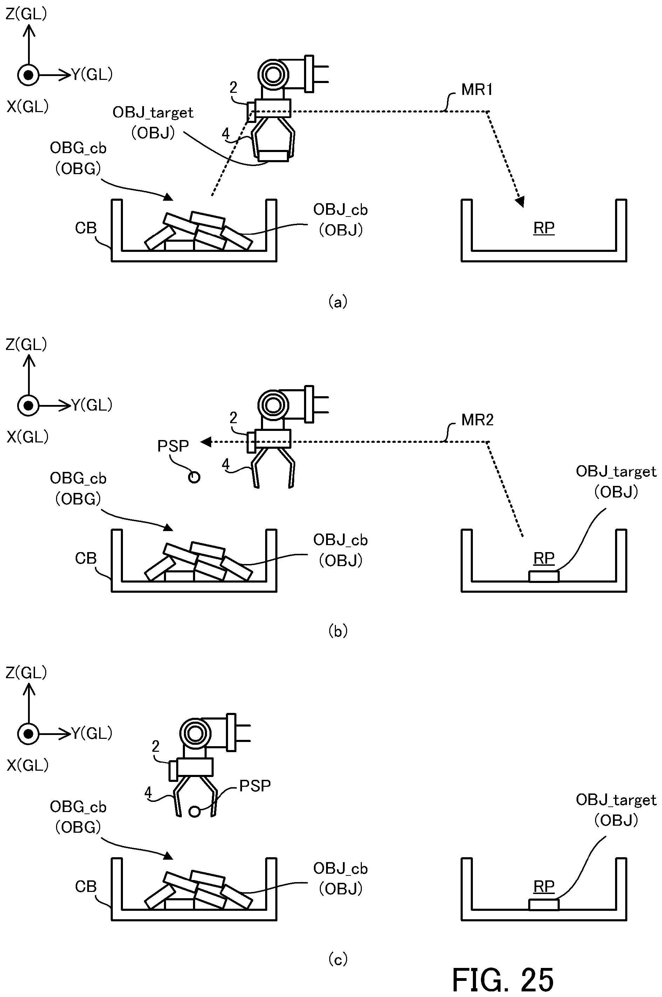

As a first example in which the imaging system 2 images the target object OBJ_cb after the end effector 4 holds the target object OBJ_target, the imaging system 2 may image the target object group OBG_cb contained in the container CB after the end effector 4 holds the target object OBJ_target and before the end effector 4 releases the target object OBJ_target to a release position RP outside the container CB as illustrated in FIG. 25(a). For example, the imaging system 2 may image the target object group OBG_cb contained in the container CB after the end effector 4 holds the target object OBJ_target in at least a part of a period until the target object OBJ_target held by the end effector 4 is transported to an outside of the container CB and released from the end effector 4 at the release position outside the container CB. For example, the imaging system 2 may image the target object group OBG_cb in at least a part of a period during which the end effector 4 moves from the containing space SP in the container CB to the release position RP outside the container CB. For example, the imaging system 2 may image the target object group OBG_cb on a movement route MR1 of the imaging system 2 that moves along with the movement of the end effector 4 from the containing space SP in the container CB to the release position RP outside the container CB. For example, the imaging system 2 may image the target object group OBG_cb contained in the container CB in at least a part of a period between a timing at which the end effector 4 holds the target object OBJ_target and a timing at which the target object OBJ_target held by the end effector 4 is transported from the container CB. For example, the imaging system 2 may image the target object group OBG_cb in at least a part of a period during which the end effector 4 moves from the containing space SP in container CB to the outside of the container CB.

As a second example in which the imaging system 2 images the target object OBJ_cb after the end effector 4 holds the target object OBJ_target, the imaging system 2 may image the target object group OBJ_cb contained in the container CB after the end effector 4 releases the target object OBJ_target at the release position RP and before the end effector 4 reaches a process start position PSP set above the container CB to select the target object OBJ_cb contained in the container CB as the next process performed object and perform the predetermined process as illustrated in FIG. 25(b). The process start position PSP may be a position satisfying a condition that the entire container CB (alternatively, a part of the container CB containing the target object OBJ) is included in the imaging field of view of the imaging system 2 in a situation where the end effector 4 is positioned at the process start position PSP. For example, the imaging system 2 may image the target object group OBG_cb contained in the container CB after the end effector 4 releases the target object OBJ_target at the release position RP in at least a part of a period until the end effector 4 reaches the process start position PSP. For example, the imaging system 2 may image the target object group OBG_cb in at least a part of a period during which the end effector 4 moves from the release position RP outside the container CB to the process start position PSP above the container CB. For example, the imaging system 2 may image the target object group OBG_cb on a movement route MR2 of the imaging system 2 that moves along with the movement of the end effector 4 from the release position RP outside the container CB to the process start position PSP above the container CB.

As a third example in which the imaging system 2 images the target object group OBG_cb after the end effector 4 holds the target object OBJ_target, the imaging system 2 may image the target object group OBG_cb contained in the container CB in a case where the end effector 4 is positioned at the process start position PSP as illustrated in FIG. 25(c).

Again in FIG. 24, then, the control apparatus 3 adjusts the imaging height CH of the imaging system 2 (the step S7). However, in the first modified example, the control apparatus 3 adjusts the imaging height CH of the imaging system 2 based on at least one of the image data IMG_2D and IMG_3D acquired at the step S8a, instead of at least one of the image data IMG_2D and IMG_3D last acquired at the step S1 (the step S7). Namely, the control apparatus 3 determines the target imaging height CH_target based on at least one of the image data IMG_2D and IMG_3D acquired at the step S8a, and generates the robot control signal for controlling the robot 1 so that the imaging system 2 is positioned at the determined target imaging height CH_target. Note that a processing for adjusting the imaging height CH of the imaging system 2 at the step S7 in FIG. 24 may be the same as the processing for adjusting the imaging height CH of the imaging system 2 at the step S7 in FIG. 4, and therefore, a detailed description thereof is omitted.

Alternatively, the control apparatus 3 may generate the robot control signal for controlling the robot 1 after the end effector 4 releases the target object OBJ_target, which is selected as the process performed object, at the release position RP, based on at least one of the image data IMG_2D and IMG_3D acquired at the step S8a, instead of adjusting the imaging height CH of the imaging system 2. For example, the control apparatus 3 may generate the robot control signal for controlling the robot 1 so that the end effector 4 moves from the release position RP to the process start position PSP (as a result, the imaging system 2 also moves from the release position RP to the process start position PSP, the same applies in the below-described description). For example, the control apparatus 3 may generate the robot control signal for controlling the robot 1 so that the end effector 4 moves from the release position RP to the process start position PSP and then the imaging system 2 moves to the desired height. Namely, the control apparatus 3 may generate the robot control signal for controlling the robot 1 so that the imaging system 2 moves from the release position RP to the desired height through the process start position PSP. In this case, the control apparatus 3 may not necessarily determine the target imaging height CH_target, and may not generate the robot control signal for controlling the robot 1 so that the imaging system 2 is positioned at the determined target imaging height CH_target.

Alternatively, the control apparatus 3 may generate the robot control signal for controlling the robot 1 after the end effector 4 releases the target object OBJ_target at the release position RP, based on at least one of image data IMG_2D and IMG_3D acquired at the step S8a, in addition to adjusting imaging height CH of the imaging system 2. For example, the control apparatus 3 may generate the robot control signal for controlling the robot 1 so that the end effector 4 moves from the release position RP to the process start position PSP and then the imaging system 2 moves to the target imaging height CH_target. Namely, the control apparatus 3 may generate the robot control signal for controlling the robot 1 so that imaging system 2 moves from the release position RP to the target imaging height CH_target through the process start position PSP.

Note that the control apparatus 3 may perform a part of the processing for controlling the robot 1 so that the end effector 4 moves from the release position RP to the process start position PSP and then the imaging system 2 moves to the desired height or the target imaging height CH_target and may not perform other part of this processing. Namely, the control apparatus 3 may generate the robot control signal for controlling the robot 1 from a position of the robot 1 at a certain time after the end effector 4 releases the target object OBJ_target, which is selected as the process performed object, at the release position RP. Note that the position of the robot 1 at a certain time after the end effector 4 releases the target object OBJ_target at the release position RP may include a position of the robot 1 at a timing at which the end effector 4 releases the target object OBJ_target at the release position RP (namely, release position RP). The position of the robot 1 at a certain time after the end effector 4 releases the target object OBJ_target at the release position RP may include a position of the robot 1 at a timing at which the robot 1 has completed moving along a certain route after the end effector 4 releases the target object OBJ_target at the release position RP (namely, a position closer to the container CB from the release position RP). In this case, other part of the processing may be performed by other method such as a teaching. For example, the processing for controlling the robot 1 so that the end effector 4 moves from the release position RP to the process start position PSP may be performed by other method such as the teaching, and the control apparatus 3 may control the robot 1 so that the imaging system 2 moves to the desired height or the target imaging height CH_target. For example, the processing for controlling the robot 1 so that the end effector 4 moves from the release position RP to an intermediate position, which is between the release position RP and the process start position PSP, may be performed by other method such as the teaching, and the control apparatus 3 may control the robot 1 so that the end effector 4 moves from the intermediate position to the process start position PSP and then the imaging system 2 moves to the desired height or the target imaging height CH_target.

Furthermore, a height of the process start position PSP may be the same as the target imaging height CH_target. In this case, the imaging height CH of the imaging system 2 is the same as the target imaging height CH_target at a timing at which the imaging system 2 moves to the process start position PSP. Therefore, the imaging system 2 may not further move to the target imaging height CH_target after the imaging system 2 moves to the process start position PSP. Therefore, a throughput of the robot control processing improves.

Note that a horizontal position (namely, a position along the XY plane) of the process start position PSP may be the same as a target imaging horizontal position that is a target value of an imaging horizontal position of the imaging system 2 in a case where not only the imaging height CH of the imaging system 2 but also an imaging horizontal position of the imaging system 2 are adjusted as described in detail later in a fourth modified example. In this case, the imaging system 2 is positioned at the target imaging horizontal position at a timing at which the imaging system 2 moves to the process start position PSP. Therefore, the imaging system 2 may not further move to the target imaging horizontal position after the imaging system 2 moves to the process start position PSP. Therefore, the throughput of the robot control processing improves.

### (3-1-2) Specific Example of Robot Control Processing in First Modified Example

Next, a specific example of the robot control processing in the first modified example will be described. In a below-described description, a specific example of the robot control processing, which is performed in a case where the robot 1 repeats a process for holding one of the plurality of target objects OBJ contained in the container CB and releasing the held target object OBJ at the release position outside the container CB in a situation where the plurality of target objects OBJ are contained in the container CB, will be described.

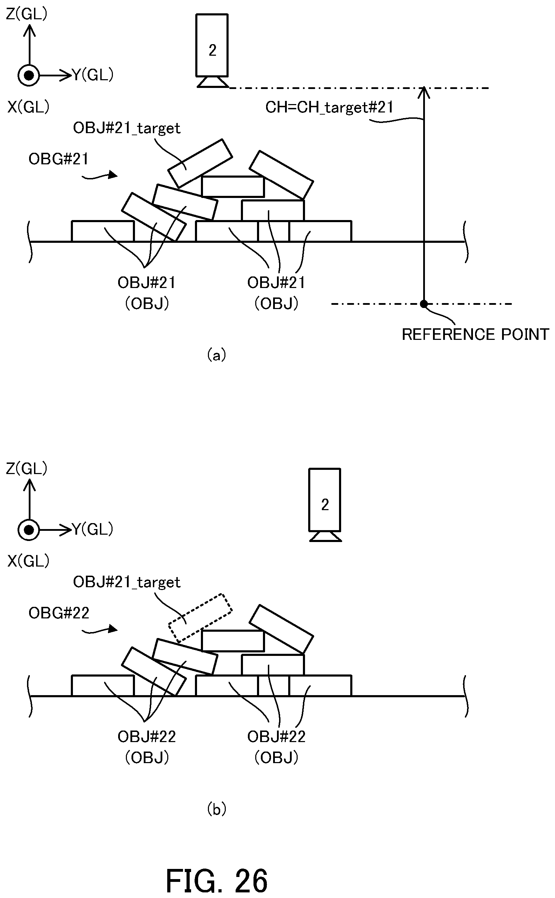

After the robot control processing illustrated in FIG. 24 is started, the imaging system 2 images a first target object group OBG#21 that includes at least a part of the plurality of target objects OBJ contained in the container CB (the step S1 in FIG. 24) as illustrated in FIG. 26(a). In this case, as illustrated in FIG. 26(a), the imaging height CH of the imaging system 2 may be set to a first target imaging height CH_target#21 that is the initial imaging height. Namely, the imaging system 2 positioned at the first target imaging height CH_target#21 may image the first target object group OBG#21. As a result, the control apparatus 3 acquires the image data IMG_3D (it is referred to as image data IMG_3D#21), which indicates an image in which the first target object group OBG#21 is captured, from the imaging system 2, (the step S1 in FIG. 4). Note that the target object OBJ included in the first target object group OBG#21 is referred to as a first target object OBJ#21 in the below-described description for convenience of description.

However, the control apparatus 3 may acquire at least one of the image data IMG_2D and IMG_3D by performing the processing of the step S8a in FIG. 24 before performing the processing of step S1 in FIG. 24 for the first time after the robot control processing illustrated in FIG. 24 is started, and then, determine the first target imaging height CH_target#21 based on at least one of the image data IMG_2D and IMG_3D acquired at the step S8a by performing the processing of step S7 in FIG. 24. In this case, the imaging system 2 can image the first target object group#21 more properly. Specifically, the imaging system 2 can image the first target object group OBG#21 from the first target imaging height CH_target#21 that is expected to be more suitable for imaging the first target object group#21 than the initial imaging height.

Then, the position pose calculation unit 312 generates the position pose data POI (it is referred to as position pose data POI#21) of one first target object OBJ#21, which is selected as the process performed object from the plurality of first target objects OBJ#21, based on the image data IMG_3D#21 (specifically, based on the three-dimensional position data WSD generated from the image data IMG_3D#21) (the step S2 to the step S3 in FIG. 24). Note that one first target object OBJ#21 that is selected as the process performed object is referred to as a first target object OBJ#21_target in the below-described description.

It is likely that the position pose calculation unit 312 selects the first target object OBJ#21, which is included in the imaging allowable range CAR of the imaging system 2 positioned at the first target imaging height CH_target#21, as the first target object OBJ#21_target that is the process performed object. This is because it is likely that the matching similarity of the target object OBJ that is included in the imaging allowable range CAR is higher than the matching similarity of the target object OBJ that is not included in the imaging allowable range CAR. In this case, the position pose calculation unit 312 can generate the position pose data POI that indicates at least one of the position and the pose of the first target object OBJ#21, which is included in the imaging allowable range CAR of the imaging system 2 positioned at the first target imaging height CH_target#21, with higher accuracy. This is because it is more likely that the accuracy of the position pose data POI of the target object OBJ is higher as the matching similarity of the target object OBJ is higher. However, the position pose calculation unit 312 may select the first target object OBJ#21, which is not included in the imaging allowable range CAR of the imaging system 2 positioned at the first target imaging height CH_target#21, as the first target object OBJ#21_target that is the process performed object.

Then, the signal generation unit 313 generates the robot control signal for controlling the robot 1 so that the end effector 4 approaches the first target object OBJ#21_target, based on the position pose data POI#21 of the first target object OBJ#21_target (the step S4 in FIG. 24). After the end effector 4 approaches the first target object OBJ#21_target based on the robot control signal generated at the step S4, the robot 1 performs the predetermined process on the first target object OBJ#21_target at the step S5. Namely, the robot 1 may perform the process for holding the first target object OBJ#21_target contained in the container CB, transporting the held first target object OBJ#21_target from the container CB, and releasing it at the release position outside container CB, as the predetermined process.

Then, after the robot 1 has performed the predetermined process on the first target object OBJ#21_target (the step S5: Yes in FIG. 24), the control apparatus 3 adjusts the imaging height CH of the imaging system 2 (the steps S7 and S8 in FIG. 24). Note that the control apparatus 3 may adjust the imaging height CH of the imaging system 2 after the robot 1 has performed the predetermined process on a single first target object OBJ#21 as described above. Alternatively, the control apparatus 3 may adjust the imaging height CH of the imaging system 2 after the robot 1 has performed the predetermined process on each of a plurality of first target objects OBJ#21 as described above. In the below-described description, an example in which the control apparatus 3 adjusts the imaging height CH of the imaging system 2 after the robot 1 has performed the predetermined process on a single first target object OBJ#21 will be described for convenience of description.

In the first modified example, in order to adjust the imaging height CH of the imaging system 2, the control apparatus 3 newly acquires at least one of the image data IMG_2D and IMG_3D from the imaging system 2 (the step S8a in FIG. 24). Specifically, as illustrated in FIG. 26(b), the imaging system 2 images a second target object group OBG#22, which includes at least a part of the plurality of target objects OBJ contained in the container CB. Note that FIG. 26(b) illustrates an example in which the imaging system 2 images the second target object group OBG#22 after the end effector 4 holds the first target object OBJ#21_target illustrated in FIG. 26(a). As a result, the control apparatus 3 acquires the image data IMG_3D (it is referred to as image data IMG_3D#22), which indicates an image in which the second target object group OBG#22 is captured, from the imaging system 2 (the step S8a in FIG. 24). Note that the target object OBJ included in the second target object group OBG#22 is referred to as a second target object OBJ#22 in the below-described description for convenience of description.

The second target object group OBG#22 may be different from the first target object group OBG#21. As one example, the control apparatus 3 newly acquires at least one of the image data IMG_2D and IMG_3D generated by the imaging system 2 imaging the second target object group OBG#22 contained in the container CB after the end effector 4 holds the first target object OBJ#21_target as described above in the first modified example. Therefore, as illustrated in FIG. 26(b), at least the first target object OBJ#21_target held by the end effector 4 may not be included in the second target object group OBG#22. Namely, the second target object group OBG#22 may be different from the first target object group OBG#21. As another example, in a case where the position of the imaging system 2 imaging the second target object group OBG#22 is different from the position of the imaging system 2 imaging the first target object group OBG#21, there is a possibility that the target object OBJ included in the field of view of the imaging system 2 changes. In this case, the second target object group OBG#22 may be different from the first target object group OBG#21.

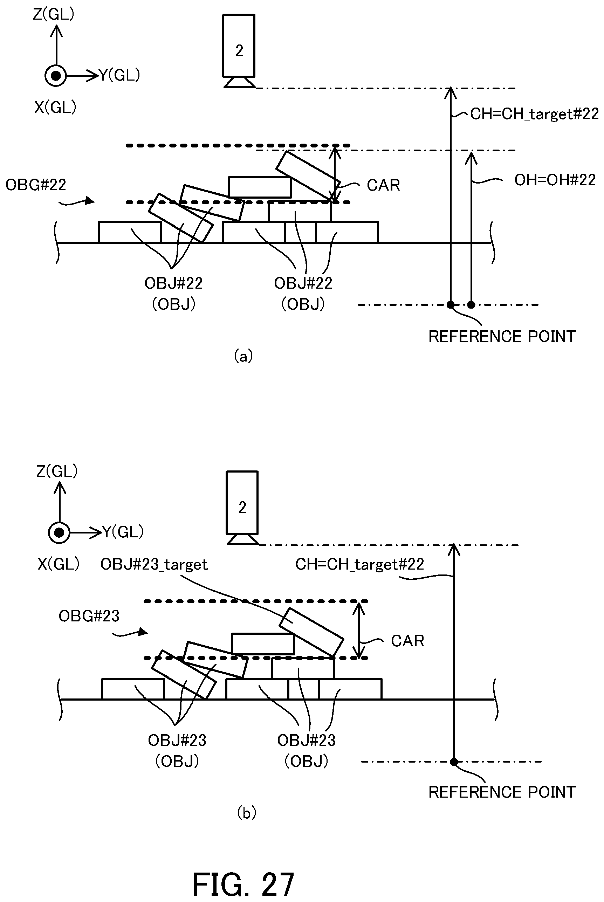

Then, the control apparatus 3 calculates the height OH of the second target object group OBG#22 by using the image data IMG_3D#22 (specifically, the three-dimensional position data WSD generated from the image data IMG_3D#22). As a result, as illustrated in FIG. 27(a), the control apparatus 3 calculates a second height OH#22 as the height OH of the second target object group OBG#22.

Then, the control apparatus 3 determines the target imaging height CH_target of the imaging system 2 based on the calculated second height OH#22 and the imaging allowable range CAR of the imaging system 2. Specifically, as illustrated in FIG. 27(a), the control apparatus 3 may determine, as a second target imaging height CH_target#22, the target imaging height CH_target satisfying a condition that "the calculated second height OH#22 is included in the imaging allowable range CAR of the imaging system 2 positioned at the target imaging height CH_target" is satisfied. Then, the control apparatus 3 generates the robot control signal for controlling the robot 1 so that the imaging height CH of the imaging system 2 becomes the second target imaging height CH_target#22 determined based on the second height OH#22. As a result, the imaging system 2 is positioned at the second target imaging height CH_target#22.

Here, as illustrated in FIG. 27(a), in a case where the robot control processing illustrated in FIG. 24 is performed, the height OH of the second target object group OBG#22 calculated at the step S7 of FIG. 24 is the same as the height OH of the target object group OBG actually contained in the container CB at a timing at which the imaging height CH of the imaging system 2 is actually adjusted based on the height OH of the second target object group OBG#22. This is because the second target object group OBG#22 itself is contained in the container at the timing at which the height OH of the second target object group OBG#22 is calculated. Namely, in a case where the robot control processing illustrated in FIG. 24 is performed, the difference of the height OH of the target object group OBG calculated at the step S7 is smaller, compared to a case where the robot control processing illustrated in FIG. 4 is performed. As a result, the control apparatus 3 can determine the second target imaging height CH_target#22 satisfying the condition that "at least one of the plurality of second target objects OBJ#22 included in the second target object group OBG#22 is included in the imaging allowable range CAR of the imaging system 2 positioned at the second target imaging height CH_target#22" more properly, compared to a case where the robot control processing illustrated in FIG. 4 is performed.

Then, as illustrated in FIG. 27(b), the imaging system 2 positioned at the second target imaging height CH_target#22 images a third target object group OBG#23 that includes at least a part of the plurality of target objects OBJ contained in the container CB (the step S1 in FIG. 24). As a result, the control apparatus 3 acquires the image data IMG_3D (it is referred to as image data IMG_3D#23), which indicates an image in which the third target object group OBG#23 is captured, from the imaging system 2 (the step S1 in FIG. 24). Note that the target object OBJ included in the third target object group OBG#23 is referred to as a third target object OBJ#23 for convenience of description in the below-described description.

The third target object group OBG#23, which is imaged by the imaging system 2 positioned at the second target imaging height CH_target#22, may be the same as the second target object group OBG#22, which is imaged by the imaging system 2 to determine the second target imaging height CH_target#22. Specifically, the target object OBJ is not usually transported to the outside of the container CB in a period that is after the imaging system 2 images the second target object group OBG#22 to determine the second target imaging height CH_target#22 and that is before the imaging system 2 positioned at the second target imaging height CH_target#22 imagers the third target object group OBG#23. Under this premise, in a case where the position of the imaging system 2 imaging the third target object group OBG#23 is the same as the position of the imaging system 2 imaging the second target object group OBG#22, the target object OBJ included in the field of view of the imaging system 2 does not change. In this case, the third target object group OBG#23 may be the same as the second target object group OBG#22. Therefore, it is likely that at least one of the plurality of third target objects OBJ#23 included in the third target object group OBG#23, which is the same as the second target object group OBG#22, is included in the imaging allowable range CAR of imaging system 2 positioned at the second target imaging height CH_target#22 that is determined based on the imaged result of the second target object group OBG#22. In this case, the imaging system 2 can properly image at least one of the plurality of third target objects OBJ#23 included in the third target object group OBG#23.

However, the third target object group OBG#23 may be different at least partially from the second target object group OBG#22. For example, in a case where the position of the imaging system 2 imaging the third target object group OBG#23 is different from the position of the imaging system 2 imaging the second target object group OBG#22, there is a possibility that the target object OBJ included in the field of view of the imaging system 2 changes. In this case, the third target object group OBG#23 may be different from the second target object group OBG#22.

Note that the number of target objects OBJ contained in the container CB at the timing at which the imaging system 2 images the third target object group OBG#23 from the second target imaging height CH_target#22 may be smaller than the number of target objects OBJ contained in the container CB at the timing at which the imaging system 2 images the first target object group OBG#22 from the first target imaging height CH_target#21, because at least one first target object OBJ#21 has been transported from the container CB at the timing at which the imaging system 2 images the third target object group OBG#23 from the second target imaging height CH_target#22. The number of third target objects OBJ#23 included in the third target object group OBG#23 that is imaged by the imaging system 2 from the second target imaging height CH_target#22 may be smaller than the number of first target objects OBJ#21 included in the first target object group OBG#21 that is imaged by the imaging system 2 from the first target imaging height CH_target#21. A weight of the container CB in which the plurality of target objects OBJ are contained at the timing at which the imaging system 2 images the third target object group OBG#23 from the second target imaging height CH_target#22 may be lighter than a weight of the container CB in which the plurality of target objects OBJ are contained at the timing at which the imaging system 2 images the first target object group OBG#21 from the first target imaging height CH_target#21. Note that the "weight of the container CB in which the plurality of target objects OBJ are contained" here may be a weight that includes both a weight of the container CB itself and the weight of the plurality of target objects OBJ contained in the container CB.

Then, the position pose calculation unit 312 generates the position pose data POI (it is referred to as position pose data POI#23) of one third target object OBJ#23, which is selected as the process performed object from the plurality of third target objects OBJ#23, based on the image data IMG_3D#23 (specifically, based on the three-dimensional position data WSD generated from the image data IMG_3D#23) (the step S2 to the step S3 in FIG. 24). Note that one third target object OBJ#23 that is selected as the process performed object is referred to as a third target object OBJ#23_target in the below-described description.

It is likely that the position pose calculation unit 312 selects the third target object OBJ#23, which is included in the imaging allowable range CAR of the imaging system 2 positioned at the second target imaging height CH_target#22, as the third target object OBJ#23_target that is the process performed object. This is because it is likely that the matching similarity of the target object OBJ that is included in the imaging allowable range CAR is higher than the matching similarity of the target object OBJ that is not included in the imaging allowable range CAR. In this case, the position pose calculation unit 312 can generate the position pose data POI that indicates at least one of the position and the pose of the third target object OBJ#23, which is included in the imaging allowable range CAR of the imaging system 2 positioned at the second target imaging height CH_target#22, with higher accuracy. This is because it is more likely that the accuracy of the position pose data POI of the target object OBJ is higher as the matching similarity of the target object OBJ is higher. Conversely, the second target imaging height CH_target#22 may be the imaging height CH satisfying a condition that "the third target object OBJ#23 that is selected as the process performed object is included in the imaging allowable range CAR of the imaging system 2 positioned at the second target imaging height CH_target#22". Namely, the control apparatus 3 may determine the second target imaging height CH_target#22 to satisfy the condition that "the third target object OBJ#23 that is selected as the process performed object is included in the imaging allowable range CAR of the imaging system 2 positioned at the second target imaging height CH_target#22". However, the position pose calculation unit 312 may select the third target object OBJ#23, which is not included in the imaging allowable range CAR of the imaging system 2 positioned at the second target imaging height CH_target#22, as the third target object OBJ#23_target that is the process performed object.

On the other hand, the third target object OBJ#23_target that is selected as the process performed object may not be included in the imaging allowable range CAR of the imaging system 2 before the imaging height CH is adjusted. Namely, the third target object OBJ#23_target that is selected as the process performed object may not be included in the imaging allowable range CAR of the imaging system 2 positioned at the first target imaging height CH_target#21. This is because the imaging height CH of the imaging system 2 is adjusted in accordance with the height OH of the target object group OBG contained in the container CB, and therefore, one target object OBJ is included in the imaging allowable range CAR of the imaging system 2 at a second time that is after a first time even in a case where the one target object OBJ has not been included in the imaging allowable range CAR of the imaging system 2 at the first time, and as a result, the one target object OBJ is selectable as the process performed object as described with reference to FIG. 18(a) to FIG. 18(b) and FIG. 19. Namely, one target object OBJ is included in the imaging allowable range CAR of the imaging system 2 positioned at the second target imaging height CH_target#22 as time passes even in a case where the one target object OBJ has not been included in the imaging allowable range CAR of the imaging system 2 positioned at the first target imaging height CH_target#21, and as a result, the one target object OBJ is selectable as the process performed object.

Note that the third target object OBJ#23_target that is selected as the process performed object may be the first target object OBJ#21 that has not been included in the imaging allowable range CAR of the imaging system 2 positioned at the first target imaging height CH_target#21. Alternatively, the third target object OBJ#23_target that is selected as the process performed object may be the first target object OBJ#21 that has been included in the imaging allowable range CAR of the imaging system 2 positioned at the first target imaging height CH_target#21 but that has not been selected as the process performed object.

Then, the signal generation unit 313 generates the robot control signal for controlling the robot 1 so that the end effector 4 approaches the third target object OBJ#23_target, based on the position pose data POI#23 of the third target object OBJ#23_target (the step S4 in FIG. 24). After the end effector 4 approaches the third target object OBJ#23_target based on the robot control signal generated at the step S4, the robot 1 performs the predetermined process on the third target object OBJ#23_target at the step S5. Namely, the robot 1 holds the third target object OBJ#23_target contained in the container CB, transports the held third target object OBJ#23_target from the container CB, and releases it at the release position outside container CB.

Then, after the robot 1 has performed the predetermined process on the third target object OBJ#23_target (the step S5: Yes in FIG. 24), the control apparatus 3 adjusts the imaging height CH of the imaging system 2 (the step S7 in FIG. 24). Note that the control apparatus 3 may adjust the imaging height CH of the imaging system 2 after the robot 1 has performed the predetermined process on a single third target object OBJ#23 as described above. Alternatively, the control apparatus 3 may adjust the imaging height CH of the imaging system 2 after the robot 1 has performed the predetermined process on each of a plurality of second target objects OBJ#22 as described above. In the below-described description, an example in which the control apparatus 3 adjusts the imaging height CH of the imaging system 2 after the robot 1 has performed the predetermined process on a single third target object OBJ#23 will be described for convenience of description.

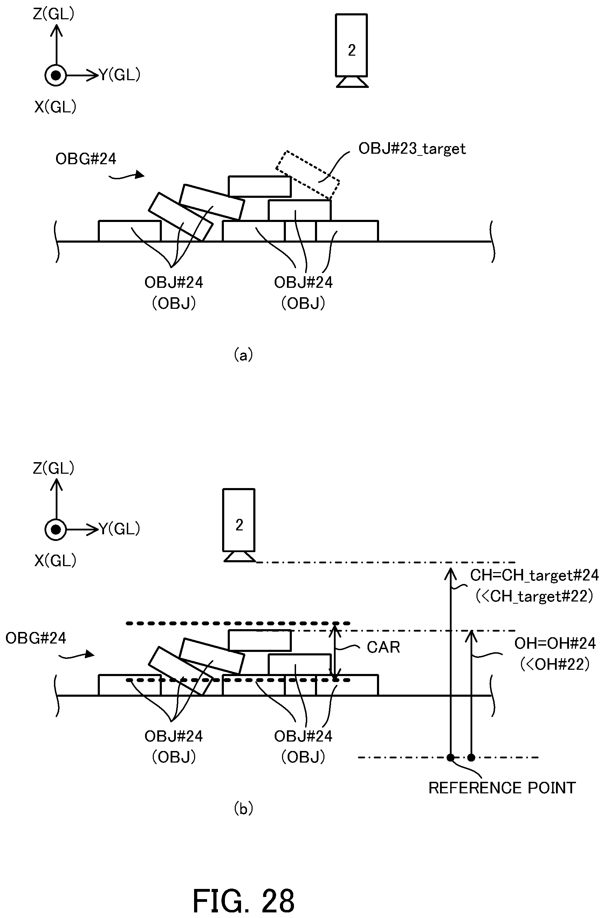

In the third modified example, in order to adjust the imaging height CH of the imaging system 2, the control apparatus 3 newly acquires at least one of the image data IMG_2D and IMG_3D from the imaging system 2 (the step S8a in FIG. 24). Specifically, as illustrated in FIG. 28(b), the imaging system 2 images a fourth target object group OBG#24, which includes at least a part of the plurality of target objects OBJ contained in the container CB. Note that FIG. 28(b) illustrates an example in which the imaging system 2 images the fourth target object group OBG#24 after the end effector 4 holds the third target object OBJ#23_target illustrated in FIG. 28(a). As a result, the control apparatus 3 acquires the image data IMG_3D (it is referred to as image data IMG_3D#24), which indicates an image in which the fourth target object group OBG#24 is captured, from the imaging system 2 (the step S8a in FIG. 24). Note that the target object OBJ included in the fourth target object group OBG#24 is referred to as a fourth target object OBJ#24 in the below-described description for convenience of description.

The fourth target object group OBG#24 may be different from the third target object group OBG#23. As one example, the control apparatus 3 newly acquires at least one of the image data IMG_2D and IMG_3D generated by the imaging system 2 imaging the target object OBJ contained in the container CB after the end effector 4 holds the third target object OBJ#23_target as described above in the third modified example. Therefore, as illustrated in FIG. 28(b), at least the third target object OBJ#23_target held by the end effector 4 may not be included in the fourth target object group OBG#24. Namely, the fourth target object group OBG#24 may be different from the third target object group OBG#23. As another example, in a case where the position of the imaging system 2 imaging the fourth target object group OBG#24 is different from the position of the imaging system 2 imaging the third target object group OBG#23, there is a possibility that the target object OBJ included in the field of view of the imaging system 2 changes. In this case, the fourth target object group OBG#24 may be different from the third target object group OBG#23.

Then, the control apparatus 3 calculates the height OH of the fourth target object group OBG#24 by using the image data IMG_3D#24 (specifically, the three-dimensional position data WSD generated from the image data IMG_3D#24). As a result, as illustrated in FIG. 27(a), the control apparatus 3 calculates a fourth height OH#24 as the height OH of the fourth target object group OBG#24.

Here, as described above, at least one of the plurality of third target objects OBJ#23 included in the third target object group OBG#23 has been transported from the container CB by the robot 1 at a timing at which the fourth target object group OBG#24 is imaged. Therefore, at least one of the plurality of third target objects OBJ#23 included in the third target object group OBG#23 (furthermore, included in the second target object group OBG#22 that is the same as the third target object group OBG#23) is not included in the fourth target object group OBG#24. Namely, the number of fourth target objects OBJ#24 included in the fourth target object group OBG#24 is smaller than the number of third target objects OBJ#23 included in the third target object group OBG#23 (furthermore, included in the second target object group OBG#22 that is the same as the third target object group OBG#23). As a result, the fourth height OH#24 of the fourth target object group OBG#24 is usually lower than the height OH#22 of the second target object group OBG#22 that is the same as the third target object group OBG#23. However, the fourth height OH#24 of the fourth target object group OBG#24 may be the same as the second height OH#22 of the second target object group OBG#22.

Then, the control apparatus 3 determines the target imaging height CH_target of the imaging system 2 based on the calculated fourth height OH#24 and the imaging allowable range CAR of the imaging system 2. Specifically, as illustrated in FIG. 28(b), the control apparatus 3 may determine, as a fourth target imaging height CH_target#24, the target imaging height CH_target satisfying a condition that "the calculated fourth height OH#24 is included in the imaging allowable range CAR of the imaging system 2 positioned at the target imaging height CH_target" is satisfied. Then, the control apparatus 3 generates the robot control signal for controlling the robot 1 so that the imaging height CH of the imaging system 2 becomes the fourth target imaging height CH_target#24 determined based on the fourth height OH#24. As a result, the imaging system 2 is positioned at the fourth target imaging height CH_target#24.

Here, the fourth height OH#24 of the fourth target object group OBG#24 is usually lower than the second height OH#22 of the second target object group OBG#22 as described above. In this case, the fourth target imaging height CH_target#24 determined based on the fourth height OH#24 may also be lower than the second target imaging height CH_target#23 determined based on the second height OH#22.

Furthermore, as illustrated in FIG. 28(b), in a case where the robot control processing illustrated in FIG. 24 is performed, the height OH of the fourth target object group OBG#24 calculated at the step S7 of FIG. 24 is the same as the height OH of the target object group OBG actually contained in the container CB at a timing at which the height OH of the fourth target object group OBG#24 is calculated. This is because the fourth target object group OBG#24 itself is contained in the container at the timing at which the height OH of the fourth target object group OBG#24 is calculated. Namely, in a case where the robot control processing illustrated in FIG. 24 is performed, the difference of the height OH of the target object group OBG calculated at the step S7 is smaller, compared to a case where the robot control processing illustrated in FIG. 4 is performed. As a result, the control apparatus 3 can determine the fourth target imaging height CH_target#24 satisfying the condition that "at least one of the plurality of fourth target objects OBJ#24 included in the fourth target object group OBG#24 is included in the imaging allowable range CAR of the imaging system 2 positioned at the fourth target imaging height CH_target#24" more properly, compared to a case where the robot control processing illustrated in FIG. 4 is performed.

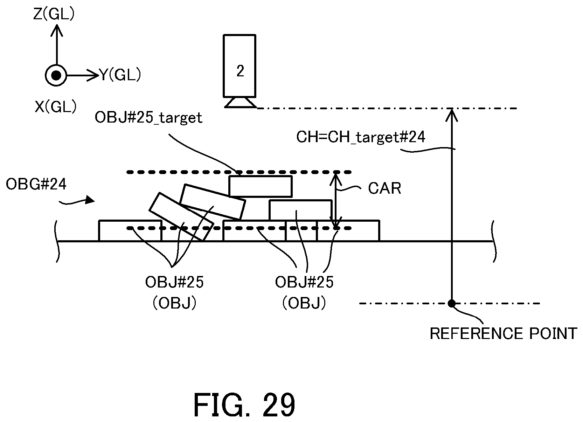

Then, as illustrated in FIG. 29, the imaging system 2 positioned at the fourth target imaging height CH_target#24 images a fifth target object group OBG#25 that includes at least a part of the plurality of target objects OBJ contained in the container CB (the step S1 in FIG. 24). As a result, the control apparatus 3 acquires the image data IMG_3D (it is referred to as image data IMG_3D#25), which indicates an image in which the fifth target object group OBG#25 is captured, from the imaging system 2 (the step S1 in FIG. 24). Note that the target object OBJ included in the fifth target object group OBG#25 is referred to as a fifth target object OBJ#25 for convenience of description in the below-described description.

The fifth target object group OBG#25, which is imaged by the imaging system 2 positioned at the fourth target imaging height CH_target#24, may be the same as the fourth target object group OBG#24, which is imaged by the imaging system 2 to determine the fourth target imaging height CH_target#24. Specifically, the target object OBJ is not usually transported to the outside of the container CB in a period that is after the imaging system 2 images the fourth target object group OBG#24 to determine the fourth target imaging height CH_target#24 and that is before the imaging system 2 positioned at the fourth target imaging height CH_target#24 imagers the fifth target object group OBG#25. Under this premise, in a case where the position of the imaging system 2 imaging the fifth target object group OBG#25 is the same as the position of the imaging system 2 imaging the fourth target object group OBG#24, the target object OBJ included in the field of view of the imaging system 2 does not change. In this case, the fifth target object group OBG#25 may be the same as the fourth target object group OBG#24. Therefore, it is likely that at least one of the plurality of fifth target objects OBJ#25 included in the fifth target object group OBG#25, which is the same as the fourth target object group OBG#24, is included in the imaging allowable range CAR of imaging system 2 positioned at the fourth target imaging height CH_target#24 that is determined based on the imaged result of the fourth target object group OBG#24. In this case, the imaging system 2 can properly image at least one of the plurality of fifth target objects OBJ#25 included in the fifth target object group OBG#25.

However, the fifth target object group OBG#25 may be different at least partially from the fourth target object group OBG#24. For example, in a case where the position of the imaging system 2 imaging the fifth target object group OBG#25 is different from the position of the imaging system 2 imaging the fourth target object group OBG#24, there is a possibility that the target object OBJ included in the field of view of the imaging system 2 changes. In this case, the fifth target object group OBG#25 may be different from the fourth target object group OBG#24.

Note that the number of target objects OBJ contained in the container CB at the timing at which the imaging system 2 images the fifth target object group OBG#25 from the fourth target imaging height CH_target#24 may be smaller than the number of target objects OBJ contained in the container CB at the timing at which the imaging system 2 images the third target object group OBG#23 from the second target imaging height CH_target#22. The number of fifth target objects OBJ#25 included in the fifth target object group OBG#25 that is imaged by the imaging system 2 from the fourth target imaging height CH_target#24 may be smaller than the number of third target objects OBJ#23 included in the third target object group OBG#23 that is imaged by the imaging system 2 from the second target imaging height CH_target#22. A weight of the container CB in which the plurality of target objects OBJ are contained at the timing at which the imaging system 2 images the fifth target object group OBG#25 from the fourth target imaging height CH_target#24 may be lighter than a weight of the container CB in which the plurality of target objects OBJ are contained at the timing at which the imaging system 2 images the third target object group OBG#23 from the second target imaging height CH_target#22. Note that the "weight of the container CB in which the plurality of target objects OBJ are contained" here may be a weight that includes both a weight of the container CB itself and the weight of the plurality of target objects OBJ contained in the container CB.

Then, the position pose calculation unit 312 generates the position pose data POI (it is referred to as position pose data POI#25) of one fifth target object OBJ#25, which is selected as the process performed object from the plurality of fifth target objects OBJ#25, based on the image data IMG_3D#25 (specifically, based on the three-dimensional position data WSD generated from the image data IMG_3D#25) (the step S2 to the step S3 in FIG. 24). Note that one fifth target object OBJ#25 that is selected as the process performed object is referred to as a fifth target object OBJ#25_target in the below-described description.

It is likely that the position pose calculation unit 312 selects the fifth target object OBJ#25, which is included in the imaging allowable range CAR of the imaging system 2 positioned at the fourth target imaging height CH_target#24, as the fifth target object OBJ#25_target that is the process performed object. This is because it is likely that the matching similarity of the target object OBJ that is included in the imaging allowable range CAR is higher than the matching similarity of the target object OBJ that is not included in the imaging allowable range CAR. In this case, the position pose calculation unit 312 can generate the position pose data POI that indicates at least one of the position and the pose of the fifth target object OBJ#25, which is included in the imaging allowable range CAR of the imaging system 2 positioned at the fourth target imaging height CH_target#24, with higher accuracy. This is because it is more likely that the accuracy of the position pose data POI of the target object OBJ is higher as the matching similarity of the target object OBJ is higher. Conversely, the fourth target imaging height CH_target#24 may be the imaging height CH satisfying a condition that "the fifth target object OBJ#25 that is selected as the process performed object is included in the imaging allowable range CAR of the imaging system 2 positioned at the fourth target imaging height CH_target#24". Namely, the control apparatus 3 may determine the fourth target imaging height CH_target#24 to satisfy the condition that "the fifth target object OBJ#25 that is selected as the process performed object is included in the imaging allowable range CAR of the imaging system 2 positioned at the fourth target imaging height CH_target#24". However, the position pose calculation unit 312 may select the fifth target object OBJ#25, which is not included in the imaging allowable range CAR of the imaging system 2 positioned at the fourth target imaging height CH_target#24, as the fifth target object OBJ#25_target that is the process performed object.

On the other hand, the fifth target object OBJ#25_target that is selected as the process performed object may not be included in the imaging allowable range CAR of the imaging system 2 before the imaging height CH is adjusted. Namely, the fifth target object OBJ#25_target that is selected as the process performed object may not be included in the imaging allowable range CAR of the imaging system 2 positioned at the second target imaging height CH_target#22. This is because the imaging height CH of the imaging system 2 is adjusted in accordance with the height OH of the target object group OBG contained in the container CB, and therefore, one target object OBJ is included in the imaging allowable range CAR of the imaging system 2 at a fourth time that is after a fifth time even in a case where the one target object OBJ has not been included in the imaging allowable range CAR of the imaging system 2 at the fifth time, and as a result, the one target object OBJ is selectable as the process performed object as described with reference to FIG. 18(a) to FIG. 18(b) and FIG. 19. Namely, one target object OBJ is included in the imaging allowable range CAR of the imaging system 2 positioned at the fourth target imaging height CH_target#24 as time passes even in a case where the one target object OBJ has not been included in the imaging allowable range CAR of the imaging system 2 positioned at the second target imaging height CH_target#22, and as a result, the one target object OBJ is selectable as the process performed object.

Note that the fifth target object OBJ#25_target that is selected as the process performed object may be the second target object OBJ#22 that has not been included in the imaging allowable range CAR of the imaging system 2 positioned at the second target imaging height CH_target#22. Alternatively, the fifth target object OBJ#25_target that is selected as the process performed object may be the second target object OBJ#22 that has been included in the imaging allowable range CAR of the imaging system 2 positioned at the second target imaging height CH_target#22 but that has not been selected as the process performed object.

Then, the signal generation unit 313 generates the robot control signal for controlling the robot 1 so that the end effector 4 approaches the fifth target object OBJ#25_target, based on the position pose data POI#25 of the fifth target object OBJ#25_target (the step S4 in FIG. 24). After the end effector 4 approaches the fifth target object OBJ#25_target based on the robot control signal generated at the step S4, the robot 1 performs the predetermined process on the fifth target object OBJ#25_target at the step S5. Namely, the robot 1 holds the fifth target object OBJ#25_target contained in the container CB, transports the held fifth target object OBJ#25_target from the container CB, and releases it at the release position outside container CB.

Then, the same processing is repeated until it is determined at the step S6 in FIG. 24 that the robot control processing should be ended.

### (3-1-3) Technical Effect of First Modified Example

As described above, even in the first modified example, the imaging height CH of the imaging system 2 is adjusted in accordance with the change of the height OH of the target object group OBG. Therefore, an effect that is the same as the effect, which is achieved by the robot control processing illustrated in FIG. 4 described above, is achievable.

Furthermore, in the first modified example, specifically, the target object group OBG, whose height OH is calculated to adjust the imaging height CH of the imaging system 2, is the same as the target object group OBG including the target object OBJ on which the end effector 4 performs the predetermined process. Specifically, the target object group OBG, whose height OH is calculated to adjust the imaging height CH of the imaging system 2, is the same as the target object group OBG that is imaged by the imaging system 2 to control the robot 1 to perform the predetermined process on the target object OBJ. Therefore, the calculated result of the height OH of the target object group OBG represents, more accurately, the height OH of the target object group OBG including the target object OBJ on which the end effector 4 performs the predetermined process. Namely, the calculated result for the height OH of the target object group OBG represents, more accurately, the height OH of the target object group OBG that is imaged by the imaging system 2 to control the robot 1 to perform the predetermined process on the target object OBJ. Therefore, the imaging system 2, which is positioned at the target imaging height CH_target that is determined based on the accurate height OH of the target object group OBG, can properly image the target object group OBG to control the robot 1 to perform the predetermined process on the target object OBJ. As a result, the control apparatus 3 can calculate at least one of the position and the pose of the target object OBJ with higher accuracy. Therefore, the control apparatus 3 can control the robot 1 to perform the predetermined process on the target object OBJ with higher accuracy.

However, in the first modified example, since the imaging system 2 needs to re-image target object group OBG to adjust the imaging height CH of the imaging system 2, there is a possibility that a cycle time of the robot control processing deteriorates (the cycle time becomes longer), compared to a case where the robot control processing illustrated in FIG. 4, in which the imaging system 2 may not re-image target object group OBG to adjust the imaging height CH of the imaging system 2, is performed. Conversely, the robot control processing illustrated in FIG. 4 has the advantage of achieving a shorter cycle time, compared to the robot control processing in the first modified example illustrated in FIG. 24.

However, in the first modified example, the deterioration of the cycle time is correspondingly suppressed in a case where the imaging system 2 re-images the target object group OBG to adjust the imaging height CH of the imaging system 2 before the robot 1 completes the predetermined process on the target object OBJ. Alternatively, the cycle time may not deteriorate at all in some cases. For example, the deterioration of the cycle time is correspondingly suppressed or the cycle time does not deteriorate in a case where the imaging system 2 re-images the target object group OBG to adjust the imaging height CH of the imaging system 2 in a first period until the end effector 4 releases the target object OBJ at the release position RP outside the container CB after holding it as described above. This is because the first period is a time that is necessary for the robot 1 to perform the predetermined process on the target object OBJ, regardless of whether the imaging system 2 re-images the target object group OBG to adjust the imaging height CH of the imaging system 2. For example, the deterioration of the cycle time is correspondingly suppressed or the cycle time does not deteriorate in a case where the imaging system 2 re-images the target object group OBG to adjust the imaging height CH of the imaging system 2 in a second period until the end effector 4 moves to the process start position PSP above the container CB after releasing the target object OBJ as described above. This is because the second period is a time that is necessary for the robot 1 to start the predetermined process on the next target object OBJ, regardless of whether the imaging system 2 re-images the target object group OBG to adjust the imaging height CH of the imaging system 2.

Note that a time that is available for the control apparatus 3 to adjust the imaging height CH of the imaging system 2 is longer in a case where the imaging system 2 images the target object group OBG in the first period that is before the end effector 4 releases the target object OBJ, compared to a case where the imaging system 2 images the target object group OBG in the second period that is after the end effector 4 releases the target object OBJ. This is because at least one of the image data IMG_2D and IMG_3D, which is necessary to adjust the imaging height CH of the imaging system 2 can be acquired earlier in a case where the imaging system 2 images the target object group OBG in the first period that is before the end effector 4 releases the target object OBJ, compared to a case where the imaging system 2 images the target object group OBG in the second period that is after the end effector 4 releases the target object OBJ.

### (3-1-4) Other Description of First Modified Example

In the first modified example, there is a possibility that no target object OBJ remains in the container CB in a case where the imaging system 2 images the target object group OBG contained in the container CB before the control apparatus 3 determines that the robot control processing may not be ended at the step S6. This is because the control apparatus 3 may determine whether the robot 1 performs the predetermined process on another target object OBJ (in other words, whether the target object OBJ on which the robot 1 should perform the predetermined process remains in the container CB) in order to determine whether the robot control processing should be ended at the step S6. In this case, it is unknown, at a timing at which the control apparatus 3 has not yet determined whether the robot control processing should be ended, whether any target object OBJ, on which the robot 1 should perform the predetermined process, remains in the container CB. Therefore, there is a possibility that no target object OBJ remains in the container CB in some cases. Even in this case, the imaging system 2 may image the target object group OBG that may be contained in the container CB. However, in a case where no target object OBJ remains in the container CB, imaging the target object group OBG that may be contained in the container CB may be considered to be equivalent to imaging the interior of the container CB (namely, the containing space SP). Alternatively, regardless of whether any target object OBJ remains in the container CB, imaging the target object group OBG contained in the container CB may be considered to be equivalent to imaging the interior of the container CB (namely, the containing space SP).

In a case where no target object OBJ remains in the container CB, the target object OBJ is not captured in the image indicated by at least one of the image data IMG_2D and IMG_3D generated by the imaging system 2. Therefore, the control apparatus 3 cannot calculate the height OH of the target object group OBG contained in the container CB to adjust the imaging height CH of the imaging system 2. Therefore, the control apparatus 3 cannot determine the target imaging height CH_target of the imaging system 2 based on the height OH of the target object group OBG. In this case, the control apparatus 3 may set the above-described initial imaging height as the target imaging height CH_target of the imaging system 2. Alternatively, the control apparatus 3 may set a height of a waiting position, which is set in advance as a position at which the imaging system 2 should wait, as the target imaging height CH_target of the imaging system 2. Alternatively, instead of determining the target imaging height CH_target, the control apparatus 3 may generate the robot control signal for controlling the robot 1 so that the imaging system 2 moves to the waiting position, which is set in advance as the position at which the imaging system 2 should wait, or an initial position, which is set in advance as a position at which the imaging system 2 should wait at a timing at which the robot control processing is started.

Note that the control apparatus 3 may set the above-described initial imaging height as the target imaging height CH_target of the imaging system 2 not only in a case described in the first modified example but also in any case where the control apparatus 3 cannot calculate the height OH of the target object group OBG. The control apparatus 3 may set the height of the waiting position, which is set in advance as the position at which the imaging system 2 should wait, as the target imaging height CH_target of the imaging system 2 not only in a case described in the first modified example but also in any case where the control apparatus 3 cannot calculate the height OH of the target object group OBG. The control apparatus 3 may generate the robot control signal for controlling the robot 1 so that the imaging system 2 moves the waiting position, which is set in advance as the position at which the imaging system 2 should wait, or the initial position, which is set in advance as the position at which the imaging system 2 should wait at the timing at which the robot control processing is started not only in a case described in the first modified example but also in any case where the control apparatus 3 cannot calculate the height OH of the target object group OBG.

In the above-described description, the imaging system 2 generates at least one of the image data IMG_2D and IMG_3D, which is acquired by the control apparatus 3 at the step S8a to adjust the imaging height CH of the imaging system 2. Namely, the imaging system 2 images the target object OBJ to generate at least one of image data IMG_2D and IMG_3D, which is used to adjust the imaging height CH of the imaging system 2. However, an imaging system that is different from the imaging system 2 may generate at least one of the image data IMG_2D and IMG_3D, which is acquired by control apparatus 3 at the step S8a to adjust the imaging height CH of the imaging system 2. Namely, the imaging system that is different from the imaging system 2 may image the target object OBJ to generate at least one of the image data IMG_2D and IMG_3D, which is used to adjust the imaging height CH of the imaging system 2. The imaging system that is different from the imaging system 2 may be mounted on the robot 1 (especially, the robot arm 12). Alternatively, the imaging system that is different from the imaging system 2 may be mounted on a part that is different from the robot 1 (especially, the robot arm 12). For example, the imaging system that is different from the imaging system 2 may be positioned on a ceiling of a building in which the robot system SYS is installed. For example, the imaging apparatus that is different from the imaging system 2 may be attached to a structural object such as a pillar.

The control apparatus 3 may acquire the image data, whose type is different from a type of the image data acquired at the step S1 in FIG. 24, at the step S8a in FIG. 24. For example, in a case where the control apparatus 3 acquires the image data IMG_2D at the step S1 in FIG. 2, the control apparatus 3 may acquire the image data IMG_3D, whose type is different from the type of the image data IMG_2D at the step S8a in FIG. 24. For example, in a case where the control apparatus 3 acquires the image data IMG_3D at the step S1 in FIG. 2, the control apparatus 3 may acquire the image data IMG_2D, whose type is different from the type of the image data IMG_3D at the step S8a in FIG. 24.

### (3-2) Second Modified Example

In the above-described description, the control apparatus 3 calculates the height OH of the target object group OBG by using at least one of the image data IMG_2D and IMG_3D generated by the imaging system 2 in order to adjust the imaging height CH of the imaging system 2 at the step S7 in FIG. 4 or FIG. 24. In a second modified example, the control apparatus 3 may calculate the height OH of the target object group OBG by using a height calculation method that is different from a height calculation method using at least one of the image data IMG_2D and IMG_3D generated by the imaging system 2. Next, a specific example of the height calculation method, which is different from the method using at least one of the image data IMG_2D and IMG_3D generated by the imaging system 2, will be described.

### (3-2-1) First Height Calculation Method using Imaging System 91 different from Imaging System 2

The control apparatus 3 may calculate the height OH of the target object group OBG by using an imaging system 91 that is different from imaging system 2. For example, in a case where the robot system SYS includes the imaging system 91, the control apparatus 3 may calculate the height OH of the target object group OBG by using the imaging system 91 of the robot system SYS. For example, in a case where the robot system SYS does not include the imaging system 91, the control apparatus 3 may calculate the height OH of the target object group OBG by using the imaging system 91 external to the robot system SYS. The imaging system 91 may be positioned at a position and a pose that allow an imaging field of view of the imaging system 91 to include as many target objects OBJ as possible.

The imaging system 91 may be attached to the robot 1. The imaging system 91 may be attached to the robot arm 12. The imaging system 91 may be attached to a part that is different from the robot 1 (especially, the robot arm 12). For example, the imaging system 91 may be attached to a ceiling of a building in which the robot system SYS is installed. For example, the imaging system 91 may be attached to a robot that is different from the robot 1. For example, the imaging system 91 may be attached to a structural object such as a pillar.

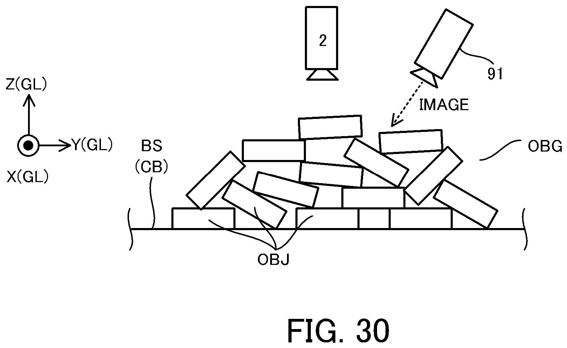

As illustrated in FIG. 30 that is a cross-sectional view illustrating the imaging system 91, the imaging system 91 is configured to image the target object group OBG contained in the container CB. The imaging system 91 is configured to image the target object group OBG contained in the container CB to generate image data indicating an image in which the target object group OBG is captured. The control apparatus 3 may calculate the height OH of the target object group OBG by using the image data generated by the imaging system 91.

Note that a method for calculating the height OH of the target object group OBG by using the image data generated by the imaging system 91 may be the same as a method for calculating the height OH of the target object group OBG by using at least one of the image data IMG_2D and IMG_3D generated by the imaging system 2. For example, the control apparatus 3 may calculate the height OH of the target object group OBG by analyzing the image indicated by the image data generated by the imaging system 91. Alternatively, in a case where the image data generated by the imaging system 91 is image data whose type is the same as that of the image data IMG_2D, the control apparatus 3 may calculate the height OH of the target object group OBG by performing the 2D matching processing using the image data generated by the imaging system 91. Alternatively, in a case where the image data generated by the imaging system 91 is image data whose type is the same as that of the image data IMG_3D (for example, the stereo image data), the control apparatus 3 may generate three-dimensional position data (for example, point cloud data) from the image data generated by the imaging system 91, as in a case where the three-dimensional position data WSD is generated from the image data IMG_3D. Then, the control apparatus 3 may calculate the height OH of the target object group OBG by using the generated three-dimensional position data.

Thus, according to a first height calculation method, the control apparatus 3 calculates the height OH of the target object group OBG by using the imaging system 91. In this case, the imaging system 91 may be considered to serve as a measurement apparatus that is configured to directly or indirectly measure the height OH of the target object group OBG.

### (3-2-2) Second Height Calculation Method using Weight Sensor 92

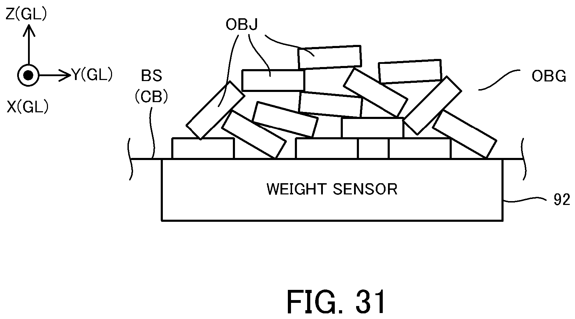

The control apparatus 3 may calculate the height OH of the target object group OBG by using a weight sensor 92. For example, as illustrated in FIG. 31 that is a cross-sectional view illustrating the weight sensor 92, the weight sensor 92 is configured to measure a weight of the target object group OBG contained in the container CB. In this case, the weight sensor 92 may be built into the container CB. Alternatively, the container CB may be positioned on the weight sensor 92 and the target object group OBG may be contained in the container CB that is positioned on the weight sensor 92. A measured result by the weight sensor 92 (namely, a measured result of the weight of the target object group OBG) is output to the control apparatus 3.

The control apparatus 3 may calculate the height OH of the target object group OBG based on the measured result by the weight sensor 92 (namely, the measured result of the weight of the target object group OBG). Specifically, it is expected that the weight of the target object group OBG is heavier and the height OH of the target object group OBG is higher as the number of target objects OBJ contained in the target object group OBG contained in the container CB is larger. In other words, it is expected that the weight of the target object group OBG is lighter and the height OH of the target object group OBG is lower as the number of target objects OBJ contained in the target object group OBG contained in the container CB is smaller. Namely, it is expected that the weight of the target object group OBG and the height OH of the target object group OBG have a relationship that the height OH of the target object group OBG is higher as the weight of the target object group OBG is heavier. In other words, namely, it is expected that the weight of the target object group OBG and the height OH of the target object group OBG have a relationship that the height OH of the target object group OBG is lower as the weight of the target object group OBG is lighter. The control apparatus 3 may calculate (in this case, estimate) the height OH of the target object group OBG based on the measured result by the weight sensor 92 (namely, the measured result of the weight of the target object group OBG) by using this relationship. For example, the control apparatus 3 may calculate (in this case, estimate) the height OH of the target object group OBG by using a table, which indicates the relationship between the height OH of the target object group OBG and the weight of the target object group OBG, and the measured result by the weight sensor 92.

Thus, according to a second height calculation method, the control apparatus 3 calculates the height OH of the target object group OBG by using the weight sensor 92 that is configured to measure the weight, which is a parameter different from the height OH. In this case, the weight sensor 92 may be considered to serve as a measurement apparatus that is configured to indirectly measure the height OH of the target object group OBG.

### (3-2-3) Third Height Calculation Method using Object Detection Sensor 93

The control apparatus 3 may calculate the height OH of the target object group OBG by using an object detection sensor 93. For example, in a case where the robot system SYS includes the object detection sensor 93, the control apparatus 3 may calculate the height OH of the target object group OBG by using the object detection sensor 93 of the robot system SYS. For example, in a case where the robot system SYS does not include the object detection sensor 93, the control apparatus 3 may calculate the height OH of the target object group OBG by using the object detection sensor 93 external to the robot system SYS.

The object detection sensor 93 is configured to detect the target object OBJ. For example, the object detection sensor 93 may be an optical sensor, such as a photoelectric sensor, that is configured to detect the target object OBJ by emitting detection light toward the target object OBJ and detecting reflected light from the target object OBJ. However, the object detection sensor 93 may be an optical sensor that is different from the photoelectric sensor. Moreover, as long as the object detection sensor 93 is configured to detect the target object OBJ, the object detection sensor 93 may be an existing sensor that is different from the optical sensor.

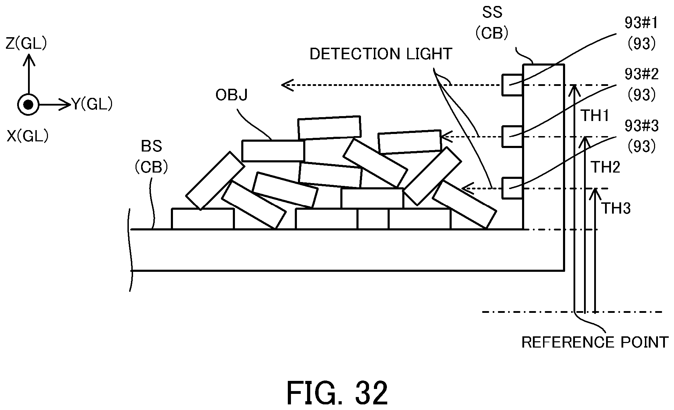

The object detection sensor 93 may be positioned at a desired position so that the height OH of the target object group OBG can be calculated based on a detected result of the target object OBJ by the object detection sensor 93. For example, as illustrated in FIG. 32, a plurality of object detection sensors 93 may be positioned at mutually different heights, respectively. In the example illustrated in FIG. 32, three object detection sensors 93 (specifically, the object detection sensor 93#1, the object detection sensor 93#2, and the object detection sensor 93#3) are positioned at a first height TH1, a second height TH2, and a third height TH3 that are different from one another on the side wall SS of the container CB, respectively. Note that each of the first height TH1, the second height TH2, and the third height TH3 may mean the height from the above-described reference point. Moreover, the first height TH1 is higher than the second height TH2, and the second height TH2 is higher than the third height TH3. Furthermore, in the example illustrated in FIG. 32, each object detection sensor 93 emits the detection light along a horizontal direction. In this case, each object detection sensor 93 may detect the target object OBJ that is positioned at the height at which each object detection sensor 93 is positioned. For example, object detection sensor 93#1 may detect the target object OBJ that is positioned at the first height TH1. For example, the object detection sensor 93#2 may detect the target object OBJ that is positioned at the second height TH2. For example, the object detection sensor 93#3 may detect the target object OBJ that is positioned at a third height TH3.

The detected results by the plurality of object detection sensors 93 are output to the control apparatus 3. The control apparatus 3 may calculate the height OH of the target object group OBG based on the detected results by the plurality of object detection sensors 93. For example, in a case where one object detection sensor 93 positioned at one height detects the target object OBJ (namely, the detection light is irradiated onto the target object OBJ, and the reflected light from the target object OBJ returns to the one object detection sensor 93), it is expected that the height OH of the target object group OBG is higher than the one height. On the other hand, in a case where the object detection sensor 93 positioned at the one height does not detect the target object OBJ (namely, the detection light is not irradiated onto the target object OBJ, and the reflected light from the target object OBJ does not return to the object detection sensor 93), it is expected that the height OH of the target object group OBG is lower than the one height. Therefore, the control apparatus 3 can calculate (in this case, estimate) the height OH (especially, the approximate height OH) of the target object group OBG based on the detected results by the plurality of object detection sensors 93. For example, in a case where all object detection sensors 93#1 to 93#3 have detected the target object OBJ, the control apparatus 3 may calculate a height that is equal to or higher than the first height TH1 as the height OH of the target object group OBG. For example, in a case where the object detection sensor 93#1 have not detected the target object OBJ and the object detection sensors 93#2 to 93#3 have detected the target object OBJ, the control apparatus 3 may calculate a height that is equal to or higher than the second height TH2 and that is equal to or lower than the first height TH1 as the height OH of the target object group OBG. For example, in a case where the object detection sensors 93#1 to 93#2 have not detected the target object OBJ and the object detection sensor 93#3 have detected the target object OBJ, the control apparatus 3 may calculate a height that is equal to or higher than the third height TH3 and that is equal to or lower than the second height TH2 as the height OH of the target object group OBG. For example, in a case where none of the object detection sensors 93#1 to 93#3 have detected the target object OBJ, the control apparatus 3 may calculate a height that is equal to or lower than the third height TH3 as the height OH of the target object group OBG.

Calculating the height OH of the target object group OBG based on the detected results by the plurality of object detection sensors 93 may be considered to be equivalent to calculating the height OH of the target object group OBG based on the number of object detection sensors 93 that have not detected the target object OBJ. For example, in a case where the number of object detection sensors 93 that have not detect the target object OBJ is zero (namely, all object detection sensors 93#1 to 93#3 detect the target object OBJ), the control apparatus 3 may calculate a height that is equal to or higher than the first height TH1 as the height OH of the target object group OBG. For example, in a case where the number of object detection sensors 93 that have not detect the target object OBJ is one (namely, the object detection sensor 93#1 has not detected the target object OBJ and the object detection sensors 93#2 to 93#3 have detected the target object OBJ), the control apparatus 3 may calculate a height that is equal to or higher than the second height TH2 and that is equal to or lower than the first height TH1 as the height OH of the target object group OBG. For example, in a case where the number of object detection sensors 93 that have not detected the target object OBJ is two (namely, the object detection sensors 93#1 to 93#2 have not detected the target object OBJ and the object detection sensor 93#3 has detected the target object OBJ), the control apparatus 3 may calculate a height that is equal to or higher than the third height TH3 and that is equal to or lower than the second height TH2 as the height OH of the target object group OBG. For example, in a case where the number of object detection sensors 93 that have not detected the target object OBJ is zero (namely, none of object detection sensors 93#1 to 93#3 have detected the target object OBJ), the control apparatus 3 may calculate a height that is equal to or lower than the third height TH3 as the height OH of the target object group OBG.

Thus, according to the third height calculation method, the control apparatus 3 calculates the height OH of the target object group OBG by using the object detection sensors 93. In this case, the object detection sensors 93 may be considered to serve as a measurement apparatuses that is configured to directly measure the height OH of the target object group OBG.

### (3-2-4) Fourth Height Calculation Method using Marker 94

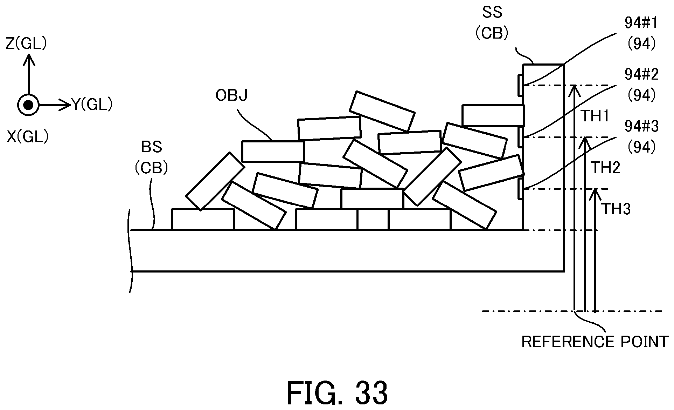

The control apparatus 3 may calculate the height OH of the target object group OBG by using a marker 94. Specifically, as illustrated in FIG. 33 that illustrates the marker 94, the marker 94 may be positioned on the container CB in which the target object OBJ is contained. Especially, the marker 94 may be placed on a surface (usually, an inner surface) of the container CB facing the containing space SP in which the target object OBJ is contained. For example, the marker 94 may be positioned on the side wall SS of the container CB facing the containing space SP. Note that the marker 94 may be detachable from the container CB, or the marker 94 may be fixed to the container CB. Alternatively, the marker 94 may be printed on the container CB.

The marker 94 is a marker that can be imaged by the imaging system 2 (alternatively, the imaging system 91 used in the first height calculation method, the same applies in the below-described description of the fourth height calculation method). However, since the marker 94 is positioned at a position facing the containing space SP for the target object OBJ, the imaging system 2 cannot image the marker 94 in a case where the marker 94 is hidden by the target object OBJ.

The marker 94 may be positioned at a desired position so that the height OH of the target object group OBG can be calculated based on the imaged result of the marker 94 by the imaging system 2 (namely, at least one of the image data IMG_2D and IMG_3D generated by the imaging system 2 imaging the marker 94). For example, as illustrated in FIG. 33, a plurality of markers 94 may be positioned at mutually different heights, respectively. In the example illustrated in FIG. 33, three markers 94 (specifically, the marker 94#1, the marker 94#2, and the marker 94#3) are positioned at a first height TH1, a second height TH2, and a third height TH3 that are different from one another on the side wall SS of the container CB, respectively. Note that each of the first height TH1, the second height TH2, and the third height TH3 may mean the height from the above-described reference point. Moreover, the first height TH1 is higher than the second height TH2, and the second height TH2 is higher than the third height TH3.

In this case, the control apparatus 3 may calculate the height OH of the target object group OBG based on the imaged result of the markers 94 by the imaging system 2. For example, in a case where one marker 94 positioned at one height is not captured in the image generated by the imaging system 2 (namely, in a case where the marker 94 cannot be detected based on the image data that is the imaged result by the imaging system 2), it is expected that the one marker 94 is hidden by the target object OBJ. In this case, it is expected that the target object OBJ is positioned at the one height at which the one marker 94 is positioned or at a position that is higher than the one height. As a result, it is expected that the height OH of the target object group OBG is higher than the one height. On the other hand, for example, in a case where one marker 94 positioned at one height is captured in the image generated by the imaging system 2 (namely, in a case where the marker 94 can be detected based on the image data that is the imaged result by the imaging system 2), it is expected that the one marker 94 is not hidden by the target object OBJ. In this case, it is expected that the target object OBJ is not positioned at the one height at which the one marker 94 is positioned or at a position that is higher than the one height. As a result, it is expected that the height OH of the target object group OBG is lower than the one height. Therefore, the control apparatus 3 can calculate (in this case, estimate) the height OH (especially, the approximate height OH) of the target object group OBG based on the imaged result of the marker 94 by the imaging system 2. For example, in a case where none of the markers 94#1 to 94#3 are captured in the image generated by the imaging system 2, the control apparatus 3 may calculate a height that is equal to or higher than the first height TH1 as the height OH of the target object group OBG. For example, in a case where the marker 94#1 is captured in the image generated by the imaging system 2 and the markers 94#2 to 94#3 are not captured in the image generated by the imaging system 2, the control apparatus 3 may calculate a height that is equal to or higher than the second height TH2 and that is equal to or lower than the first height TH1 as the height OH of the target object group OBG. For example, in a case where the markers 94#1 and 94#2 are captured in the image generated by the imaging system 2 and the marker 94#3 is not captured in the image generated by the imaging system 2, the control apparatus 3 may calculate a height that is equal to or higher than the third height TH3 and that is equal to or lower than the second height TH2 as the height OH of the target object group OBG. For example, in a case where all markers 94#1 to 94#3 are captured in the image generated by the imaging system 2, the control apparatus 3 may calculate a height that is equal to or lower than the third height TH3 as the height OH of the target object group OBG.

The control apparatus 3 may calculate the height OH of the target object group OBG by using at least one of the image data IMG_2D and IMG_3D acquired at the step S1 in FIG. 4 as the imaged result of the markers 94 by the imaging system 2. In this case, the imaging system 2 may not newly image the marker 94 to calculate the height H of the target object group OBG_trigger. However, the imaging system 2 may not newly image the marker 94 to calculate the height OH of the target object group OBG. The control apparatus 3 may calculate the height OH of the target object group OBG by using at least one of the image data IMG_2D and IMG_3D generated by the imaging system 2 newly imaging the marker 94 to calculate the height OH of the target object group OBG, without using at least one of the image data IMG_2D and IMG_3D acquired at the step S1 in FIG. 4 as the imaged result of the marker 94 by the imaging system 2.

Calculating the height OH of the target object group OBG based on the imaged result of the marker 94 by the imaging system 2 may be considered to be equivalent to calculating the height OH of the target object group OBG based on the number of markers 94 detected based on the imaged result of the marker 94 by the imaging system 2. For example, in a case where the number of detected markers 94 is zero (namely, none of the markers 94#1 to 94#3 are captured in the image generated by the imaging system 2), the control apparatus 3 may calculate a height that is equal to or higher than the first height TH1 as the height OH of the target object group OBG. For example, in a case where the number of detected markers 94 is one (namely, the marker 94#1 is captured in the image generated by the imaging system 2 and the markers 94#2 to 94#3 are not captured in the image generated by the imaging system 2), the control apparatus 3 may calculate a height that is equal to or higher than the second height TH2 and that is equal to or lower than the first height TH1 as the height OH of the target object group OBG. In a case where the number of detected markers 94 is two (namely, the markers 94#1 and 94#2 are captured in the image generated by the imaging system 2 and the marker 94#3 is not captured in the image generated by the imaging system 2), the control apparatus 3 may calculate a height that is equal to or higher than the third height TH3 and that is equal to or lower than the second height TH2 as the height OH of the target object group OBG. For example, in a case where the number of detected markers 94 is three (namely, all markers 94#1 to 94#3 are captured in the image generated by the imaging system 2), the control apparatus 3 may calculate a height that is equal to or lower than the third height TH3 as the height OH of the target object group OBG.

Shapes of the plurality of markers 94 may be different from each other. In this case, the control apparatus 3 may calculate the height OH of the target object group OBG based on the shape of the marker 94 captured in the image generated by the imaging system 2. For example, an example in which the marker 94#1 has a first shape, the marker 94#2 has a second shape that is different from the first shape, and the marker 94#3 has a third shape that is different from the first to second shapes in the example illustrated in FIG. 33 will be described. In this case, in a case where the shape of the marker 94 captured in the image generated by the imaging system 2 is only the first shape (namely, only the marker 94#1 is captured in the image generated by the imaging system 2), the control apparatus 3 may calculate a height that is equal to or higher than the second height TH2 and that is equal to or lower than the first height TH1 as the height OH of the target object group OBG. For example, in a case where the shapes of the markers 94 captured in the image generated by the imaging system 2 are only the first and second shapes (namely, only the markers 94#1 to 94#2 are captured in the image generated by the imaging system 2), the control apparatus 3 may calculate a height that is equal to or higher than the third height TH3 and that is equal to or lower than the second height TH2 as the height OH of the target object group OBG. For example, in a case where the shapes of the marker 94 captured in the image generated by the imaging system 2 are the first to third shapes (namely, all markers 94#1 to 94#3 are captured in the image generated by the imaging system 2), the control apparatus 3 may calculate a height that is equal to or lower than the third height TH3 as the height OH of the target object group OBG.

Thus, according to the fourth height calculation method, the control apparatus 3 calculates the height OH of the target object group OBG by using the markers 94 and the imaging system 2. In this case, the imaging system 2 may be considered to serve as a measurement apparatus that is configured to directly measure the height OH of the target object group OBG, and the marker 94 may be considered to serve as a measurement member that is configured to directly measure the height OH of the target object group OBG.

### (3-2-5) Fifth Height Calculation Method using Number of Target Objects OBJ held (picked up) by End Effector 4

The control apparatus 3 may calculate the height OH of the target object group OBG by using information related to the number of target objects OBJ that has been held (picked up) by the end effector 4. Note that the information related to the number of target objects OBJ that has been held (picked up) by the end effector 4 is known information to the control apparatus 3, because the end effector 4 holds (picks up) the target object OBJ under the control of the control apparatus 3. Note that the number of target objects OBJ that has been held (picked up) by the end effector 4 is equivalent to the number of target objects OBJ that has been transported (namely, taken out) from the container CB by the end effector 4.

Specifically, it is expected that the number of target objects remaining in the container CB is smaller and the height OH of the target object group OBG is lower as the number of target objects OBJ that has been picked up by the end effector 4 (namely, the number of target objects OBJ that has been taken out from the container CB) is larger. In other words, it is expected that the number of target objects remaining in the container CB is larger and the height OH of the target object group OBG is higher as the number of target objects OBJ that has been picked up by the end effector 4 is smaller. Namely, it is expected that the number of target objects OBJ that has been picked up by the end effector 4 and the height OH of the target object group OBG have a relationship that the height OH of the target object group OBG is higher as the number of target objects OBJ that has been picked up by the end effector 4 is smaller. In other words, namely, it is expected that the number of target objects OBJ that has been picked up by the end effector 4 and the height OH of the target object group OBG have a relationship that the height OH of the target object group OBG is lower as the number of target objects OBJ that has been picked up by the end effector 4 is larger. The control apparatus 3 may calculate (in this case, estimate) the height OH of the target object group OBG based on the information related to the number of target objects OBJ that has been picked up by the end effector 4 by using this relationship. For example, the control apparatus 3 may calculate (In this case, estimate) the height OH of the target object group OBG by using a table, which indicates the relationship between the height OH of the target object group OBG and the number of target objects OBJ that has been picked up by the end effector 4, and the information related to the number of target objects OBJ that has been picked up by the end effector 4.

### (3-3) Third Modified Example

In the above-described description, the control apparatus 3 adjusts the imaging height CH of the imaging system 2 based on the height OH of at least a part of the plurality of target objects OBJ contained in the container CB (namely, the height OH of the target object group OBG). Specifically, in order to adjust the imaging height CH of the imaging system 2, the control apparatus 3 determines the target imaging height CH_target based on the height OH of at least a part of the plurality of target objects OBJ contained in the container CB (namely, the height OH of the target object group OBG). Here, it can be said that the height OH of the target object group OBG contained in the container CB is a parameter indicating a quantity of the target object group OBG contained in the container CB (namely, a quantity of the target object OBJ included in the target object group OBG). This is because it can be said that the quantity of the target object group OBG is larger as the height OH of the target object group OBG is higher. In other words, it can be said that the quantity of the target object group OBG is smaller as the height OH of the target object group OBG is lower.

Considering that the height OH of the target object group OBG is considered to be equivalent to the quantity of the target object group OBG, the control apparatus 3 may determine the target imaging height CH_target based on the quantity of the target object group OBG in addition to or instead of the height OH of the target object group OBG, in a case where any parameter that is different from the height OH indicates the quantity of the target object group OBG. In this case, the quantity of the target object group OBG contained in the container CB may mean a quantity of all of the plurality of target objects OBJ contained in the container CB (namely, the quantity of the target object group OBG that includes all of the plurality of target objects OBJ contained in the container CB). Alternatively, the quantity of the target object group OBG contained in the container CB may mean a quantity of a part of the plurality of target objects OBJ contained in the container CB (namely, the quantity of the target object group OBG that includes a part of the plurality of target objects OBJ contained in the container CB). For example, the target object group OBG for which the quantity is calculated may be the target object group OBG that includes at least one target object OBJ imaged by the imaging system 2 to adjust the imaging height CH of the imaging system 2. For example, the target object group OBG for which the quantity is calculated may be the target object group OBG that includes at least one target object OBJ included in the imaging field of view of the imaging system 2 that images the target object OBJ to adjust the imaging height CH of the imaging system 2. In other words, the target object group OBG for which the quantity is calculated may not include at least one target object OBJ, which is not imaged by the imaging system 2 to perform the position pose computing, of the plurality of target objects OBJ contained in the container CB. The target object group OBG for which the quantity is calculated may not include at least one target object OBJ, which is not included in the imaging field of view of the imaging system 2 that images the target object OBJ to adjust the imaging height CH of the imaging system 2, of the plurality of target objects OBJ contained in the container CB.

The quantity of whole of the target object group OBG may be used as the quantity of the target object group OBG. For example, the quantity of whole of the plurality of target objects OBJ included in the target object group OBG may be used as the quantity of the target object group OBG. Alternatively, the quantity of a part of the target object group OBG may be used as the quantity of the target object group OBG. For example, the quantity of at least one target object OBJ, which is selected from the plurality of target objects OBJ included in the target object group OBG based on a desired selection condition, may be used as the quantity of the target object group OBG.

The number of target objects OBJ included in the target object group OBG is one example of the parameter that indicates the quantity of the target object group OBG. A weight of the target object group OBG (namely, a weight of the target objects OBJ included in the target object group OBG) is one example of the parameter that indicates the quantity of the target object group OBG. A volume of the target object group OBG (namely, a volume of the target objects OBJ included in the target object group OBG) is one example of the parameter that indicates the quantity of the target object group OBG.

Next, the examples of the parameter that indicates the quantity of the target object group OBG will be described specifically.

### (3-3-1) Number of Target Objects OBJ included in Target Object Group OBG

The control apparatus 3 may determine the target imaging height CH_target based on the number of target objects OBJ included in the target object group OBG. In this case, the control apparatus 3 may determine the target imaging height CH_target so that the target imaging height CH_target is lower as the number of target objects OBJ included in the target object group OBG is smaller. The control apparatus 3 may determine the target imaging height CH_target so that the target imaging height CH_target is higher as the number of target objects OBJ included in the target object group OBG is larger. The control apparatus 3 may determine the target imaging height CH_target based on the number of target objects OBJ included in the target object group OBG by using a table that indicates a relationship between the number of target objects OBJ included in the target object group OBG and the target imaging height CH_target. In this case an effect, which is the same as an effect that is achievable in a case where the target imaging height CH_target is determined based on the height OH of the target object group OBG described above, is achievable. This is because it is expected that the number of target objects OBJ included in the target object group OBG and the height OH of the target object group OBG have a relationship that the height OH of the target object group OBG is higher as the number of target objects OBJ included in the target object group OBG is larger, (namely, the height OH of the target object group OBG is lower as the number of target objects OBJ included in the target object group OBG is smaller).

The control apparatus 3 may calculate the number of target objects OBJ included in the target object group OBG and determine the target imaging height CH_target based on the calculated number.

As a first example, the control apparatus 3 may calculate the number of target objects OBJ included in the target object group OBG by using at least one of the image data IMG_2D and IMG_3D generated by the imaging system 2 (alternatively, the image data generated by the imaging system 91 used by the first height calculation method in the second modified example, the same applies in the third modified example). For example, the control apparatus 3 may calculate the number of target objects OBJ included in the target object group OBG by analyzing the image indicated by the image data generated by the imaging system 91. Alternatively, the control apparatus 3 may calculate the number of target objects OBJ included in the target object group OBG by using the three-dimensional position data WSD generated from the image data IMG_3D, in addition to or instead of analyzing the image indicated by at least one of the image data IMG_2D and IMG_3D. In this case, the imaging system 2 may be considered to serve as a measurement apparatus that is configured to indirectly measure the number (the quantity) of target objects OBJ included in the target object group OBG.

As a second example, the control apparatus 3 may calculate the number of target objects OBJ included in the target object group OBG based on the measured result by the weight sensor 92 used by the second height calculation method in the second modified example (namely, the measured result of the weight of the target object group OBG). Specifically, it is expected that the weight of the target object group OBG is heavier as the number of target objects OBJ included in the target object group OBG is larger. In other words, it is expected that the weight of the target object group OBG is lighter as the number of target objects OBJ included in the target object group OBG is smaller. Namely, it is expected that the number of target objects OBJ included in the target object group OBG and the weight of the target object group OBG have a relationship that the number of target objects OBJ included in the target object group OBG is larger as the weight of the target object group OBG is heavier. In other words, it is expected that the number of target objects OBJ included in the target object group OBG and the weight of the target object group OBG have a relationship that the number of target objects OBJ included in the target object group OBG is smaller as the weight of the target object group OBG is lighter. The control apparatus 3 may calculate (in this case, estimate) the number of target objects OBJ included in the target object group OBG based on the measured result by the weight sensor 92 (namely, the measured result of the weight of the target object group OBG) by using this relationship. For example, the control apparatus 3 may calculate (in this case, estimate) the number of target objects OBJ included in the target object group OBG) by using a table, which indicates the relationship between the number of target objects OBJ included in the target object group OBG and the weight of the target object group OBG, and the measured result by the weight sensor 92. In this case, the weight sensor 92 may be considered to serve as a measurement apparatus that is configured to indirectly measure the number (the quantity) of target objects OBJ included in the target object group OBG.

As a third example, the control apparatus 3 may calculate the number of target objects OBJ included in the target object group OBG based on the information that is related to the number of target objects OBJ that has been held (picked up) by the end effector 4 and that is used by the fifth height calculation method in the second modified example. For example, the control apparatus 3 may calculate, as the number of target objects OBJ included in the target object group OBG (namely, the number of target objects OBJ remaining in the container CB), a number that is calculated by subtracting the number of target objects OBJ, which has been held (picked up) by the end effector 4, from the number of target objects OBJ, which has been contained in the container CB before starting the robot control processing.

Note that the control apparatus 3 may calculate the number of target objects OBJ included in the target object group OBG based on the detected result by the object detection sensor 93 used by the third height calculation method in the second modified example. The control apparatus 3 may calculate the number of target objects OBJ included in the target object group OBG based on the imaged result of the marker 94 used by the fourth height calculation method in the second modified example. This is because it is expected that the number of target objects OBJ included in the target object group OBG and the height OH of the target object group OBG have a relationship that the number of target objects OBJ included in the target object group OBG is larger as the height OH of the target object group OBG is higher (namely, the number of target objects OBJ included in the target object group OBG is smaller as the height OH of the target object group OBG is lower).

Moreover, the number of target objects OBJ included in the target object group OBG and the number of target objects OBJ that has been picked up by the end effector 4 have a relationship that the number of target objects OBJ that has been picked up by the end effector 4 is smaller as the number of target objects OBJ included in the target object group OBG is larger (namely, the number of target objects OBJ that has been picked up by the end effector 4 is larger as the number of target objects OBJ included in the target object group OBG is smaller). Therefore, the control apparatus 3 may adjust the imaging height CH of the imaging system 2 based on the number of target objects OBJ that has been picked up by the end effector 4 (namely, the number of target objects OBJ that has been taken out from the container CB), in addition to or instead of the number of target objects OBJ included in the target object group OBG (namely, the number of target objects OBJ remaining in the container CB).

### (3-3-2) Weight of Target Object Group OBG

The control apparatus 3 may determine the target imaging height CH_target based on the weight of the target object group OBG. In this case, the control apparatus 3 may determine the target imaging height CH_target so that the target imaging height CH_target is lower as the weight of the target object group OBG is lighter. The control apparatus 3 may determine the target imaging height CH_target so that the target imaging height CH_target is higher as the weight of the target object group OBG is heavier. The control apparatus 3 may determine the target imaging height CH_target based on the weight of the target object group OBG by using a table that indicates a relationship between the weight of the target object group OBG and the target imaging height CH_target. In this case, an effect, which is the same as an effect that is achievable in a case where the target imaging height CH_target is determined based on the height OH of the target object group OBG described above, is achievable. This is because it is expected that the weight of the target object group OBG and the height OH of the target object group OBG have a relationship that the height OH of the target object group OBG is higher as the weight of the target object group OBG is heavier (namely, the height OH of the target object group OBG is lower as the weight of the target object group OBG is lighter).

The control apparatus 3 may calculate the weight of the target object group OBG and determine the target imaging height CH_target based on the calculated weight.

As a first example, the control apparatus 3 may calculate the weight of the target object group OBG by using at least one of the image data IMG_2D and IMG_3D generated by the imaging system 2. For example, the control apparatus 3 may calculate the weight of the target object group OBG by analyzing the image indicated by the image data generated by the imaging system 2. Alternatively, the control apparatus 3 may calculate the weight of the target object group OBG by using the three-dimensional position data WSD generated from the image data IMG_3D, in addition to or instead of analyzing the image indicated by at least one of the image data IMG_2D and IMG_3D. In this case, the imaging system 2 may be considered to serve as a measurement apparatus that is configured to indirectly measure the weight (the quantity) of target object group OBG.

As a second example, the control apparatus 3 may calculate the weight of the target object group OBG based on the measured result by the weight sensor 92 used by the second height calculation method in the second modified example (namely, the measured result of the weight of the target object group OBG). In this case, the weight sensor 92 may be considered to serve as a measurement apparatus that is configured to directly measure the weight (the quantity) of the target object group OBG.

As a third example, the control apparatus 3 may calculate the weight of the target object group OBG based on the information that is related to the number of target objects OBJ held (picked up) by the end effector 4 and that is used by the fifth height calculation method in the second modified example. Specifically, it is expected that the weight of the target object group OBG remaining in the container CB is heavier as the number of target objects OBJ that has been picked up by the end effector 4 (namely, the number of target objects OBJ that has been taken out from the container CB) is smaller. In other words, it is expected that the weight of the target object group OBG remaining in the container CB is lighter as the number of target objects OBJ that has been picked up by the end effector 4 (namely, the number of target objects OBJ that has been taken out from the container CB) is larger. Namely, it is expected that the number of target objects OBJ that has been picked up by the end effector 4 and the weight of the target object group OBG has a relationship that the weight of the target object group OBG is heavier as the number of target objects OBJ that has been picked up by the end effector 4 is smaller. In other words, it is expected that the number of target objects OBJ that has been picked up by the end effector 4 and the weight of the target object group OBG has a relationship that the weight of the target object group OBG is lighter as the number of target objects OBJ that has been picked up by the end effector 4 is larger. The control apparatus 3 may calculate (in this case, estimate) the weight of the target object group OBG based on the information related to the number of target objects OBJ that has been picked up by the end effector 4 by using this relationship. For example, the control apparatus 3 may calculate (in this case, estimate) the weight of the target object group OBG by using a table, which indicates the relationship between the number of target object OBJ that has been picked up by the end effector 4 and the weight of the target object group OBG, and the information related to the number of target object OBJ that has been picked up by the end effector 4.

Note that the control apparatus 3 may calculate the weight of the target object group OBG based on the detected result by the object detection sensor 93 that is used by the third height calculation method in the second modified example. The control apparatus 3 may calculate the weight of the target object group OBG based on the imaged result of the marker 94 that is used by the fourth height calculation method in the second modified example. This is because it is expected that the weight of the target object group OBG and the height OH of the target object group OBG have a relationship that the weight of the target object group OBG is heavier as the height OH of the target object group OBG is higher (namely, the weight of the target object group OBG is lighter as the height OH of the target object group OBG is lower).

### (3-3-3) Volume of Target Object Group OBG

The control apparatus 3 may determine the target imaging height CH_target based on the volume of the target object group OBG. In this case, in this case, the control apparatus 3 may determine the target imaging height CH_target so that the target imaging height CH_target is lower as the volume of the target object group OBG is smaller. The control apparatus 3 may determine the target imaging height CH_target so that the target imaging height CH_target is higher as the volume of the target object group OBG is larger. The control apparatus 3 may determine the target imaging height CH_target based on the volume of the target object group OBG by using a table that indicates a relationship between the volume of the target object group OBG and the target imaging height CH_target. In this case, an effect, which is the same as an effect that is achievable in a case where the target imaging height CH_target is determined based on the height OH of the target object group OBG described above, is achievable. This is because it is expected that the volume of the target object group OBG and the height OH of the target object group OBG have a relationship that the height OH of the target object group OBG is higher as the volume of the target object group OBG is larger (namely, the height OH of the target object group OBG is lower as the volume of the target object group OBG is smaller).

The control apparatus 3 may calculate the volume of the target object group OBG and determine the target imaging height CH_target based on the calculated volume.

As a first example, the control apparatus 3 may calculate the volume of the target object group OBG by using at least one of the image data IMG_2D and IMG_3D generated by the imaging system 2. For example, the control apparatus 3 may calculate the volume of the target object group OBG by analyzing the image indicated by the image data generated by the imaging system 2. Alternatively, the control apparatus 3 may calculate the volume of the target object group OBG by using the three-dimensional position data WSD generated from the image data IMG_3D, in addition to or instead of analyzing the image indicated by at least one of the image data IMG_2D and IMG_3D. In this case, the imaging system 2 may be considered to serve as a measurement apparatus that is configured to indirectly measure the volume (the quantity) of target object group OBG.

As a second example, the control apparatus 3 may calculate the volume of the target object group OBG based on the measured result by the weight sensor 92 used by the second height calculation method in the second modified example (namely, the measured result of the volume of the target object group OBG). Specifically, it is expected that the weight of the target object group OBG is heavier as the volume of the target object group OBG is larger. In other words, it is expected that the weight of the target object group OBG is lighter as the volume of the target object group OBG is smaller. Namely, it is expected that the volume of the target object group OBG and the weight of the target object group OBG have a relationship that the volume of the target object group OBG is larger as the weight of the target object group OBG is heavier. In other words, it is expected that the volume of the target object group OBG and the weight of the target object group OBG have a relationship that the volume of the target object group OBG is smaller as the weight of the target object group OBG is lighter. The control apparatus 3 may calculate (in this case, estimate) the volume of the target object group OBG based on the measured result by the weight sensor 92 (namely, the measured result of the weight of the target object group OBG) by using this relationship. For example, the control apparatus 3 may calculate (in this case, estimate) the volume of the target object group OBG by using a table, which indicates the relationship between the volume of the target object group OBG and the weight of the target object group OBG, and the measured result by the weight sensor 92. In this case, the weight sensor 92 may be considered to serve as a measurement apparatus that is configured to directly measure the volume (the quantity) of the target object group OBG.

As a third example, the control apparatus 3 may calculate the volume of the target object group OBG based on the information that is related to the number of target objects OBJ held (picked up) by the end effector 4 and that is used by the fifth height calculation method in the second modified example. Specifically, it is expected that the volume of the target object group OBG remaining in the container CB is larger as the number of target objects OBJ that has been picked up by the end effector 4 (namely, the number of target objects OBJ that has been taken out from the container CB) is smaller. In other words, it is expected that the volume of the target object group OBG remaining in the container CB is smaller as the number of target objects OBJ that has been picked up by the end effector 4 (namely, the number of target objects OBJ that has been taken out from the container CB) is larger. Namely, it is expected that the number of target objects OBJ that has been picked up by the end effector 4 and the volume of the target object group OBG has a relationship that the volume of the target object group OBG is larger as the number of target objects OBJ that has been picked up by the end effector 4 is smaller. In other words, it is expected that the number of target objects OBJ that has been picked up by the end effector 4 and the volume of the target object group OBG has a relationship that the volume of the target object group OBG is smaller as the number of target objects OBJ that has been picked up by the end effector 4 is larger. The control apparatus 3 may calculate (in this case, estimate) the volume of the target object group OBG based on the information related to the number of target objects OBJ that has been picked up by the end effector 4 by using this relationship. For example, the control apparatus 3 may calculate (in this case, estimate) the volume of the target object group OBG by using a table, which indicates the relationship between the number of target object OBJ that has been picked up by the end effector 4 and the volume of the target object group OBG, and the information related to the number of target object OBJ that has been picked up by the end effector 4.

Note that the control apparatus 3 may calculate the volume of the target object group OBG based on the detected result by the object detection sensor 93 that is used by the third height calculation method in the second modified example. The control apparatus 3 may calculate the volume of the target object group OBG based on the imaged result of the marker 94 that is used by the fourth height calculation method in the second modified example. This is because it is expected that the volume of the target object group OBG and the height OH of the target object group OBG have a relationship that the volume of the target object group OBG is larger as the height OH of the target object group OBG is higher (namely, the volume of the target object group OBG is smaller as the height OH of the target object group OBG is lower).

### (3-4) Fourth Modified Example

In the above-described description, the control apparatus 3 adjusts the imaging height CH of the imaging system 2 at the step S7 in FIG. 4 or FIG. 24. Namely, the control apparatus 3 adjusts the position of the imaging system 2 in the Z-axis direction (for example, the direction along the Z-axis of the global coordinate system or the direction along the Z-axis of a coordinate system different from the global coordinate system, the same applies in a fourth modified example below) at the step S7 in FIG. 4 or FIG. 24.

On the other hand, in the fourth modified example, the control apparatus 3 may adjust the position of the imaging system 2 in at least one of the X-axis direction (for example, the direction along the X-axis of the global coordinate system or the direction along the X-axis of a coordinate system different from the global coordinate system, the same applies in a fourth modified example below) and the Y-axis direction (for example, the direction along the Y-axis of the global coordinate system or the direction along the Y-axis of a coordinate system different from the global coordinate system, the same applies in a fourth modified example below), in addition to or instead of adjusting the position of the imaging system 2 in the Z-axis direction, at the step S7 in FIG. 4 or FIG. 24. Specifically, the control apparatus 3 may adjust the imaging horizontal position that is a horizontal position at which the imaging system 2 images the target object OBJ (namely, the position along the XY plane of the global coordinate system or the XY plane of a coordinate system different from the global coordinate system, the same applies in the fourth modified example below).

Alternatively, the control apparatus 3 may adjust an imaging pose of the imaging system 2, which is a pose at which the imaging system 2 images the target object OBJ, in addition to or instead of adjusting at least one of the imaging height CH and the imaging horizontal position (namely, the position of the imaging system 2) at the step S7 in FIG. 4 or FIG. 24. The imaging pose of the imaging system 2 may mean the pose of the imaging system 2 around at least one of a rotational axis along the X-axis direction, a rotational axis along the Y-axis direction, and a rotational axis along the Z-axis direction.

Next, a processing for adjusting the imaging horizontal position of the imaging system 2 and a processing for adjusting the imaging pose of the imaging system 2 will be described in sequence.

### (3-4-1) One Example of Processing for Adjusting Imaging Horizontal Position of Imaging System 2

The control apparatus 3 may adjust the imaging horizontal position of the imaging system 2 based on at least one of the image data IMG_2D and IMG_3D. For example, the control apparatus 3 may adjust the imaging horizontal position of the imaging system 2 based on at least one of the image data IMG_2D and IMG_3D acquired at the step S1 in FIG. 4 or FIG. 24. For example, the control apparatus 3 may adjust the imaging horizontal position of the imaging system 2 based on at least one of the image data IMG_2D and IMG_3D acquired at the step S8a of FIG. 24.

In order to adjust the imaging horizontal position of the imaging system 2, the control apparatus 3 may determine a target value of the imaging horizontal position of the imaging system 2 based on at least one of the image data IMG_2D and IMG_3D. Note that the target value of the imaging horizontal position of the imaging system 2 is referred to as a "target imaging horizontal position" in the below-described description.

The control apparatus 3 may calculate the height OH of the target object group OBG described above based on at least one of the image data IMG_2D and IMG_3D, and determine the target imaging horizontal position based on the calculated height OH of the target object group OBG. For example, the control apparatus 3 may first determine the target imaging height CH_target based on the calculated height OH of the target object group OBG as described above. Then, before actually moving the imaging system 2 to the target imaging height CH_target, the control apparatus 3 may determine whether or not the end effector 4 interferes with at least one target object OBJ contained in the container CB assuming that the imaging system 2 is moved to the target imaging height CH_target. Note that a state in which the end effector 4 interferes with the target object OBJ may include a state in which the end effector 4 contacts the target object OBJ. The state in which the end effector 4 interferes with the target object OBJ may include a state in which the end effector 4 does not contact the target object OBJ but a distance between the end effector 4 and the target object OBJ is shorter than a predetermined distance threshold value.

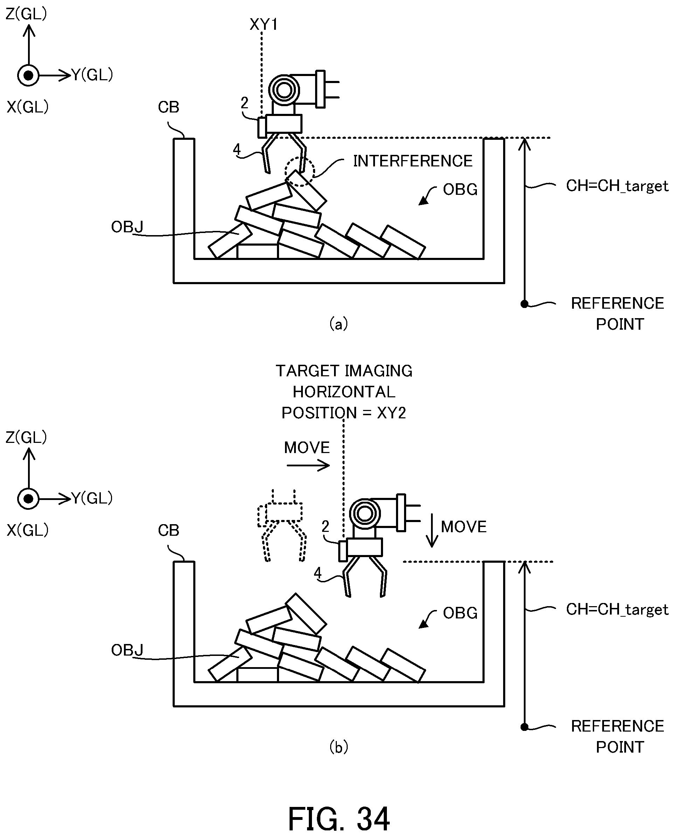

In a case where it is determined that the end effector 4 interferes with at least one target object OBJ, there is a possibility that moving the imaging system 2 to the target imaging height CH_target causes an interference between the end effector 4 and at least one target object OBJ. As a result, there is a possibility that at least one of the end effector 4 and the target object OBJ is damaged. Therefore, in this case, the control apparatus 3 may adjust the imaging horizontal position of the imaging system 2 so that the end effector 4 does not interfere with the target object OBJ. For example, in a case where it is determined that moving the imaging system 2 to the target imaging height CH_target causes the interference between the end effector 4 and at least one target object OBJ in a situation where the imaging horizontal position is a first horizontal position XY1 as illustrated in FIG. 34(a), the control apparatus 3 may determine a second horizontal position XY2, which satisfies a condition that "moving the imaging system 2 to the target imaging height CH_target does not cause the interference between the end effector 4 and the target object OBJ", as the target imaging horizontal position. Then, the control apparatus 3 may generate the robot control signal for controlling the robot 1 so that the imaging system 2 moves to the determined target imaging horizontal position. As a result, the imaging system 2 moves to the determined target imaging horizontal position. Then, the control apparatus 3 may actually move the imaging system 2 to the target imaging height CH_target. Namely, the control apparatus 3 may generate the robot control signal for controlling the robot 1 so that the imaging system 2 moves to the determined target imaging height CH_target. As a result, even in a case where the imaging system 2 moves to the target imaging height CH_target, the end effector 4 does not interfere with the target object OBJ. Then, the control apparatus 3 may acquire at least one of the image data IMG_2D and IMG_3D generated by the imaging system 2 imaging the target object OBJ at the target imaging horizontal position and target imaging height CH_target (the step S1 in FIG. 4 or FIG. 24), and generate the robot control signal for controlling the robot 1 so that the end effector 4 performs the predetermined process on the target object OBJ based on at least one of the acquired image data IMG_2D and IMG_3D (the steps S2 to S4 in FIG. 4 or FIG. 24).

On the other hand, in a case where it is determined that the end effector 4 does not interfere with at least one target object OBJ, it is expected that moving the imaging system 2 to the target imaging height CH_target does not cause the interference between the end effector 4 and at least one target object OBJ. In this case, the control apparatus 3 may not adjust the imaging horizontal position of the imaging system 2. The control apparatus 3 may move the imaging system 2 to the target imaging height CH_target without adjusting the imaging horizontal position of the imaging system 2.

Note that the control apparatus 3 may determine whether or not the end effector 4 interferes with another object that is different from the target object OBJ, in addition to or instead of determining whether or not the end effector 4 interferes with the target object OBJ, assuming that the imaging system 2 is moved to the target imaging height CH_target. The container CB is one example of another object that is different from the target object OBJ. In this case, in a case where it is determined that the end effector 4 interferes with another object that is different from the target object OBJ, the control apparatus 3 may adjust the imaging horizontal position of the imaging system 2 so that the end effector 4 does not interfere with another object that is different from the target object OBJ, as in a case where it is determined that the end effector 4 interferes with the target object OBJ.

Moreover, even in the fourth modified example, the control apparatus 3 may calculate the height OH of the target object group OBG by using the height calculation method that is different from the height calculation method using at least one of the image data IMG_2D and IMG_3D generated by the imaging system 2, as described in the second modified example. Even in the fourth modified example, the control apparatus 3 may adjust the imaging horizontal position of the imaging system 2 based on the quantity of the target object group OBG, in addition to or instead of the height OH of the target object group OBG, as described in the third modified example. Specifically, for example, the control apparatus 3 may calculate the target imaging height CH_target based on the quantity of the target object group OBG, in addition to or instead of the height OH of the target object group OBG, and determine whether or not the end effector 4 interferes with at least one target object OBJ based on the target imaging height CH_target.

### (3-4-2) One Example of Processing for Adjusting Imaging Pose of Imaging System 2

The control apparatus 3 may adjust the imaging pose of the imaging system 2 based on at least one of the image data IMG_2D and IMG_3D. For example, the control apparatus 3 may adjust the imaging pose of the imaging system 2 based on at least one of the image data IMG_2D and IMG_3D acquired at the step S1 in FIG. 4 or FIG. 24. For example, the control apparatus 3 may adjust the imaging pose of the imaging system 2 based on at least one of the image data IMG_2D and IMG_3D acquired at the step S8a of FIG. 24.

In order to adjust the imaging pose of the imaging system 2, the control apparatus 3 may determine a target value of the imaging pose of the imaging system 2 based on at least one of the image data IMG_2D and IMG_3D. Note that the target value of the imaging pose of the imaging system 2 is referred to as a "target imaging pose" in the below-described description.

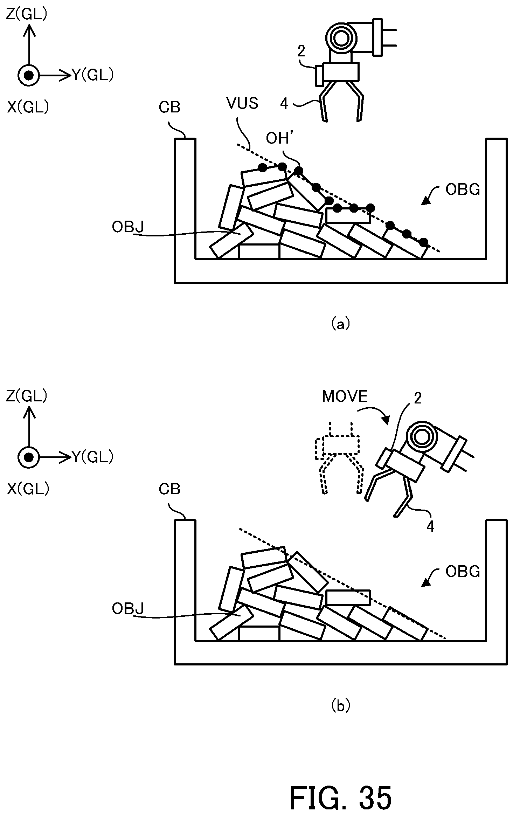

For example, as illustrated in FIG. 35(a), the control apparatus 3 may determine a virtual upper surface VUS of the target object group OBG based on at least one of the image data IMG_2D and IMG_3D. The virtual upper surface VUS of the target object group OBG may mean one surface of the target object group OBG that faces the direction in which imaging system 2 is positioned (for example, upward), assuming that the target object group OBG is a single object. In order to determine the virtual upper surface VUS, the control apparatus 3 may calculate a height OH'of the target object group OBG at each of a plurality of positions in the XY plane based on at least one of the image data IMG_2D and IMG_3D, as illustrated in FIG. 35(a). Note that a processing for calculating height OH' may be the same as the above-described processing for calculating the height OH (especially, the height OH of a certain part of the target object group OBG at each position in the XY plane). As one example, the control apparatus 3 may calculate, as the height OH' at each position in the XY plane, a height of a point that is positioned at the highest (alternatively, N-th highest) position at each position in the XY plane, based on the three-dimensional position data WSD (the point cloud data) generated from the image data IMG_3D. Then, the control apparatus 3 may determine a virtual surface, which is acquired by connecting the plurality of heights OH' of the target object group OBG at the plurality of positions in the XY plane, as the virtual upper surface VUS of the target object group OBG. Note that the control apparatus 3 may determine the virtual upper surface VUS by performing a fitting using a least squares method or the like based on the height of the point that is positioned at the highest (alternatively, N-th highest) position at each position in the XY plane.

Then, the control apparatus 3 may adjust the pose of the imaging system 2 so that the imaging system 2 faces the virtual upper surface VUS of the target object group OBG, as illustrated in FIG. 35(b). Specifically, the control apparatus 3 may determine the target value of the pose of the imaging system 2 (it is referred to as a target pose in the below-described description) so that the imaging system 2 faces the virtual upper surface VUS of the target object group OBG. Note that a state in which the imaging system 2 faces the virtual upper surface VUS of the target object group OBG may include a state in which the optical axis of the imaging system 2 intersects the virtual upper surface VUS of the target object group OBG at a predetermined angle (for example, any angle that is equal to or larger than 70 degrees, any angle that is equal to or larger than 75 degrees, any angle that is equal to or larger than 80 degrees, or any angle that is equal to or larger than 85 degrees). The state in which the imaging system 2 faces the virtual upper surface VUS of the target object group OBG may include a state in which the optical axis of the imaging system 2 is orthogonal to the virtual upper surface VUS of the target object group OBG. Namely, the state in which the imaging system 2 faces the virtual upper surface VUS of the target object group OBG may include a state in which the optical axis of the imaging system 2 intersects the virtual upper surface VUS of the target object group OBG at 90 degrees. Then, the control apparatus 3 may generate the robot control signal for controlling the robot 1 so that the pose of the imaging system 2 becomes the determined target pose. Namely, the control apparatus 3 may generate the robot control signal for controlling the robot 1 so that the imaging system 2 moves to change the pose of the imaging system 2 to the target pose. As a result, the imaging system 2 moves so that the pose of the imaging system 2 becomes the target pose. Then, the control apparatus 3 may actually move the imaging system 2 to the target imaging height CH_target. Namely, the control apparatus 3 may generate the robot control signal for controlling the robot 1 so that the imaging system 2 moves to the determined target imaging height CH_target. As a result, imaging system 2 can image the target object group OBG at the target imaging height CH_target while facing the virtual upper surface VUS of target object group OBG (namely, facing the target object group OBG).

In a case where the imaging system 2 that faces the virtual upper surface VUS of target object group OBG images the target object group OBG, it is likely that the number of target objects OBJ included in the imaging allowable range CAR is larger, compared to a case where the imaging system 2 that does not face the virtual upper surface VUS of target object group OBG images the target object group OBG. Therefore, it is likely that the number of target objects OBJ whose matching similarity is higher than the matching determination threshold value is larger. Therefore, it is more likely that the control apparatus 3 can select, as the process performed object, the target object OBJ whose matching similarity is higher, compared to a case where the number of target objects OBJ whose matching similarity is higher than the matching determination threshold value is low. Considering that the accuracy of the position pose data POI of the target object OBJ (namely, the calculation accuracy of at least one of the position and the pose) is higher as the matching similarity of the target object OBJ is higher as described above, the control apparatus 3 can generate the robot control signal for controlling the robot 1 so that the end effector 4 approaches the target object OBJ more accurately, based on the position pose data POI whose accuracy is higher. As a result, the end effector 4 can perform the predetermined process on the target object OBJ more accurately. In other words, it is unlikely that the end effector 4 fails to perform the predetermined process on the target object OBJ.

Note that the control apparatus 3 may calculate the height OH' of the target object group OBG by using the height calculation method that is different from the height calculation method using at least one of the image data IMG_2D and IMG_3D generated by the imaging system 2, as described in the second modified example, even in the fourth modified example. Even in the fourth modified example, the control apparatus 3 may adjust the imaging horizontal position of the imaging system 2 based on the quantity of the target object group OBG at each position in the XY plane, in addition to or instead of the height OH' of the target object group OBG at each position in the XY plane, as described in the third modified example.

### (3-5) Fifth Modified Example

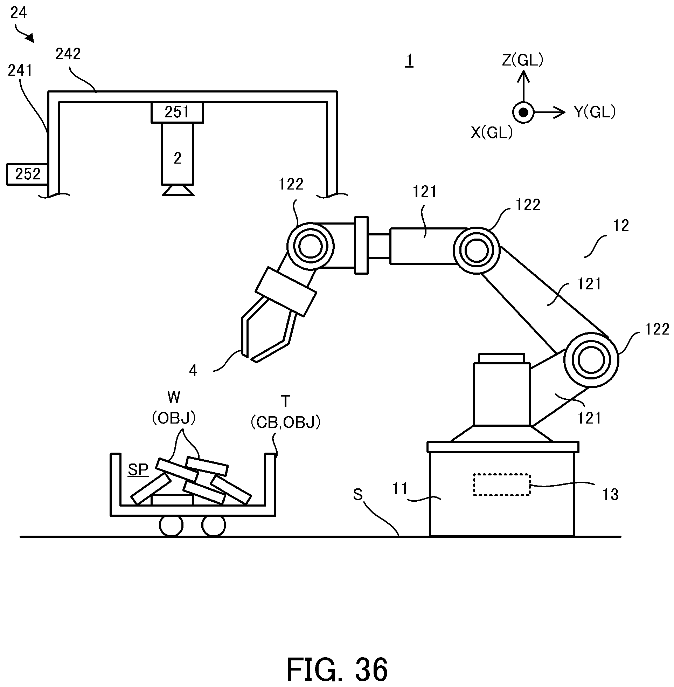

In the above-described description, the imaging system 2 is mounted on the robot 1 (especially, the robot arm 12). However, as illustrated in FIG. 36, the imaging system 2 may be mounted on a part that is different from the robot 1 (especially, the robot arm 12). The imaging system 2 may be position on the ceiling of the building in which the robot system SYS is installed. For example, the imaging system 2 may be attached to the structural object such as the pillar. For example, imaging system 2 may be attached to another robot that is different from robot 1. For example, imaging system 2 may be attached to a flyable drone.

In the below-described description, an example in which the imaging system 2 is attached to a support frame (a support member) 24, which is different from the robot 1, of the robot system SYS, will be described as illustrated in FIG. 36. The support frame 24 may include at least one pillar member 241 that extends upward from the support surface S and a beam member 242 that extends horizontally from the pillar member, and the imaging system 2 may be attached to the beam member 242.

Even in a case where the imaging system 2 is attached to the support frame 24, the control apparatus 3 may adjust the imaging height CH of the imaging system 2 by performing the robot control processing illustrated in FIG. 4 or FIG. 24. Even in a case where the imaging system 2 is attached to the support frame 24, the control apparatus 3 may adjust at least one of the imaging horizontal position and the imaging pose of the imaging system 2 as described in the fourth modified example. Therefore, the imaging system 2 may be attached to the support frame 24 so that at least one of the imaging height CH, the imaging horizontal position, and the imaging pose is adjustable. As a first example, as illustrated in FIG. 36, the imaging system 2 may be attached to the support frame 24 through a first movement apparatus 251, which is configured to move the imaging system 2 relative to the support frame 24 to adjust at least one of the imaging height CH, the imaging horizontal position, and the imaging pose. In this case, the control apparatus 3 may move the imaging system 2 by controlling the first movement apparatus 251 so that at least one of the imaging height CH, the imaging horizontal position, and the imaging pose is adjusted. As a second example, the imaging system 2 may be attached to a movable support frame 24. In this case, the control apparatus 3 may move the support frame 24 by controlling a second movement apparatus 252, which moves the support frame 24, to thereby adjust at least one of the imaging height CH, the imaging horizontal position, and the imaging pose of the imaging system 2 attached to the support frame 24. Namely, the control apparatus 3 may adjust at least one of the position and the pose of the support frame 24 by controlling the second movement apparatus 252 that moves the support frame 24, to thereby adjust at least one of the imaging height CH, the imaging horizontal position, and the imaging pose of the imaging system 2 attached to the support frame 24.

Note that another robot may move the imaging system 2 to adjust at least one of the imaging height CH, the imaging horizontal position, and the imaging pose of the imaging system 2 in a case where the imaging system 2 is attached to another robot that is different from the robot 1 as described above. In a case where the imaging system 2 is attached to the flyable drone as described above, the drone may move the imaging system 2 to adjust at least one of the imaging height CH, the imaging horizontal position, and the imaging pose of the imaging system 2.

In a case where the imaging system 2 is attached to the part that is different from the robot 1, there is a possibility that at least a part of the robot 1 and the end effector 4 is included in the imaging field of view of the imaging system 2. In this case, there is a possibility that at least a part of the robot 1 and the end effector 4 hides at least a part of the target object group OBG that should be imaged by the imaging system 2. Therefore, in the fifth modified example, the imaging system 2 may image the target object group OBG contained to adjust at least one of the imaging height CH, the imaging horizontal position, and the imaging pose of the imaging system 2 in the container CB in at least a part of a period during which whole of (alternatively, a part of) the robot 1 is outside the imaging field of view of the imaging system 2. The imaging system 2 may image the target object group OBG contained in the container CB to adjust at least one of the imaging height CH, the imaging horizontal position, and the imaging pose of the imaging system 2 in at least a part of a period during which whole of (alternatively, a part of) the end effector 4 is outside the imaging field of view of the imaging system 2.

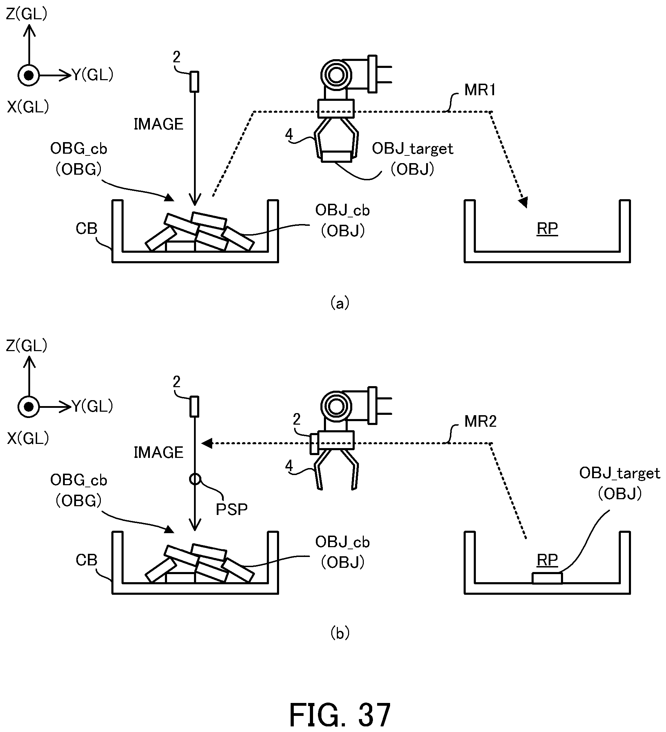

As one example, as illustrated in FIG. 37(a) and 37(b), the imaging system 2 may image the target object group OBG_cb contained in the container CB to adjust at least one of the imaging height CH, the imaging horizontal position, and the imaging pose after the target object OBJ_target held by the end effector 4 is transported to the outside of the container CB. Namely, the imaging system 2 may image the target object group OBG_cb contained in the container CB to adjust at least one of the imaging height CH, the imaging horizontal position, and the imaging pose of the imaging system 2 after the end effector 4 holding the target object OBJ_target moves to the outside of the container CB. As a result, at least one of the image data IMG_2D and IMG_3D, which is acquired by the control apparatus 3 to adjust at least one of the imaging height CH, the imaging horizontal position, and the imaging pose of the imaging system 2 at step S8a in FIG. 24, is generated. Note that FIG. 37(a) illustrates an example in which the imaging system 2 images the target object group OBG_cb after the target object OBJ_target held by the end effector 4 is transported to the outside of the container CB and before the target object OBJ_target held by the end effector 4 is released to the release position RP. FIG. 37(b) illustrates an example in which the imaging system 2 images the target object group OBG_cb after the target object OBJ_target held by the end effector 4 is transported to the outside of the container CB and after the target object OBJ_target held by the end effector 4 is released to the release position RP. Especially, FIG. 37(b) illustrates an example in which the imaging system 2 images the target object group OBG_cb before the end effector 4, which has released the target object OBJ_target to the release position RP, reaches a position above the container CB )for example, the process start position PSP described with reference to FIG. 26(b)).

Note that the control apparatus 3 may adjust the imaging height CH of the imaging system 2 by using at least one of the image data IMG_2D and IMG_3D acquired primarily for the purpose of generating the position pose data POI at the step S1 in FIG. 4 or FIG. 24, in addition to or instead of at least one of the image data IMG_2D and IMG_3D acquired primarily for the purpose of adjusting the imaging height CH of the imaging system 2 at the step S8a in FIG. 24, even in a case where the imaging system 2 is attached to the part that is different from the robot 1 (especially, the robot arm 12)

### (3-6) Other Modified Example

### (3-6-1) Modified Example of Robot Control Processing

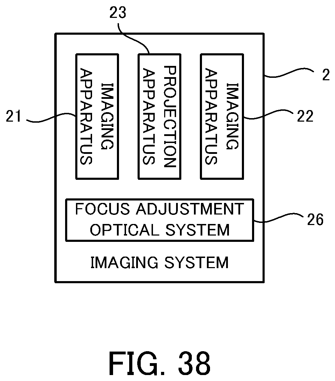

In the above-described description, the control apparatus 3 adjusts the imaging height CH (namely, the position in the Z-axis direction) of the imaging system 2 so that at least one target object OBJ is included in the imaging allowable range CAR of the imaging system 2 at the step S7 in FIG. 4 or FIG. 24. Here, adjusting the imaging height CH of the imaging system 2 is equivalent to moving the imaging allowable range CAR of the imaging system 2 relative to at least one target object OBJ so that at least one target object OBJ is included in the imaging allowable range CAR. In this case, the control apparatus 3 may adjust an optical characteristic of the imaging system 2 so that at least one target object OBJ is included in the imaging allowable range CAR of the imaging system 2, in addition to or instead of adjusting the imaging height CH of the imaging system 2. For example, in a case where the imaging system 2 includes a focus adjustment optical system 26 that is configured to adjust the best focus position BFP (see FIG. 10) as illustrated in FIG. 38, the control apparatus 3 may adjust (move) the best focus position BFP by controlling the focus adjustment optical system 26 so that at least one target object OBJ is included in the imaging allowable range CAR of the imaging system 2. In this case, the imaging allowable range CAR of the imaging system 2 moves due to the adjustment (the movement) of the best focus position BFP, and therefore, at least one target object OBJ is included in the imaging allowable range CAR of the imaging system 2 as in a case where the imaging height of the imaging system 2 is adjusted.

Note that each of a processing for adjusting the imaging height of the imaging system 2 and a processing for adjusting the best focus position BFP (namely, the optical characteristic) of the imaging system 2 may be considered to be equivalent to a processing for moving the imaging allowable range CAR of the imaging system 2 relative to at least one target object OBJ. In other words, each of a processing for adjusting the imaging height of the imaging system 2 and a processing for adjusting the best focus position BFP (namely, the optical characteristic) of the imaging system 2 may be considered to be equivalent to a processing for adjusting a positional relationship between at least one target object OBJ and the imaging allowable range CAR of the imaging system 2. Therefore, a processing for determining the target imaging height CH_target based on the height OH (alternatively, the quantity) of the target object group OBG may be considered to be equivalent to a processing for determining a target value of the positional relationship (a target positional relationship) between at least one target object OBJ and the imaging allowable range CAR of the imaging system 2 based on the height OH (alternatively, the quantity) of the target object group OBG. A processing for moving the imaging system 2 to the target imaging height CH_target may be considered to be equivalent to a processing for making the positional relationship between at least one target object OBJ and the imaging allowable range CAR of the imaging system 2 to be the same as the determined target positional relationship.

Similarly, each of a processing for adjusting the imaging height of the imaging system 2 and a processing for adjusting the best focus position BFP (namely, the optical characteristic) of the imaging system 2 may be considered to be equivalent to a processing for adjusting the positional relationship between at least one target object OBJ and the best focus position BFP, which is one of parameters determining the imaging allowable range CAR of the imaging system 2. Therefore, the processing for determining the target imaging height CH_target based on the height OH (alternatively, the quantity) of the target object group OBG may be considered to be equivalent to a processing for determining a target value of a positional relationship (a target positional relationship) between at least one target object OBJ and the best focus position BFP based on the height OH (alternatively, the quantity) of the target object group OBG. The processing for moving the imaging system 2 to the target imaging height CH_target may be considered to be equivalent to a processing for making the positional relationship between at least one target object OBJ and the best focus position BFP to be the same as the determined target positional relationship.

In the above-described description, the control apparatus 3 generates both the robot control signal for controlling the robot 1 so that the end effector 4 approaches the target object OBJ (the step S4 in FIG. 4) and the robot control signal for controlling the robot 1 to adjust the imaging height CH of the imaging system 2 (the step S7 in FIG. 4 or FIG. 24). However, the control apparatus 3 may generate the robot control signal for controlling the robot 1 to adjust the imaging height CH of the imaging system 2 (the step S7 in FIG. 4) and may not generate the robot control signal for controlling the robot 1 so that the end effector 4 approaches the target object OBJ (the step S4 in FIG. 4). In this case, a control apparatus that is different from control apparatus 3 may generate the robot control signal for controlling the robot 1 so that the end effector 4 approaches the target object OBJ (the step S4 in FIG. 4). Alternatively, the control apparatus 3 may generate the robot control signal for controlling the robot 1 so that the end effector 4 approaches the target object OBJ (the step S4 in FIG. 4) and may not generate the robot control signal for controlling the robot 1 to adjust the imaging height CH of the imaging system 2 (the step S7 in FIG. 4). In this case, a control apparatus that is different from control apparatus 3 may generate the robot control signal for controlling the robot 1 to adjust the imaging height CH of the imaging system 2 (the step S7 in FIG. 4).

In the above-described description, the control apparatus 3 (especially, the three-dimensional position data generation unit 311) generates the three-dimensional position data WSD from the image data IMG_3D. However, an apparatus that is different from the control apparatus 3 may generate the three-dimensional position data WSD from the image data IMG_3D. For example, the imaging system 2 that generates the image data IMG_3D may generate the three-dimensional position data WSD from the image data IMG_3D. In this case, the control apparatus 3 may acquire the three-dimensional position data WSD from the apparatus that is different from the control apparatus 3. The control apparatus 3 may calculate at least one of the position and the pose of the target object OBJ by using the three-dimensional position data WSD acquired from the apparatus that is different from the control apparatus 3.

### (3-6-2) Modified Example of Robot 1

In the above-described description, the end effector 4 (for example, the hand clipper or the vacuum clipper), which performs at least one of the holding process and the releasing process (for example, the placing process), is attached to the robot arm 12. However, the end effector 4 is not limited to an apparatus that performs at least one of the holding process and the releasing process, and may be an apparatus that performs another process on the target object OBJ.

As one example, a processing apparatus for processing the target object OBJ may be attached to the robot arm 12 as one example of the end effector 4. The processing apparatus may perform at least one of an additive manufacturing for adding a new build object to the target object OBJ, a subtractive manufacturing for removing a part of the target object OBJ, a welding processing for jointing two target objects OBJ, and a cutting processing for cutting the target object OBJ. The processing apparatus may process the target object OBJ by using a tool. In this case, the processing apparatus including the tool may be attached to the robot arm 12. Alternatively, the processing apparatus may process the target object OBJ by irradiating the target object OBJ with an energy beam (for example, light, electromagnetic wave, and charged particle beam). In this case, the processing apparatus including an irradiation apparatus that irradiates the target object OBJ with the energy beam may be attached to the robot arm 12.

The processing apparatus that is one example of the end effector 4 may perform soldering processing for soldering a component to the target object OBJ. The processing apparatus may solder the component to the target object OBJ by using a soldering copper. In this case, the processing apparatus including the soldering copper may be attached to the robot arm 12. Alternatively, the processing apparatus may solder the component to the target object OBJ by irradiating the solder with an energy beam (for example, light, electromagnetic wave, and charged particle beam). In this case, the processing apparatus including an irradiation apparatus that irradiates the target object OBJ with the energy beam may be attached to the robot arm 12.

As another example, a measurement apparatus for measuring the target object OBJ may be attached to the robot arm 12 as one example of the end effector 4. The measurement apparatus may be configured to measure a characteristic of the target object OBJ. At least one of a shape of the target object OBJ, a size of the target object OBJ, a distance from the measurement apparatus to the target object OBJ, a reflectance of the target object OBJ, a transmittance of the target object OBJ, and a temperature of the target object OBJ is one example of the characteristic of the target object OBJ. The measurement apparatus may be an existing contact type of measurement apparatus. For example, the measurement apparatus may measure the target object OBJ by using a touch probe. In this case, the measurement apparatus including the touch probe may be attached to the robot arm 12. Alternatively, the measurement apparatus may be an existing non-contact type of measurement apparatus. For example, the measurement apparatus may measure the target object OBJ by irradiating the target object OBJ with an energy beam (for example, light, electromagnetic wave, and charged particle beam). In this case, the measurement apparatus including an irradiation apparatus that irradiates the target object OBJ with the energy beam may be attached to the robot arm 12. Note that the measurement apparatus may be an imaging apparatus including one or more monocular cameras. As one example, the measurement apparatus may be a stereo camera including two monocular cameras.

In a case where at least one of the processing apparatus and the measurement apparatus is attached to the robot arm 12 as one example of the end effector 4, the control apparatus 3 may generate a control signal for controlling an operation of at least one of the processing apparatus and the measurement apparatus. For example, the control apparatus 3 may generate the control signal for controlling a rotation of the tool of the processing apparatus. For example, the control apparatus 3 may generate the control signal for controlling an ON / OFF of the energy beam by the irradiation apparatus of at least one of the processing apparatus and the measurement apparatus.

As another example, a discharging apparatus may be attached to the robot arm 12 as one example of the end effector 4. For example, the discharging apparatus may discharge at least one of an adhesive material, a seal material, a paint material, and a solder. The discharging apparatus may discharge at least one of the adhesive material, the seal material, the paint material, and the solder toward the target object OBJ. For example, the control apparatus 3 may generate a control signal for controlling at least one of ON / OFF of a discharge from the discharging apparatus and an discharged amount. Note that the discharging apparatus may be referred to as a processing apparatus, because it can be said that discharging at least one of the adhesive material, the seal material, the paint material, and the solder to the target object OBJ is processing the target object OBJ.

### (3-6-3) Modified Example of Imaging System 2

### (3-6-3-1) Modified Example of Imaging Apparatuses 21 and 22 and Projection Apparatus 23

In the above-described description, the imaging system 2 includes the imaging apparatus 22 and the projection apparatus 23 to generate the image data IMG_3D. However, the imaging system 2 may not include the projection apparatus 23 to generate the image data IMG_3D. This is because the imaging apparatus 22 is the stereo camera as described above, and therefore, the three-dimensional position data WSD indicating the three-dimensional position of each of the plurality of points of the target object OBJ can be generated from the two image data IMG_3D generated by the two imaging elements of the stereo camera. In this case, the three-dimensional position data generation unit 311 may calculate the parallax by performing a matching for each part (for example, each pixel) between the images indicated by the two image data included in the image data IMG_3D, respectively, by using a known processing method, and generate the three-dimensional position data WSD by a known method based on a triangulation using the calculated parallax.

The imaging apparatus 22 may not be the stereo camera. For example, the imaging apparatus 22 may be a monocular camera that images the target object OBJ using a single imaging element. Even in this case, the target object OBJ, on which the projection pattern from the projection apparatus 23 is projected, is captured in the image indicated by the image data IMG_3D. In this case, the shape of the projection pattern captured in the image indicated by the image data IMG_3D reflects the three-dimensional shape of the target object OBJ on which the projection pattern is projected. Therefore, even in a case where the imaging apparatus 22 is not the stereo camera, the three-dimensional position data generation unit 311 can generate the three-dimensional position data WSD based on the projection pattern captured in the image indicated by the image data IMG_3D by using a known processing method.

The imaging system 2 may include the imaging apparatus 21 that is the monocular camera, but may not include the imaging apparatus 22 that is the stereo camera. In this case, the image data generated by the imaging apparatus 21 imaging the target object in a period during which the projection apparatus 23 does not project the desired projection pattern on the target object OBJ may be used as the image data IMG_2D. On the other hand, the image data generated by the imaging apparatus 21 imaging the target object in a period during which the projection apparatus 23 projects the desired projection pattern on the target object OBJ may be used as the image data IMG_3D. In this case, the image data IMG_3D may be monocular image data corresponding to a single image data (namely, including a single image).

The imaging system 2 may include the imaging apparatus 22 that is a stereo camera, but may not include the imaging apparatus 21. In this case, the image data generated by one of two monocular cameras of the imaging apparatus 22 imaging the target object OBJ may be used as the image data IMG_2D. On the other hand, the image data generated by both two monocular cameras of the imaging apparatus 22 imaging the target object OBJ may be used as the image data IMG_3D.

### (3-6-3-2) Alternative of Imaging System 2

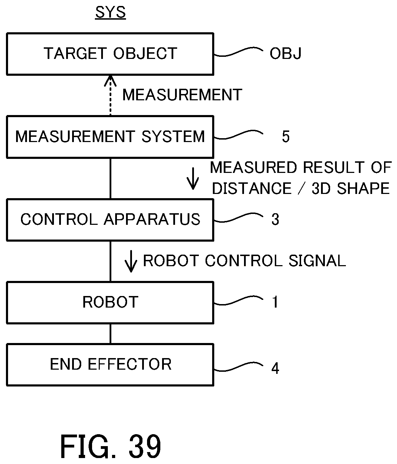

As illustrated in FIG. 39, the robot system SYS may include a measurement system 5 that is configured to measure at least one of a distance to the target object OBJ and its three-dimensional shape, in addition to or instead of the imaging system 2 that is configured to image the target object OBJ. In this case, the control apparatus 3 (especially, the three-dimensional position data generation unit 311) may generate the three-dimensional position data WSD based on a measured result of at least one of the distance to the target object OBJ and its three-dimensional shape. Then, the control apparatus 3 (especially, the position pose calculation unit 312) may perform the matching processing (namely, the 3D matching processing) using the three-dimensional position data WSD, as in a case where the three-dimensional position data WSD is generated from the image data IMG_3D generated by the imaging system 2. For example, the robot system SYS may include the measurement system 5 and the imaging apparatus 21 that serves as the imaging system 2. In this case, the control apparatus 3 may perform the matching processing using both the three-dimensional position data WSD generated by the measurement of the measurement system 5 and the image data IMG_2D generated by the imaging of the imaging apparatus 21.

The measurement system 5 may be an existing system that is configured to optically measure at least one of the distance to the target object OBJ and its three-dimensional shape. For example, the measurement system 5 may be an existing system that is configured to measure of at least one of the distance to the target object OBJ and its three-dimensional shape with a non-contact method. For example, the measurement system 5 may be configured to optically measure at least one of the distance to target object OBJ and its three-dimensional shape by irradiating the target object OBJ with measurement electromagnetic wave and detect the electromagnetic wave returning to the measurement system 5 from the target object OBJ onto which the electromagnetic wave is irradiated. The measurement electromagnetic wave may be light (in this case, the light irradiated onto the target object OBJ may be referred to as measurement light) or radio wave (in this case, the radio wave irradiated onto the target object OBJ may be measurement wave). At least one of a TOF (Time Of Flight) type of measurement apparatus, a FMCW (Frequency Modulated Continuous Wave) type of measurement apparatus, an optical comb type of interferometer using light (an optical frequency comb) including frequency components arranged with equal intervals on the frequency axis as the measurement light, a triangulation-based measurement apparatus, and a millimeter-wave radar using millimeter waves as the measurement wave is one example of the measurement system 5. Note that at least one of the TOF type of measuring instrument and the FMCW type of measuring instrument may be referred to as LiDAR (Light Detection and Ranging). In a case where the measurement system 5 is this type of measurement sensor, the control apparatus 3 (especially, the three-dimensional position data generation unit 311) may generate the three-dimensional position data WSD, which is point cloud data, based on the measured result of the target object OBJ by the measurement sensor. Then, the control apparatus 3 (especially, the position pose calculation unit 312) may perform the matching processing (namely, the 3D matching processing) using the three-dimensional position data WSD, as in a case where the three-dimensional position data WSD is generated from the image data IMG_3D generated by the imaging system 2. Note that the measurement system 5 may be referred to as a measurement apparatus or a measurement sensor.

Even in a case where the measurement system 5 is used, a height of the measurement system 5 may be adjusted at the step S7 in FIG. 4 or FIG. 24, as in a case where the imaging system 2 is used. Note that a processing for adjusting the height of the measurement system 5 may be the same as the processing for adjusting the height (imaging height CH) of the imaging system 2. However, a measurement allowable range of the measurement system 5 may be used instead of the imaging allowable range CAR of the imaging system 2. The measurement allowable range of the measurement system 5 may mean a range that can be measured by the measurement system 5. Especially, the measurement allowable range of the measurement system 5 may mean a range in which the measurement system 5 can measure at least one of the distance to the target object OBJ and its three-dimensional shape with a predetermined measurement accuracy or higher. As one example, in a case where the TOF-type of measurement apparatus is used as the measurement system 5, there is a possibility that measurement system 5 cannot measure at least one of the distance to the target object OBJ and its three-dimensional shape in a case where the target object OBJ is not positioned in a range to which the measurement light having a certain intensity for the TOF measurement can reach. Therefore, in this case, the range to which the measurement light having a certain intensity for the TOF measurement may be used as the measurement allowable range of the measurement system 5.

Note that imaging system 2 images the target object OBJ by using an imaging element of each of the imaging apparatuses 21 and 22 to detect returning light from the target object OBJ. Namely, both the imaging system 2 and the measurement system 5 detect the returning light from the target object OBJ. Therefore, the imaging system 2 and the measurement system 5 may collectively be referred to as a light detection system.

### (4) Supplementary Note

Regarding the above-described example embodiment, below described Supplementary notes are further disclosed.

### [Supplementary Note A1]

A control apparatus that generates a control signal for controlling a robot on which a holding apparatus that is configured to hold a target object is mounted and which moves the holding apparatus, wherein
the control apparatus includes:
a computing apparatus that generates the control signal; and
a communication apparatus that outputs the control signal generated by the computing apparatus,
the computing apparatus:
   generates, as the control signal, a first control signal for controlling the robot so that the holding apparatus approaches a first target object, which is one target object of a first target object group, to hold the first target object, based on an imaged result by an imaging system imaging the first target object group, which includes at least a part of a plurality of target objects contained in a container, at at least one of a first imaging position and a first imaging pose; and
   generates, as the control signal, a second control signal for controlling the robot so that the holding apparatus approaches a second target object, which is one target object of a second target object group, to hold the second target object, based on an imaged result by the imaging system imaging the second target object group, which includes at least a part of a plurality of target objects contained in the container, at at least one of a second imaging position that is different from the first imaging position and a second imaging pose that is different from the first imaging pose and, after the holding apparatus has approached the first target object based on the first control signal and the first target object held by the holding apparatus has been transported to an outside of the container and released from the holding apparatus outside the container.

### [Supplementary Note A2]

The control apparatus according to the Supplementary Note A1, wherein
the first imaging position includes at least one of a first imaging height, which is a height at which the imaging system images the target object, and a first imaging horizontal position, which is a position on a horizontal plane at which the imaging system images the target object, and
the second imaging position includes at least one of a second imaging height, which is a height at which the imaging system images the target object, and a second imaging horizontal position, which is a position on a horizontal plane at which the imaging system images the target object.

### [Supplementary Note A3]

The control apparatus according to the Supplementary Note A2, wherein
the second imaging horizontal position is different from the first imaging horizontal position.

### [Supplementary Note A4]

The control apparatus according to the Supplementary Note A2 or A3, wherein
the second imaging height is different from the first imaging height.

### [Supplementary Note A5]

The control apparatus according to any one of the Supplementary Notes A2 to A4, wherein
the second imaging height is lower than the first imaging height.

### [Supplementary Note A6]

The control apparatus according to any one of the Supplementary Notes A2 to A5, wherein
a height of the second target object group is lower than a height of the first target object group.

### [Supplementary Note A7]

The control apparatus according to any one of the Supplementary Notes A2 to A6, wherein
the number of the target objects contained in the container when the first target object group is imaged from the second imaging height is smaller than the number of the target objects contained in the container when it is imaged from the first imaging height.

### [Supplementary Note A8]

The control apparatus according to any one of the Supplementary Notes A2 to A7, wherein
the number of the target objects included in the second target object group is smaller than the number of the target object group included in the first target object group.

### [Supplementary Note A9]

The control apparatus according to any one of the Supplementary Notes A2 to A8, wherein
a weight of the container in which the plurality of target objects are contained when the second target object group is imaged from the second imaging height is lighter than a weight of the container in which the plurality of target objects are contained when it is imaged from the first imaging height.

### [Supplementary Note A10]

The control apparatus according to any one of the Supplementary Notes A2 to A9, wherein
the first imaging height is a height that the first target object is included in an imaging allowable range of the imaging system positioned at the first imaging height, and
the second imaging height is a height that the second target object is included in the imaging allowable range of the imaging system positioned at the second imaging height.

### [Supplementary Note A11]

The control apparatus according to the Supplementary Note A10, wherein
the first imaging height is a height that the second target object is not included in the imaging allowable range of the imaging system positioned at the first imaging height.

### [Supplementary Note A12]

The control apparatus according to the Supplementary Note A10 or A11, wherein
the imaging allowable range is at least one of a depth of focus and a depth of field of the imaging system.

### [Supplementary Note A13]

The control apparatus according to any one of the Supplementary Notes A10 to A12, wherein
the imaging allowable range is set based on a field of view of the imaging system.

### [Supplementary Note A14]

The control apparatus according to any one of the Supplementary Notes A10 to A13, wherein
the imaging allowable range is set by an input from a user.

### [Supplementary Note A15]

The control apparatus according to any one of the Supplementary Notes A1 to A14 generating, as the control signal, a third control signal for controlling the robot so that the holding apparatus approaches a third target object, which is one target object of a third target object group, to hold the third target object, based on an imaged result by the imaging system imaging the third target object group, which includes at least a part of a plurality of target objects contained in the container, at at least one of a third imaging position that is different from the second imaging position and a third imaging pose that is different from the second imaging pose and, after the holding apparatus has approached the second target object based on the second control signal and the second target object held by the holding apparatus has been transported to an outside of the container and released from the holding apparatus outside the container.

### [Supplementary Note A16]

The control apparatus according to the Supplementary Note A15, wherein
the second imaging position includes at least one of a second imaging height, which is a height at which the imaging system images the target object, and a second imaging horizontal position, which is a position on a horizontal plane at which the imaging system images the target object, and
the third imaging position includes at least one of a third imaging height, which is a height at which the imaging system images the target object, and a third imaging horizontal position, which is a position on a horizontal plane at which the imaging system images the target object.

### [Supplementary Note A17]

The control apparatus according to the Supplementary Note A16, wherein
the third imaging horizontal position is different from the second imaging horizontal position.

### [Supplementary Note A18]

The control apparatus according to the Supplementary Note A16 or A17, wherein
the third imaging height is different from the second imaging height.

### [Supplementary Note A19]

The control apparatus according to any one of the Supplementary Notes A16 to A18, wherein
the third imaging height is lower than the second imaging height.

### [Supplementary Note A20]

The control apparatus according to any one of the Supplementary Notes A16 to A19, wherein
a height of the third target object group is lower than a height of the second target object group.

### [Supplementary Note A21]

The control apparatus according to any one of the Supplementary Notes A16 to A20, wherein
the second imaging height is a height that the second target object is included but the third target object is not included in the imaging allowable range of the imaging system positioned at the second imaging height, and
the third imaging height is a height that the third target object is included in the imaging allowable range of the imaging system positioned at the third imaging height.

### [Supplementary Note A22]

The control apparatus according to any one of the Supplementary Notes A16 to A21, wherein
the third target object group includes at least a part of the second target object group.

### [Supplementary Note A23]

The control apparatus according to any one of the Supplementary Notes A1 to A22, wherein
the imaging system includes: at least one of a monocular camera; and a stereo camera including two monocular cameras that are different from the monocular camera.

### [Supplementary Note A24]

The control apparatus according to any one of the Supplementary Notes A1 to A23, wherein
the second target object group includes at least a part of the first target object group.

### [Supplementary Note A25]

The control apparatus according to any one of the Supplementary Notes A1 to A24, wherein
the imaging system is mounted on the robot.

### [Supplementary Note A26]

The control apparatus according to any one of the Supplementary Notes A1 to A25, wherein
the imaging system is mounted on a part that is different from the robot.

### [Supplementary Note A27]

The control apparatus according to the Supplementary Note A26, wherein
the imaging system is mounted on another robot that is different from the robot.

### [Supplementary Note A28]

The control apparatus according to the Supplementary Note A26 or A27, wherein
the imaging system is mounted on a drone.

### [Supplementary Note A29]

The control apparatus according to any one of the Supplementary Notes A26 to A28, wherein
the imaging system is mounted on a support member that is configured to support the imaging system.

### [Supplementary Note A30]

The control apparatus according to the Supplementary Note A29, further including: a movement apparatus that is configured to move the imaging system to change at least one of a position and a pose of the imaging system.

### [Supplementary Note A31]

The control apparatus according to the Supplementary Note A30, wherein
the movement apparatus changes at least one of the position and the pose of the imaging system by moving the imaging system relative to the support member.

### [Supplementary Note A32]

The control apparatus according to the Supplementary Note A30 or A31, wherein
the movement apparatus changes at least one of the position and the pose of the imaging system by moving the support member on which the imaging system is mounted.

### [Supplementary Note A33]

A control system including:
the control apparatus according to any one of the Supplementary Notes A1 to A32; and
the imaging system.

### [Supplementary Note A34]

A robot system including:
the control apparatus according to any one of the Supplementary Notes A1 to A32;
the imaging system; and
the robot.

### [Supplementary Note A35]

A control method that generates a control signal for controlling a robot on which a holding apparatus that is configured to hold a target object is mounted and which moves the holding apparatus, wherein
the control method includes:
generating, as the control signal, a first control signal for controlling the robot so that the holding apparatus approaches a first target object, which is one target object of a first target object group, to hold the first target object, based on an imaged result by an imaging system imaging the first target object group, which includes at least a part of a plurality of target objects contained in a container, at at least one of a first imaging position and a first imaging pose; and
generating, as the control signal, a second control signal for controlling the robot so that the holding apparatus approaches a second target object, which is one target object of a second target object group, to hold the second target object, based on an imaged result by the imaging system imaging the second target object group, which includes at least a part of a plurality of target objects contained in the container, at at least one of a second imaging position that is different from the first imaging position and a second imaging pose that is different from the first imaging pose and, after the holding apparatus has approached the first target object based on the first control signal and the first target object held by the holding apparatus has been transported to an outside of the container and released from the holding apparatus outside the container.

### [Supplementary Note A36]

A computer program that allows a computer to execute the control method according to the Supplementary Note A35.

### [Supplementary Note B1]

A control apparatus that generates: a control signal for controlling a robot on which a process apparatus that is configured perform a process on a target object is mounted and which moves the process apparatus; and a control signal for moving an imaging system that images the target object, wherein
the control apparatus includes:
a computing apparatus that generates the control signal; and
a communication apparatus that outputs the control signal generated by the computing apparatus,
the computing apparatus:
   generates, as the control signal, a first control signal for controlling the robot so that the imaging system moves to at least one of an imaging position and an imaging pose at which the imaging system images the target object, based on an imaged result of a first target object group, which includes at least a part of a plurality of target objects contained in a container, by the imaging system; and
   generates, as the control signal, a second control signal for controlling the robot so that the process apparatus approaches a first target object, which is one target object of a second target object group, to perform the process on the first target object, based on an imaged result by the imaging system imaging the second target object group, which includes at least a part of a plurality of target objects contained in the container, at at least one of the imaging position and the imaging pose.

### [Supplementary Note B2]

The control apparatus according to the Supplementary Note B1, wherein
the computing apparatus:
determines at least one of the imaging position and the imaging pose based on the imaged result of the first target object group by the imaging system, and
generates the first control signal for controlling the robot so that the imaging system moves to at least one of the determined imaging position and imaging pose.

### [Supplementary Note B3]

The control apparatus according to the Supplementary Note B1 or B2, wherein
the computing apparatus:
calculates a height of the first target object group based on the imaged result, and determines at least one of the imaging position and the imaging pose based on the height of the first target object group.

### [Supplementary Note B4]

The control apparatus according to any one of the Supplementary Notes B1 to B3, wherein
the imaging position includes at least one of an imaging height, which is a height at which the imaging system images the target object, and an imaging horizontal position, which is a position on a horizontal plane at which the imaging system images the target object.

### [Supplementary Note B5]

The control apparatus according to the Supplementary Note B4, wherein
the computing apparatus:
calculates a height of the first target object group based on the imaged result, and
determines the imaging height based on the height of the first target object group and an imaging allowable range of the imaging system.

### [Supplementary Note B6]

The control apparatus according to the Supplementary Note B4 or B5, wherein
the imaging height is a height that the first target object is included in an imaging allowable range of the imaging system positioned at the imaging height.

### [Supplementary Note B7]

The control apparatus according to any one of the Supplementary Notes B1 to B6, wherein
the process apparatus is a holding apparatus that is configured to hold the target object,
the imaging position is a first imaging position and the imaging pose is a first imaging pose, and
the computing apparatus generates, as the control signal, a third control signal for moving the imaging system to at least one of a second imaging position that is different from the first imaging position and a second imaging pose that is different from the first imaging pose, based on an imaged result of a third target object group, which includes at least a part of a plurality of target objects contained in a container, by the imaging system after the holding apparatus has approached the first target object based on the second control signal and the first target object held by the holding apparatus has been transported to an outside of the container and released from the holding apparatus outside the container.

### [Supplementary Note B8]

The control apparatus according to the Supplementary Note B7, wherein
the first imaging position includes at least one of a first imaging height, which is a height at which the imaging system images the target object, and a first imaging horizontal position, which is a position on a horizontal plane at which the imaging system images the target object, and
the second imaging position includes at least one of a second imaging height, which is a height at which the imaging system images the target object, and a second imaging horizontal position, which is a position on a horizontal plane at which the imaging system images the target object.

### [Supplementary Note B9]

The control apparatus according to the Supplementary Note B8, wherein
the second imaging horizontal position is different from the first imaging horizontal position.

### [Supplementary Note B10]

The control apparatus according to the Supplementary Note B8 or B9, wherein
the second imaging height is different from the first imaging height.

### [Supplementary Note B11]

The control apparatus according to any one of the Supplementary Notes B8 to B10, wherein
the second imaging height is lower than the first imaging height.

### [Supplementary Note B12]

The control apparatus according to any one of the Supplementary Notes B7 to B11, wherein
the third target object group is the second target object group, and
the imaged result of the third target object group by the imaging system used for generating the third control signal is the imaged result of the second target object group by the imaging system used for generating the second control signal.

### [Supplementary Note B13]

The control apparatus according to any one of the Supplementary Notes B7 to B12, wherein
the computing apparatus:
determines at least one of the second imaging position and the second imaging pose based on the imaged result of the third target object group by the imaging system, and
generates the third control signal for moving the imaging system to at least one of the determined second imaging position and second imaging pose.

### [Supplementary Note B14]

The control apparatus according to any one of the Supplementary Notes B7 to B13, wherein
the computing apparatus generates, as the control signal, a fourth control signal for controlling the robot so that the holding apparatus approaches a second target object, which is one target object of a fourth target object group, to hold the second target object, based on an imaged result by the imaging system imaging the fourth target object group, which includes at least a part of a plurality of target objects contained in the container, at at least one of the second imaging position and the second imaging pose.

### [Supplementary Note B15]

The control apparatus according to the Supplementary Note B14, wherein
the fourth target object group includes at least a part of the third target object group.

### [Supplementary Note B16]

The control apparatus according to the Supplementary Note B14 or B15, wherein
a height of the fourth target object group is lower than a height of the second target object group.

### [Supplementary Note B17]

The control apparatus according to any one of the Supplementary Notes B14 to B16, wherein
the first imaging position includes a first imaging height that is a height at which the imaging system images the target object,
the second imaging position includes a second imaging height that is a height at which the imaging system images the target object,
the first imaging height is a height that the first target object is included but the second target object is not included in an imaging allowable range of the imaging system positioned at the first imaging height, and
the second imaging height is a height that the second target object is included in the imaging allowable range of the imaging system positioned at the second imaging height.

### [Supplementary Note B18]

The control apparatus according to any one of the Supplementary Notes B7 to B17, wherein
the third target object group includes at least a part of the second target object group.

### [Supplementary Note B19]

The control apparatus according to the Supplementary Note B5, B6 or B17, wherein
the imaging allowable range is at least one of a depth of focus and a depth of field of the imaging system.

### [Supplementary Note B20]

The control apparatus according to the Supplementary Note B5, B6, B17 or B19, wherein
the imaging allowable range is set based on a field of view of the imaging system.

### [Supplementary Note B21]

The control apparatus according to the Supplementary Note B5, B6, B17, B19 or B20, wherein
the imaging allowable range is set by an input from a user.

### [Supplementary Note B22]

The control apparatus according to any one of the Supplementary Notes B1 to B21, wherein
the imaging system includes: at least one of a monocular camera; and a stereo camera including two monocular cameras that are different from the monocular camera.

### [Supplementary Note B23]

The control apparatus according to any one of the Supplementary Notes B1 to B22, wherein
the second target object group includes at least a part of the first target object group.

### [Supplementary Note B24]

The control apparatus according to any one of the Supplementary Notes B1 to B23, wherein
the imaging system is mounted on the robot.

### [Supplementary Note B25]

The control apparatus according to the Supplementary Note B24, wherein
the control signal for moving the imaging system is a control signal for controlling the robot that moves the imaging system together with the process apparatus.

### [Supplementary Note B26]

The control apparatus according to any one of the Supplementary Notes B1 to B25, wherein
the imaging system is mounted on a part that is different from the robot.

### [Supplementary Note B27]

The control apparatus according to the Supplementary Note B26, wherein
the imaging system is mounted on another robot that is different from the robot.

### [Supplementary Note B28]

The control apparatus according to the Supplementary Note B26 or B27, wherein
the imaging system is mounted on a drone.

### [Supplementary Note B29]

The control apparatus according to any one of the Supplementary Notes B26 to B28, wherein
the imaging system is mounted on a support member that is configured to support the imaging system.

### [Supplementary Note B30]

The control apparatus according to the Supplementary Note B29, further including a movement apparatus that is configured to move the imaging system so as to change at least one of a position and a pose of the imaging system.

### [Supplementary Note B31]

The control apparatus according to the Supplementary Note B30, wherein
the movement apparatus changes at least one of the position and the pose of the imaging system by moving the imaging system relative to the support member.

### [Supplementary Note B32]

The control apparatus according to the Supplementary Note B30 or B31, wherein
the movement apparatus changes at least one of the position and the pose of the imaging system by moving the support member on which the imaging system is mounted.

### [Supplementary Note B33]

The control apparatus according to any one of the Supplementary Notes B1 to B32, wherein
the process apparatus is a holding apparatus that is configured to hold the target object, and
the imaged result of the first target object group by the imaging system includes an imaged result by the imaging system imaging an inside of the container in a period until a third target object, which is one target object of a plurality of target objects contained in the container, is held by the holding apparatus and then the third target object held by the holding apparatus is transported to an outside of the container and released from the holding apparatus outside the container.

### [Supplementary Note B34]

The control apparatus according to any one of the Supplementary Notes B1 to B33, wherein
the imaged result of the first target object group by the imaging system includes an imaged result by the imaging system imaging an inside of the container in a period during which the entire robot is out of an imaging field of view of the imaging system.

### [Supplementary Note B35]

The control apparatus according to any one of the Supplementary Notes B1 to B33, wherein
the imaged result of the first target object group by the imaging system includes an imaged result by the imaging system imaging an inside of the container in a period during which a part of the robot is out of an imaging field of view of the imaging system.

### [Supplementary Note B36]

The control apparatus according to any one of the Supplementary Notes B1 to B35, wherein
the imaged result of the first target object group by the imaging system includes an imaged result by the imaging system imaging an inside of the container in a period during which the entire process apparatus is out of an imaging field of view of the imaging system.

### [Supplementary Note B37]

The control apparatus according to any one of the Supplementary Notes B1 to B35, wherein
the imaged result of the first target object group by the imaging system includes an imaged result by the imaging system imaging an inside of the container in a period during which a part of the process apparatus is out of an imaging field of view of the imaging system.

### [Supplementary Note B38]

A control system including:
the control apparatus according to any one of the Supplementary Notes B1 to B36; and
the imaging system.

### [Supplementary Note B39]

A robot system including:
the control apparatus according to any one of the Supplementary Notes B1 to B35;
the imaging system; and
the robot.

### [Supplementary Note B40]

A control method that generates: a control signal for controlling a robot on which a process apparatus that is configured perform a process on a target object is mounted and which moves the process apparatus; and a control signal for moving an imaging system that images the target object, wherein
the control method includes:
generating, as the control signal, a first control signal for controlling the robot so that the imaging system moves to at least one of an imaging position and an imaging pose at which the imaging system images the target object, based on an imaged result of a first target object group, which includes at least a part of a plurality of target objects contained in a container, by the imaging system; and
generating, as the control signal, a second control signal for controlling the robot so that the process apparatus approaches a first target object, which is one target object of a second target object group, to perform the process on the first target object, based on an imaged result by the imaging system imaging the second target object group, which includes at least a part of a plurality of target objects contained in the container, at at least one of the imaging position and the imaging pose.

### [Supplementary Note B41]

A computer program that allows a computer to execute the control method according to the Supplementary Note B40.

### [Supplementary Note C1]

A control apparatus that generates a control signal for controlling a robot on which a holding apparatus that is configured to hold a target object and an imaging system that images the target object are mounted and which moves the holding apparatus and the imaging system, wherein
a computing apparatus that generates the control signal; and
a communication apparatus that outputs the control signal generated by the computing apparatus,
the computing apparatus:
   a first target object, which is one target object of a plurality of target objects contained in a container, is held by the holding apparatus,
   the robot is controlled so that the holding apparatus holding the first target object moves from the container to a position at which the first target object is released outside the container, and
   the computing apparatus generates, as the control signal, a first control signal for controlling the robot from a position after releasing the first target object from the holding apparatus, based on an imaged result by the imaging system imaging a first target object group, which includes at least a part of a plurality of target objects contained in the container, on a movement route of the imaging system due to a movement of the holding apparatus from the container to the position at which the first target object is released outside the container.

### [Supplementary Note C2]

The control apparatus according to the Supplementary Note C1, wherein
the imaged result of the first target object group is a result by the imaging system imaging the first target object group contained in the container while moving along the movement route.

### [Supplementary Note C3]

The control apparatus according to the Supplementary Note C1 or C2 generating, as the control signal, a second control signal for controlling the robot so that the holding apparatus approaches a second target object, which is one target object of a second target object group, to hold the second target object, based on an imaged result by the imaging system, which has moved based on the first control signal, imaging the second target object group, which includes at least a part of a plurality of target objects contained in the container.

### [Supplementary Note C4]

The control apparatus according to the Supplementary Note C3, wherein
the second target object group includes at least a part of the first target object group.

### [Supplementary Note C5]

The control apparatus according to any one of the Supplementary Notes C1 to C4, wherein
the first control signal is a signal for controlling the robot so that the imaging system moves from the position after releasing the first target object from the holding apparatus to at least one of an imaging position and an imaging pose at which the imaging system images the target object contained in the container,.

### [Supplementary Note C6]

The control apparatus according to the Supplementary Note C5, wherein
the imaging position includes at least one of an imaging height, which is a height at which the imaging system images the target object, and an imaging horizontal position, which is a position on a horizontal plane at which the imaging system images the target object.

### [Supplementary Note C7]

The control apparatus according to the Supplementary Note C5 or C6, wherein
the first control signal is a signal for controlling the robot so that the imaging system moves from the position at which the first target object is released from the holding apparatus to at least one of the imaging position and the imaging pose.

### [Supplementary Note C8]

The control apparatus according to any one of the Supplementary Notes C5 to C7, wherein
the computing apparatus:
determines at least one of the imaging position and the imaging pose based on the imaged result of the first target object group by the imaging system, and
generates the first control signal for controlling the robot so that the imaging system moves to at least one of the determined imaging position and imaging pose.

### [Supplementary Note C9]

The control apparatus according to any one of the Supplementary Notes C5 to C8, wherein
the computing apparatus:
calculates a height of the first target object group based on the imaged result of the first target object group by the imaging system, and
determines at least one of the imaging position and the imaging pose based on the height of the first target object group.

### [Supplementary Note C10]

The control apparatus according to any one of the Supplementary Notes C5 to C9, wherein
the imaging position includes an imaging height which is a height at which the imaging system images the target object, and
the computing apparatus:
   calculates a height of the first target object group based on the imaged result of the first target object group by the imaging system, and
   determines the imaging height based on the height of the first target object group and an imaging allowable range of the imaging system.

### [Supplementary Note C11]

The control apparatus according to any one of the Supplementary Notes C5 to C10, wherein
the computing apparatus generates, as the control signal, a second control signal for controlling the robot so that the holding apparatus approaches, which is one target object of a second target object group, to hold the second target object, based on an imaged result obtained by the imaging system, which has moved to at least one of the imaging position and the imaging pose based on the first control signal, imaging the second target object group, which includes at least a part of a plurality of target objects contained in the container.

### [Supplementary Note C12]

The control apparatus according to the Supplementary Note C11, wherein
the imaging position includes an imaging height which is a height at which the imaging system images the target object,
the computing apparatus generates the second control signal for controlling the robot so that the holding apparatus approaches the second target object to hold the second target object, based on an imaged result by the imaging system, which has moved to the imaging height based on the first control signal, imaging the second target object group, and
the imaging height is a height that the second target object is included in an imaging allowable range of the imaging system positioned at the imaging height.

### [Supplementary Note C13]

The control apparatus according to the Supplementary Note C11 or C12, wherein
the imaging position is a first imaging position and the imaging pose is a first imaging pose,
the second target object is held by the holding apparatus based on the second control signal,
the robot is controlled so that the holding apparatus holding the second target object moves from the container to a position at which the second target object is released outside the container, and
the computing apparatus generates, as the control signal, a third control signal for controlling the robot so that the imaging system moves from a position after releasing the second target object from the holding apparatus to at least one of a second imaging position different from the first imaging position and a second imaging pose different from the first imaging pose, based on an imaged result by the imaging system imaging a third target object group, which includes at least a part of a plurality of target objects contained in the container, on a movement route of the imaging system due to a movement of the holding apparatus from the container to the position at which the second target object is released outside the container.

### [Supplementary Note C14]

The control apparatus according to the Supplementary Note C13, wherein
the third target object group includes at least a part of the second target object group.

### [Supplementary Note C15]

The control apparatus according to the Supplementary Note C13 or C14, wherein
the first imaging position includes at least one of a first imaging height, which is a height at which the imaging system images the target object, and a first imaging horizontal position, which is a position on a horizontal plane at which the imaging system images the target object, and
the second imaging position includes at least one of a second imaging height, which is a height at which the imaging system images the target object, and a second imaging horizontal position, which is a position on a horizontal plane at which the imaging system images the target object.

### [Supplementary Note C16]

The control apparatus according to the Supplementary Note C15, wherein
the second imaging horizontal position is different from the first imaging horizontal position.

### [Supplementary Note C17]

The control apparatus according to the Supplementary Note C15 or C16, wherein
the second imaging height is different from the first imaging height.

### [Supplementary Note C18]

The control apparatus according to any one of the Supplementary Notes C15 to C17, wherein
the second imaging height is lower than the first imaging height.

### [Supplementary Note C19]

The control apparatus according to any one of the Supplementary Notes C13 to C18, wherein
the imaged result of the third target object group is a result by the imaging system imaging the third target object group contained in the container while moving along the movement route of the imaging system due to a movement of the holding apparatus from the container to the position at which the second target object is released outside the container.

### [Supplementary Note C20]

The control apparatus according to any one of the Supplementary Notes C13 to C19, wherein
the third control signal is a signal for controlling the robot so that the imaging system moves from the position at which the second target object is released from the holding apparatus to at least one of the second imaging position and the second imaging pose.

### [Supplementary Note C21]

The control apparatus according to any one of the Supplementary Notes C13 to C20, wherein
the computing apparatus:
determines at least one of the second imaging position and the second imaging pose based on the imaged result of the third target object group by the imaging system, and
generates the third control signal for controlling the robot so that the imaging system moves to at least one of the determined second imaging position and second imaging pose.

### [Supplementary Note C22]

The control apparatus according to any one of the Supplementary Notes C13 to C21, wherein
the computing apparatus generates, as the control signal, a fourth control signal for controlling the robot so that the holding apparatus approaches a third target object, which is one target object of a fourth target object group, to hold the third target object, based on an imaged result by the imaging system imaging the fourth target object group, which includes at least a part of a plurality of target objects contained in the container, at at least one of the second imaging position and the second imaging pose.

### [Supplementary Note C23]

The control apparatus according to the Supplementary Note C22, wherein
the fourth target object group includes at least a part of the third target object group.

### [Supplementary Note C24]

The control apparatus according to the Supplementary Note C22 or C23, wherein
a height of the fourth target object group is lower than a height of the second target object group.

### [Supplementary Note C25]

The control apparatus according to any one of the Supplementary Notes C22 to C24, wherein
the first imaging position includes a first imaging height that is a height at which the imaging system images the target object,
the second imaging position includes a second imaging height that is a height at which the imaging system images the target object,
the first imaging height is a height that the second target object is included but the third target object is not included in an imaging allowable range of the imaging system positioned at the first imaging height, and
the second imaging height is a height that the third target object is included in the imaging allowable range of the imaging system positioned at the second imaging height.

### [Supplementary Note C26]

The control apparatus according to the Supplementary Note C10, C12 or C25, wherein
the imaging allowable range is at least one of a depth of focus and a depth of field of the imaging system.

### [Supplementary Note C27]

The control apparatus according to the Supplementary Note C10, C12, C25 or C26, wherein
the imaging allowable range is set based on a field of view of the imaging system.

### [Supplementary Note C28]

The control apparatus according to any one of the Supplementary Notes C10, C12 and C25 to C27, wherein
the imaging allowable range is set by an input from a user.

### [Supplementary Note C29]

The control apparatus according to any one of the Supplementary Notes C1 to C28, wherein
the imaging system includes: at least one of a monocular camera; and a stereo camera including two monocular cameras that are different from the monocular camera.

### [Supplementary Note C30]

A control system including:
the control apparatus according to any one of the Supplementary Notes C1 to C29; and
the imaging system.

### [Supplementary Note C31]

A robot system including:
the control apparatus according to any one of the Supplementary Notes C1 to C29;
the imaging system; and
the robot.

### [Supplementary Note C32]

A control method that generates a control signal for controlling a robot on which a holding apparatus that is configured to hold a target object and an imaging system that images the target object are mounted and which moves the holding apparatus and the imaging system, wherein
a first target object, which is one target object of a plurality of target objects contained in a container, is held by the holding apparatus,
the robot is controlled so that the holding apparatus holding the first target object moves from the container to a position at which the first target object is released outside the container, and
the control method includes generating, as the control signal, a first control signal for controlling the robot from a position after releasing the first target object from the holding apparatus, based on an imaged result by the imaging system imaging a first target object group, which includes at least a part of a plurality of target objects contained in the container, on a movement route of the imaging system due to a movement of the holding apparatus from the container to the position at which the first target object is released outside the container.

### [Supplementary Note C33]

A computer program that allows a computer to execute the control method according to the Supplementary Note C32.

### [Supplementary Note D1]

A control apparatus that generates: a control signal for controlling a robot on which a process apparatus that is configured perform a process on a target object is mounted and which moves the process apparatus; and a control signal for moving an imaging system that images the target object, wherein
the control apparatus includes:
a computing apparatus that generates the control signal; and
a communication apparatus that outputs the control signal generated by the computing apparatus,
the computing apparatus generates, as the control signal, a first control signal for controlling the robot after the holding apparatus releases a first target object, based on an imaged result by the imaging system imaging an inside of the container in a period until the first target object, which is one target object of a plurality of target objects contained in the container, is held by the holding apparatus and then the first target object held by the holding apparatus is transported to an outside of the container and released from the holding apparatus outside the container.

### [Supplementary Note D2]

The control apparatus according to the Supplementary Note D1, wherein
the imaged result of imaging the inside of the container includes an imaged result by the imaging system imaging the inside of the container in a period during which the entire robot is out of an imaging field of view of the imaging system.

### [Supplementary Note D3]

The control apparatus according to the Supplementary Note D1, wherein
the imaged result of imaging the inside of the container includes an imaged result by the imaging system imaging the inside of the container in a period during which a part of the robot is out of an imaging field of view of the imaging system.

### [Supplementary Note D4]

The control apparatus according to any one of the Supplementary Notes D1 to D3, wherein
the imaged result of imaging the inside of the container includes an imaged result by the imaging system imaging the inside of the container in a period during which the entire holding apparatus is out of an imaging field of view of the imaging system.

### [Supplementary Note D5]

The control apparatus according to any one of the Supplementary Notes D1 to D3, wherein
the imaged result of imaging the inside of the container includes an imaged result by the imaging system imaging the inside of the container in a period during which a part of the holding apparatus is out of an imaging field of view of the imaging system.

### [Supplementary Note D6]

The control apparatus according to any one of the Supplementary Notes D1 to D5, wherein
the imaged result of imaging the inside of the container includes an imaged result of imaging a first target object group that includes at least a part of a plurality of target objects contained in the container.

### [Supplementary Note D7]

The control apparatus according to the Supplementary Note D6, wherein
the computing apparatus generates, as the control signal, a second control signal for controlling the robot so that the holding apparatus approaches a second target object, which is one target object of a second target object group, to hold the second target object, based on an imaged result by the imaging system, which has moved based on the first control signal, imaging the second target object group, which includes at least a part of a plurality of target objects contained in the container.

### [Supplementary Note D8]

The control apparatus according to the Supplementary Note D7, wherein
the second target object group includes at least a part of the first target object group.

### [Supplementary Note D9]

The control apparatus according to the Supplementary Note D7 or D8, wherein
the first control signal is a signal for controlling the robot so that the imaging system moves to at least one of an imaging position and an imaging pose at which the imaging system images the second target object group, after releasing the first target object from the holding apparatus.

### [Supplementary Note D10]

The control apparatus according to the Supplementary Note D9, wherein
the imaging position includes at least one of an imaging height, which is a height at which the imaging system images the second target object group, and an imaging horizontal position, which is a position on a horizontal plane at which the imaging system images the second target object group.

### [Supplementary Note D11]

The control apparatus according to the Supplementary Note D9 or D10, wherein
the computing apparatus:
determines at least one of the imaging position and the imaging pose based on the imaged result of the first target object group by the imaging system, and
generates the first control signal for controlling the robot so that the imaging system moves to at least one of the determined imaging position and imaging pose.

### [Supplementary Note D12]

The control apparatus according to any one of the Supplementary Notes D9 to D11, wherein
the imaging position includes an imaging height that is a height at which the imaging system images the target object, and
the computing apparatus:
   calculates a height of the first target object group based on the imaged result of the first target object group by the imaging system, and
   determines at least one of the imaging position and the imaging pose based on the height of the first target object group.

### [Supplementary Note D13]

The control apparatus according to any one of the Supplementary Notes D9 to D12, wherein
the computing apparatus:
calculates a height of the first target object group based on the imaged result of the first target object group by the imaging system, and
determines the imaging height based on the height of the first target object group and an imaging allowable range of the imaging system.

### [Supplementary Note D14]

The control apparatus according to any one of the Supplementary Notes D9 to D13, wherein
the imaging position includes an imaging height that is a height at which the imaging system images the target object, and
the imaging height is a height that the second target object is included in an imaging allowable range of the imaging system positioned at the imaging height.

### [Supplementary Note D15]

The control apparatus according to any one of the Supplementary Notes D7 to D14, generating, as the control signal, a third control signal for controlling the robot after the holding apparatus releases the second target object, based on an imaged result by the imaging system imaging an inside of the container in a period until the second target object is held by the holding apparatus based on the second control signal and then the second target object held by the holding apparatus is transported to an outside of the container and released from the holding apparatus outside the container.

### [Supplementary Note D16]

The control apparatus according to any one of the Supplementary Notes D9 to D14, generating, as the control signal wherein the imaging position is a first imaging position and the imaging pose is a first imaging pose, a third control signal for controlling the robot so that the imaging system moves to at least one of a second imaging position and a second imaging pose, which are different from the first imaging position and the first imaging pose for imaging the second target object group, respectively, after releasing the second target object from the holding apparatus, based on an imaged result by the imaging system imaging a third target object group, which includes at least a part of a plurality of target objects contained in the container in a period until the second target object is held by the holding apparatus based on the second control signal and then the second target object held by the holding apparatus is transported to an outside of the container and released from the holding apparatus outside the container.

### [Supplementary Note D17]

The control apparatus according to the Supplementary Note D16, wherein
the third target object group includes at least a part of the second target object group.

### [Supplementary Note D18]

The control apparatus according to the Supplementary Note D16 or D17, wherein
the first imaging position includes at least one of a first imaging height, which is a height at which the imaging system images the second target object group, and a first imaging horizontal position, which is a position on a horizontal plane at which the imaging system images the second target object group, and
the second imaging position includes at least one of a second imaging height, which is a height at which the imaging system images a fourth target object group that includes at least a part of a plurality of target objects contained in the container, and a second imaging horizontal position, which is a position on a horizontal plane at which the imaging system images the fourth target object group.

### [Supplementary Note D19]

The control apparatus according to the Supplementary Note D18, wherein
the second imaging horizontal position is different from the first imaging horizontal position.

### [Supplementary Note D20]

The control apparatus according to the Supplementary Note D18 or D19, wherein
the second imaging height is different from the first imaging height.

### [Supplementary Note D21]

The control apparatus according to any one of the Supplementary Notes D15 to D20, wherein
the second imaging height is lower than the first imaging height.

### [Supplementary Note D22]

The control apparatus according to any one of the Supplementary Notes D16 to D21, wherein
the computing apparatus:
determines at least one of the second imaging position and the second imaging pose based on the imaged result of the third target object group by the imaging system, and
generates the third control signal for controlling the robot so that the imaging system moves to at least one of the determined second imaging position and second imaging pose.

### [Supplementary Note D23]

The control apparatus according to any one of the Supplementary Notes D16 to D22, wherein
the computing apparatus generates, as the control signal, a fourth control signal for controlling the robot so that the holding apparatus approaches a third target object, which is one target object of a fourth target object group, to hold the third target object based on an imaged result by the imaging system imaging the fourth target object group, which includes at least a part of a plurality of target objects contained in the container, at the second imaging height.

### [Supplementary Note D24]

The control apparatus according to the Supplementary Note D23, wherein
the fourth target object group includes at least a part of the third target object group.

### [Supplementary Note D25]

The control apparatus according to the Supplementary Note D23 or D24, wherein
a height of the fourth target object group is lower than a height of the second target object group.

### [Supplementary Note D26]

The control apparatus according to any one of the Supplementary Notes D23 to D25, wherein
the first imaging position includes a first imaging height that is a height at which the imaging system images the target object,
the second imaging position includes a second imaging height that is a height at which the imaging system images the target object,
the first imaging height is a height that the second target object is included but the third target object is not included in an imaging allowable range of the imaging system positioned at the first imaging height, and
the second imaging height is a height that the third target object is included in the imaging allowable range of the imaging system positioned at the second imaging height.

### [Supplementary Note D27]

The control apparatus according to the Supplementary Note D13, D14 or D26, wherein
the imaging allowable range is at least one of a depth of focus and a depth of field of the imaging system.

### [Supplementary Note D28]

The control apparatus according to the Supplementary Note D13, D14, D26 or D27, wherein
the imaging allowable range is set based on a field of view of the imaging system.

### [Supplementary Note D29]

The control apparatus according to any one of the Supplementary Notes D13, D14 and D26 to D28, wherein
the imaging allowable range is set by an input from a user.

### [Supplementary Note D30]

The control apparatus according to any one of the Supplementary Notes D1 to D29, wherein
the imaging system includes: at least one of a monocular camera; and a stereo camera including two monocular cameras that are different from the monocular camera.

### [Supplementary Note D31]

The control apparatus according to any one of the Supplementary Notes D1 to D30, wherein
the imaging system is mounted on the robot.

### [Supplementary Note D32]

The control apparatus according to any one of the Supplementary Notes D1 to D31, wherein
the imaging system is mounted on a part that is different from the robot.

### [Supplementary Note D33]

The control apparatus according to the Supplementary Note D32, wherein
the imaging system is mounted on another robot that is different from the robot.

### [Supplementary Note D34]

The control apparatus according to the Supplementary Note D32 or D33, wherein
the imaging system is mounted on a drone.

### [Supplementary Note D35]

The control apparatus according to any one of the Supplementary Notes D32 to D34, wherein
the imaging system is mounted on a support member that is configured to support the imaging system.

### [Supplementary Note D36]

The control apparatus according to the Supplementary Note D35, further including: a movement apparatus that is configured to move the imaging system to change at least one of a position and a pose of the imaging system.

### [Supplementary Note D37]

The control apparatus according to the Supplementary Note D36, wherein
the movement apparatus changes at least one of the position and the pose of the imaging system by moving the imaging system relative to the support member.

### [Supplementary Note D38]

The control apparatus according to the Supplementary Note D36 or D37, wherein
the movement apparatus changes at least one of the position and the pose of the imaging system by moving the support member on which the imaging system is mounted.

### [Supplementary Note D39]

A control system including:
the control apparatus according to any one of the Supplementary Notes D1 to D38; and
the imaging system.

### [Supplementary Note D40]

A robot system including:
the control apparatus according to any one of the Supplementary Notes D1 to D38;
the imaging system; and
the robot.

### [Supplementary Note D41]

A control method that generates: a control signal for controlling a robot on which a process apparatus that is configured perform a process on a target object is mounted and which moves the process apparatus; and a control signal for moving an imaging system that images the target object, wherein
the control method includes generating, as the control signal, a first control signal for controlling the robot after the holding apparatus releases a first target object, based on an imaged result by the imaging system imaging an inside of the container in a period until the first target object, which is one target object of a plurality of target objects contained in the container, is held by the holding apparatus and then the first target object held by the holding apparatus is transported to an outside of the container and released from the holding apparatus outside the container.

### [Supplementary Note D42]

A computer program that allows a computer to execute the control method according to the Supplementary Note D41.

### [Supplementary Note E1]

A control apparatus that generates: a control signal for controlling a robot on which a process apparatus that is configured perform a process on a target object is mounted and which moves the process apparatus; and a control signal for moving an imaging system that images the target object, wherein
the control apparatus includes:
a computing apparatus that generates the control signal; and
a communication apparatus that outputs the control signal generated by the computing apparatus,
the computing apparatus:
   generates, as the control signal, a first control signal for controlling the robot so that the imaging system moves to at least one of an imaging position and an imaging pose at which the imaging system images the target object, based on at least one of a height of a first target object group, which includes at least a part of a plurality of target objects, contained in a container and a quantity of the first target object group contained in the container; and
   generates, as the control signal, a second control signal for controlling the robot so that the process apparatus approaches one target object of a second target object group to perform the process on the one target object, based on an imaged result by the imaging system imaging the second target object group, which includes at least a partial target object of the first target object group contained in the container, at at least one of the imaging position and the imaging pose.

### [Supplementary Note E2]

The control apparatus according to the Supplementary Note E1, wherein
the second target object group includes at least a part of the first target object group.

### [Supplementary Note E3]

The control apparatus according to the Supplementary Note E1 or E2, wherein the second target object group is the same as the first target object group.

### [Supplementary Note E4]

The control apparatus according to any one of the Supplementary Notes E1 to E3, wherein
the imaging position includes at least one of an imaging height, which is a height at which the imaging system images the target object, and an imaging horizontal position, which is a position on a horizontal plane at which the imaging system images the target object.

### [Supplementary Note E5]

The control apparatus according to the Supplementary Note E4, wherein
the imaging height is a height that at least one target object of the first target object group is included in an imaging allowable range of the imaging system positioned at the imaging height.

### [Supplementary Note E6]

The control apparatus according to the Supplementary Note E4 or E5, wherein
the one target object of the second target object group is one target object, which is included in an imaging allowable range of the imaging system positioned at the imaging height, of the first target object group.

### [Supplementary Note E7]

The control apparatus according to any one of the Supplementary Notes E1 to E6, wherein
the computing apparatus:
determines at least one of the imaging position and the imaging pose based on at least one of the height of the first target object group contained in the container and the quantity of the first target object group contained in the container, and
generates the first control signal for controlling the robot so that the imaging system moves to at least one of the determined imaging position and imaging pose.

### [Supplementary Note E8]

The control apparatus according to any one of the Supplementary Notes E1 to E7, wherein
the computing apparatus:
calculates the height of the first target object group contained in the container based on an imaged result of the first target object group contained in the container by the imaging system, and
generates the first control signal based on the calculated height.

### [Supplementary Note E9]

The control apparatus according to any one of the Supplementary Notes E1 to E8, wherein
at least one of the height of the first target object group contained in the container and the quantity of the first target object group contained in the container is calculated directly or indirectly based on a measured result by a measurement apparatus.

### [Supplementary Note E10]

The control apparatus according to the Supplementary Note E9, wherein
the imaging system is a first imaging system,
the measurement apparatus includes at least one of the first imaging system and a second imaging system that is different from the first imaging system, and
the computing apparatus calculates at least one of the height of the first target object group contained in the container and the quantity of the first target object group contained in the container, based on an imaged result by at least one of the first and second imaging systems that is the measured result.

### [Supplementary Note E11]

The control apparatus according to the Supplementary Note E10, wherein
the imaged result by at least one of the first and second imaging systems is an imaged result of the first target object group contained in the container.

### [Supplementary Note E12]

The control apparatus according to the Supplementary Note E10 or E11, wherein
the imaged result by at least one of the first and second imaging systems is an imaged result of at least one marker that is formed at a position, which faces a space in which the first target object group is positioned, of a surface of the container.

### [Supplementary Note E13]

The control apparatus according to the Supplementary Note E12, wherein
the computing apparatus calculates at least one of the height of the first target object group contained in the container and the quantity of the first target object group contained in the container, based on the number of the markers detected based on the imaged result of the marker.

### [Supplementary Note E14]

The control apparatus according to any one of the Supplementary Notes E9 to E13, wherein
the measurement apparatus includes a weight sensor that is configured to measure a weight of the first target object group contained in the container.

### [Supplementary Note E15]

The control apparatus according to any one of the Supplementary Notes E9 to E14, wherein
the measurement apparatus includes at least one sensor that is configured to detect at least one target object of the first target object group in the container.

### [Supplementary Note E16]

The control apparatus according to the Supplementary Note E15, wherein
the computing apparatus calculates at least one of the height of the first target object group contained in the container and the quantity of the first target object group contained in the container, based on the number of the sensors that has not detected at least one target object of the first target object group.

### [Supplementary Note E17]

The control apparatus according to the Supplementary Note E15 or E16, wherein
the at least one sensor is positioned in the container.

### [Supplementary Note E18]

The control apparatus according to any one of the Supplementary Notes E1 to E17, wherein
the computing apparatus calculates at least one of the height of the first target object group contained in the container and the quantity of the first target object group contained in the container, based on the number of the target objects on which the process apparatus has performed the process.

### [Supplementary Note E19]

The control apparatus according to any one of the Supplementary Notes E1 to E18, wherein
the process apparatus is a holding apparatus that is configured to hold the target object,
the imaging position is a first imaging position and the imaging pose is a first imaging pose,
the computing apparatus generates, as the control signal, a third control signal for moving the imaging system to at least one of a second imaging position, which is different from the first imaging position, and a second imaging pose, which is different from the first imaging pose, based on at least one of a height of a third target object group, which includes at least a part of a plurality of target objects, contained in the container and a quantity of the third target object group contained in the container, after the holding apparatus has approached the first target object based on the second control signal and the first target object held by the holding apparatus has been transported to an outside of the container and released from the holding apparatus outside the container.

### [Supplementary Note E20]

The control apparatus according to the Supplementary Note E19, wherein
the third target object group includes at least a part of the second target object group.

### [Supplementary Note E21]

The control apparatus according to the Supplementary Note E19 or E20, wherein
the first imaging position includes at least one of a first imaging height, which is a height at which the imaging system images the second target object group, and a first imaging horizontal position, which is a position on a horizontal plane at which the imaging system images the second target object group, and
the second imaging position includes at least one of a second imaging height, which is a height at which the imaging system images a fourth target object group that includes at least a part of a plurality of target objects contained in the container, and a second imaging horizontal position, which is a position on a horizontal plane at which the imaging system images the fourth target object group.

### [Supplementary Note E22]

The control apparatus according to the Supplementary Note E21, wherein
the second imaging horizontal position is different from the first imaging horizontal position.

### [Supplementary Note E23]

The control apparatus according to the Supplementary Note E21 or E22, wherein
the second imaging height is different from the first imaging height.

### [Supplementary Note E24]

The control apparatus according to any one of the Supplementary Notes E21 to E23, wherein
the second imaging height is lower than the first imaging height.

### [Supplementary Note E25]

The control apparatus according to any one of the Supplementary Notes E19 to E24, wherein
the computing apparatus generates, as the control signal, a fourth control signal for controlling the robot so that the holding apparatus approaches a second target object, which is one target object of a fourth target object group, to hold the second target object, based on an imaged result by the imaging system imaging the fourth target object group, which includes at least a part of a plurality of target objects contained in the container, at at least one of the second imaging position and the second imaging pose.

### [Supplementary Note E26]

The control apparatus according to the Supplementary Note E25, wherein
the fourth target object group includes at least a part of the third target object group.

### [Supplementary Note E27]

The control apparatus according to the Supplementary Note E25 or E26, wherein
a height of the fourth target object group is lower than a height of the second target object group.

### [Supplementary Note E28]

The control apparatus according to any one of the Supplementary Notes E25 to E27, wherein
the first imaging position includes a first imaging height that is a height at which the imaging system images the target object,
the second imaging position includes a second imaging height that is a height at which the imaging system images the target object,
the first imaging height is a height that the first target object is included but the second target object is not included in an imaging allowable range of the imaging system positioned at the first imaging height, and
the second imaging height is a height that the second target object is included in the imaging allowable range of the imaging system positioned at the second imaging height.

### [Supplementary Note E29]

The control apparatus according to the Supplementary Note E5, E6 or E28, wherein
the imaging allowable range is at least one of a depth of focus and a depth of field of the imaging system.

### [Supplementary Note E30]

The control apparatus according to the Supplementary Note E5, E6, E28 or E29, wherein
the imaging allowable range is set based on a field of view of the imaging system.

### [Supplementary Note E31]

The control apparatus according to any one of the Supplementary Notes E5, E6 and E28 to E30, wherein
the imaging allowable range is set by an input from a user.

### [Supplementary Note E32]

The control apparatus according to any one of the Supplementary Notes E1 to E31, wherein
the imaging system includes: at least one of a monocular camera; and a stereo camera including two monocular cameras that are different from the monocular camera.

### [Supplementary Note E33]

The control apparatus according to any one of the Supplementary Notes E1 to E32, wherein
the imaging system is mounted on the robot.

### [Supplementary Note E34]

The control apparatus according to the Supplementary Note E33, wherein
the control signal for moving the imaging system is a control signal for controlling the robot that moves the imaging system together with the process apparatus.

### [Supplementary Note E35]

The control apparatus according to any one of the Supplementary Notes E1 to E34, wherein
the imaging system is mounted on a part that is different from the robot.

### [Supplementary Note E36]

The control apparatus according to the Supplementary Note E35, wherein
the imaging system is mounted on another robot that is different from the robot.

### [Supplementary Note E37]

The control apparatus according to the Supplementary Note E35 or E36, wherein
the imaging system is mounted on a drone.

### [Supplementary Note E38]

The control apparatus according to any one of the Supplementary Notes E35 to E37, wherein
the imaging system is mounted on a support member that is configured to support the imaging system.

### [Supplementary Note E39]

The control apparatus according to the Supplementary Note E38, further including a movement apparatus that is configured to move the imaging system to change at least one of a position and a pose of the imaging system.

### [Supplementary Note E40]

The control apparatus according to the Supplementary Note E39, wherein
the movement apparatus changes at least one of the position and the pose of the imaging system by moving the imaging system relative to the support member.

### [Supplementary Note E41]

The control apparatus according to the Supplementary Note E39 or E40, wherein
the movement apparatus changes at least one of the position and the pose of the imaging system by moving the support member on which the imaging system is mounted.

### [Supplementary Note E42]

The control apparatus according to any one of the Supplementary Notes E1 to E41, wherein
the process apparatus is a holding apparatus that is configured to hold the target object, and
the computing apparatus calculates at least one of the height of the first target object group and the quantity of the first target object group, based on an imaged result by the imaging system imaging the first target object group in a period until a third target object, which is one target object of a plurality of target objects contained in the container, is held by the holding apparatus and then the third target object held by the holding apparatus is transported to an outside of the container and released from the holding apparatus outside the container.

### [Supplementary Note E43]

The control apparatus according to any one of the Supplementary Notes E1 to E42, wherein
the computing apparatus calculates at least one of the height of the first target object group and the quantity of the first target object group, based on an imaged result by the imaging system imaging the first target object group in a period during which the entire robot is out of an imaging field of view of the imaging system.

### [Supplementary Note E44]

The control apparatus according to any one of the Supplementary Notes E1 to E42, wherein
the computing apparatus calculates at least one of the height of the first target object group and the quantity of the first target object group, based on an imaged result by the imaging system imaging the first target object group in a period during which a part of the robot is out of an imaging field of view of the imaging system.

### [Supplementary Note E45]

The control apparatus according to any one of the Supplementary Notes E1 to E44, wherein
the computing apparatus calculates at least one of the height of the first target object group and the quantity of the first target object group, based on an imaged result by the imaging system imaging the first target object group in a period during which the entire process apparatus is out of an imaging field of view of the imaging system.

### [Supplementary Note E46]

The control apparatus according to any one of the Supplementary Notes E1 to E44, wherein
the computing apparatus calculates at least one of the height of the first target object group and the quantity of the first target object group, based on an imaged result by the imaging system imaging the first target object group in a period during which a part of the process apparatus is out of an imaging field of view of the imaging system.

### [Supplementary Note E47]

A control system including:
the control apparatus according to any one of the Supplementary Notes E1 to E4465; and
the imaging system.

### [Supplementary Note E48]

A robot system including:
the control apparatus according to any one of the Supplementary Notes E1 to E46;
the imaging system; and
the robot.

### [Supplementary Note E49]

A control method that generates: a control signal for controlling a robot on which a process apparatus that is configured perform a process on a target object is mounted and which moves the process apparatus; and a control signal for moving an imaging system that images the target object, wherein
the control method includes:
generating, as the control signal, a first control signal for controlling the robot so that the imaging system moves to at least one of an imaging position and an imaging pose at which the imaging system images the target object, based on at least one of a height of a first target object group, which includes at least a part of a plurality of target objects, contained in a container and a quantity of the first target object group contained in the container; and
generating, as the control signal, a second control signal for controlling the robot so that the process apparatus approaches one target object of a second target object group to perform the process on the one target object, based on an imaged result by the imaging system imaging the second target object group, which includes at least a partial target object of the first target object group contained in the container, at at least one of the imaging position and the imaging pose.

### [Supplementary Note E50]

A computer program that allows a computer to execute the control method according to the Supplementary Note E49.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a control apparatus, a control system, a robot system, a control method, and a computer program, which involve such changes, are also intended to be within the technical scope of the present invention.

### Description of Reference Codes

- SYS: robot system
- 1: robot
- 12: robot arm
- 13: robot control apparatus
- 2: imaging system
- 21, 22: imaging apparatus
- 3: control apparatus
- 31: computing apparatus
- 311: three-dimensional position data generation unit
- 312: position pose calculation unit
- 313: signal generation unit
- 33: communication unit
- 4: end effector
- OBJ: target object
- W: workpiece
- CB: container

## Claims

1. A control apparatus that generates a control signal for controlling a robot on which a holding apparatus that is configured to hold a target object and an imaging system that images the target object are mounted and which moves the holding apparatus and the imaging system, wherein
the control apparatus comprises:
a computing apparatus that generates the control signal; and
a communication apparatus that outputs the control signal generated by the computing apparatus,
the computing apparatus:
generates, as the control signal, a first control signal for controlling the robot so that the holding apparatus approaches a first target object, which is one target object of a first target object group, to hold the first target object, based on an imaged result by the imaging system imaging the first target object group, which includes at least a part of a plurality of target objects contained in a container, from a first imaging height; and
generates, as the control signal, a second control signal for controlling the robot so that the holding apparatus approaches a second target object, which is one target object of a second target object group, to hold the second target object, based on an imaged result by the imaging system imaging the second target object group, which includes at least a part of the first target object group contained in the container, from a second imaging height that is lower than the first imaging height, after the holding apparatus has approached the first target object based on the first control signal and the first target object held by the holding apparatus has been transported to an outside of the container and released from the holding apparatus outside the container.

2. The control apparatus according to claim 1, wherein
a height of the second target object group is lower than a height of the first target object group.

3. The control apparatus according to claim 1 or 2, wherein
the number of the target objects contained in the container when the first target object group is imaged from the second imaging height is smaller than the number of the target objects contained in the container when it is imaged from the first imaging height.

4. The control apparatus according to any one of claims 1 to 3, wherein
the number of the target objects included in the second target object group is smaller than the number of the target object group included in the first target object group.

5. The control apparatus according to any one of claims 1 to 4, wherein
a weight of the container in which the plurality of target objects are contained when the second target object group is imaged from the second imaging height is lighter than a weight of the container in which the plurality of target objects are contained when it is imaged from the first imaging height.

6. The control apparatus according to any one of claims 1 to 5, wherein
the first imaging height is a height that the first target object is included in an imaging allowable range of the imaging system positioned at the first imaging height, and
the second imaging height is a height that the second target object is included in the imaging allowable range of the imaging system positioned at the second imaging height.

7. The control apparatus according to claim 6, wherein
the first imaging height is a height that the second target object is not included in the imaging allowable range of the imaging system positioned at the first imaging height.

8. The control apparatus according to claim 6 or 7, wherein
the imaging allowable range is at least one of a depth of focus and a depth of field of the imaging system.

9. The control apparatus according to any one of claims 6 to 8, wherein
the imaging allowable range is set based on a field of view of the imaging system.

10. The control apparatus according to any one of claims 6 to 9, wherein
the imaging allowable range is set by an input from a user.

11. The control apparatus according to any one of claims 1 to 10 generating, as the control signal, a third control signal for controlling the robot so that the holding apparatus approaches a third target object, which is one target object of a third target object group, to hold the third target object, based on an imaged result by the imaging system imaging the third target object group, which includes at least a part of the second target object group contained in the container, from a third imaging height that is lower than the second imaging height, after the holding apparatus has approached the second target object based on the second control signal and the second target object held by the holding apparatus has been transported to an outside of the container and released from the holding apparatus outside the container.

12. The control apparatus according to claim 11, wherein
a height of the third target object group is lower than a height of the second target object group.

13. The control apparatus according to claim 11 or 12, wherein
the second imaging height is a height that the second target object is included but the third target object is not included in the imaging allowable range of the imaging system positioned at the second imaging height, and
the third imaging height is a height that the third target object is included in the imaging allowable range of the imaging system positioned at the third imaging height.

14. The control apparatus according to any one of claims 1 to 13, wherein
the imaging system includes: at least one of a monocular camera; and a stereo camera including two monocular cameras that are different from the monocular camera.

15. A control system comprising:
the control apparatus according to any one of claims 1 to 14; and
the imaging system.

16. A robot system comprising:
the control apparatus according to any one of claims 1 to 14;
the imaging system; and
the robot.

17. A control method that generates a control signal for controlling a robot on which a holding apparatus that is configured to hold a target object and an imaging system that images the target object are mounted and which moves the holding apparatus and the imaging system, wherein
the control method comprises:
generating, as the control signal, a first control signal for controlling the robot so that the holding apparatus approaches a first target object, which is one target object of a first target object group, to hold the first target object, based on an imaged result by the imaging system imaging the first target object group, which includes at least a part of a plurality of target objects contained in a container, from a first imaging height; and
generating, as the control signal, a second control signal for controlling the robot so that the holding apparatus approaches a second target object, which is one target object of a second target object group, to hold the second target object, based on an imaged result by the imaging system imaging the second target object group, which includes at least a part of the first target object group contained in the container, from a second imaging height that is lower than the first imaging height, after the holding apparatus has approached the first target object based on the first control signal and the first target object held by the holding apparatus has been transported to an outside of the container and released from the holding apparatus outside the container.

18. A computer program that allows a computer to execute the control method according to claim 17.

19. A control apparatus that generates a control signal for controlling a robot on which a process apparatus that is configured perform a process on a target object and an imaging system that images the target object are mounted and which moves the process apparatus and the imaging system, wherein
the control apparatus comprises:
a computing apparatus that generates the control signal; and
a communication apparatus that outputs the control signal generated by the computing apparatus,
the computing apparatus:
generates, as the control signal, a first control signal for controlling the robot so that the imaging system moves to an imaging height for imaging the target object, based on an imaged result of a first target object group, which includes at least a part of a plurality of target objects contained in a container, by the imaging system; and
generates, as the control signal, a second control signal for controlling the robot so that the process apparatus approaches a first target object, which is one target object of a second target object group, to perform a process on the first target object, based on an imaged result by the imaging system imaging the second target object group, which includes at least a partial target object of the first target object group contained in the container, at the imaging height.

20. The control apparatus according to claim 19, wherein
the computing apparatus:
determines the imaging height based on the imaged result of the first target object group by the imaging system; and
generates the first control signal for controlling the robot so that the imaging system moves to the determined imaging height.

21. The control apparatus according to claim 19 or 20, wherein
the computing apparatus:
calculates a height of the first target object group based on the imaged result, and
determines the imaging height based on the height of the first target object group and an imaging allowable range of the imaging system.

22. The control apparatus according to any one of claims 19 to 21, wherein
the imaging height is a height that the first target object is included in an imaging allowable range of the imaging system positioned at the imaging height.

23. The control apparatus according to any one of claims 19 to 22, wherein
the process apparatus is a holding apparatus that is configured to hold the target object, the imaging height is a first imaging height, and
the computing apparatus generates, as the control signal, a third control signal for controlling the robot so that the imaging system moves to a second imaging height that is lower than the first imaging height, based on an imaged result of a third target object group, which includes at least a part of the second target object group contained in a container, by the imaging system after the holding apparatus has approached the first target object based on the second control signal and the first target object held by the holding apparatus has been transported to an outside of the container and released from the holding apparatus outside the container.

24. The control apparatus according to claim 23, wherein
the third target object group is the second target object group, and
the imaged result of the third target object group by the imaging system used for generating the third control signal is the imaged result of the second target object group by the imaging system used for generating the second control signal.

25. The control apparatus according to claim 23 or 24, wherein
the computing apparatus:
determines the second imaging height based on the imaged result of the third target object group by the imaging system; and
generates the third control signal for controlling the robot so that the imaging system moves to the determined second imaging height.

26. The control apparatus according to any one of claims 23 to 25, wherein
the computing apparatus: generates, as the control signal, a fourth control signal for controlling the robot so that the process apparatus approaches a second target object, which is one target object of a fourth target object group, to hold the second target object, based on an imaged result by the imaging system imaging the fourth target object group, which includes at least a partial target object of the third target object group contained in the container, at the second imaging height

27. The control apparatus according to claim 26, wherein
a height of the fourth target object group is lower than a height of the second target object group.

28. The control apparatus according to claim 26 or 27, wherein
the first imaging height is a height that the first target object is included but the second target object is not included in the imaging allowable range of the imaging system positioned at the first imaging height, and
the second imaging height is a height that the second target object is included in the imaging allowable range of the imaging system positioned at the second imaging height.

29. The control apparatus according to claim 21, 22 or 28, wherein
the imaging allowable range is at least one of a depth of focus and a depth of field of the imaging system.

30. The control apparatus according to claim 21, 22, 28 or 29, wherein
the imaging allowable range is set based on a field of view of the imaging system.

31. The control apparatus according to any one of claims 21, 22 and 28 to 30, wherein
the imaging allowable range is set by an input from a user.

32. The control apparatus according to any one of claims 19 to 31, wherein
the computing apparatus generates the first control signal for controlling the robot so that the imaging system moves to at least one of an imaging pose, which is a pose at which the imaging system images the target object, and an imaging horizontal position, which is a position on a horizontal plane at which the imaging system images the target object, based on the imaged result of the first target object group by the imaging system.

33. The control apparatus according to claim 32, wherein
the computing apparatus:
determines at least one of the imaging pose and the imaging horizontal position based on the imaged result of the first target object group by the imaging system, and
generates the first control signal for controlling the robot so that the imaging system moves to at least one of the determined imaging pose and imaging horizontal position.

34. The control apparatus according to any one of claims 19 to 33, wherein
the imaging system includes: at least one of a monocular camera; and a stereo camera including two monocular cameras that are different from the monocular camera.

35. A control system comprising:
the control apparatus according to any one of claims 19 to 34; and
the imaging system.

36. A robot system comprising:
the control apparatus according to any one of claims 19 to 34;
the imaging system; and
the robot.

37. A control method that generates a control signal for controlling a robot on which a process apparatus that is configured perform a process on a target object and an imaging system that images the target object are mounted and which moves the process apparatus and the imaging system, wherein
the control method comprises:
generating, as the control signal, a first control signal for controlling the robot so that the imaging system moves to an imaging height for imaging the target object, based on an imaged result of a first target object group, which includes at least a part of a plurality of target objects contained in a container, by the imaging system; and
generating, as the control signal, a second control signal for controlling the robot so that the process apparatus approaches a first target object, which is one target object of a second target object group, to perform a process on the first target object, based on an imaged result by the imaging system imaging the second target object group, which includes at least a partial target object of the first target object group contained in the container, at the imaging height.

38. A computer program that allows a computer to execute the control method according to claim 37.

39. A control apparatus that generates a control signal for controlling a robot on which a holding apparatus that is configured to hold a target object and an imaging system that images the target object are mounted and which moves the holding apparatus and the imaging system, wherein
the control apparatus comprises:
a computing apparatus that generates the control signal; and
a communication apparatus that outputs the control signal generated by the computing apparatus,
a first target object, which is one target object of a plurality of target objects contained in a container, is held by the holding apparatus,
the robot is controlled so that the holding apparatus holding the first target object moves from the container to a position at which the first target object is released outside the container, and
the computing apparatus generates, as the control signal, a first control signal for controlling the robot from a position after releasing the first target object from the holding apparatus, based on an imaged result by the imaging system imaging a first target object group, which includes at least a part of a plurality of target objects contained in the container, on a movement route of the imaging system due to a movement of the holding apparatus from the container to the position at which the first target object is released outside the container.

40. The control apparatus according to claim 39, wherein
the imaged result of the first target object group is a result by the imaging system imaging the first target object group contained in the container while moving along the movement route.

41. The control apparatus according to claim 39 or 40 generating, as the control signal, a second control signal for controlling the robot so that the holding apparatus approaches a second target object, which is one target object of a second target object group, to hold the second target object, based on an imaged result by the imaging system, which has moved based on the first control signal, imaging the second target object group, which includes at least a partial target object of the first target object group contained in the container.

42. The control apparatus according to any one of claims 39 to 41, wherein
the first control signal is a signal for controlling the robot so that the imaging system moves from the position after releasing the first target object from the holding apparatus to an imaging height at which the imaging system images the target object contained in the container.

43. The control apparatus according to claim 42, wherein
the first control signal is a signal for controlling the robot so that the imaging system moves from the position at which the first target object is released from the holding apparatus to the imaging height.

44. The control apparatus according to claim 42 or 43, wherein
the computing apparatus:
determines the imaging height based on the imaged result of the first target object group by the imaging system, and
generates the first control signal for controlling the robot so that the imaging system moves to the determined imaging height.

45. The control apparatus according to any one of claims 42 to 44, wherein
the computing apparatus:
calculates a height of the first target object group based on the imaged result of the first target object group by the imaging system, and
determines the imaging height based on the height of the first target object group and an imaging allowable range of the imaging system.

46. The control apparatus according to any one of claims 42 to 45, wherein
the computing apparatus generates, as the control signal, a second control signal for controlling the robot so that the holding apparatus approaches a second target object, which is one target object of a second target object group, to hold the second target object, based on an imaged result by the imaging system, which has moved to the imaging height based on the first control signal, imaging the second target object group, which includes at least a partial target object of the first target object group contained in the container.

47. The control apparatus according to claim 46, wherein
the imaging height is a height that the second target object is included in the imaging allowable range of the imaging system positioned at the imaging height.

48. The control apparatus according to claim 46 or 47, wherein
the imaging height is a first imaging height,
the second target object is held by the holding apparatus based on the second control signal,
the robot is controlled so that the holding apparatus holding the second target object moves from the container to a position at which the second target object is released outside the container, and
the computing apparatus generates, as the control signal, a third control signal for controlling the robot so that the imaging system moves from a position after releasing the second target object from the holding apparatus to a second imaging height that is lower than the first imaging height, based on an imaged result by the imaging system imaging a third target object group, which includes at least a partial target object of the second target object group contained in the container, on a movement route of the imaging system due to a movement of the holding apparatus from the container to the position at which the second target object is released outside the container.

49. The control apparatus according to claim 48, wherein
the imaged result of the third target object group is a result by the imaging system imaging the third target object group contained in the container while moving along the movement route of the imaging system due to a movement of the holding apparatus from the container to the position at which the second target object is released outside the container.

50. The control apparatus according to claim 48 or 49, wherein
the third control signal is a signal for controlling the robot so that the imaging system moves from the position at which the second target object is released from the holding apparatus to the second imaging height.

51. The control apparatus according to any one of claims 48 to 50, wherein
the computing apparatus:
determines the second imaging height based on the imaged result of the third target object group by the imaging system, and
generates the third control signal for controlling the robot so that the imaging system moves to the determined second imaging height.

52. The control apparatus according to any one of claims 48 to 51, wherein
the computing apparatus generates, as the control signal, a fourth control signal for controlling the robot so that the holding apparatus approaches a third target object, which is one target object of a fourth target object group, to hold the third target object, based on an imaged result by the imaging system imaging the fourth target object group, which includes at least a partial target object of the third target object group contained in the container, at the second imaging height.

53. The control apparatus according to claim 52, wherein
a height of the fourth target object group is lower than a height of the second target object group.

54. The control apparatus according to claim 52 or 53, wherein
the first imaging height is a height that the second target object is included but the third target object is not included in the imaging allowable range of the imaging system positioned at the first imaging height, and
the second imaging height is a height that the third target object is included in the imaging allowable range of the imaging system positioned at the second imaging height.

55. The control apparatus according to claim 45, 47 or 54, wherein
the imaging allowable range is at least one of a depth of focus and a depth of field of the imaging system.

56. The control apparatus according to claim 45, 47, 54 or 55, wherein
the imaging allowable range is set based on a field of view of the imaging system.

57. The control apparatus according to any one of claims 45, 47 and 54 to 56, wherein
the imaging allowable range is set by an input from a user.

58. The control apparatus according to any one of claims 39 to 57, wherein
the first control signal is a signal for controlling the robot so that the imaging system moves from the position after releasing the first target object from the holding apparatus to at least one of an imaging pose and an imaging horizontal plane that are a pose and a position on a horizontal plane, respectively, at which the imaging system images the target object contained in the container.

59. The control apparatus according to claim 58, wherein
the computing apparatus:
determines at least one of the imaging pose and the imaging horizontal position based on the imaged result by the imaging system imaging the first target object group contained in the container on the movement route of the imaging system, and
generates the first control signal for controlling the robot so that the imaging system moves to at least one of the determined imaging pose and imaging horizontal position.

60. The control apparatus according to any one of claims 39 to 59, wherein
the imaging system includes: at least one of a monocular camera; and a stereo camera including two monocular cameras that are different from the monocular camera.

61. A control system comprising:
the control apparatus according to any one of claims 39 to 60; and
the imaging system.

62. A robot system comprising:
the control apparatus according to any one of claims 39 to 60;
the imaging system; and
the robot.

63. A control method that generates a control signal for controlling a robot on which a holding apparatus that is configured to hold a target object and an imaging system that images the target object are mounted and which moves the holding apparatus and the imaging system, wherein
a first target object, which is one target object of a plurality of target objects contained in a container, is held by the holding apparatus,
the robot is controlled so that the holding apparatus holding the first target object moves from the container to a position at which the first target object is released outside the container, and
the control method comprises generating, as the control signal, a first control signal for controlling the robot from a position after releasing the first target object from the holding apparatus, based on an imaged result by the imaging system imaging a first target object group, which includes at least a part of a plurality of target objects contained in the container, on a movement route of the imaging system due to a movement of the holding apparatus from the container to the position at which the first target object is released outside the container.

64. A computer program that allows a computer to execute the control method according to claim 63.

65. A control apparatus that generates a control signal for controlling a robot on which a holding apparatus that is configured to hold a target object and an imaging system that images the target object are mounted and which moves the holding apparatus and the imaging system, wherein
the control apparatus comprises:
a computing apparatus that generates the control signal; and
a communication apparatus that outputs the control signal generated by the computing apparatus,
the computing apparatus generates, as the control signal, a first control signal for controlling the robot after the holding apparatus releases a first target object, based on an imaged result by the imaging system imaging an inside of the container in a period until the first target object, which is one target object of a plurality of target objects contained in the container, is held by the holding apparatus and then the first target object held by the holding apparatus is transported to an outside of the container and released from the holding apparatus outside the container.

66. The control apparatus according to claim 65, wherein
the imaged result of imaging the inside of the container includes an imaged result of imaging a first target object group that includes at least a part of a plurality of target objects contained in the container.

67. The control apparatus according to claim 66, wherein
the computing apparatus generates, as the control signal, a second control signal for controlling the robot so that the holding apparatus approaches a second target object, which is one target object of a second target object group, to hold the second target object, based on an imaged result by the imaging system, which has moved based on the first control signal, imaging the second target object group, which includes at least a partial target object of the first target object group contained in the container.

68. The control apparatus according to claim 67, wherein
the first control signal is a signal for controlling the robot so that the imaging system moves to an imaging height at which the imaging system images the second target object group, after releasing the first target object from the holding apparatus.

69. The control apparatus according to claim 68, wherein
the computing apparatus:
determines the imaging height based on the imaged result of the first target object group by the imaging system, and
generates the first control signal for controlling the robot so that the imaging system moves to the determined imaging height.

70. The control apparatus according to claim 68 or 69, wherein
the computing apparatus:
calculates a height of the first target object group based on the imaged result of the first target object group by the imaging system, and
determines the imaging height based on the height of the first target object group and an imaging allowable range of the imaging system.

71. The control apparatus according to any one of claims 68 to 70, wherein
the imaging height is a height at which the second target object is included in an imaging allowable range of the imaging system positioned at the imaging height.

72. The control apparatus according to any one of claims 67 to 71 generating, as the control signal, a third control signal for controlling the robot after the holding apparatus releases the second target object, based on an imaged result by the imaging system imaging an inside of the container in a period until the second target object is held by the holding apparatus based on the second control signal and then the second target object held by the holding apparatus is transported to an outside of the container and released from the holding apparatus outside the container.

73. The control apparatus according to any one of claims 68 to 71 generating, as the control signal wherein the imaging height is a first imaging height, a third control signal for controlling the robot so that the imaging system moves to a second imaging height that is lower than the first imaging height for imaging the second target object group after releasing the second target object from the holding apparatus, based on an imaged result by the imaging system imaging a third target object group, which includes at least a partial target object of the second target object group contained in the container in a period until the second target object is held by the holding apparatus based on the second control signal and then the second target object held by the holding apparatus is transported to an outside of the container and released from the holding apparatus outside the container.

74. The control apparatus according to claim 73, wherein
the computing apparatus:
determines the second imaging height based on the imaged result of the third target object group by the imaging system, and
generates the third control signal for controlling the robot so that the imaging system moves to the determined second imaging height.

75. The control apparatus according to claim 73 or 74, wherein
the computing apparatus generates, as the control signal, a fourth control signal for controlling the robot so that the holding apparatus approaches a third target object, which is one target object of a fourth target object group, to hold the third target object, based on an imaged result by the imaging system imaging the fourth target object group, which includes at least a partial target object of the third target object group contained in the container, at the second imaging height.

76. The control apparatus according to claim 75, wherein
a height of the fourth target object group is lower than a height of the second target object group.

77. The control apparatus according to claim 75 or 76, wherein
the first imaging height is a height that the second target object is included but the third target object is not included in an imaging allowable range of the imaging system positioned at the first imaging height, and
the second imaging height is a height that the third target object is included in the imaging allowable range of the imaging system positioned at the second imaging height.

78. The control apparatus according to claim 70, 71 or 77, wherein
the imaging allowable range is at least one of a depth of focus and a depth of field of the imaging system.

79. The control apparatus according to claim 70, 71, 77 or 78, wherein
the imaging allowable range is set based on a field of view of the imaging system.

80. The control apparatus according to any one of claims 70, 71 and 77 to 79, wherein
the imaging allowable range is set by an input from a user.

81. The control apparatus according to any one of claims 65 to 80, wherein
the first control signal is a signal for controlling the robot so that the imaging system moves to at least one of an imaging pose and an imaging horizontal plane that are a pose and a position on a horizontal plane, respectively, at which the imaging system images, after releasing the first target object from the holding apparatus.

82. The control apparatus according to claim 81, wherein
the computing apparatus:
determines at least one of the imaging pose and the imaging horizontal position based on the imaged result by the imaging system imaging the inside of the container in the period until the first target object contained in the container is held by the holding apparatus and then the first target object held by the holding apparatus is transported to an outside of the container and released from the holding apparatus outside the container; and
generates the first control signal for controlling the robot so that the imaging system moves to at least one of the determined imaging pose and imaging horizontal position.

83. The control apparatus according to any one of claims 65 to 82, wherein
the imaging system includes: at least one of a monocular camera; and a stereo camera including two monocular cameras that are different from the monocular camera.

84. A control system comprising:
the control apparatus according to any one of claims 65 to 83; and
the imaging system.

85. A robot system comprising:
the control apparatus according to any one of claims 65 to 83;
the imaging system; and
the robot.

86. A control method that generates a control signal for controlling a robot on which a holding apparatus that is configured to hold a target object and an imaging system that images the target object are mounted and which moves the holding apparatus and the imaging system, wherein
the control method comprises generating, as the control signal, a first control signal for controlling the robot after the holding apparatus releases a first target object, based on an imaged result by the imaging system imaging an inside of the container in a period until the first target object, which is one target object of a plurality of target objects contained in the container, is held by the holding apparatus and then the first target object held by the holding apparatus is transported to an outside of the container and released from the holding apparatus outside the container.

87. A computer program that allows a computer to execute the control method according to claim 86.

88. A control apparatus that generates a control signal for controlling a robot on which a process apparatus that is configured perform a process on a target object and an imaging system that images the target object are mounted and which moves the process apparatus and the imaging system, wherein
the control apparatus comprises:
a computing apparatus that generates the control signal; and
a communication apparatus that outputs the control signal generated by the computing apparatus,
the computing apparatus:
generates, as the control signal, a first control signal for controlling the robot so that the imaging system moves to an imaging height for imaging the target object, based on at least one of a height of a first target object group, which includes at least a part of a plurality of target objects, contained in a container and a quantity of the first target object group contained in the container; and
generates, as the control signal, a second control signal for controlling the robot so that the process apparatus approaches one target object of a second target object group to perform the process on the one target object, based on an imaged result by the imaging system imaging the second target object group, which includes at least a partial target object of the first target object group contained in the container, at the imaging height.

89. The control apparatus according to claim 88, wherein
the second target object group is the same as the first target object group.

90. The control apparatus according to claim 88 or 89, wherein
the imaging height is a height that at least one target object of the first target object group is included in an imaging allowable range of the imaging system positioned at the imaging height.

91. The control apparatus according to any one of claims 88 to 90, wherein
the one target object of the second target object group is one target object, which is included in an imaging allowable range of the imaging system positioned at the imaging height, of the first target object group.

92. The control apparatus according to any one of claims 88 to 91, wherein
the computing apparatus:
determines the imaging height based on at least one of the height of the first target object group contained in the container and the quantity of the first target object group contained in the container, and
generates the first control signal for controlling the robot so that the imaging system moves to the determined imaging height.

93. The control apparatus according to any one of claims 88 to 92, wherein
the computing apparatus:
calculates the height of the first target object group contained in the container based on an imaged result of the first target object group contained in the container by the imaging system, and
generates the first control signal based on the calculated height.

94. The control apparatus according to any one of claims 88 to 93, wherein
at least one of the height of the first target object group contained in the container and the quantity of the first target object group contained in the container is calculated directly or indirectly based on a measured result by a measurement apparatus.

95. The control apparatus according to claim 94, wherein
the imaging system is a first imaging system,
the measurement apparatus includes at least one of the first imaging system and a second imaging system that is different from the first imaging system, and
the computing apparatus calculates at least one of the height of the first target object group contained in the container and the quantity of the first target object group contained in the container, based on an imaged result by at least one of the first and second imaging systems that is the measured result.

96. The control apparatus according to claim 95, wherein
the imaged result by at least one of the first and second imaging systems is an imaged result of the first target object group contained in the container.

97. The control apparatus according to claim 95 or 96, wherein
the imaged result by at least one of the first and second imaging systems is an imaged result of at least one marker that is formed at a position, which faces a space in which the first target object group is positioned, of a surface of the container.

98. The control apparatus according to claim 97, wherein
the computing apparatus calculates at least one of the height of the first target object group contained in the container and the quantity of the first target object group contained in the container, based on the number of the markers detected based on the imaged result of the marker.

99. The control apparatus according to any one of claims 94 to 98, wherein
the measurement apparatus includes a weight sensor that is configured to measure a weight of the first target object group contained in the container.

100. The control apparatus according to any one of claims 94 to 99, wherein
the measurement apparatus includes at least one sensor that is configured to detect at least one target object of the first target object group in the container.

101. The control apparatus according to claim 100, wherein
the computing apparatus calculates at least one of the height of the first target object group contained in the container and the quantity of the first target object group contained in the container, based on the number of the sensors that has not detected at least one target object of the first target object group.

102. The control apparatus according to claim 100 or 101, wherein
the at least one sensor is positioned in the container.

103. The control apparatus according to any one of claims 88 to 102, wherein
the computing apparatus calculates at least one of the height of the first target object group contained in the container and the quantity of the first target object group contained in the container, based on the number of the target objects on which the process apparatus has performed the process.

104. The control apparatus according to any one of claims 88 to 103, wherein
the computing apparatus generates the first control signal for controlling the robot so that the imaging system moves to at least one of an imaging pose, which is a pose in which the imaging system images the target object, and an imaging horizontal position, which is a position on a horizontal plane at which the imaging system images the target object, based on at least one of the height of the first target object group contained in the container and the quantity of the first target object group contained in the container.

105. The control apparatus according to claim 104, wherein
the computing apparatus:
determines at least one of the imaging pose and the imaging horizontal position based on at least one of the height of the first target object group contained in the container and the quantity of the first target object group contained in the container, and
generates the first control signal for controlling the robot so that the imaging system moves to at least one of the determined imaging pose and imaging horizontal position.

106. The control apparatus according to any one of claims 88 to 105, wherein
the imaging system includes: at least one of a monocular camera; and a stereo camera including two monocular cameras that are different from the monocular camera.

107. A control system comprising:
the control apparatus according to any one of claims 88 to 106; and
the imaging system.

108. A robot system comprising:
the control apparatus according to any one of claims 88 to 106;
the imaging system; and
the robot.

109. A control method that generates a control signal for controlling a robot on which a holding apparatus that is configured hold a target object and an imaging system that images the target object are mounted and which moves the holding apparatus and the imaging system, wherein
the control method comprises:
generating, as the control signal, a first control signal for controlling the robot so that the imaging system moves to an imaging height for imaging the target object, based on at least one of a height of a first target object group, which includes at least a part of a plurality of target objects, contained in a container and a quantity of the first target object group contained in the container; and
generating, as the control signal, a second control signal for controlling the robot so that the process apparatus approaches one target object of a second target object group to perform the process on the one target object, based on an imaged result by the imaging system imaging the second target object group, which includes at least a partial target object of the first target object group contained in the container, at the imaging height.

110. A computer program that allows a computer to execute the control method according to claim 109.
